(19) Europäisches Patentamt / European Patent Office / Office européen des brevets

(11) **EP 4 779 883 A1**

(12) **EUROPEAN PATENT APPLICATION**
published in accordance with Art. 153(4) EPC

(43) Date of publication:
**22.07.2026   Bulletin 2026/30**

(21) Application number: **24865400.6**

(22) Date of filing: **09.09.2024**

(51) International Patent Classification (IPC):
**H04B 7/0413** *(2017.01)*     **H04W 16/28** *(2009.01)*

(52) Cooperative Patent Classification (CPC):
**H04B 7/0413; H04W 16/28**

(86) International application number:
**PCT/JP2024/032208**

(87) International publication number:
**WO 2025/057900 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023   JP 2023150203**

(71) Applicant: **Panasonic Intellectual Property Corporation of America**
**Torrance, CA 90504 (US)**

(72) Inventor: **MURAKAMI, Yutaka**
**Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **WIRELESS COMMUNICATION SYSTEM, WIRELESS COMMUNICATION DEVICE, AND COMMUNICATION METHOD**

(57)    This wireless communication system includes a first wireless communication apparatus and a second wireless communication apparatus. The first wireless communication apparatus includes a first antenna unit in which there are N layers generated from data and which performs a first operation to transmit A transmission signals generated from the N layers; and a first control unit that controls the operation of the first antenna unit. The second wireless communication apparatus includes: a second antenna unit that performs a second operation to transmit B transmission signals (B = integer 1 or greater and less than A) generated from N layers including data or part of data, or M layers (M = integer 1 or greater and less than N) that are part of the N layers; and a second control unit that controls the operation of the second antenna unit.

FIG. 6A1

## Description

Technical Field

The present disclosure relates to a radio communication system, a radio communication apparatus, and a communication method.

Background Art

For example, in Non-Patent Literature (hereinafter, referred to as "NPL") 1, as illustrated in FIG. 35, a radio communication apparatus connected to antenna modules is disclosed.

Citation List

Non-Patent Literature

NPL 1
"MIMO Evolution toward 6G: Modular massive MIMO in low-frequency bands" IEEE Communications Magazine, pp. 52-58, November 2021.

Summary of Invention

There is room for discussion on a specific configuration for improving a data transmission efficiency of a radio communication system including a radio communication apparatus connected to an antenna module.

One non-limiting example of the present disclosure facilitates providing a radio communication system, a radio communication apparatus, and a communication method each capable of performing high-efficiency data transmission.

A radio communication system according to one aspect of the present disclosure includes: a first radio communication apparatus; and a second radio communication apparatus, in which, the first radio communication apparatus includes: a first antenna part, which, in operation, performs a first operation that transmits A transmission signals ("A" being an integer of 2 or greater) generated from an N layer or N layers ("N" being an integer of 1 or greater) generated from data; and a first controller, which, in operation, controls an operation of the first antenna part, and the second radio communication apparatus includes: a second antenna part, which, in operation, performs a second operation that transmits a B transmission signal or B transmission signals ("B" being an integer of 1 or greater and less than "A") generated from the N layer or N layers including the data or a part of the data, or from an M layer or M layers ("M" being an integer of 1 or greater and "N" or less) being a part of the N layer or N layers; and a second controller, which, in operation, controls an operation of the second antenna part.

A radio communication apparatus according to one aspect of the present disclosure includes: a first antenna part, which, in operation, performs a first operation that transmits A transmission signals ("A" being an integer of 2 or greater) generated from an N layer or N layers ("N" being an integer of 1 or greater) generated from data; and a second antenna part, which, in operation, performs a second operation that transmits a B transmission signal or B transmission signals ("B" being an integer of 1 or greater and less than "A") generated from the N layer or N layers including the data or a part of the data, or from an M layer or M layers ("M" being an integer of 1 or greater and "N "or less) being a part of the N layer or N layers; and a controller, which, in operation, controls an operation of the first antenna part and an operation of the second antenna part.

A communication method according to one aspect of the present disclosure includes: controlling a first antenna part by a first radio communication apparatus that includes the first antenna part and performing, by the first radio communication apparatus, a first operation that transmits A transmission signals ("A" being an integer of 2 or greater) generated from an N layer or N layers ("N" being an integer of 1 or greater) generated from data; and controlling a second antenna part by a second radio communication apparatus that includes the second antenna part and performing, by the second radio communication apparatus, a second operation that transmits a B transmission signal or B transmission signals ("B" being an integer of 1 or greater and less than "A") generated from the N layer or N layers including the data or a part of the data, or from an M layer or M layers ("M" being an integer of 1 or greater and "N "or less) being a part of the N layer or N layers.

Note that general or specific embodiments may be implemented as a system, an apparatus, a method, an integrated circuit, a computer program, a storage medium, or any selective combination thereof.

According to one non-limiting example of the present disclosure, it is made possible to provide a radio communication system, a radio communication apparatus, and a communication method each capable of performing high-efficiency data transmission.

Additional benefits and advantages of the disclosed embodiments will become apparent from the specification and drawings. The benefits and/or advantages may be individually obtained by the various embodiments and features of the specification and drawings, which need not all be provided in order to obtain one or greater of such benefits and/or advantages.

Brief Description of Drawings

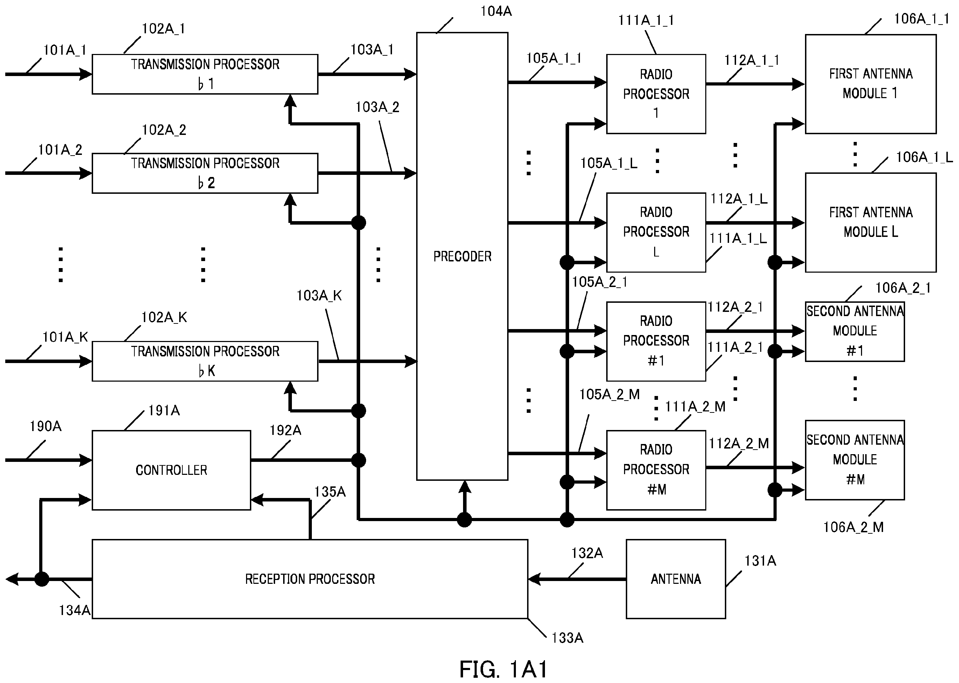

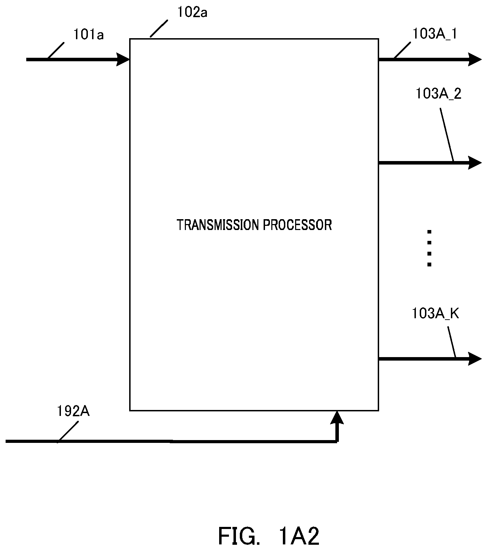

> FIG. 1A1 is a diagram illustrating a configuration example of a communication apparatus (transmission/reception apparatus) in Embodiment 1;
> FIG. 1A2 is a diagram illustrating another configuration example of a transmission processor;

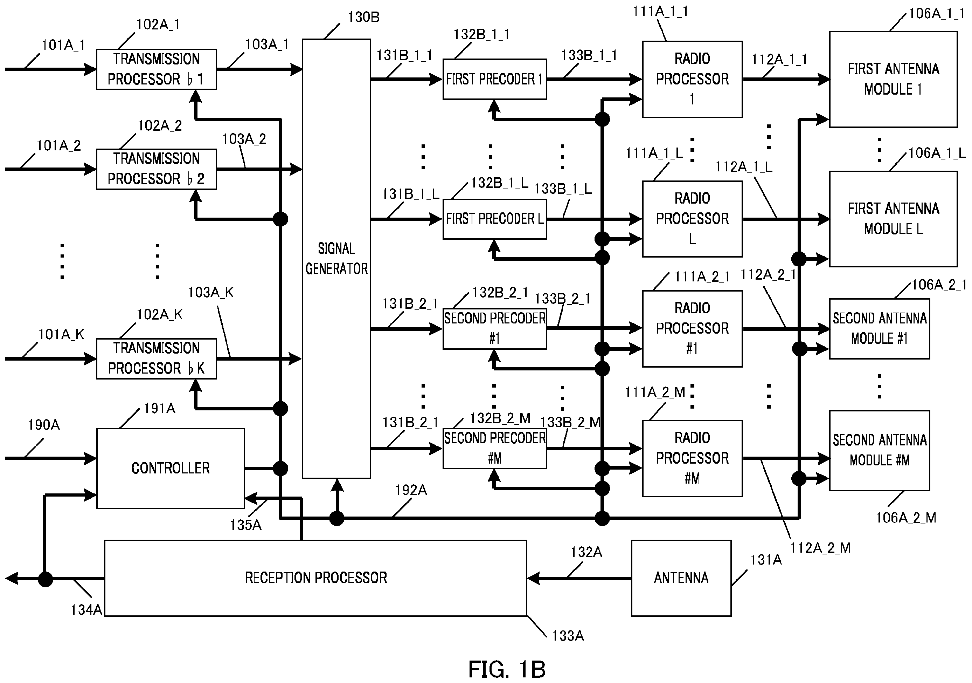

FIG. 1B is a diagram illustrating a configuration example of the communication apparatus (transmission/reception apparatus) in Embodiment 1 different from FIG. 1A1;

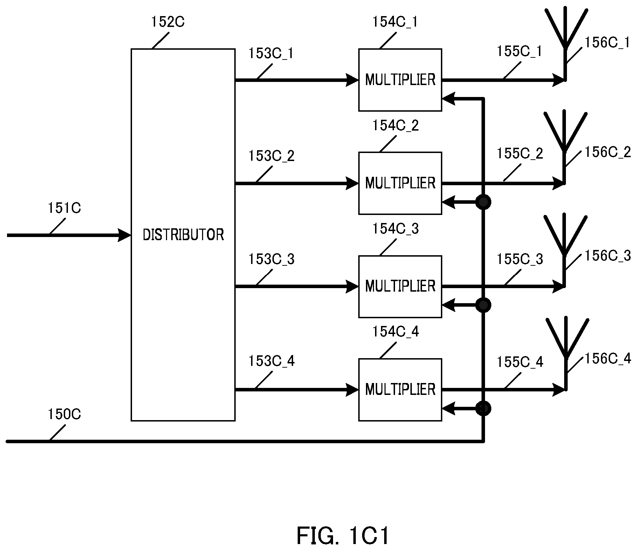

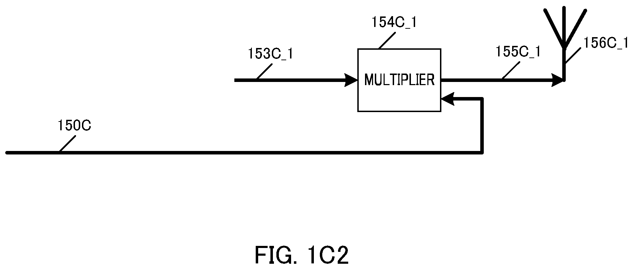

FIG. 1C1 is a diagram illustrating a configuration example of antennas provided in a first antenna module and a second antenna module;

FIG. 1C2 is a diagram illustrating another configuration example of an antenna provided in the first antenna module and the second antenna module;

FIG. 2 is a diagram illustrating a configuration of a terminal that is a communication counterpart of a base station;

FIG. 3 is a diagram illustrating a state of a "base station having the configuration of FIG. 1A1 and FIG. 1B" and "terminals having the configuration of FIG. 2";

FIG. 4 is a diagram illustrating a mapping example of a modulation signal in a time-frequency axis;

FIG. 5A is a diagram illustrating an example of a configuration around an antenna port in a case where an antenna port is provided instead of the first antenna module and the second antenna module in the base station;

FIG. 5B1 is a diagram illustrating an exemplary operation related to FIG. 5A;

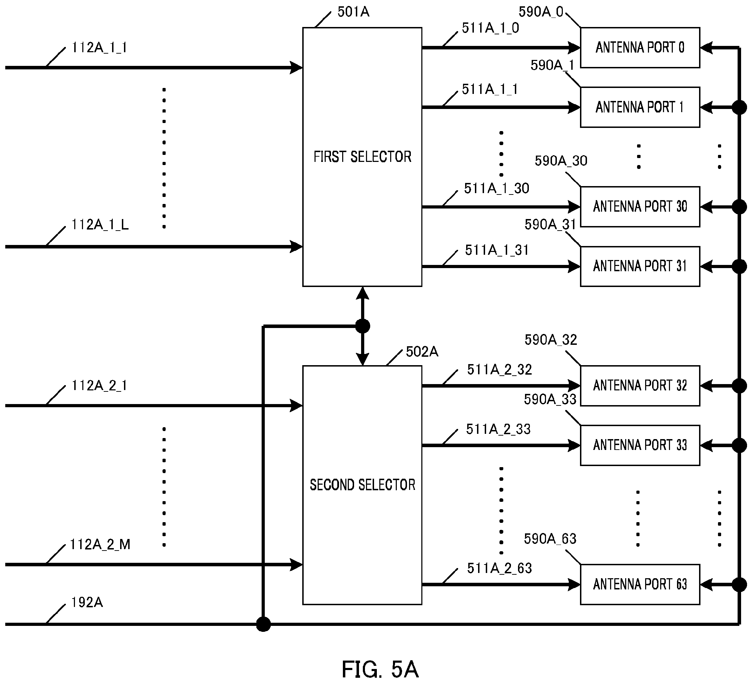

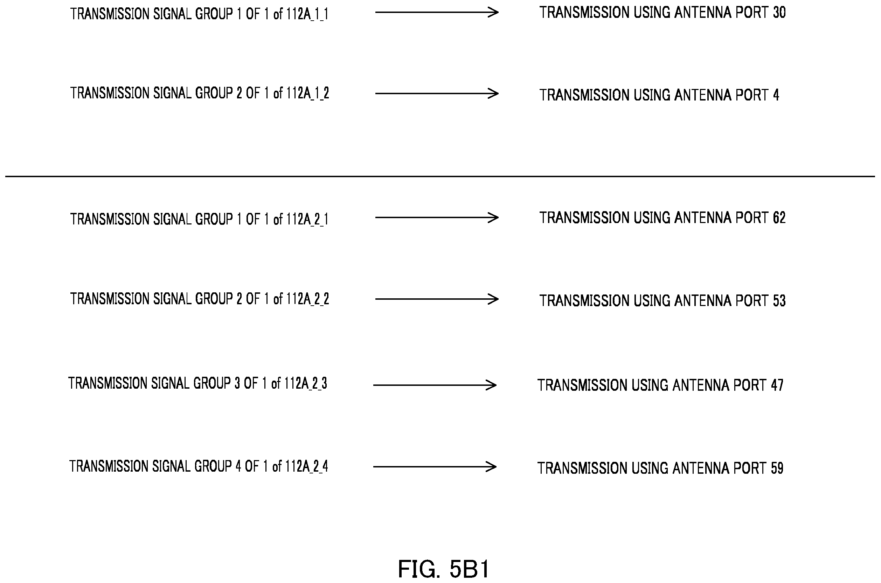

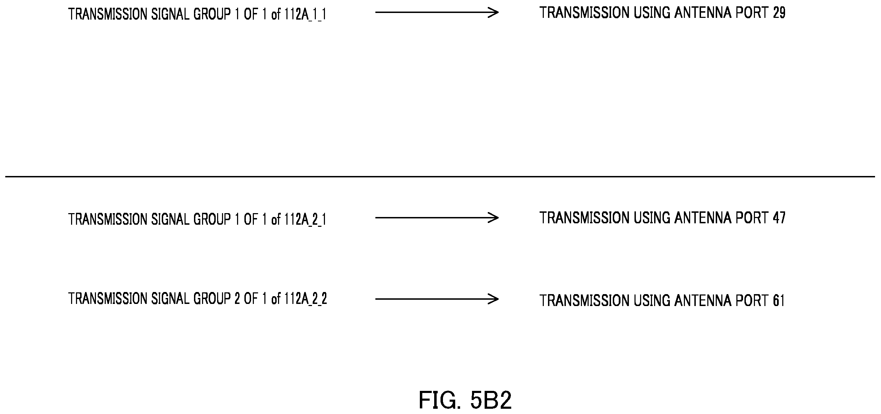

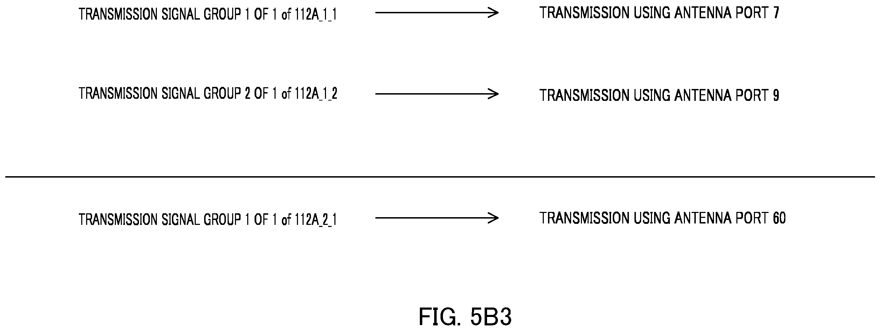

FIG. 5B2 is a diagram illustrating an exemplary operation related to FIG. 5A;

FIG. 5B3 is a diagram illustrating an exemplary operation related to FIG. 5A;

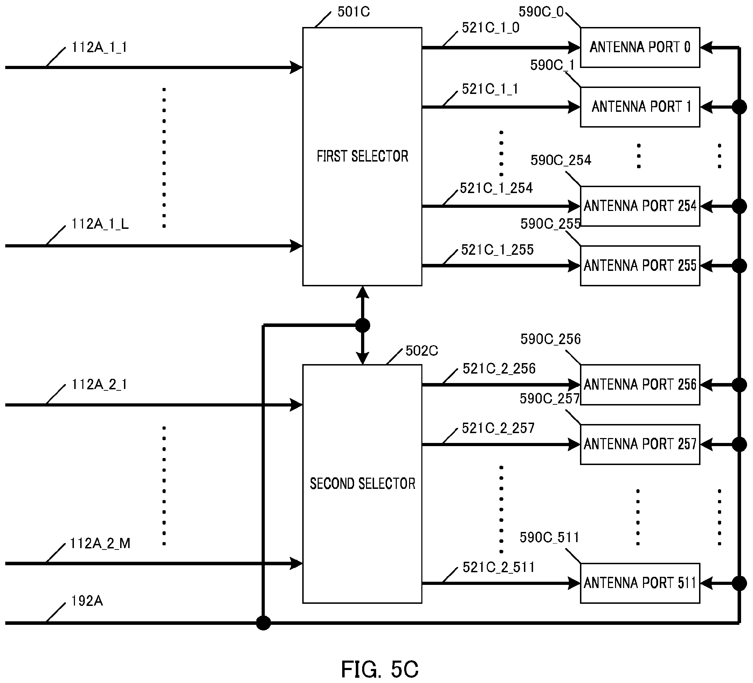

FIG. 5C is a diagram illustrating an example of a configuration around an antenna port different from FIG. 5A in a case where an antenna port is provided instead of the first antenna module and the second antenna module in the base station;

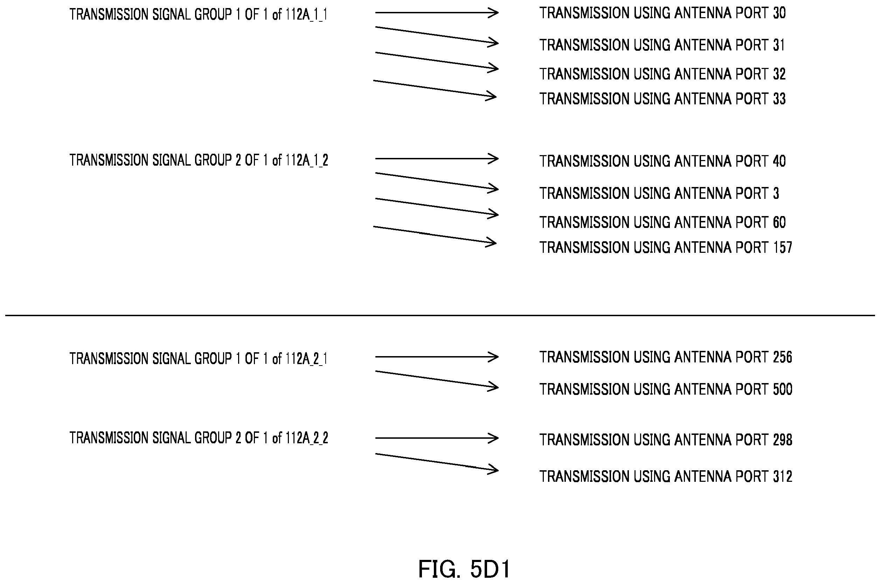

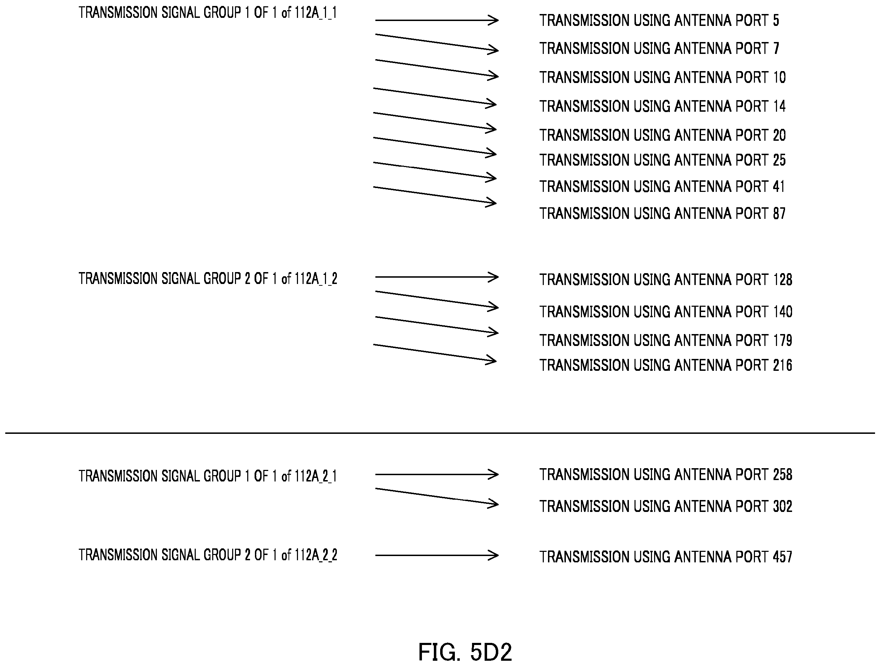

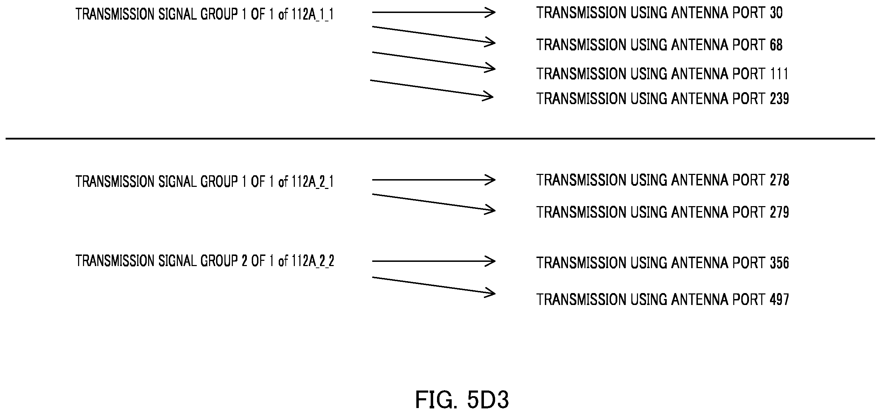

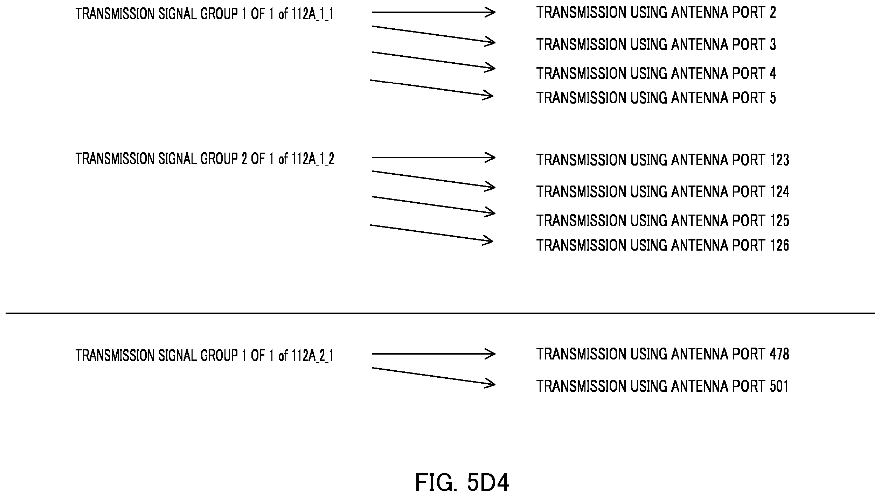

FIG. 5D1 is a diagram illustrating an exemplary operation related to FIG. 5C;

FIG. 5D2 is a diagram illustrating an exemplary operation related to FIG. 5C;

FIG. 5D3 is a diagram illustrating an exemplary operation related to FIG. 5C;

FIG. 5D4 is a diagram illustrating an exemplary operation related to FIG. 5C;

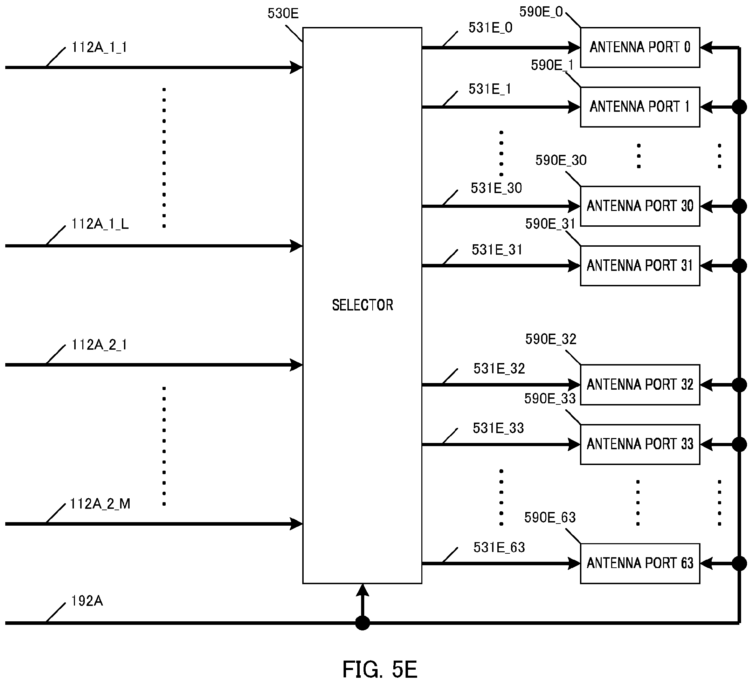

FIG. 5E is a diagram illustrating an example of a configuration around an antenna port in a case where an antenna port is provided instead of the first antenna module and the second antenna module in the base station;

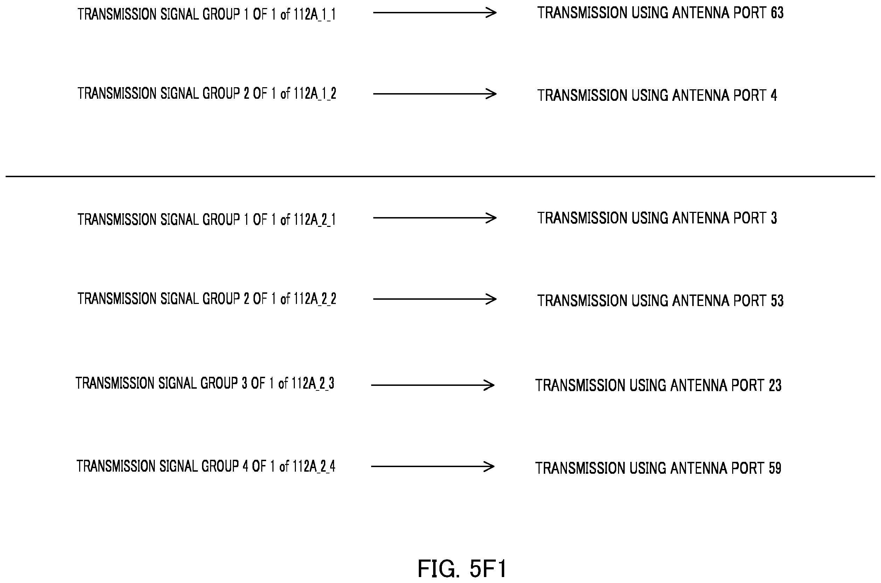

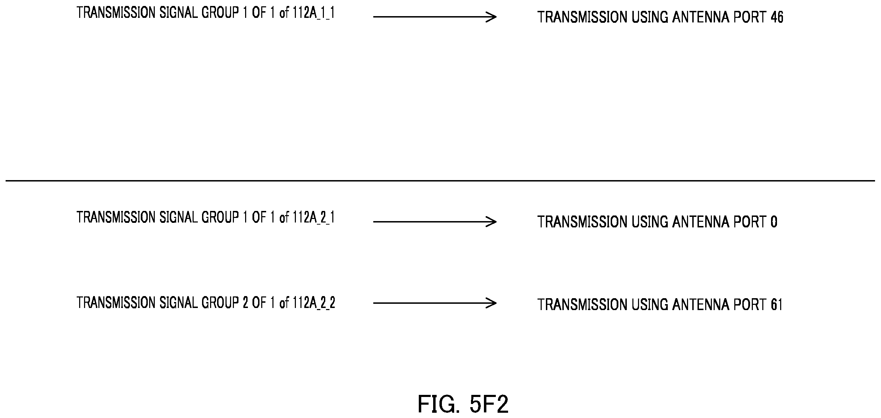

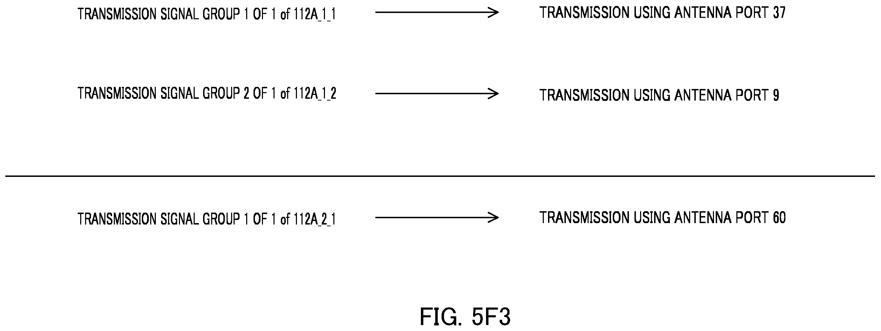

FIG. 5F1 is a diagram illustrating an exemplary operation related to FIG. 5E;

FIG. 5F2 is a diagram illustrating an exemplary operation related to FIG. 5E;

FIG. 5F3 is a diagram illustrating an exemplary operation related to FIG. 5E;

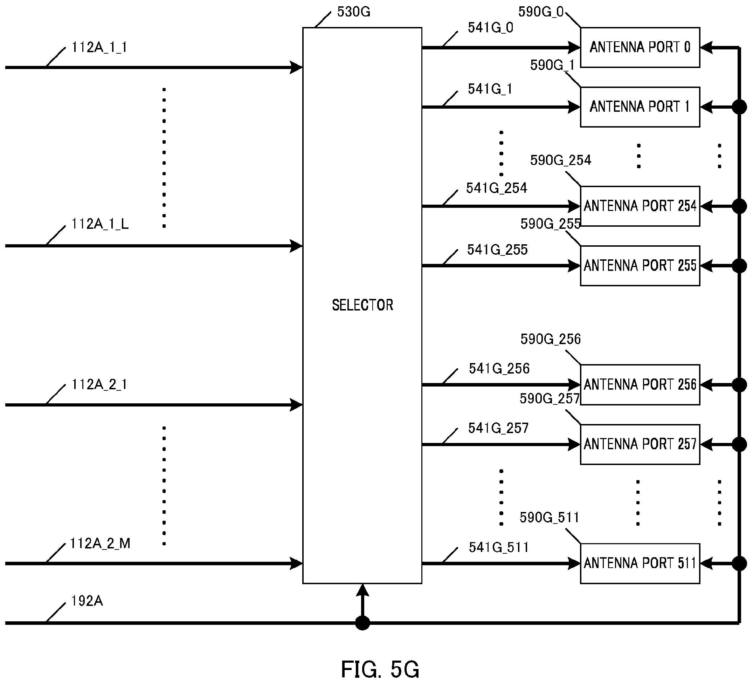

FIG. 5G is a diagram illustrating an example of a configuration around an antenna port in a case where an antenna port is provided instead of the first antenna module and the second antenna module in the base station;

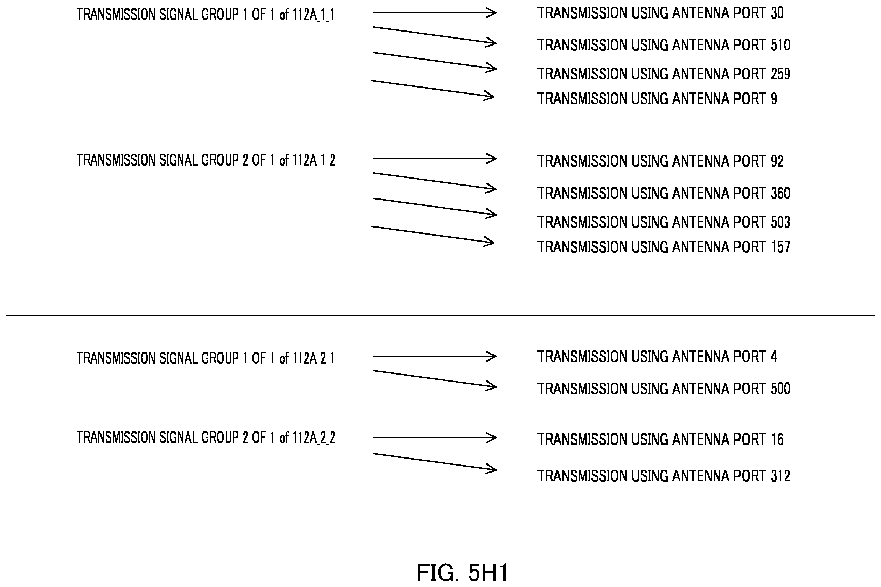

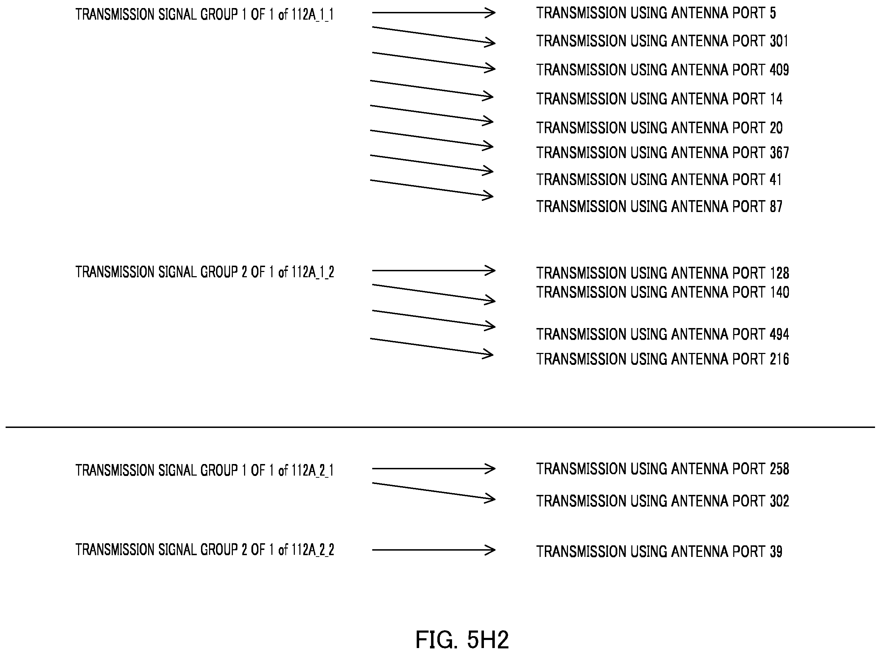

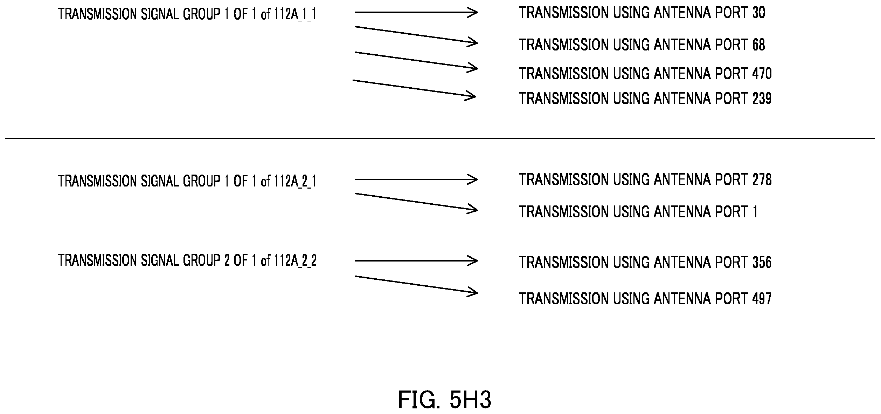

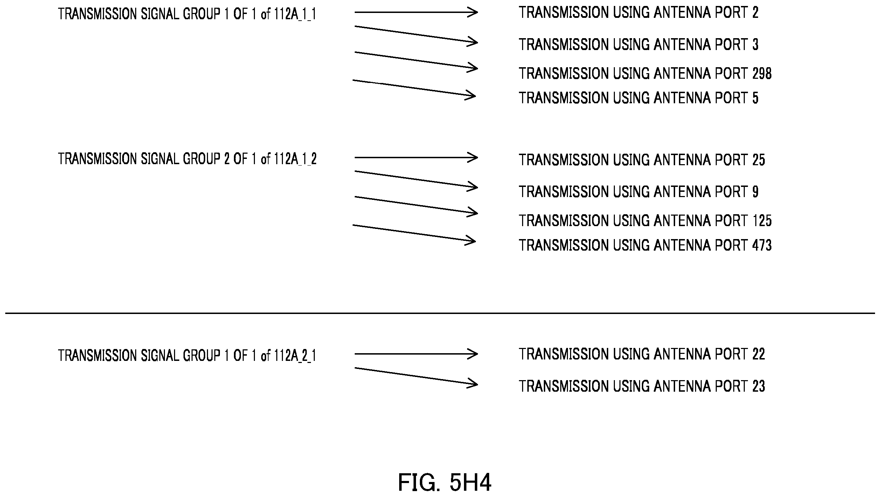

FIG. 5H1 is a diagram illustrating an exemplary operation related to FIG. 5G;

FIG. 5H2 is a diagram illustrating an exemplary operation related to FIG. 5G;

FIG. 5H3 is a diagram illustrating an exemplary operation related to FIG. 5G;

FIG. 5H4 is a diagram illustrating an exemplary operation related to FIG. 5G;

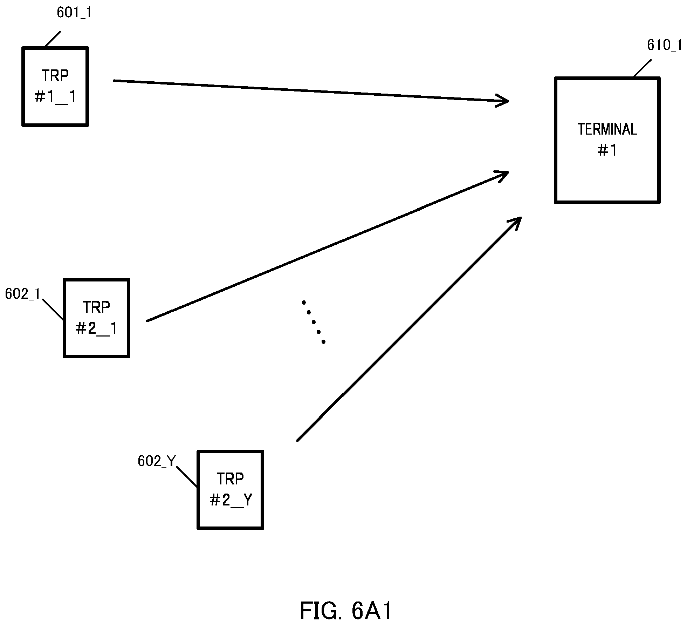

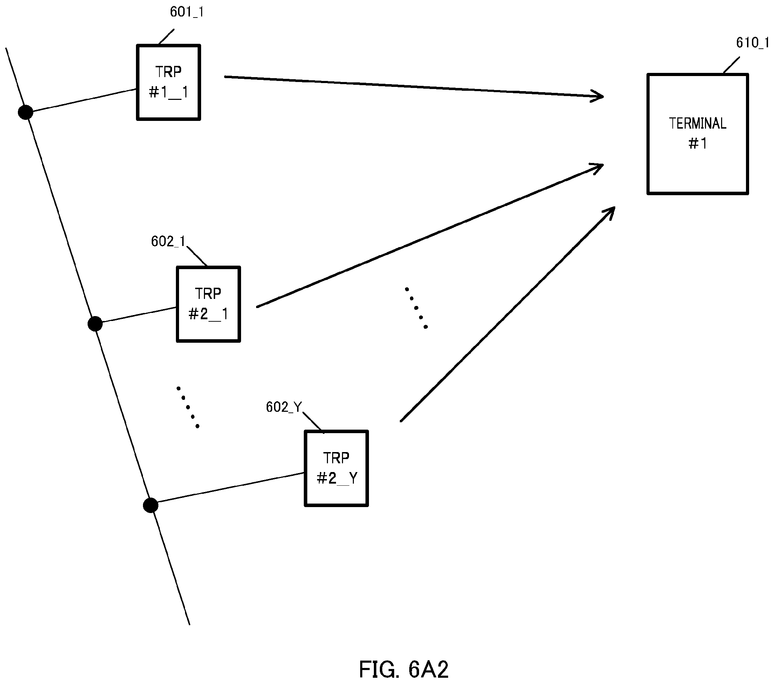

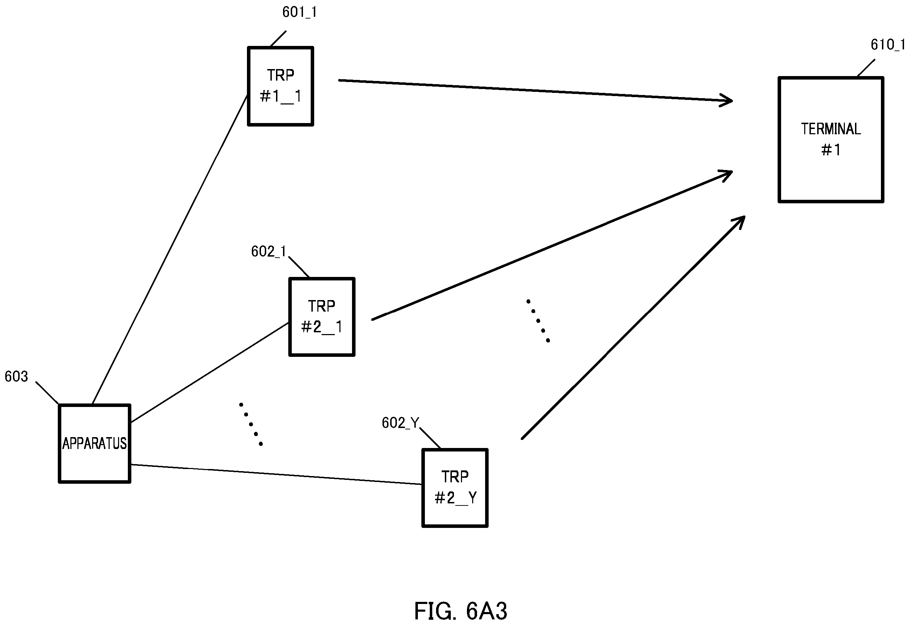

FIG. 6A1 is a diagram illustrating an example of a state of TRPs and a terminal;

FIG. 6A2 is a diagram illustrating an example of a state of TRPs and a terminal;

FIG. 6A3 is a diagram illustrating an example of a state of TRPs and a terminal;

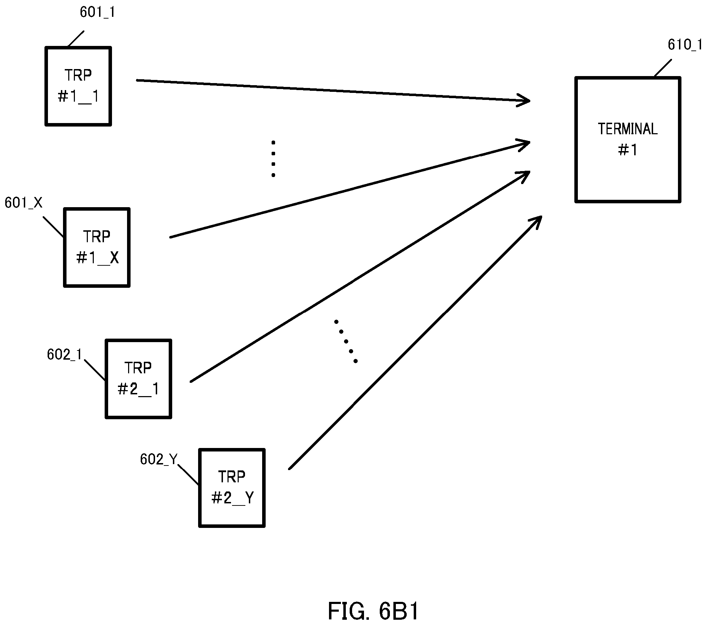

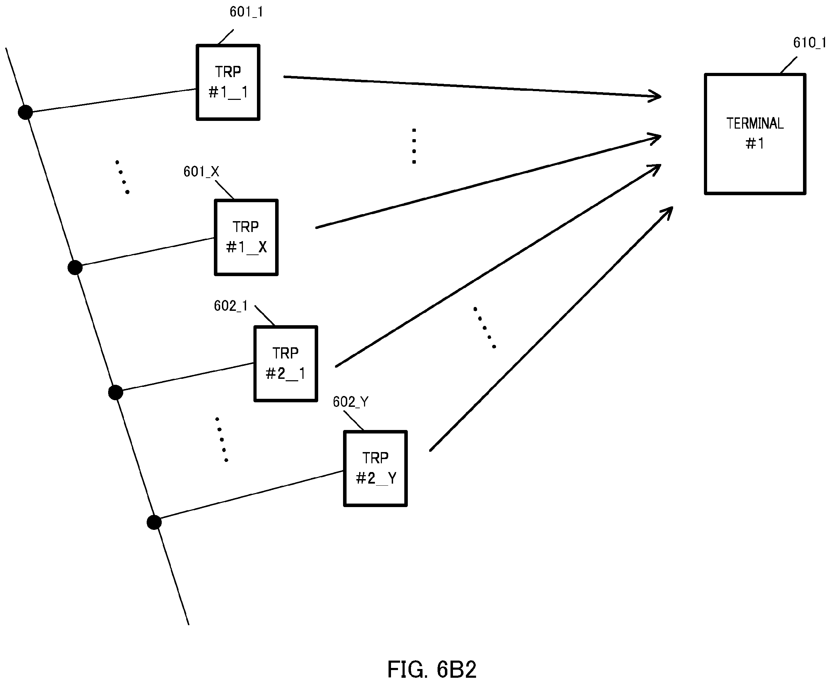

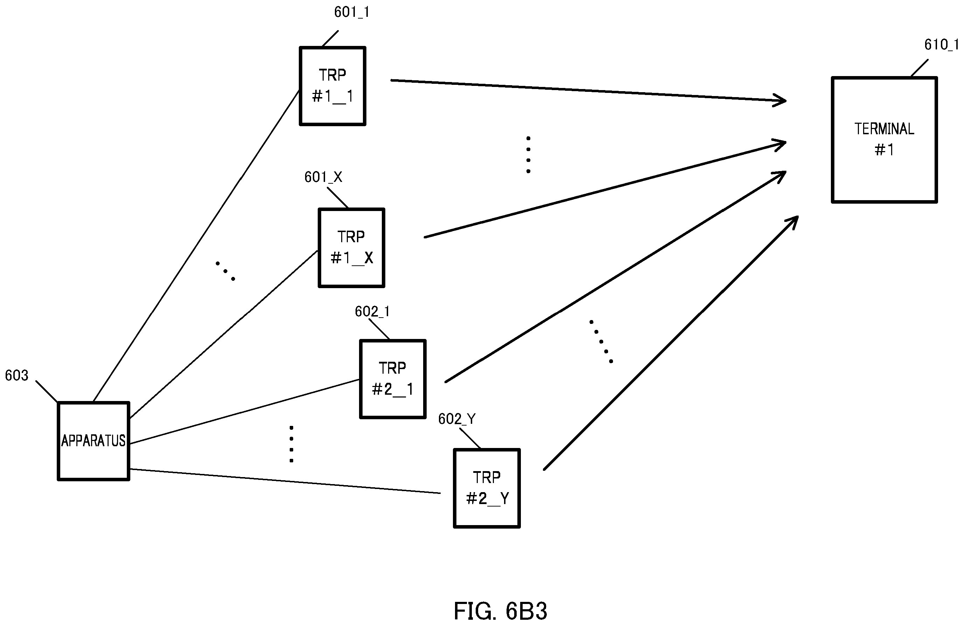

FIG. 6B1 is a diagram illustrating an example of a state of TRPs and a terminal;

FIG. 6B2 is a diagram illustrating an example of a state of TRPs and a terminal;

FIG. 6B3 is a diagram illustrating an example of a state of TRPs and a terminal;

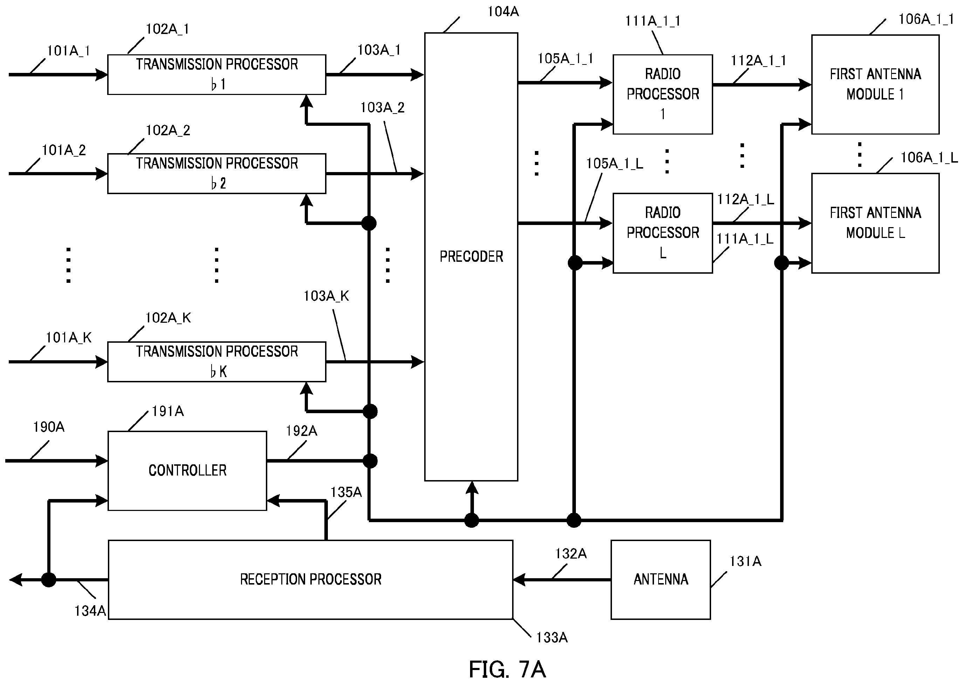

FIG. 7A is a diagram illustrating a configuration example of TRP #1_k;

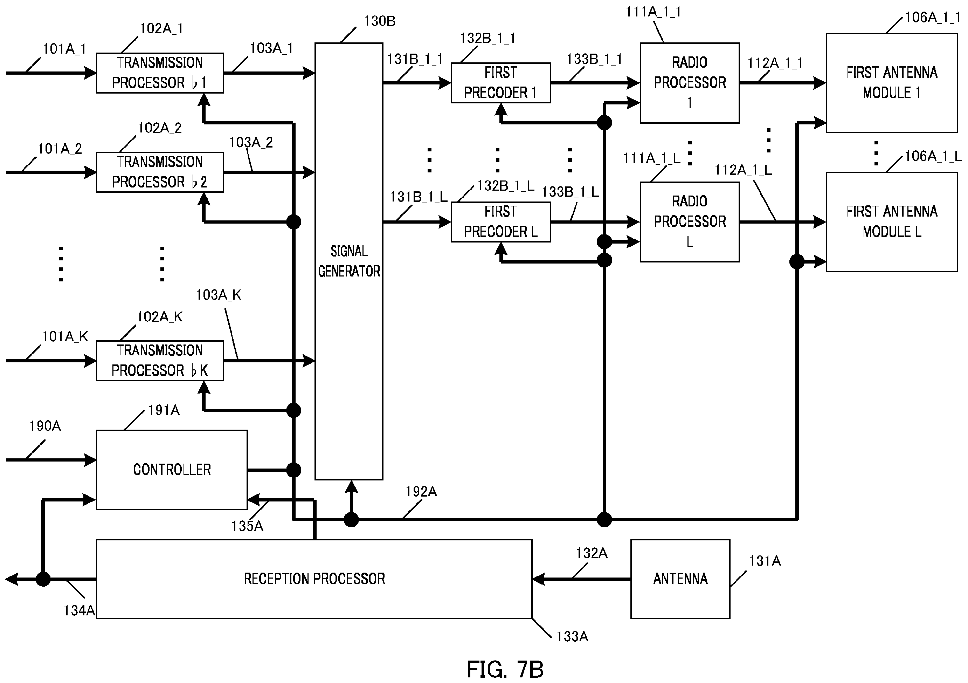

FIG. 7B is a diagram illustrating a configuration example of TRP #1_k;

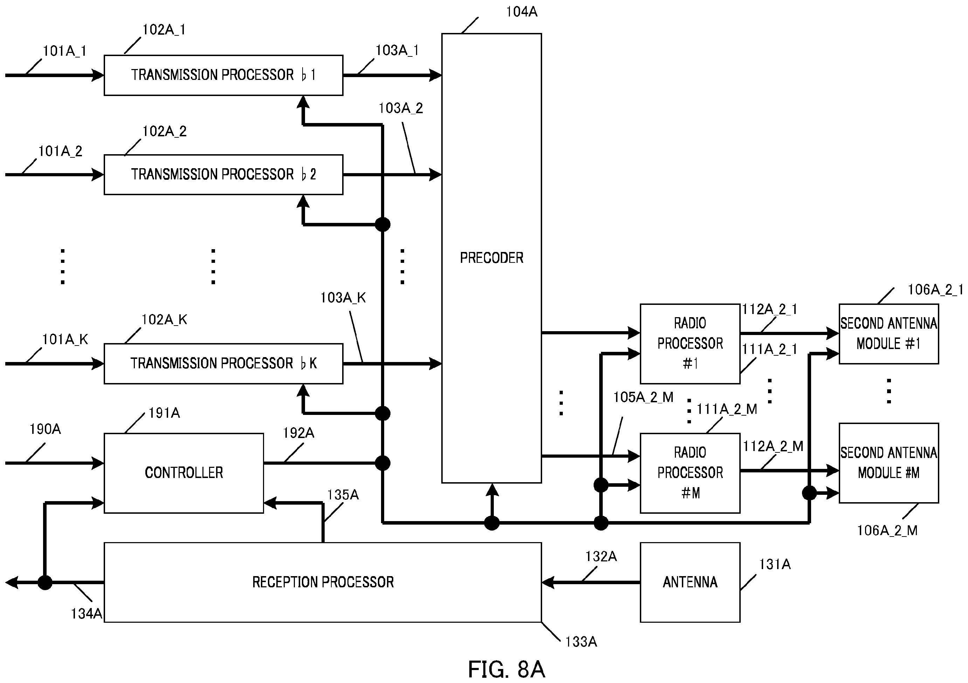

FIG. 8A is a diagram illustrating a configuration example of TRP #2_i;

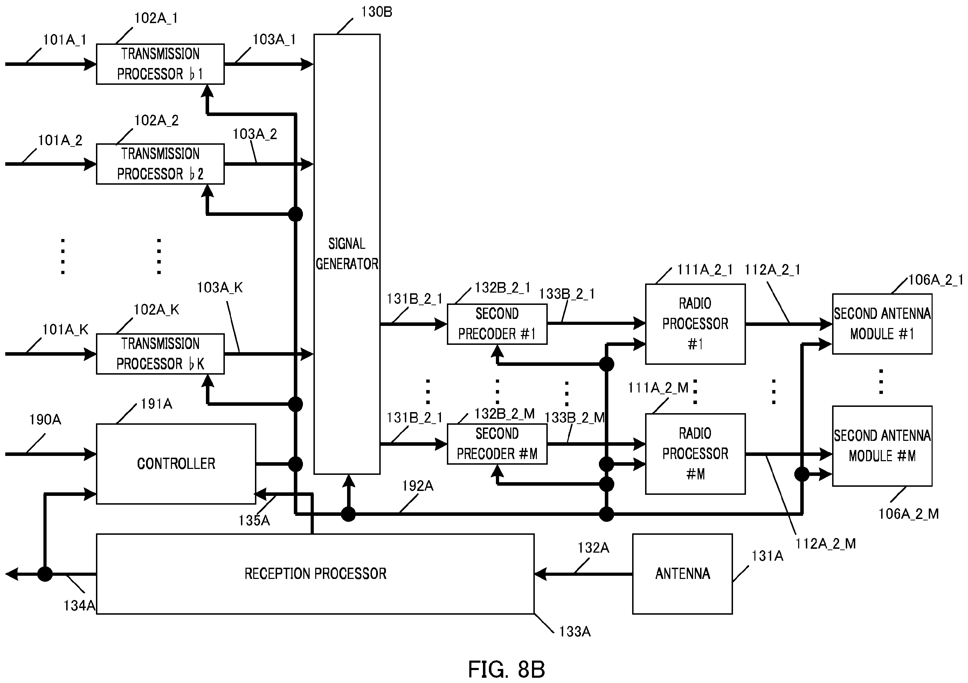

FIG. 8B is a diagram illustrating a configuration example of TRP #2_i;

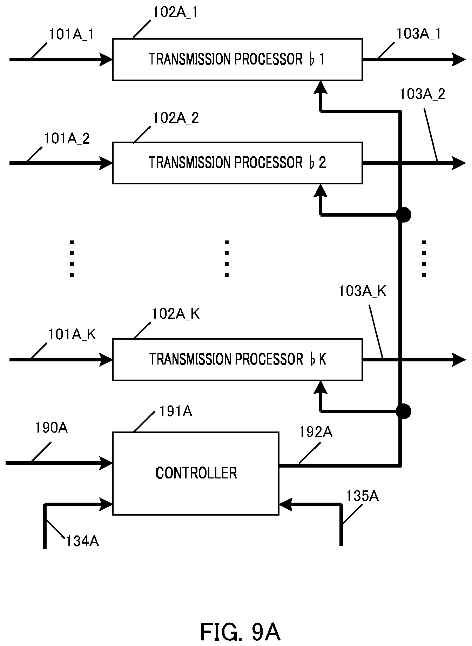

FIG. 9A is a diagram illustrating a configuration example of an apparatus;

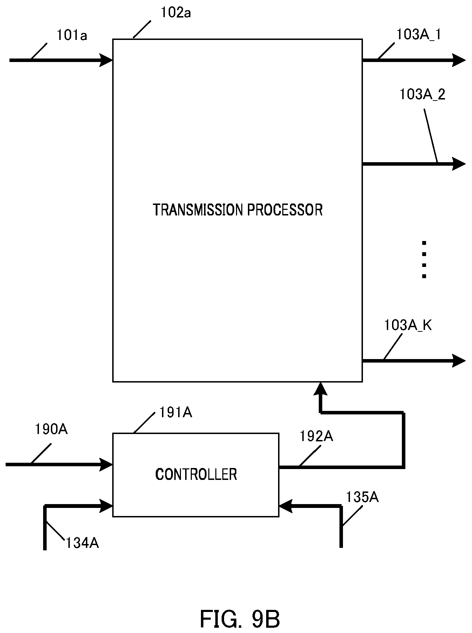

FIG. 9B is a diagram illustrating a configuration example of an apparatus different from FIG. 9A;

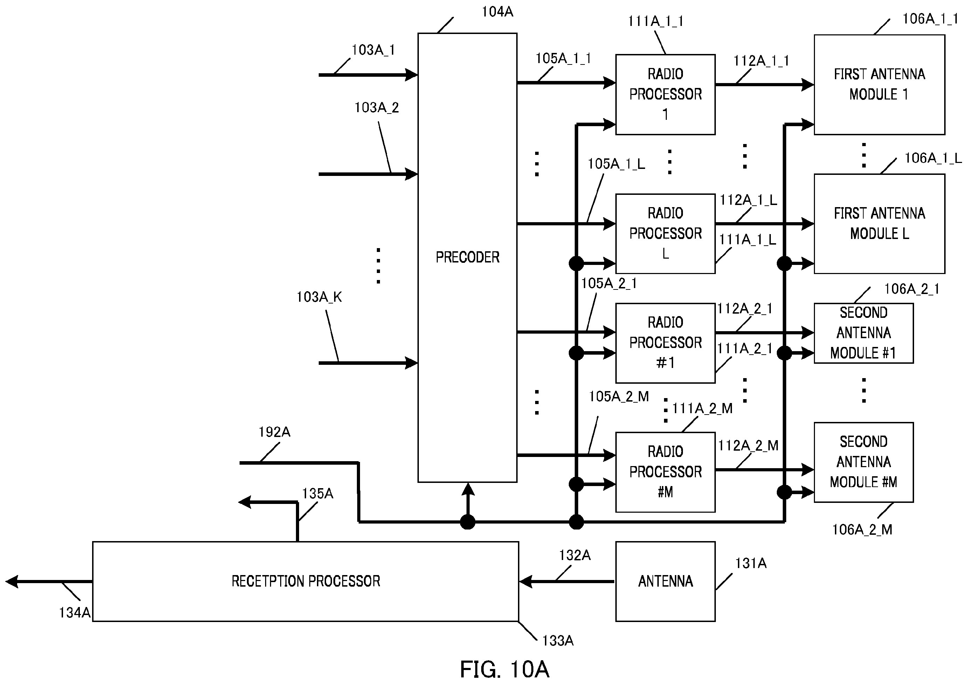

FIG. 10A is a diagram illustrating a configuration example of a TRP;

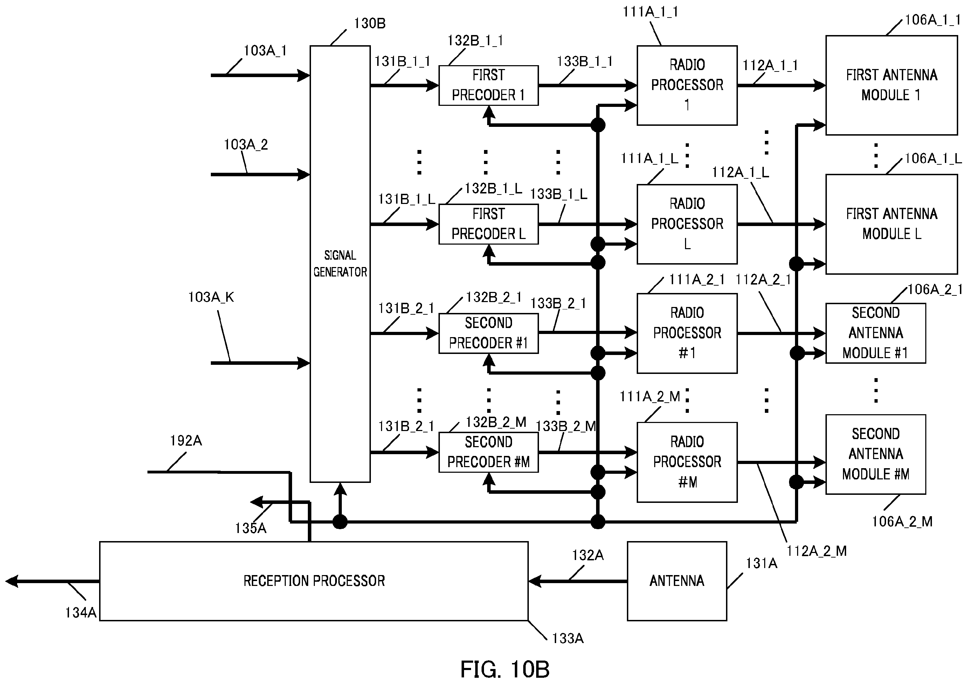

FIG. 10B is a diagram illustrating a configuration example of a TRP different from FIG. 10A;

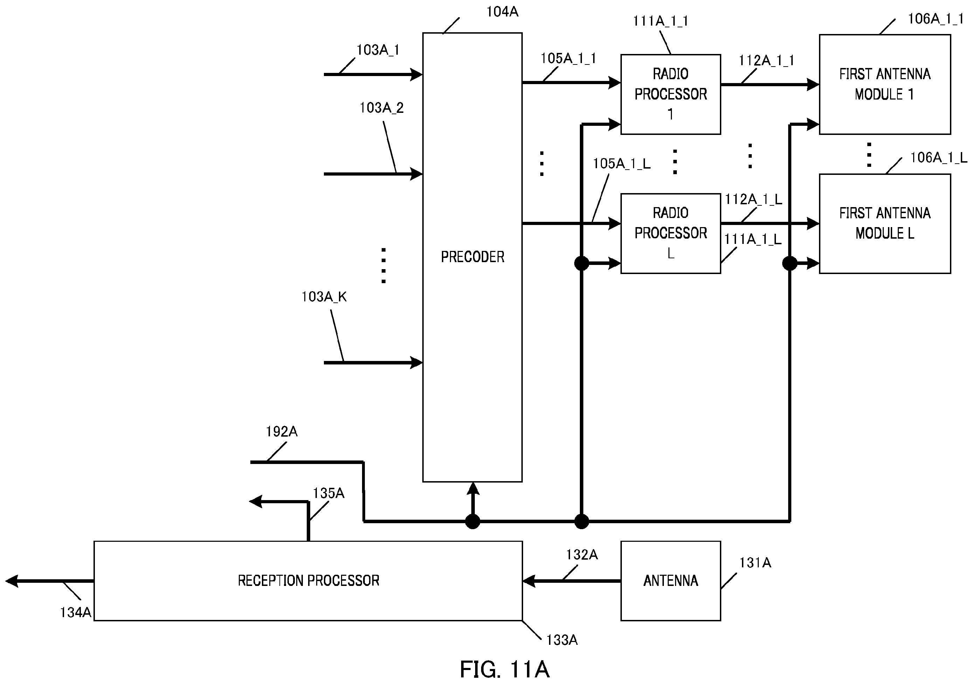

FIG. 11A is a diagram illustrating a configuration example of a TRP;

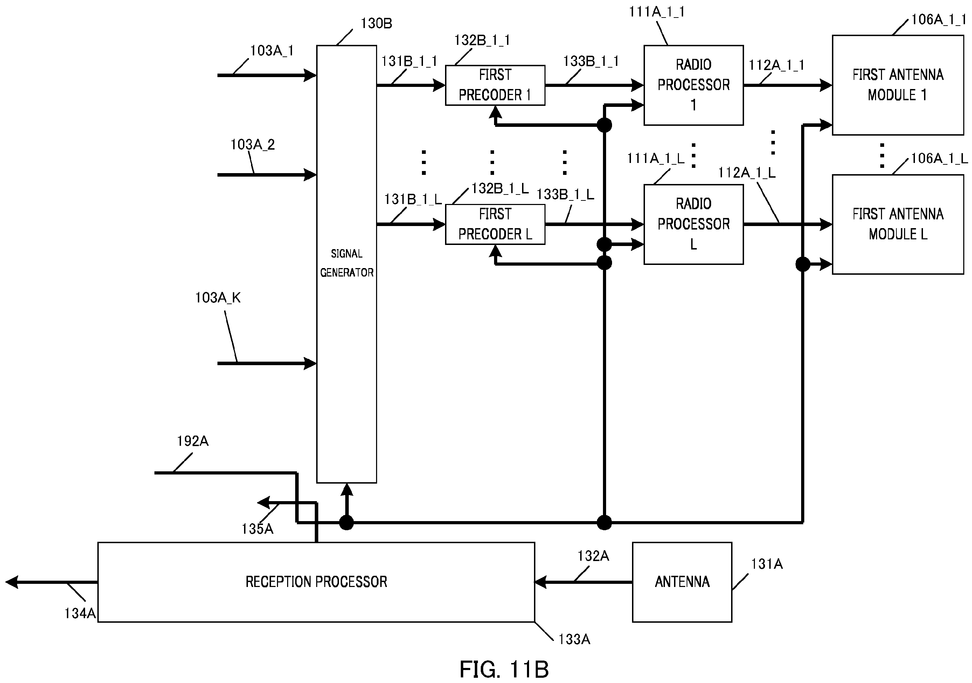

FIG. 11B is a diagram illustrating a configuration example of a TRP;

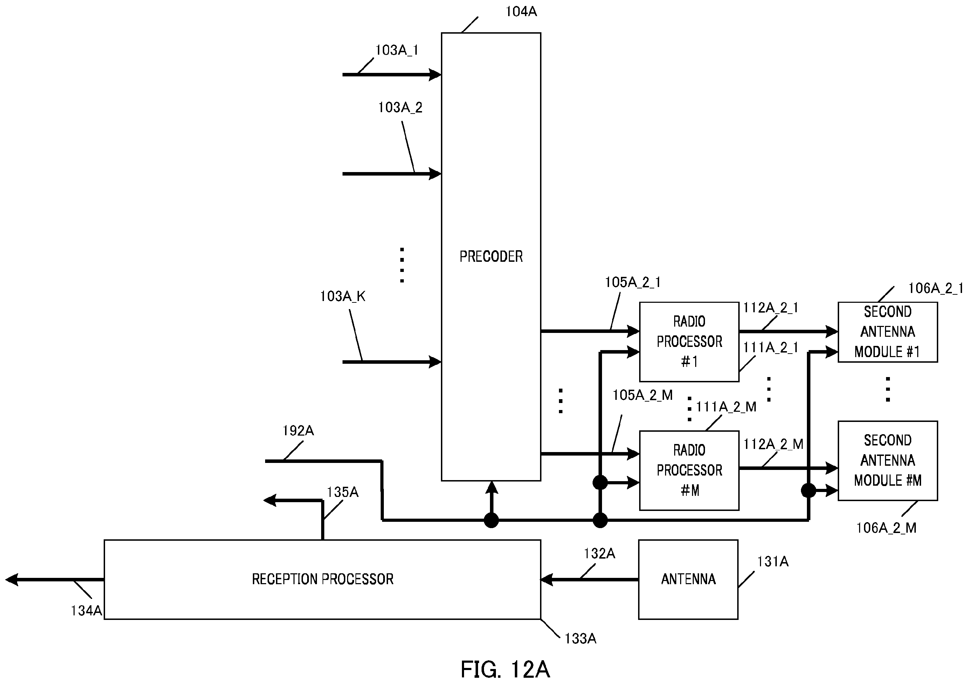

FIG. 12A is a diagram illustrating a configuration example of a TRP;

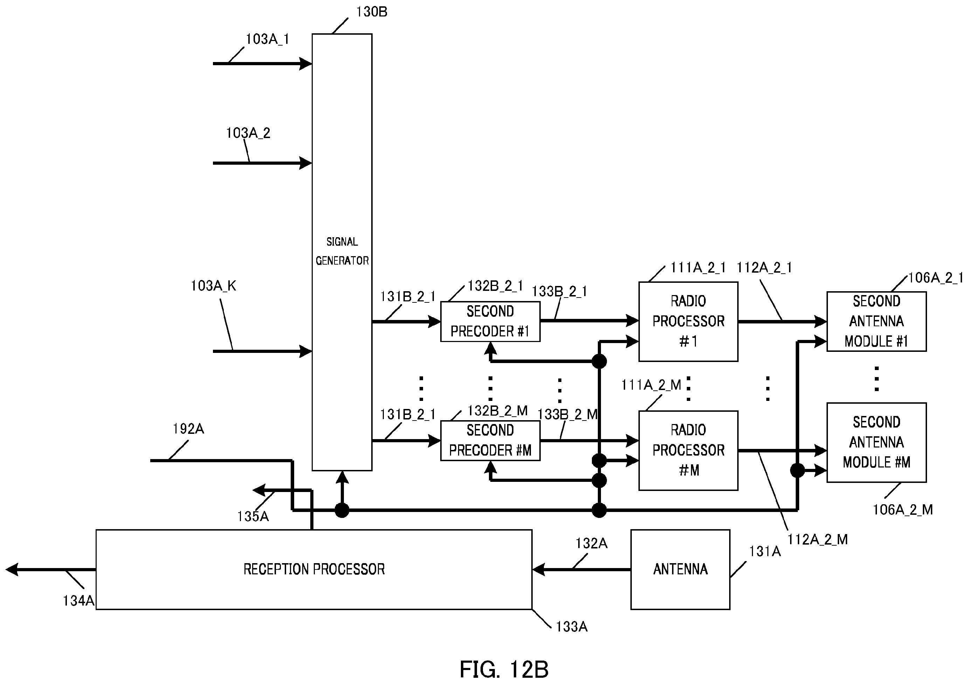

FIG. 12B is a diagram illustrating a configuration example of a TRP;

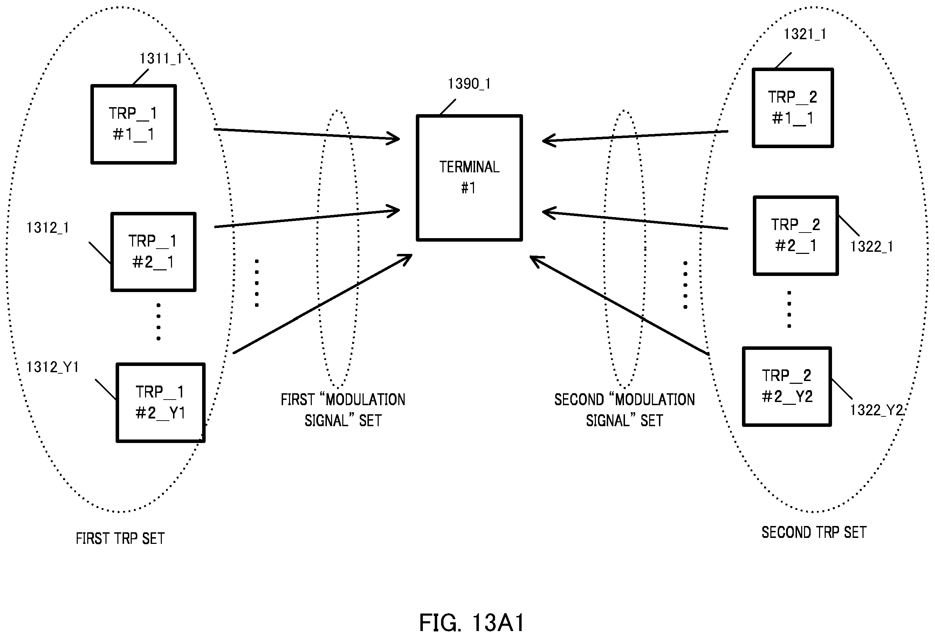

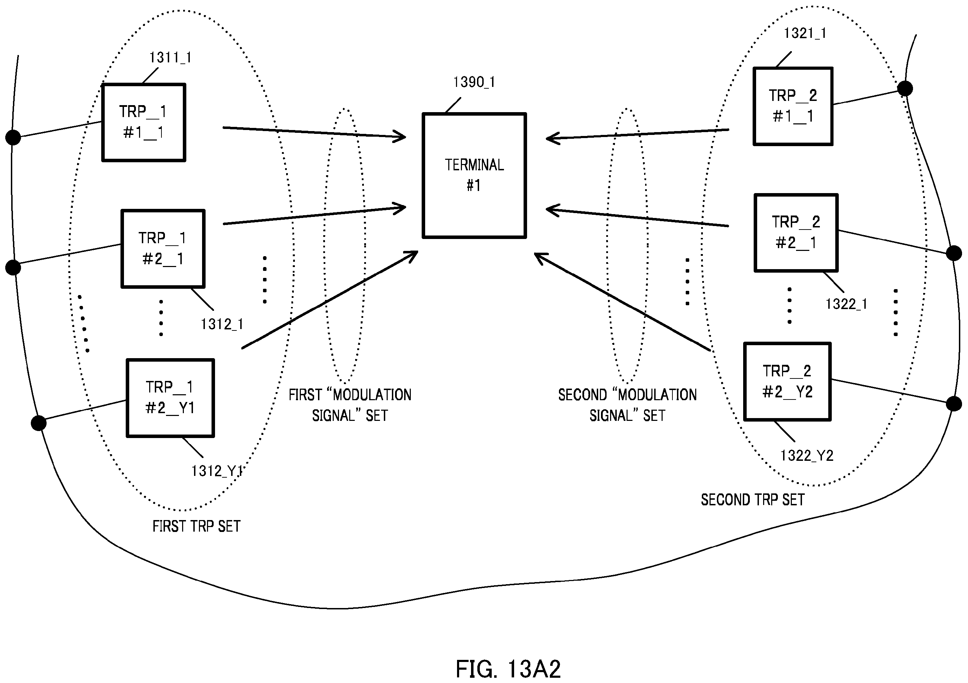

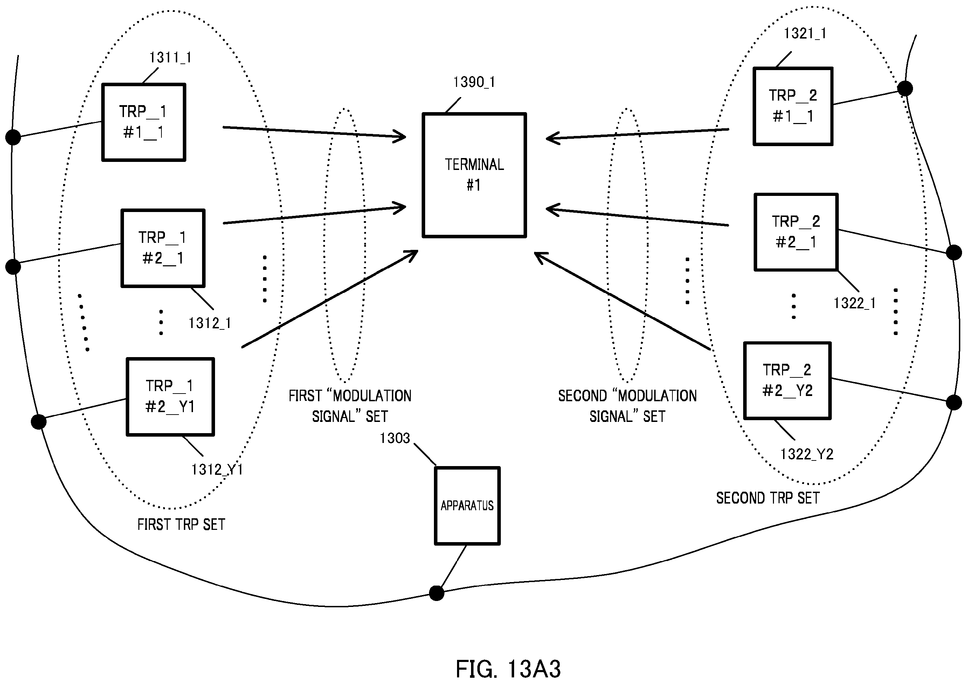

FIG. 13A1 is a diagram illustrating an example of a state of TRPs and a terminal;

FIG. 13A2 is a diagram illustrating an example of a state of TRPs and a terminal;

FIG. 13A3 is a diagram illustrating an example of a state of TRPs and a terminal;

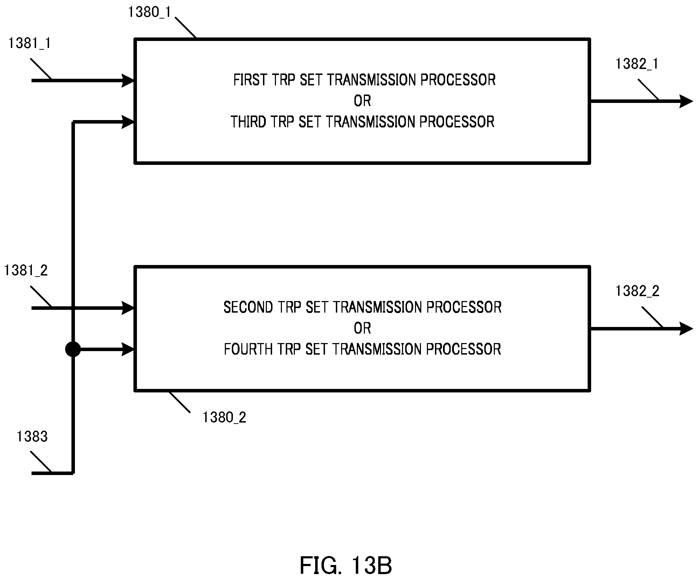

FIG. 13B is a diagram illustrating a configuration example of an apparatus;

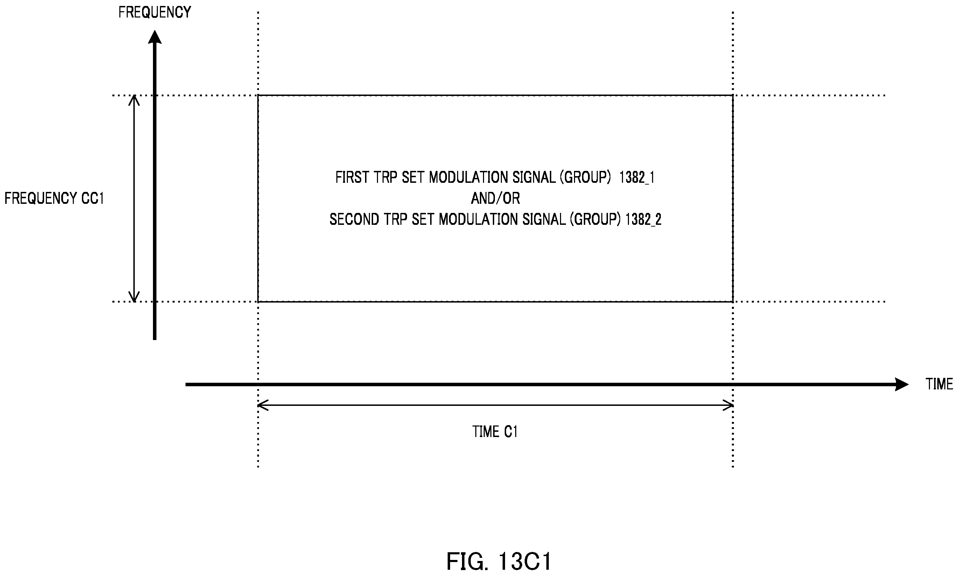

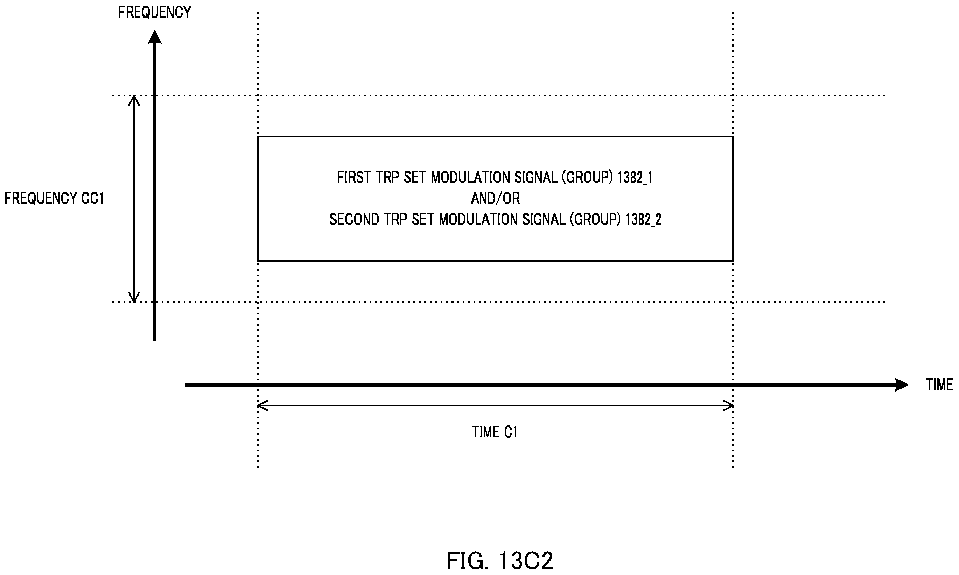

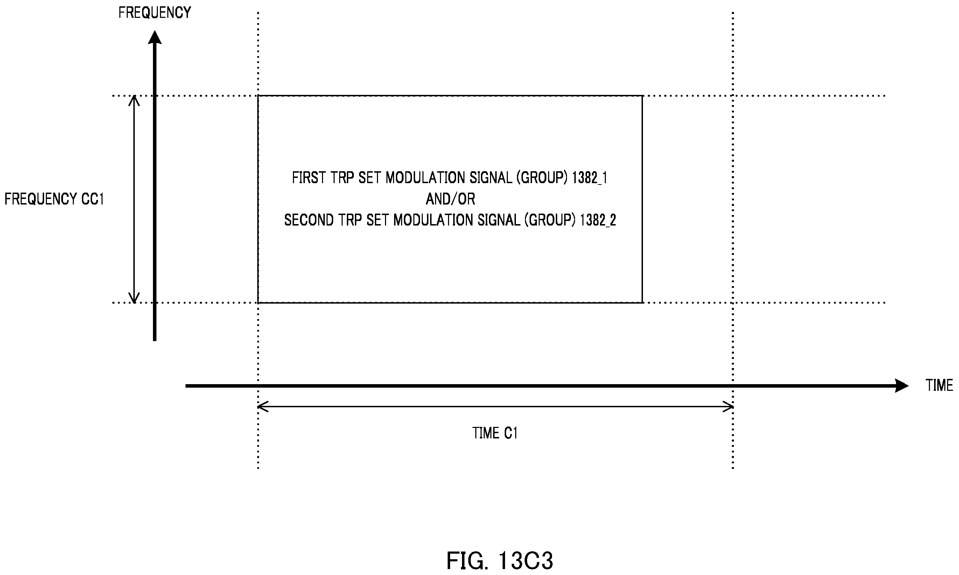

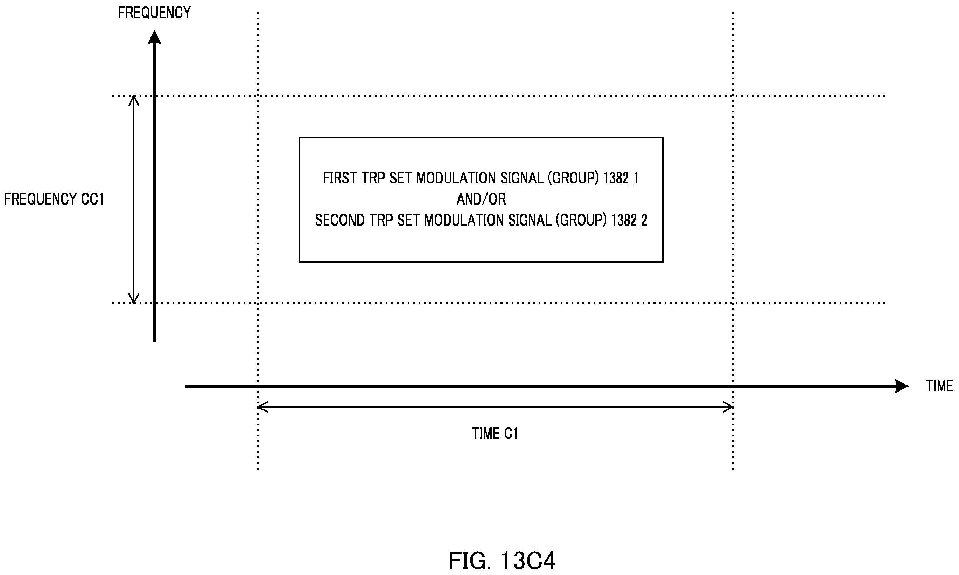

FIG. 13C1 is a diagram illustrating a mapping example of a signal in a time-frequency axis in a case of transmission using an SDM method;

FIG. 13C2 is a diagram illustrating a mapping example of a signal in a time-frequency axis in a case of transmission using an SDM method;

FIG. 13C3 is a diagram illustrating a mapping example of a signal in a time-frequency axis in a case of transmission using an SDM method;

FIG. 13C4 is a diagram illustrating a mapping example of a signal in a time-frequency axis in a case of transmission using an SDM method;

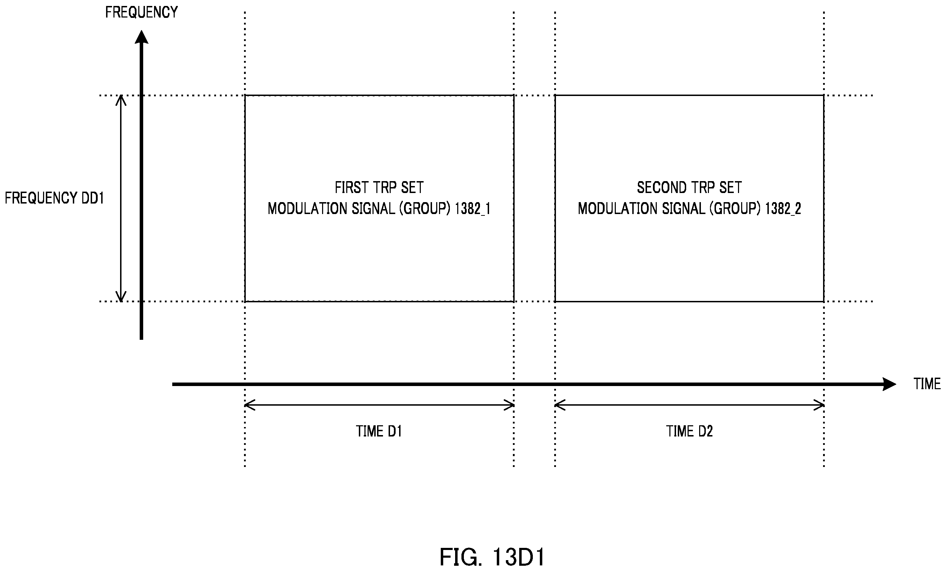

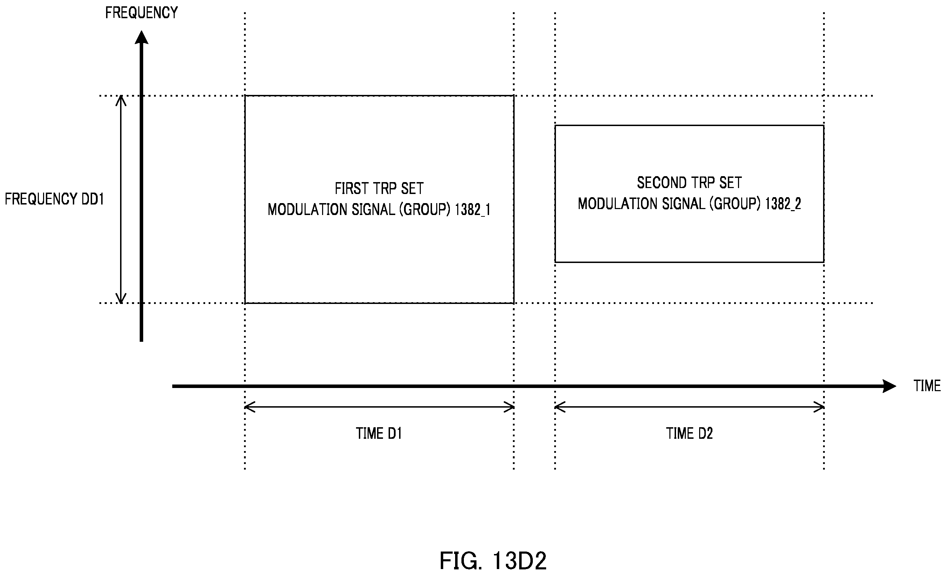

FIG. 13D1 is a diagram illustrating a mapping example of a signal in a time-frequency axis in a case of transmission using a TDM method;

FIG. 13D2 is a diagram illustrating a mapping example of a signal in a time-frequency axis in a case of transmission using a TDM method;

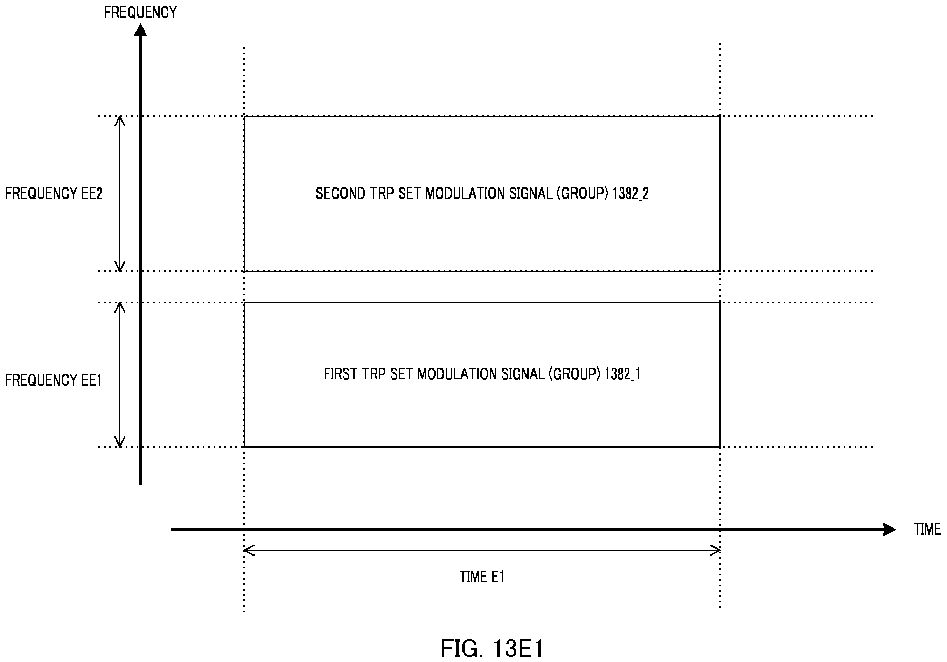

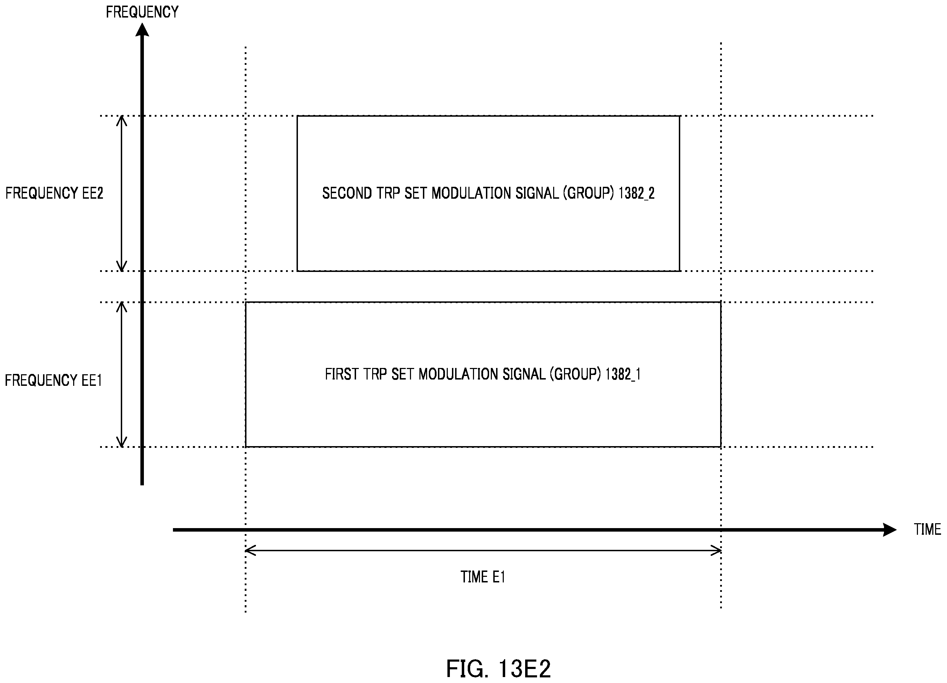

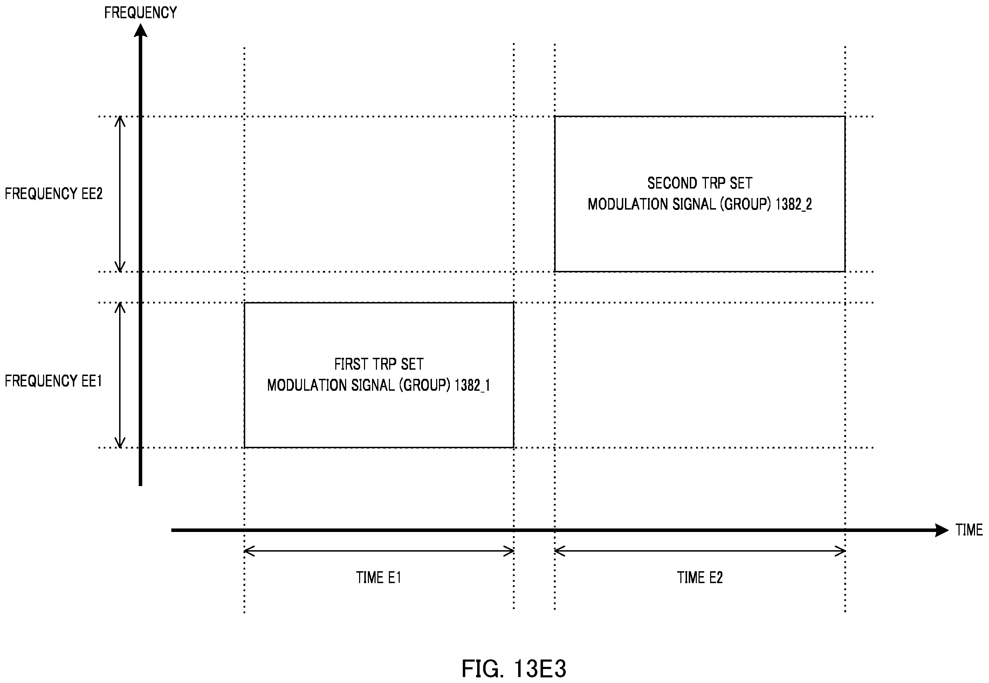

FIG. 13E1 is a diagram illustrating a mapping example of a signal in a time-frequency axis in a case of transmission using an FDM method;

FIG. 13E2 is a diagram illustrating a mapping example of a signal in a time-frequency axis in a case of transmission using an FDM method;

FIG. 13E3 is a diagram illustrating a mapping example of a signal in a time-frequency axis in a case of transmission using an FDM method;

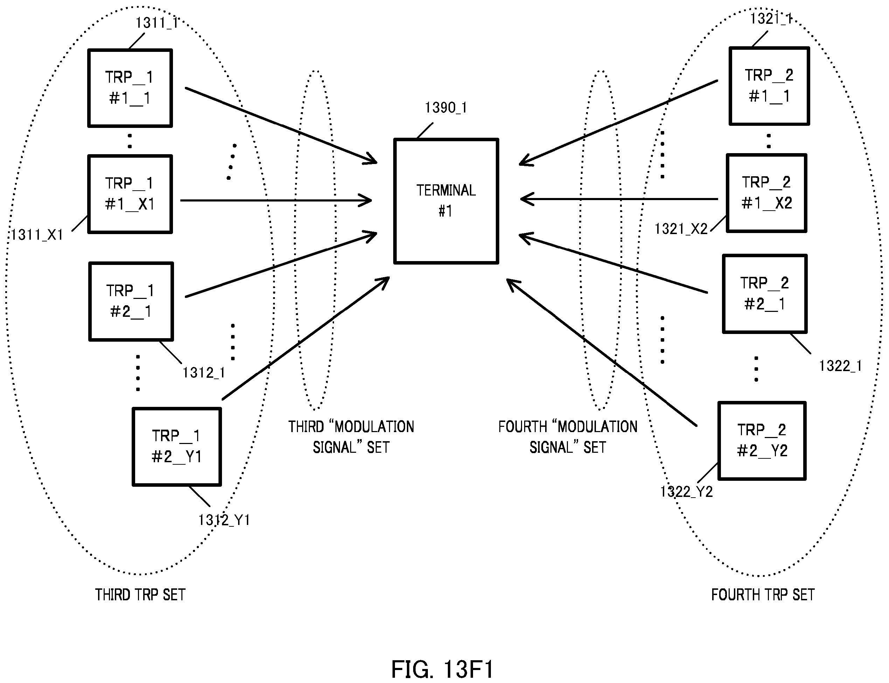

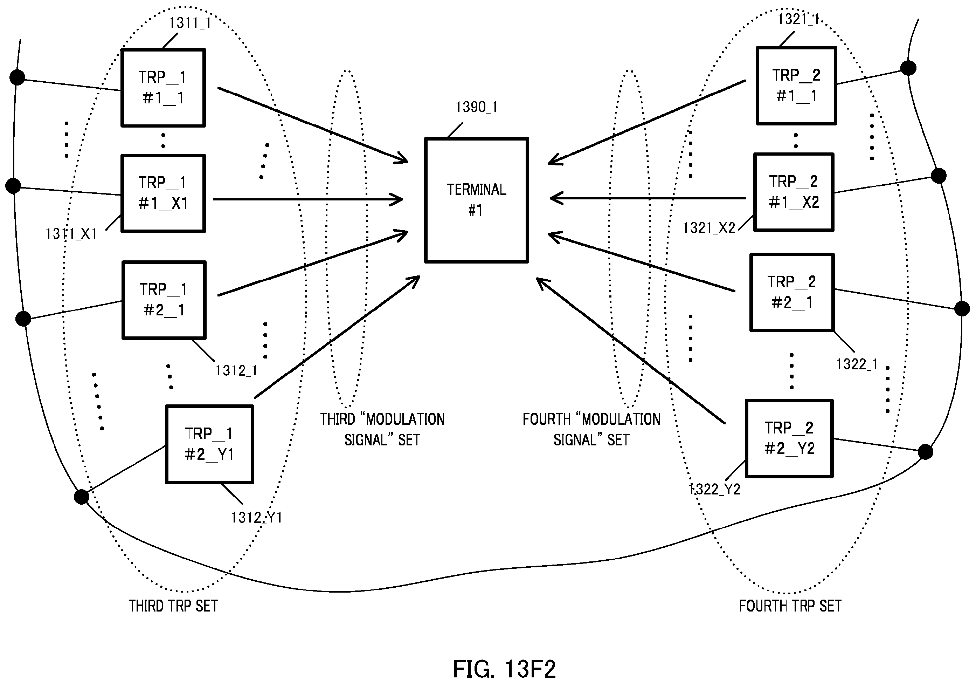

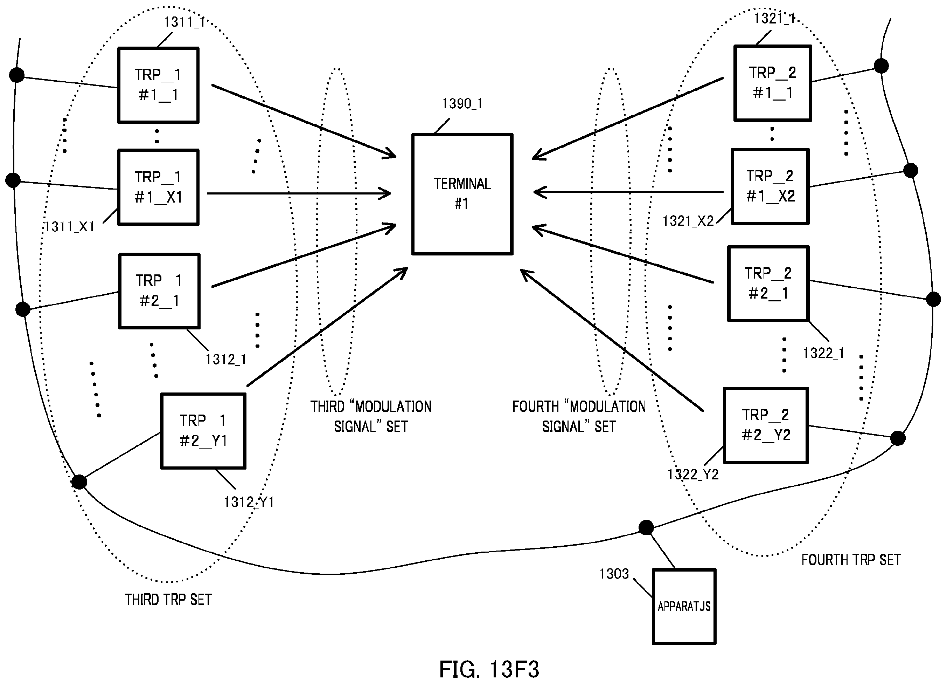

FIG. 13F1 is a diagram illustrating an example of a state of a TRP and a terminal;

FIG. 13F2 is a diagram illustrating an example of a state of a TRP and a terminal;

FIG. 13F3 is a diagram illustrating an example of a state of a TRP and a terminal;

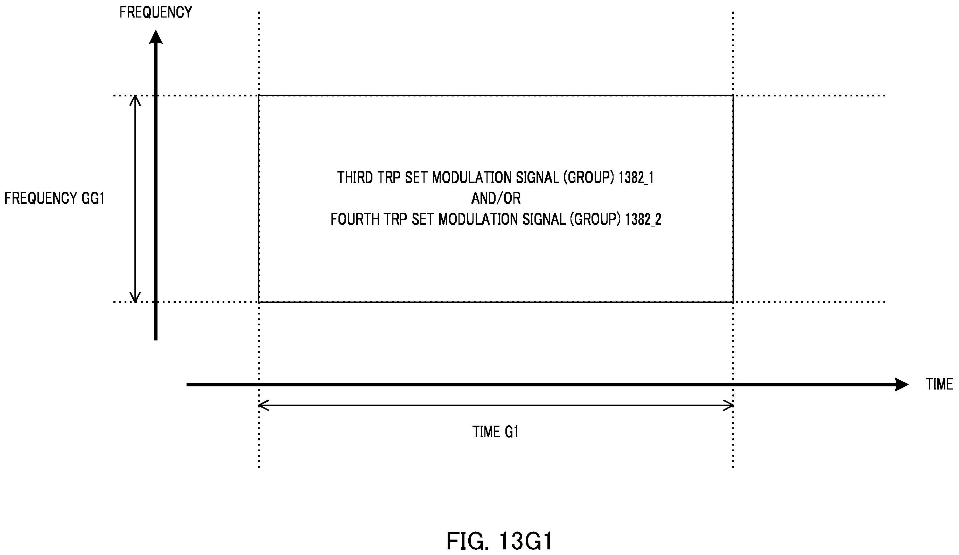

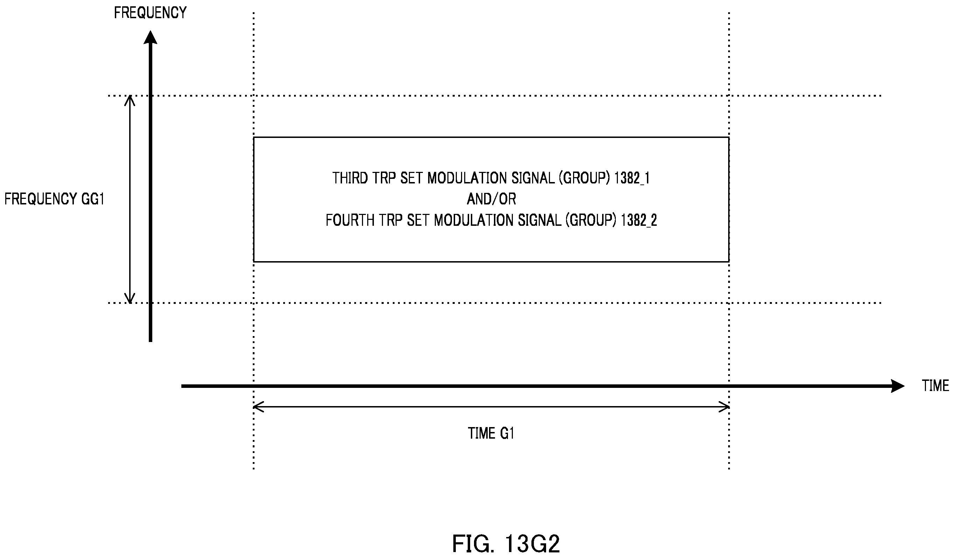

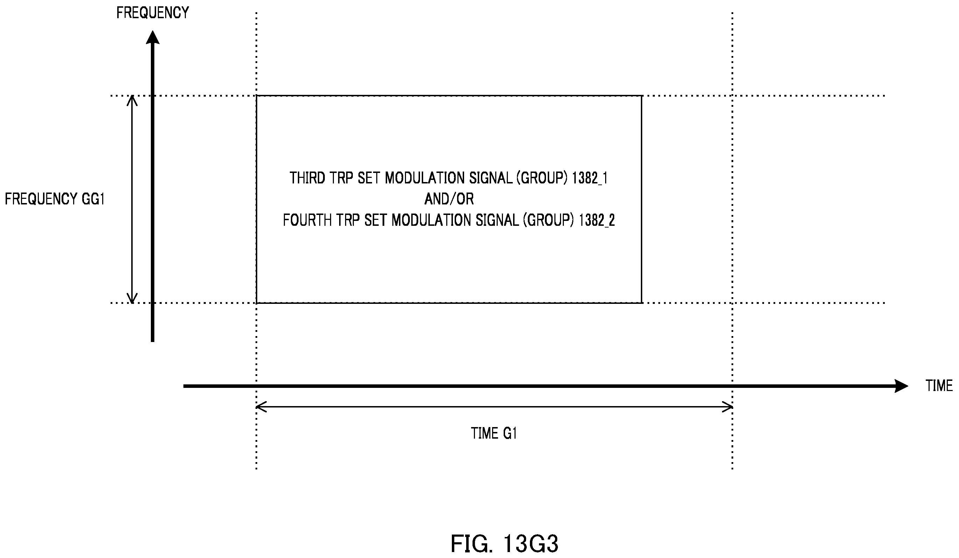

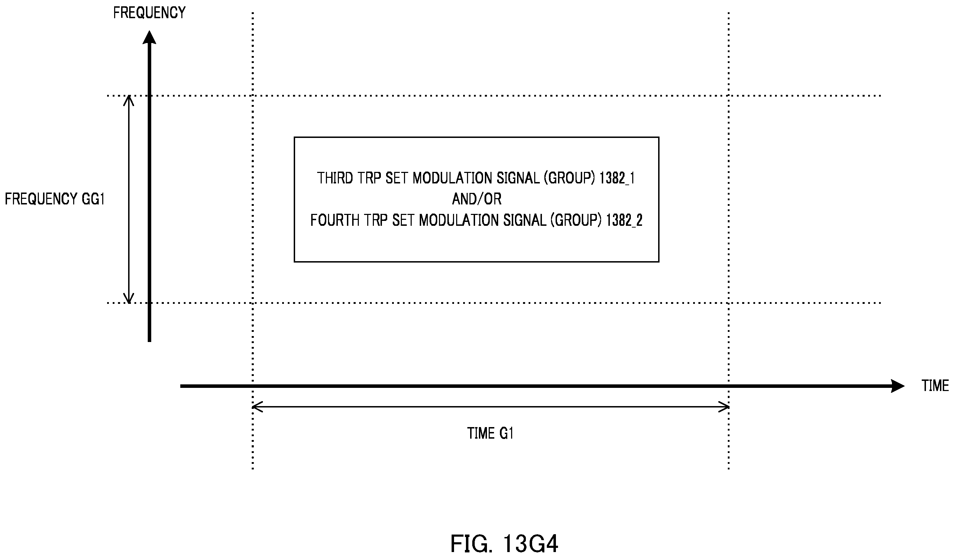

FIG. 13G1 is a diagram illustrating a mapping example of a signal in a time-frequency axis in a case of transmission using an SDM method;

FIG. 13G2 is a diagram illustrating a mapping example of a signal in a time-frequency axis in a case of transmission using an SDM method;

FIG. 13G3 is a diagram illustrating a mapping example of a signal in a time-frequency axis in a case of transmission using an SDM method;

FIG. 13G4 is a diagram illustrating a mapping example of a signal in a time-frequency axis in a case of transmission using an SDM method;

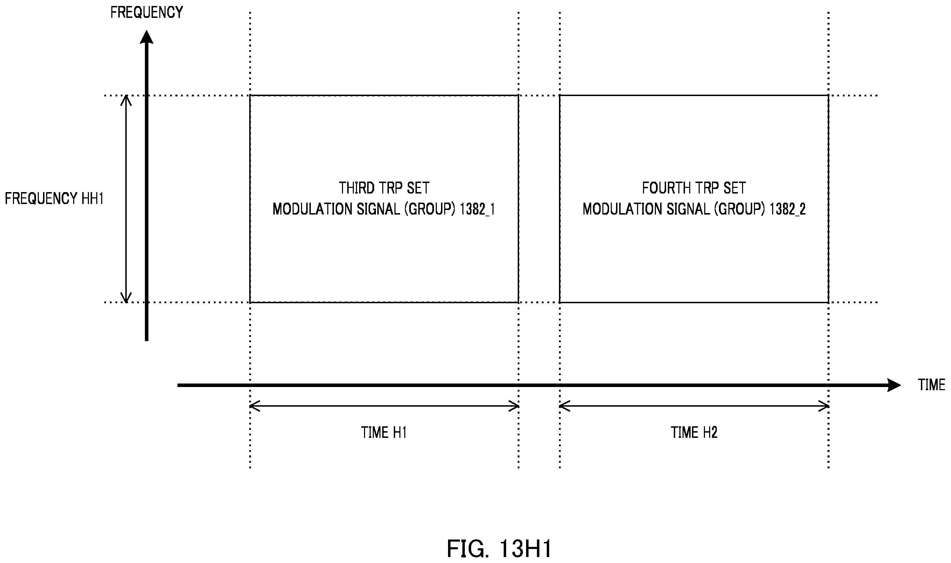

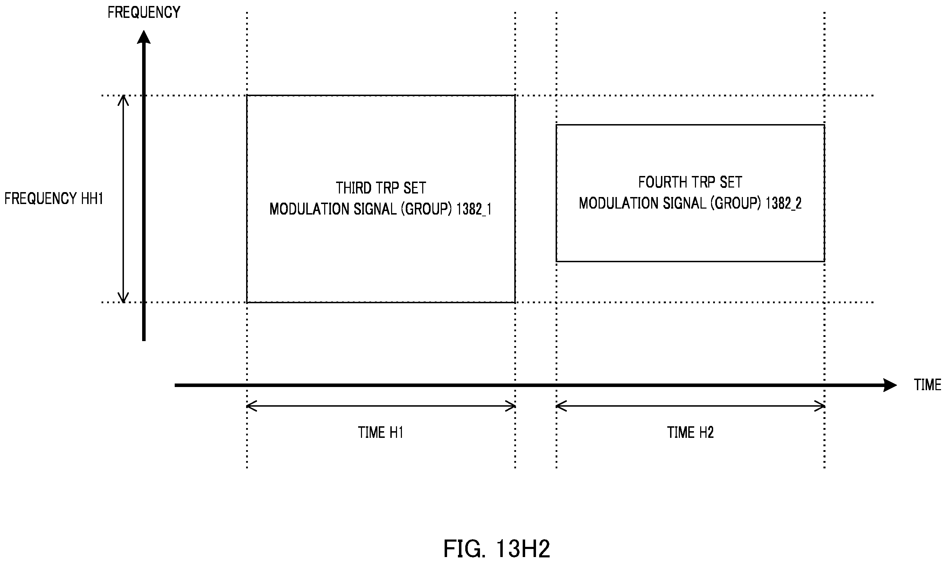

FIG. 13H1 is a diagram illustrating a mapping example of a signal in a time-frequency axis in a case of transmission using a TDM method;

FIG. 13H2 is a diagram illustrating a mapping example of a signal in a time-frequency axis in a case of transmission using a TDM method;

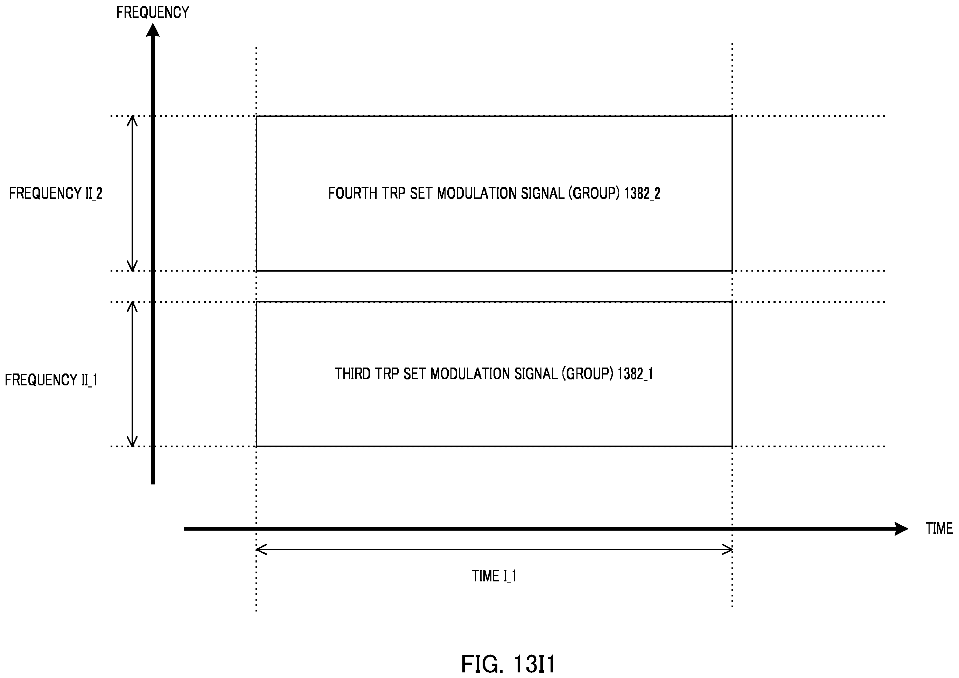

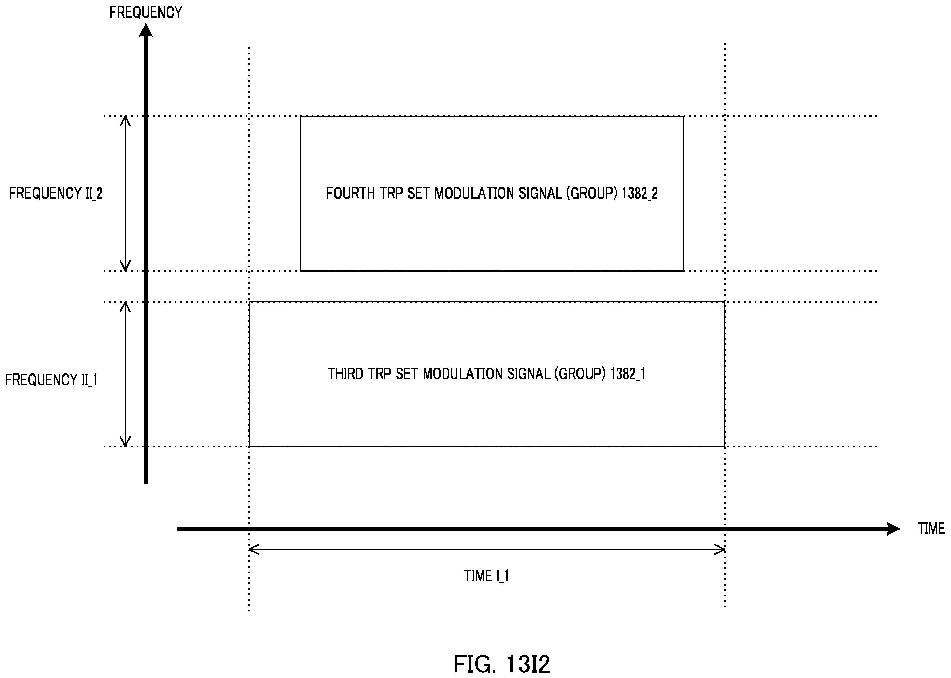

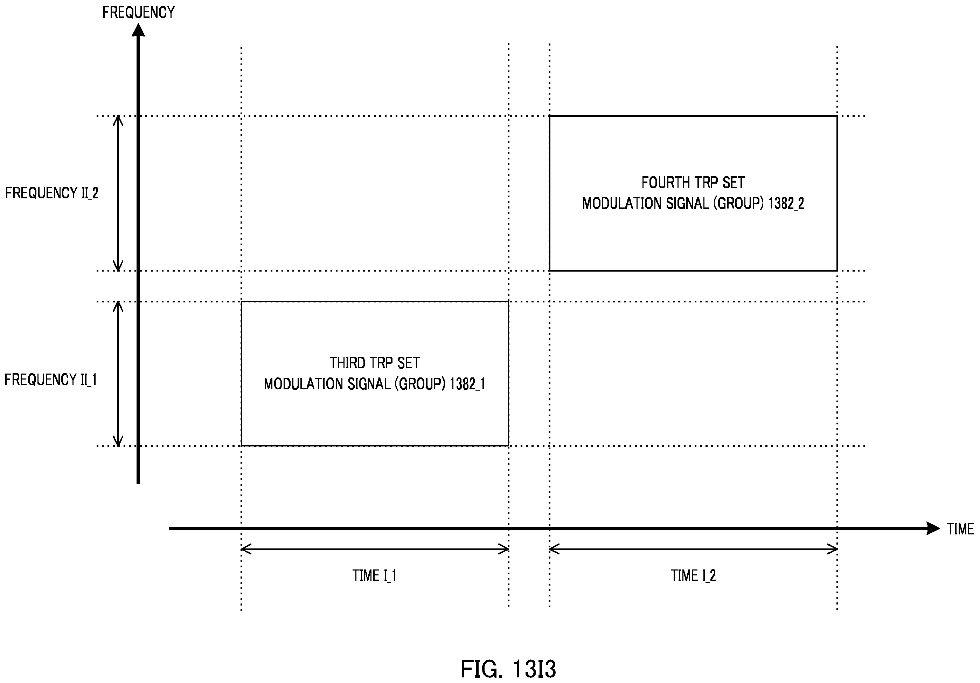

FIG. 13I1 is a diagram illustrating a mapping example of a signal in a time-frequency axis in a case of transmission using an FDM method;

FIG. 13I2 is a diagram illustrating a mapping example of a signal in a time-frequency axis in a case of transmission using an FDM method;

FIG. 13I3 is a diagram illustrating a mapping example of a signal in a time-frequency axis in a case of transmission using an FDM method;

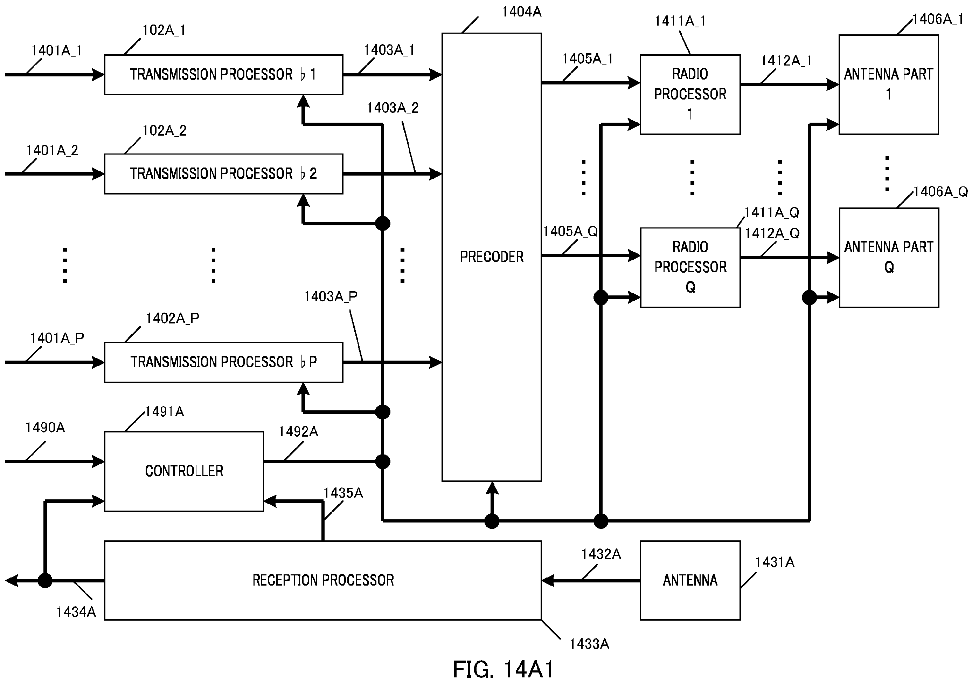

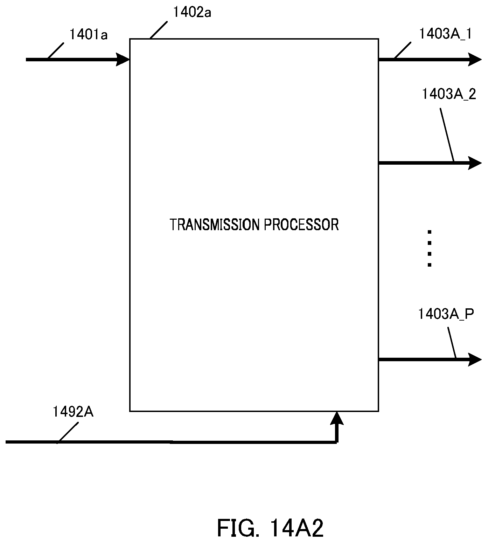

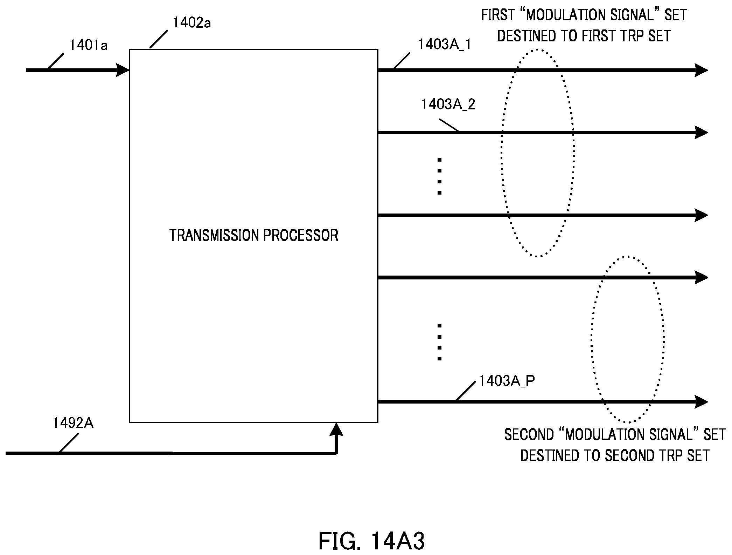

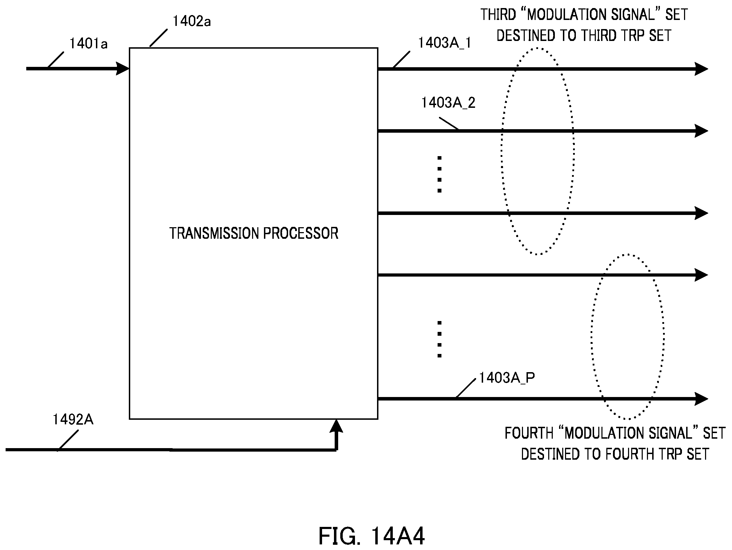

FIG. 14A1 is a diagram illustrating a configuration example of a communication apparatus (transmission/reception apparatus) according to Embodiment 3;

FIG. 14A2 is a diagram illustrating another configuration example of a transmission processor;

FIG. 14A3 is a diagram illustrating another configuration example of a transmission processor;

FIG. 14A4 is a diagram illustrating another configuration example of a transmission processor;

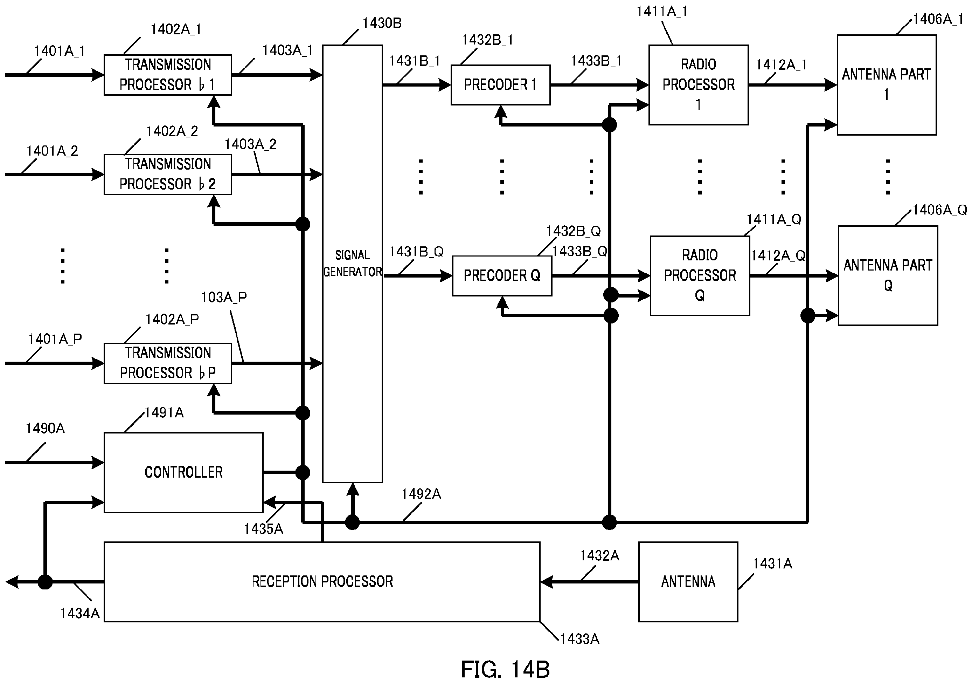

FIG. 14B is a diagram illustrating a configuration example of a communication apparatus (transmission/reception apparatus) according to Embodiment 3 different from FIG. 14A1;

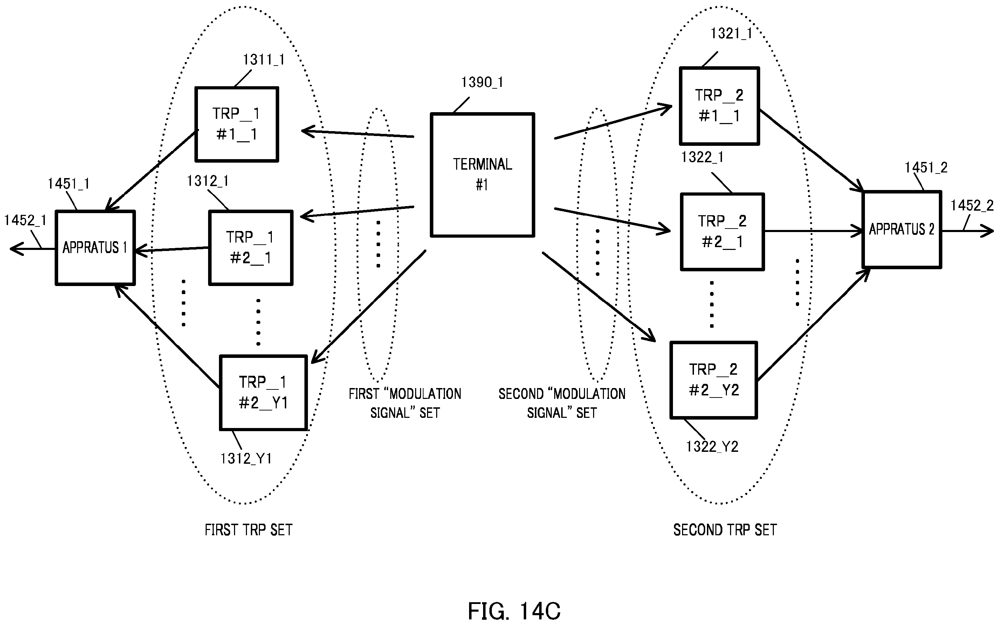

FIG. 14C is a diagram illustrating an example of a state of TRPs and a terminal;

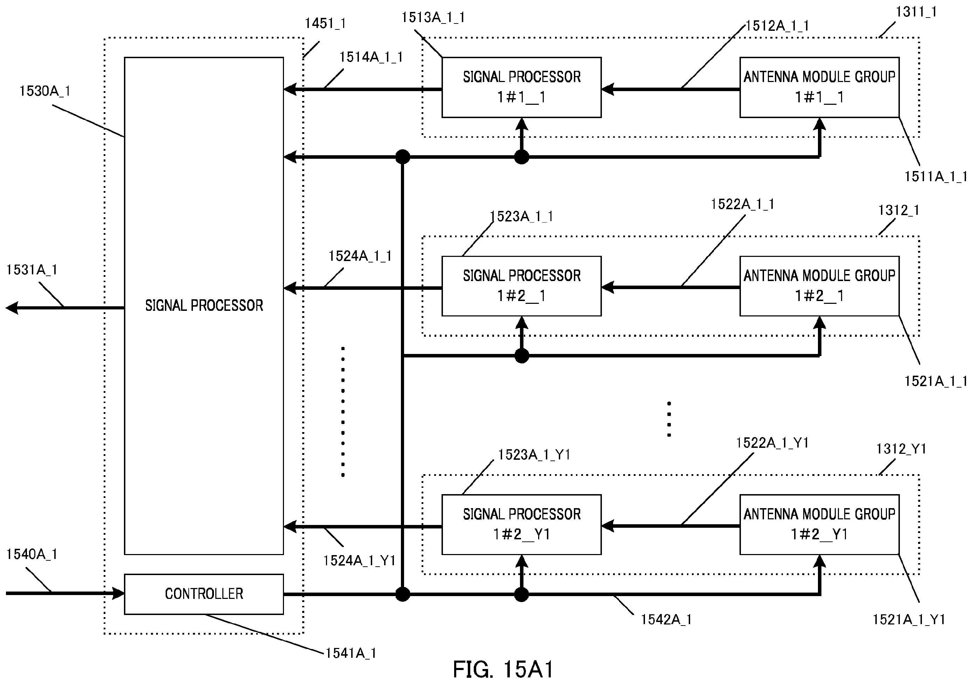

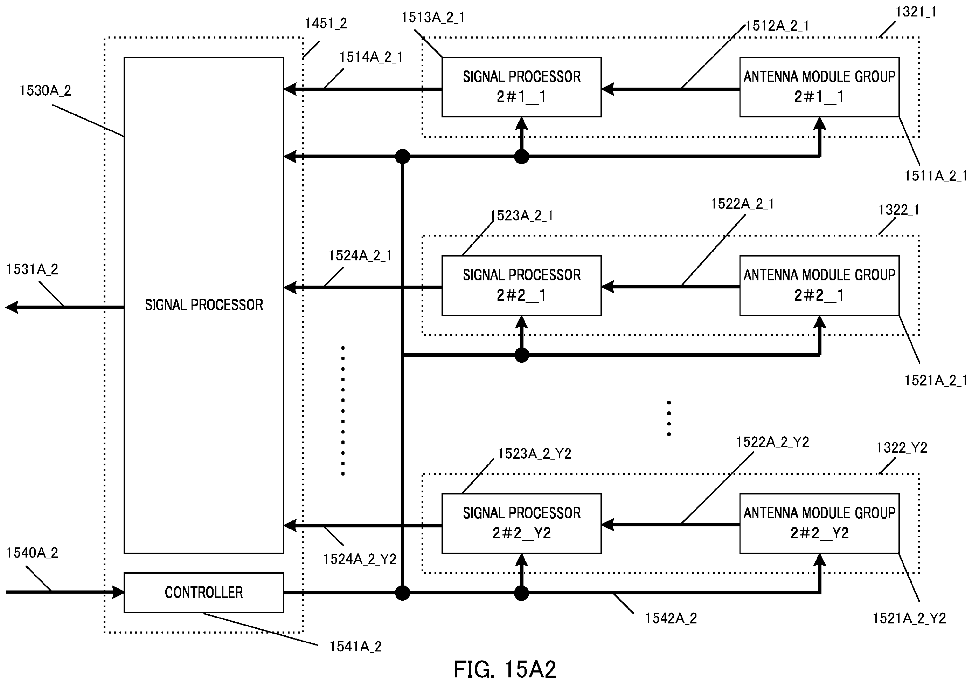

FIG. 15A1 is a diagram illustrating a configuration example of a system composed of ""TRP_1#1_1", "TRP_1#2_1, ..., TRP_1#2_Y1", and apparatus 1" in FIG. 14C;

FIG. 15A2 is a diagram illustrating a configuration example of a system composed of ""TRP_2#1_1", "TRP_2#2_1, ..., TRP_2#2_Y2", and apparatus 2" in FIG. 14C;

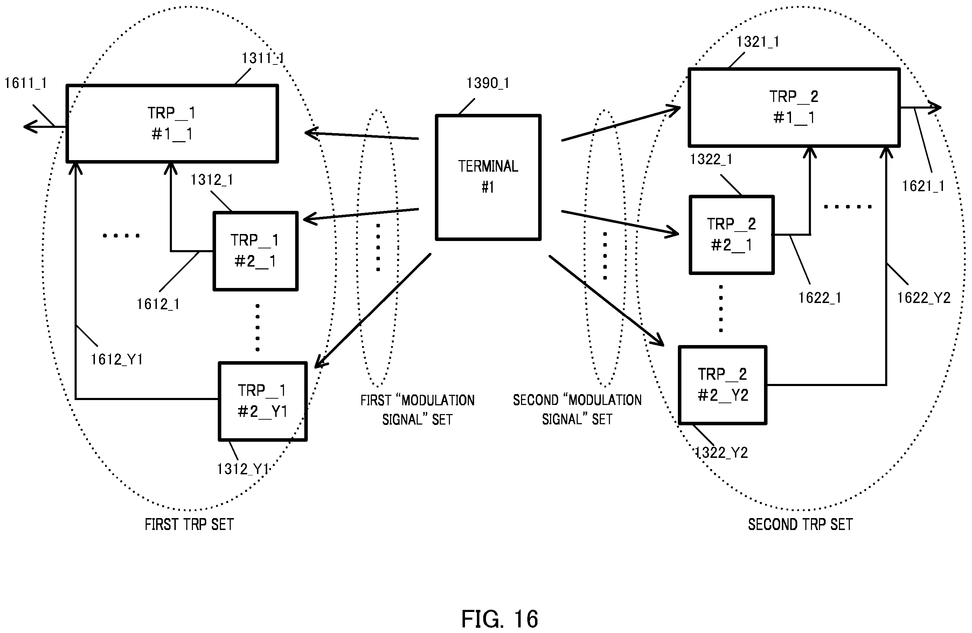

FIG. 16 is a diagram illustrating an example of a state of TRPs and a terminal different from FIG. 14C;

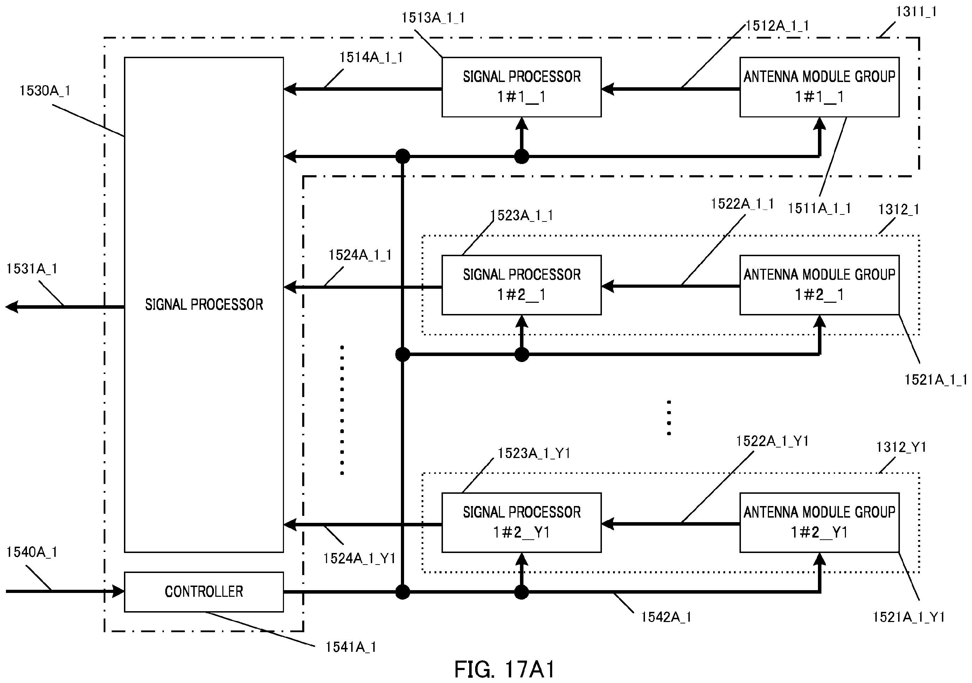

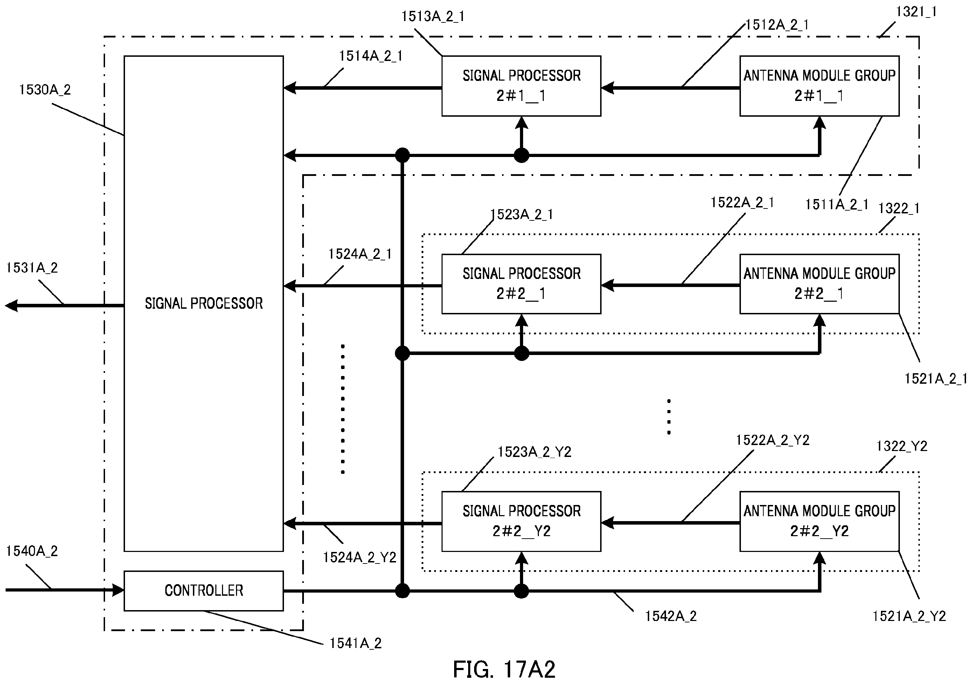

FIG. 17A1 is a diagram illustrating a configuration example of a system composed of ""TRP_1#1_1", "TRP_1#2_1, ..., TRP_1#2_Y1"" in FIG. 16;

FIG. 17A2 is a diagram illustrating a configuration example of a system composed of ""TRP_2#1_1", "TRP_2#2_1, ..., TRP_2#2_Y2"" in FIG. 16;

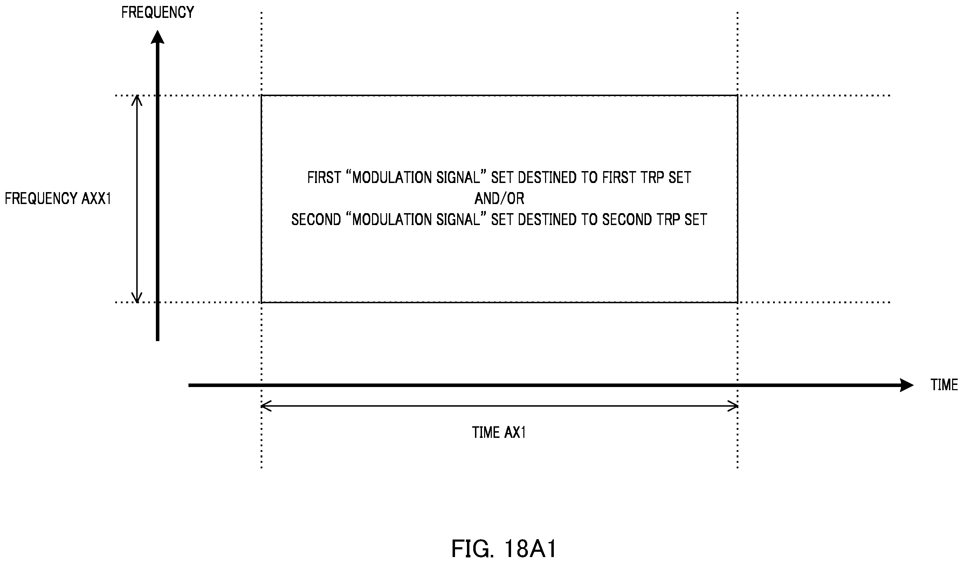

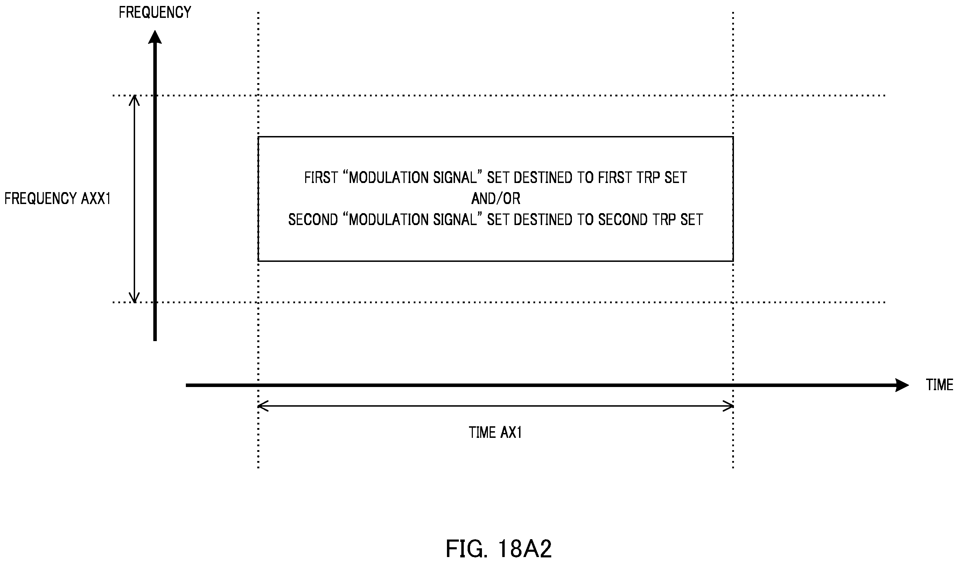

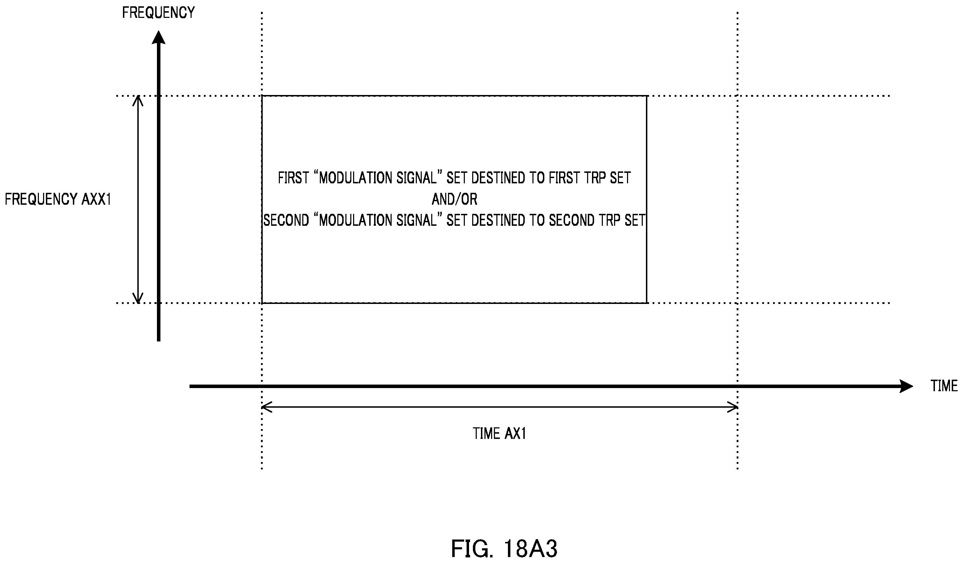

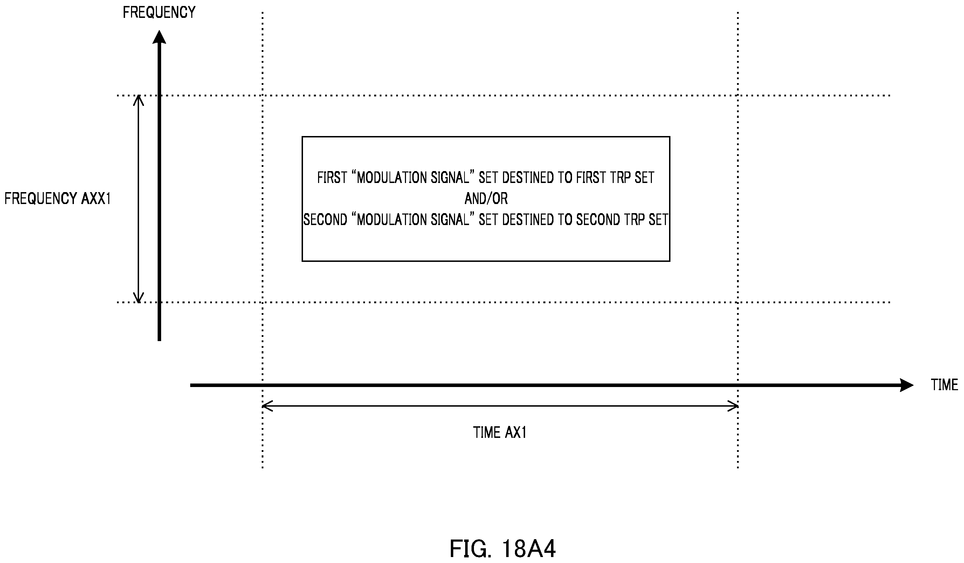

FIG. 18A1 is a diagram illustrating a mapping example of a signal in a time-frequency axis in a case of transmission using an SDM method;

FIG. 18A2 is a diagram illustrating a mapping example of a signal in a time-frequency axis in a case of transmission using an SDM method;

FIG. 18A3 is a diagram illustrating a mapping example of a signal in a time-frequency axis in a case of transmission using an SDM method;

FIG. 18A4 is a diagram illustrating a mapping example of a signal in a time-frequency axis in a case of transmission using an SDM method;

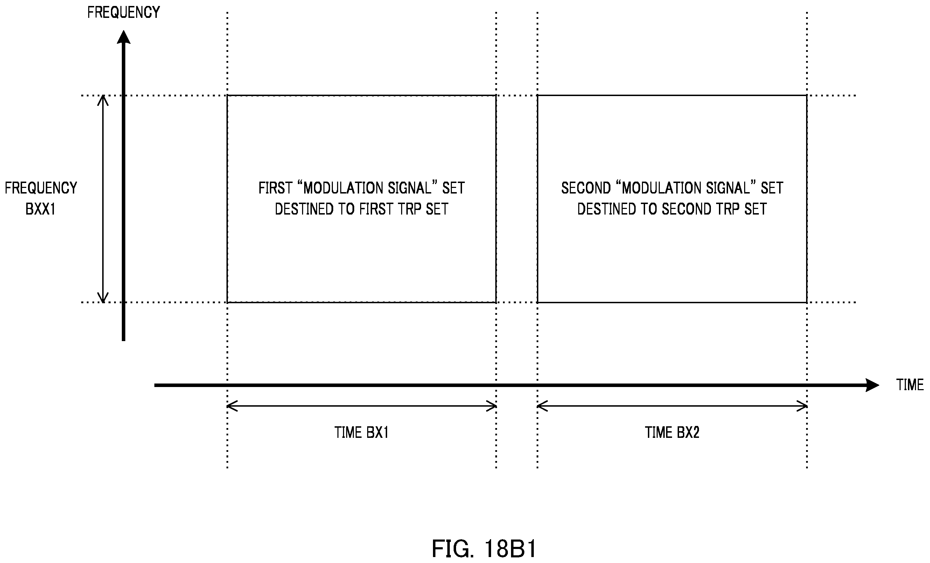

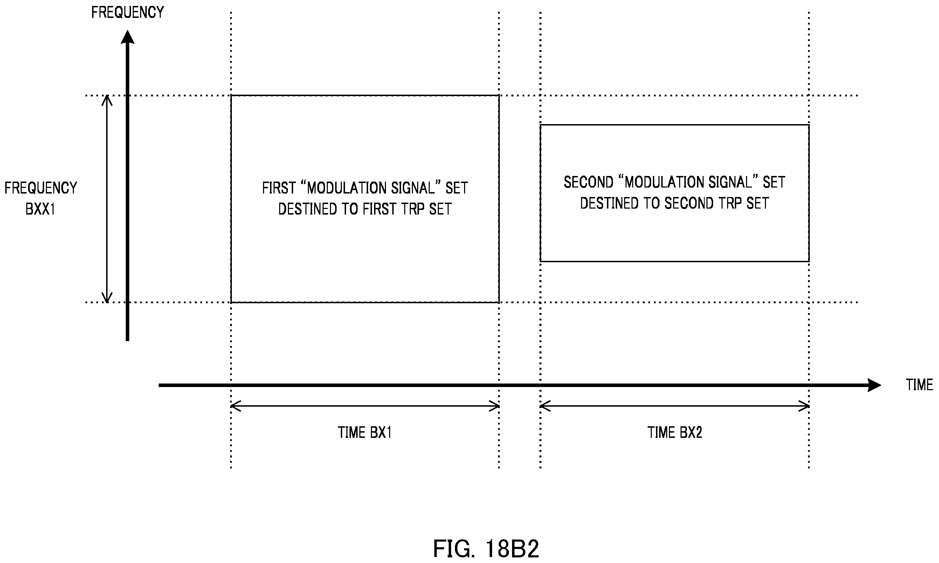

FIG. 18B1 is a diagram illustrating a mapping example of a signal in a time-frequency axis in a case of transmission using a TDM method;

FIG. 18B2 is a diagram illustrating a mapping example of a signal in a time-frequency axis in a case of transmission using a TDM method;

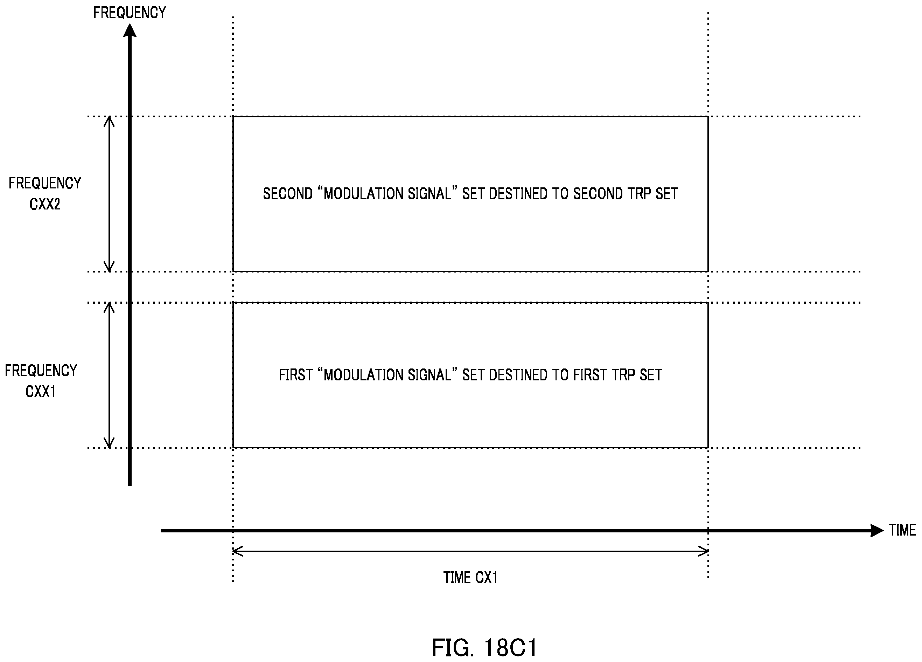

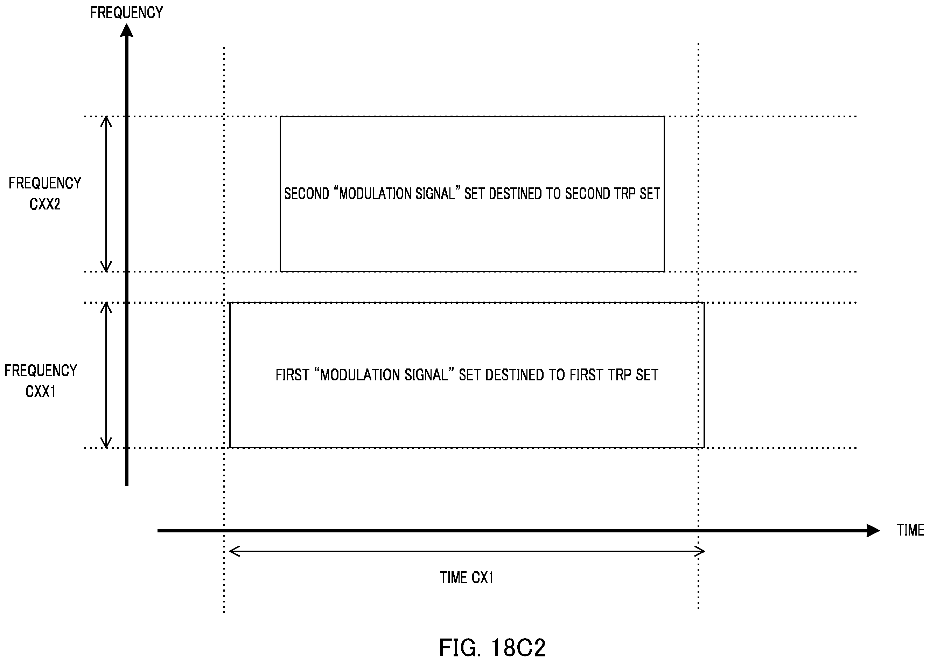

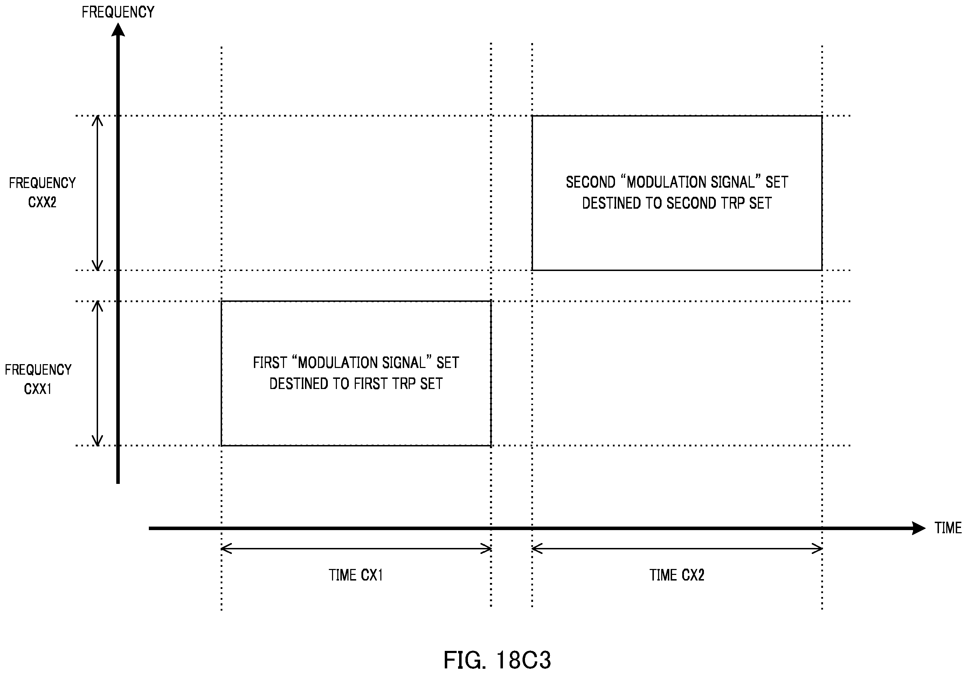

FIG. 18C1 is a diagram illustrating a mapping example of a signal in a time-frequency axis in a case of transmission using an FDM method;

FIG. 18C2 is a diagram illustrating a mapping example of a signal in a time-frequency axis in a case of transmission using an FDM method;

FIG. 18C3 is a diagram illustrating a mapping example of a signal in a time-frequency axis in a case of transmission using an FDM method;

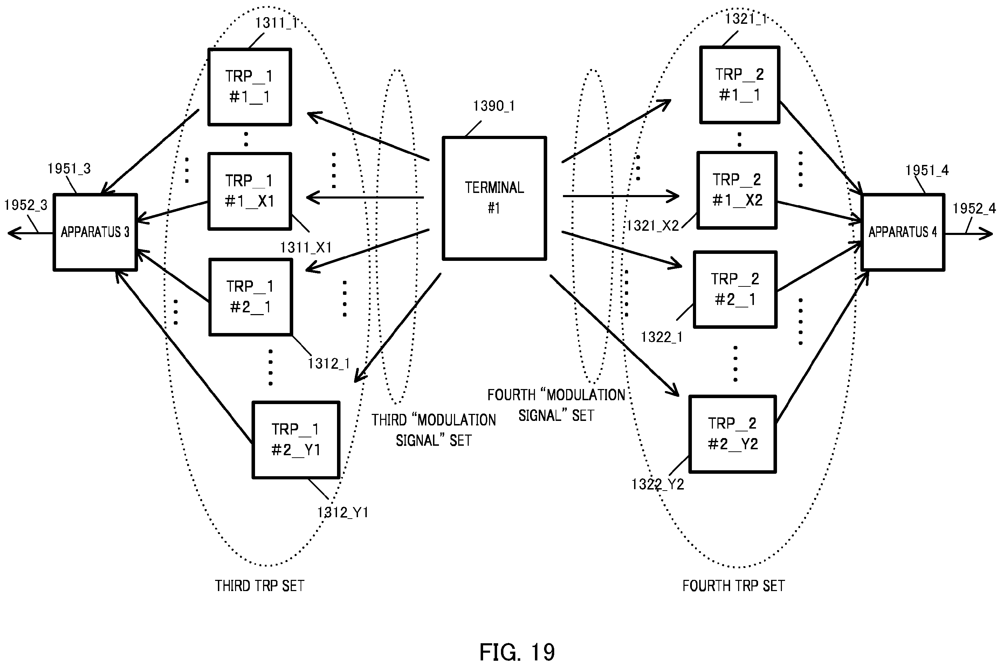

FIG. 19 is a diagram illustrating an example of a state of TRPs and a terminal;

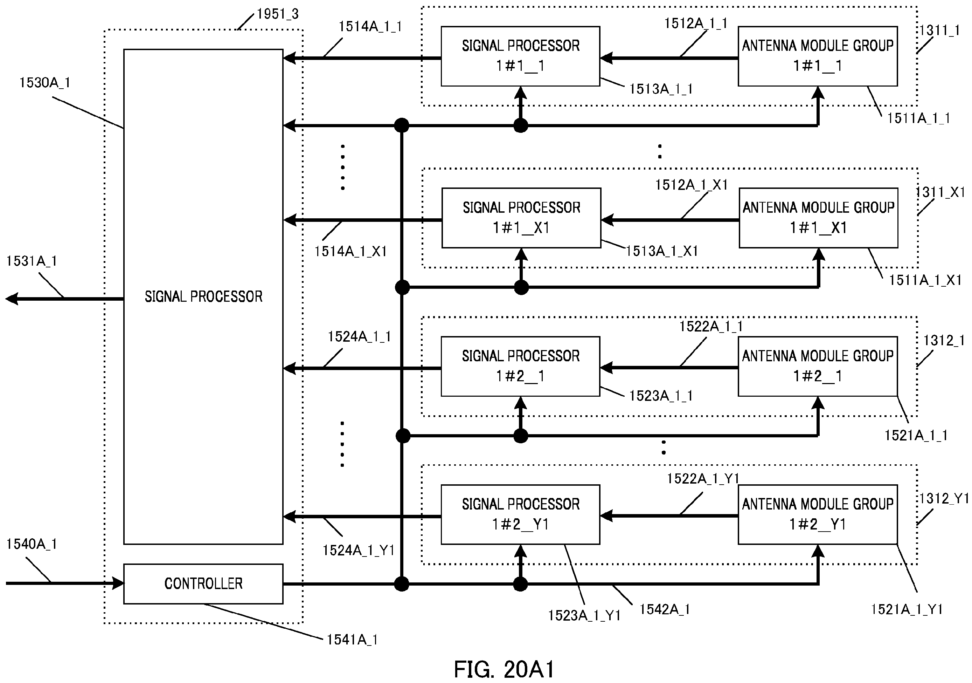

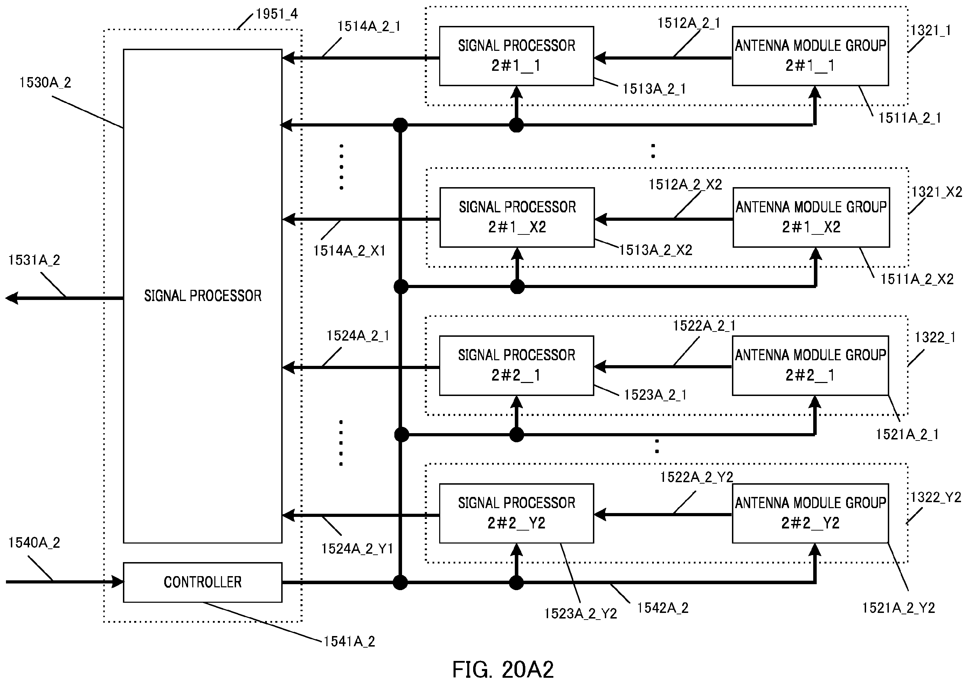

FIG. 20A1 is a diagram illustrating a configuration example of a system composed of ""TRP_1#1_1, ..., TRP_1#1_X1", "TRP_1#2_1, ..., TRP_1#2_Y1", and apparatus 3" in FIG. 19;

FIG. 20A2 is a diagram illustrating a configuration example of a system composed of ""TRP_2#1_1, ..., TRP_2#1_X2", "TRP_2#2_1, ..., TRP_2#2_Y2", and apparatus 4" in FIG. 19;

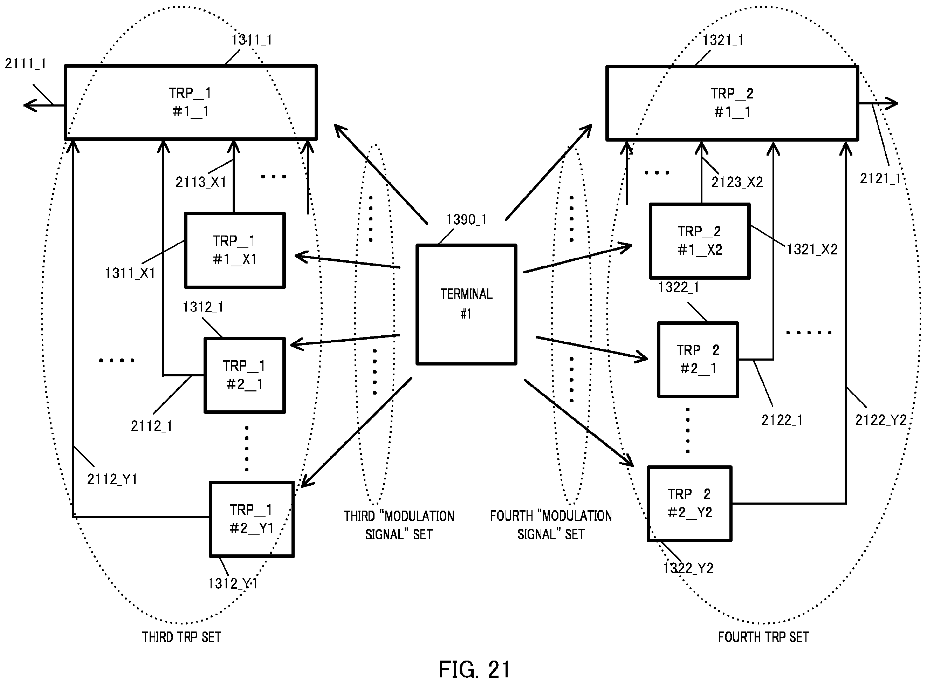

FIG. 21 is a diagram illustrating an example of a state of TRPs and a terminal different from FIG. 19;

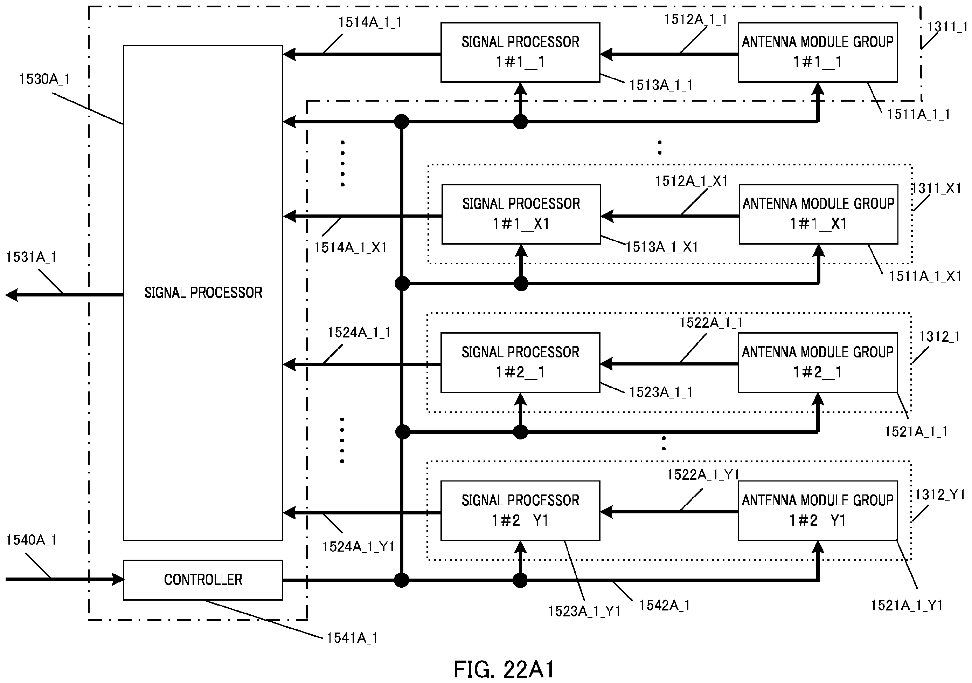

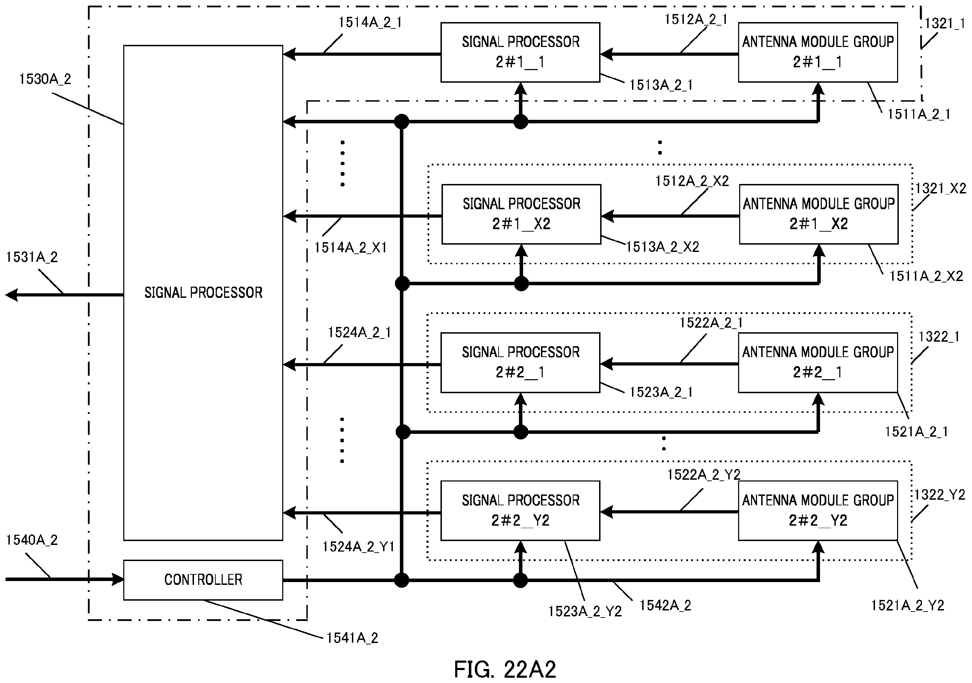

FIG. 22A1 is a diagram illustrating a configuration example of a system composed of ""TRP_1#1_1, ..., TRP_1#1_X1", "TRP_1#2_1, ..., TRP_1#2_Y1"" in FIG. 19;

FIG. 22A2 is a diagram illustrating a configuration example of a system composed of ""TRP_2#1_1, ..., TRP_2#1_X2", "TRP_2#2_1, ..., TRP_2#2_Y2"" in FIG. 21;

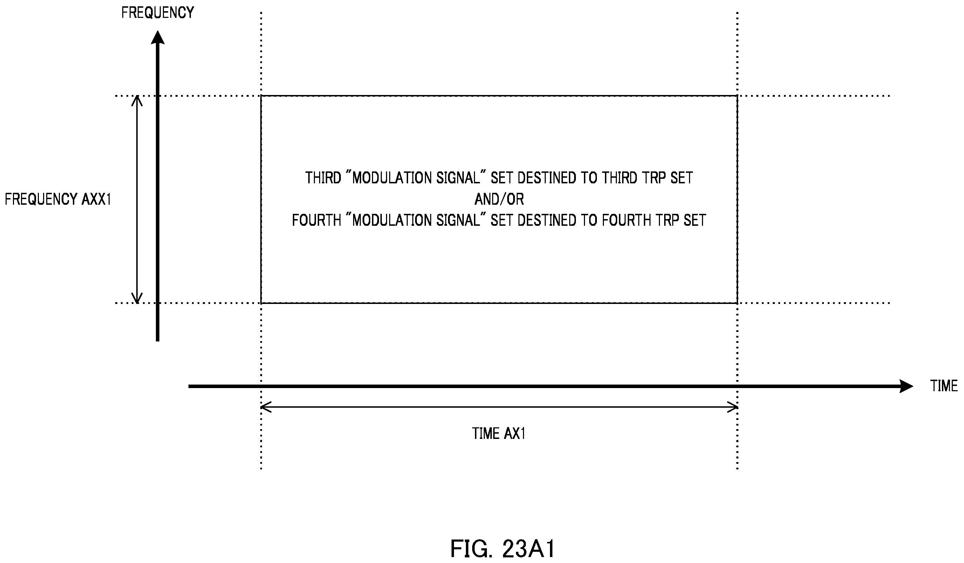

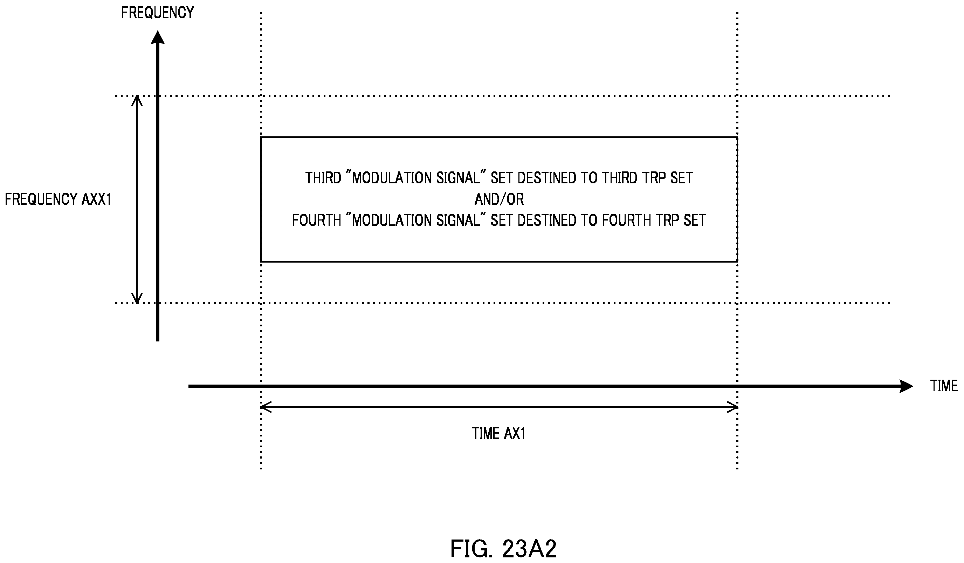

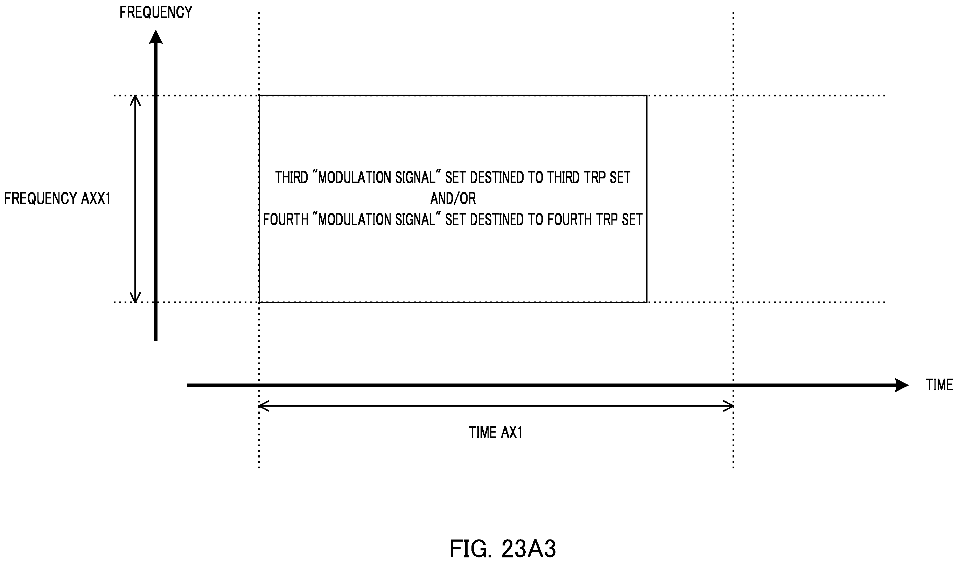

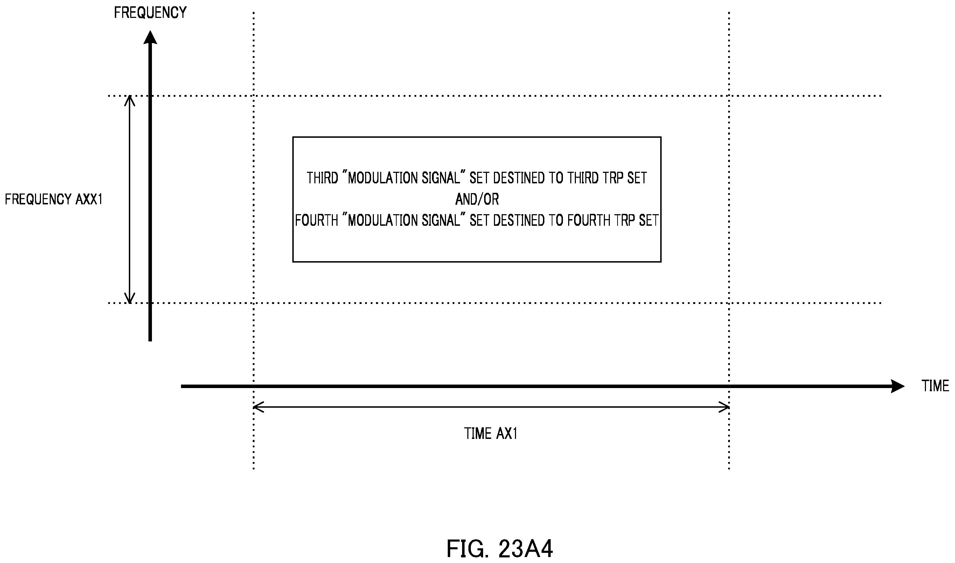

FIG. 23A1 is a diagram illustrating a mapping example of a signal in a time-frequency axis in a case of transmission using an SDM method;

FIG. 23A2 is a diagram illustrating a mapping example of a signal in a time-frequency axis in a case of transmission using an SDM method;

FIG. 23A3 is a diagram illustrating a mapping example of a signal in a time-frequency axis in a case of transmission using an SDM method;

FIG. 23A4 is a diagram illustrating a mapping example of a signal in a time-frequency axis in a case of transmission using an SDM method;

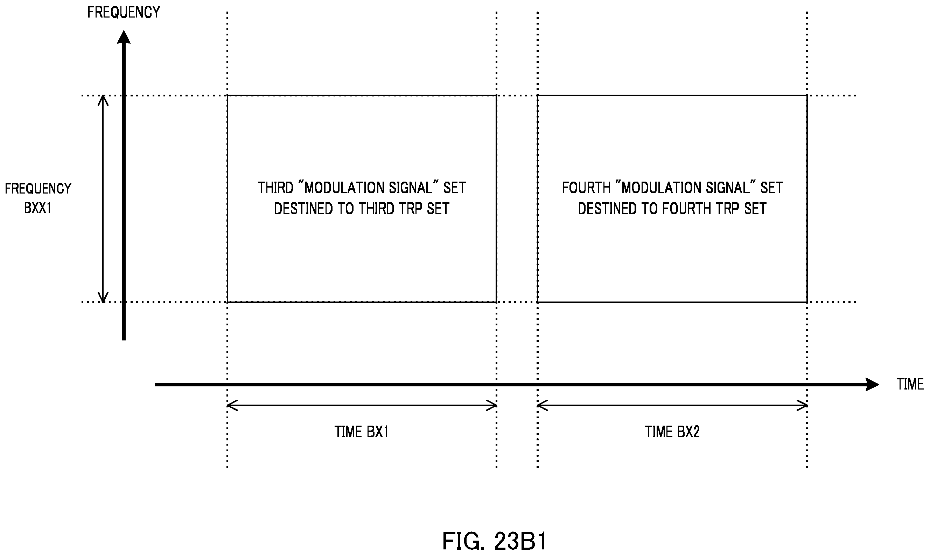

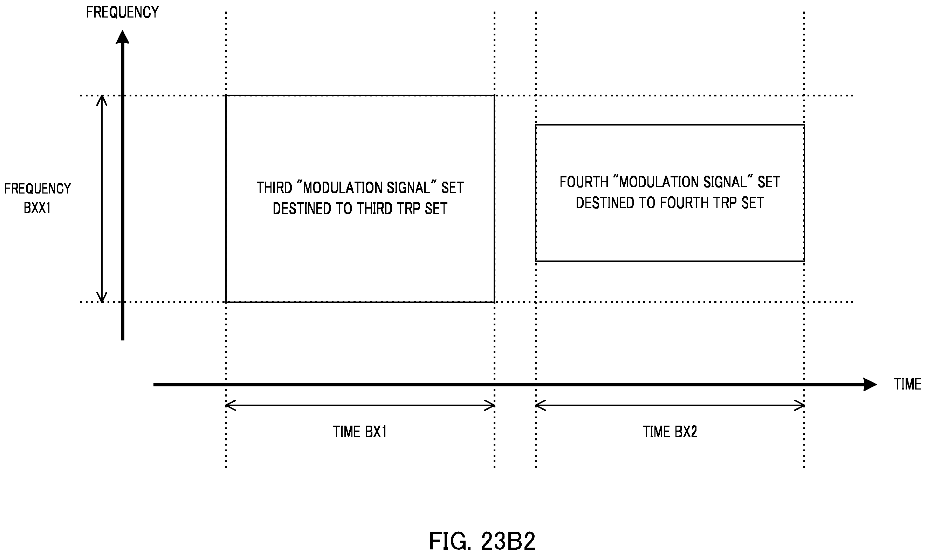

FIG. 23B 1 is a diagram illustrating a mapping example of a signal in a time-frequency axis in a case of transmission using a TDM method;

FIG. 23B2 is a diagram illustrating a mapping example of a signal in a time-frequency axis in a case of transmission using a TDM method;

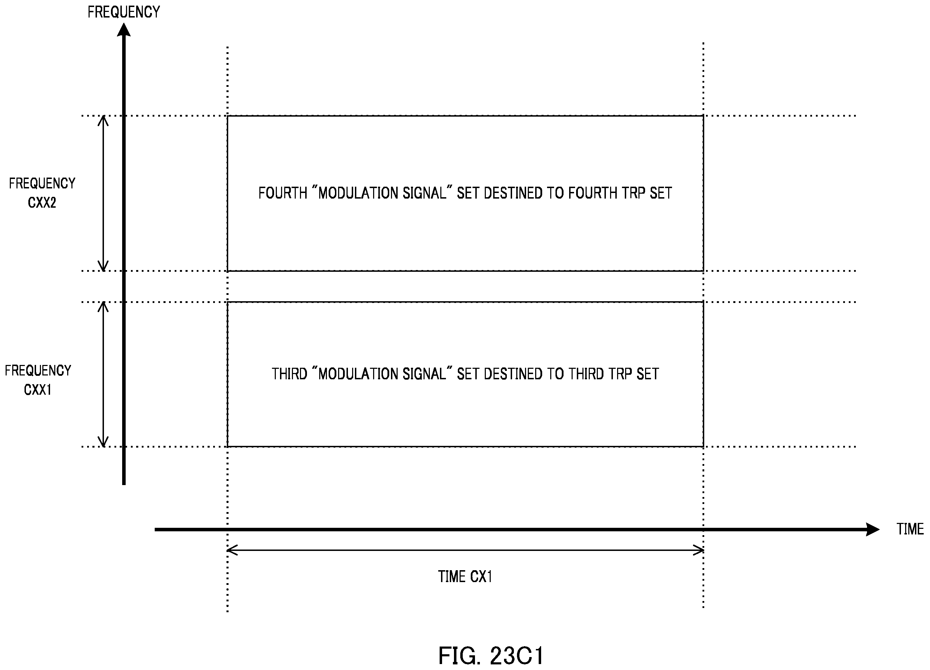

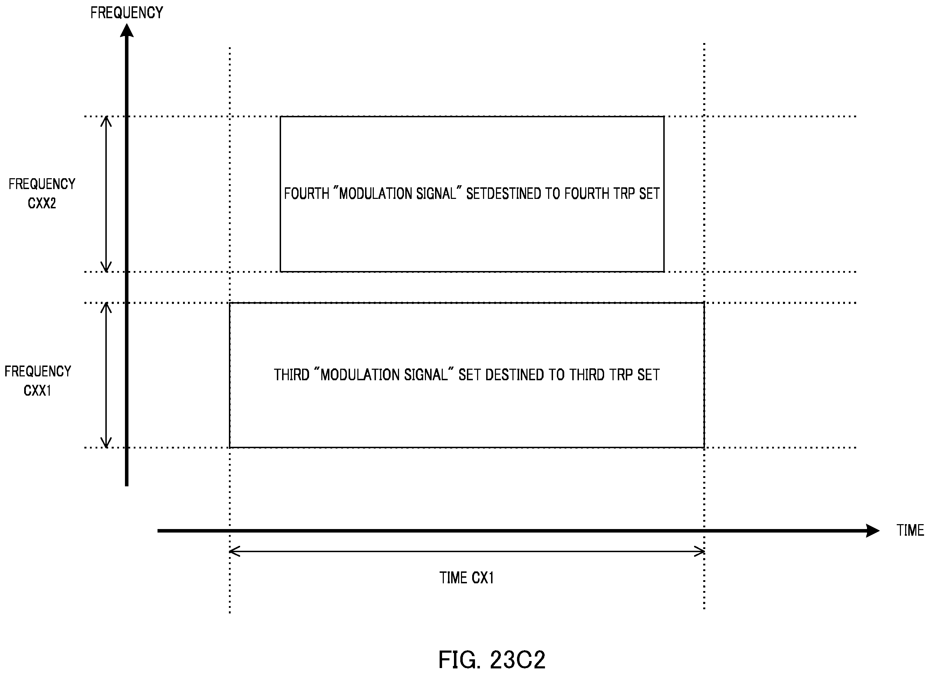

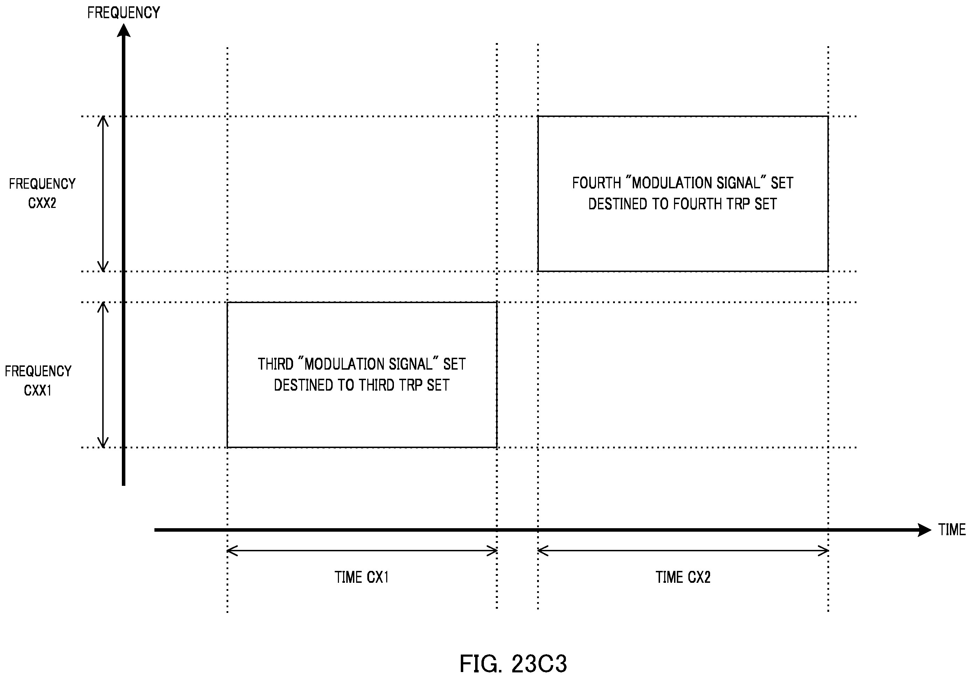

FIG. 23C1 is a diagram illustrating a mapping example of a signal in a time-frequency axis in a case of transmission using an FDM method;

FIG. 23C2 is a diagram illustrating a mapping example of a signal in a time-frequency axis in a case of transmission using an FDM method;

FIG. 23C3 is a diagram illustrating a mapping example of a signal in a time-frequency axis in a case of transmission using an FDM method;

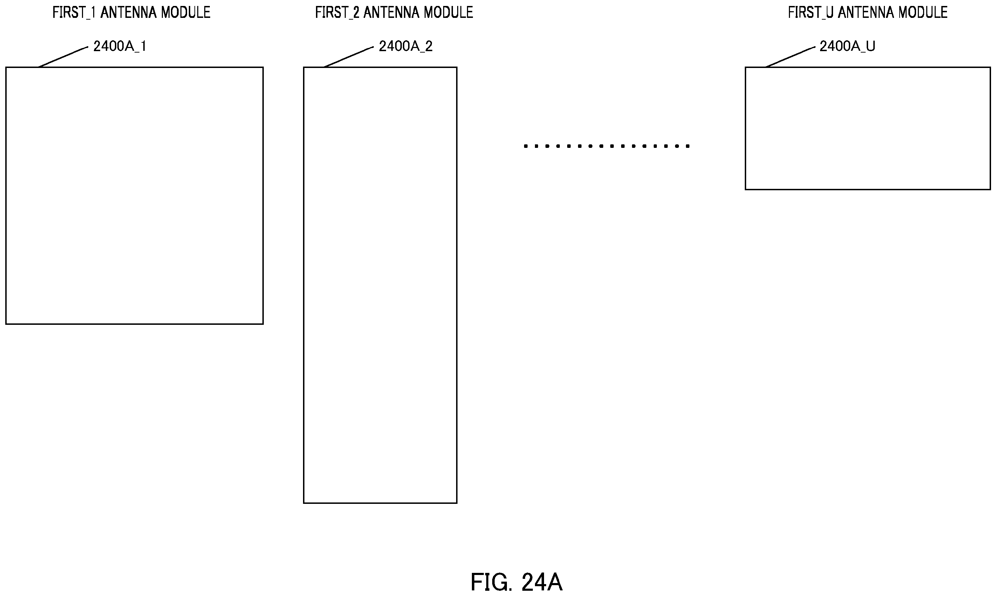

FIG. 24A is a diagram illustrating a configuration example of a first antenna module;

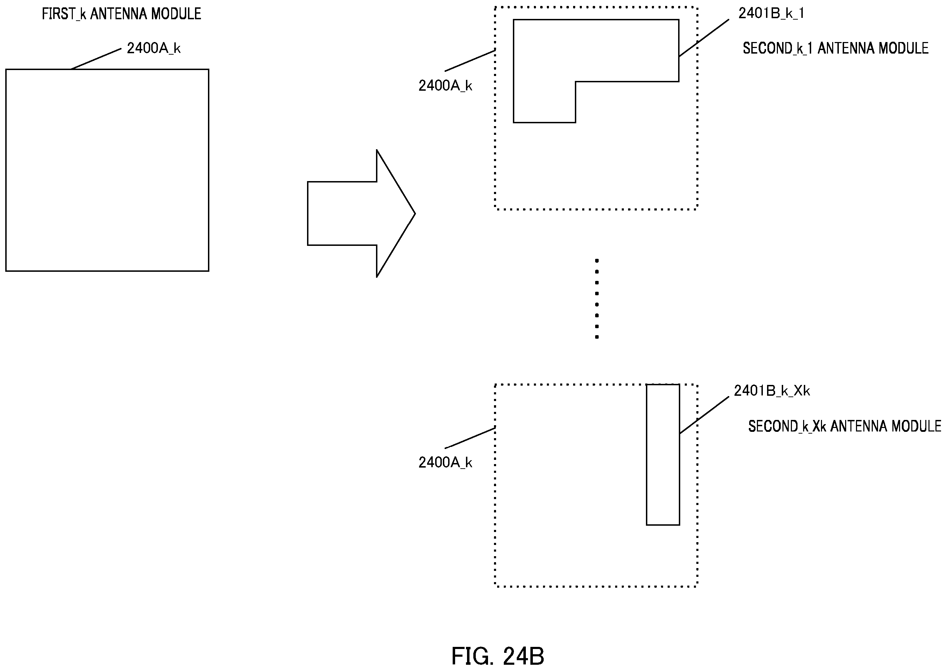

FIG. 24B is a diagram illustrating an example of a relationship between the first antenna module and the second antenna module;

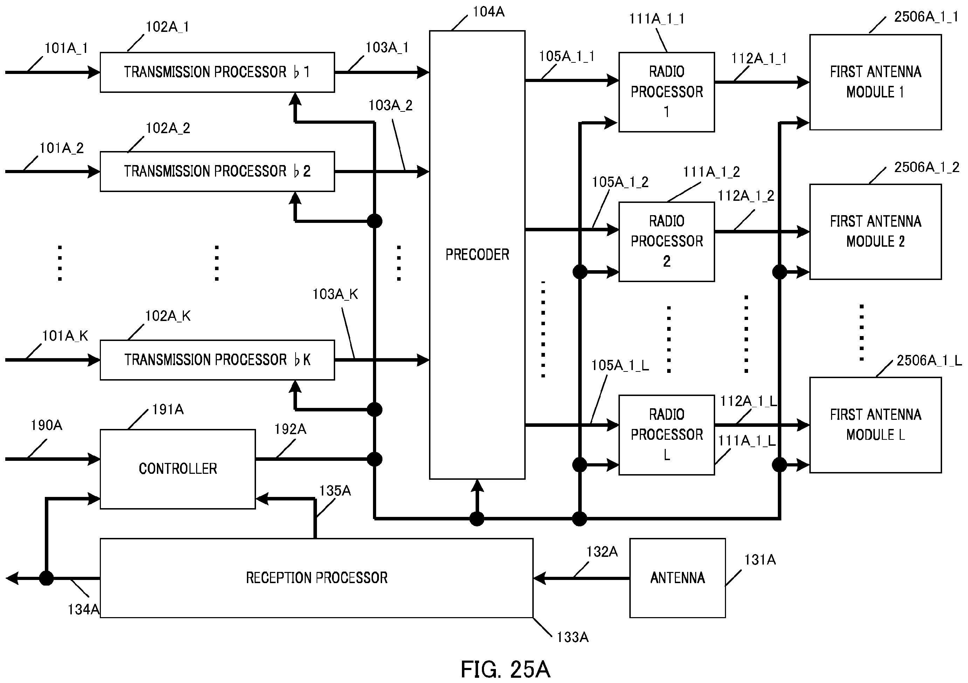

FIG. 25A is a diagram illustrating a configuration example of a communication apparatus;

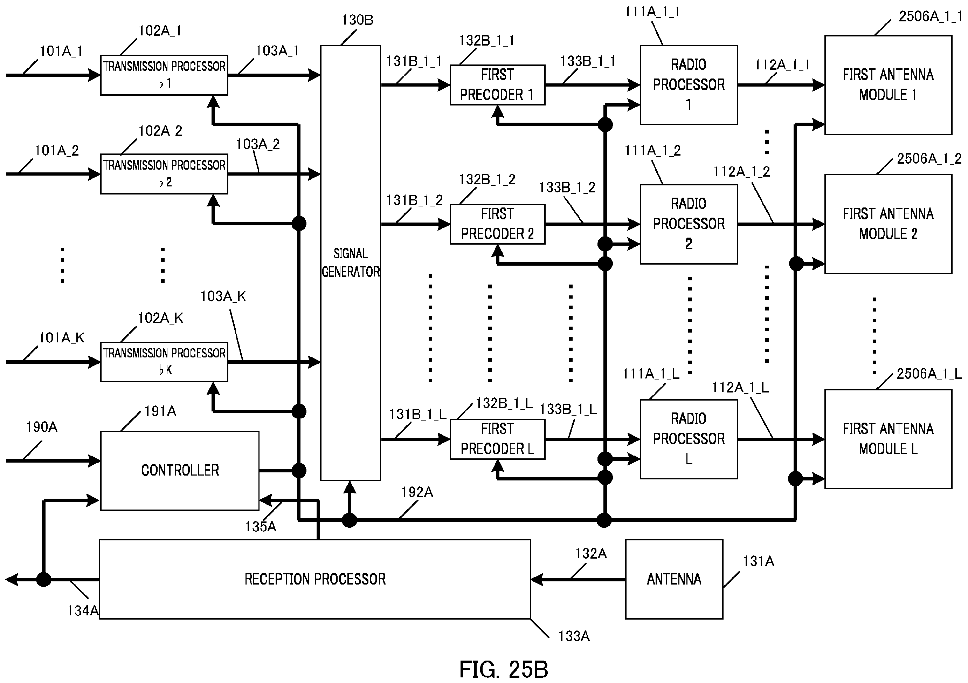

FIG. 25B is a diagram illustrating a configuration example of a communication apparatus;

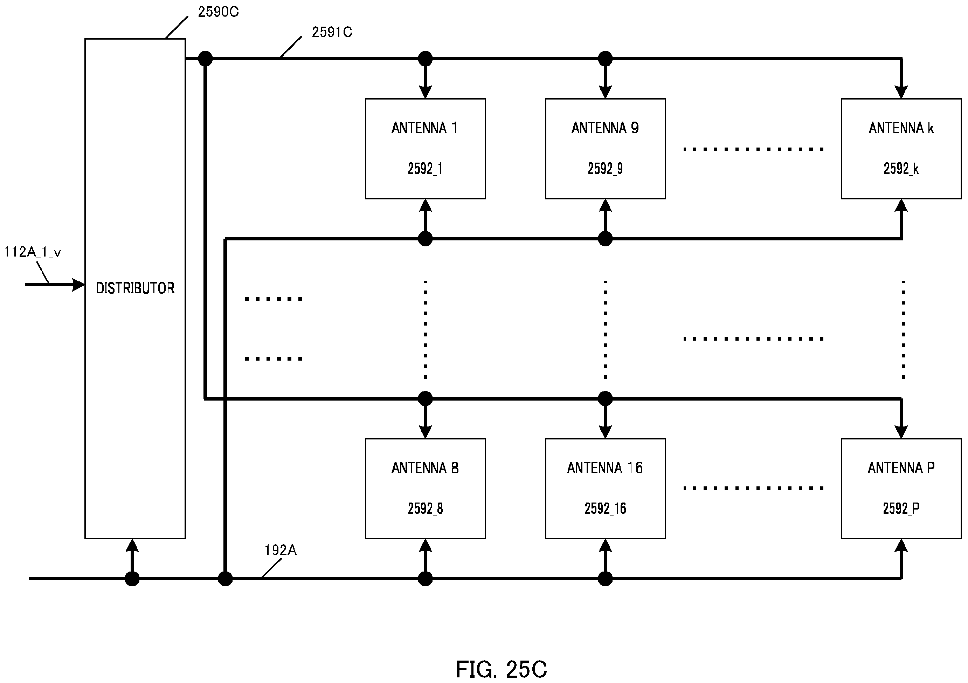

FIG. 25C is a diagram illustrating a configuration example of a first antenna module v in FIG. 25A and FIG. 25B;

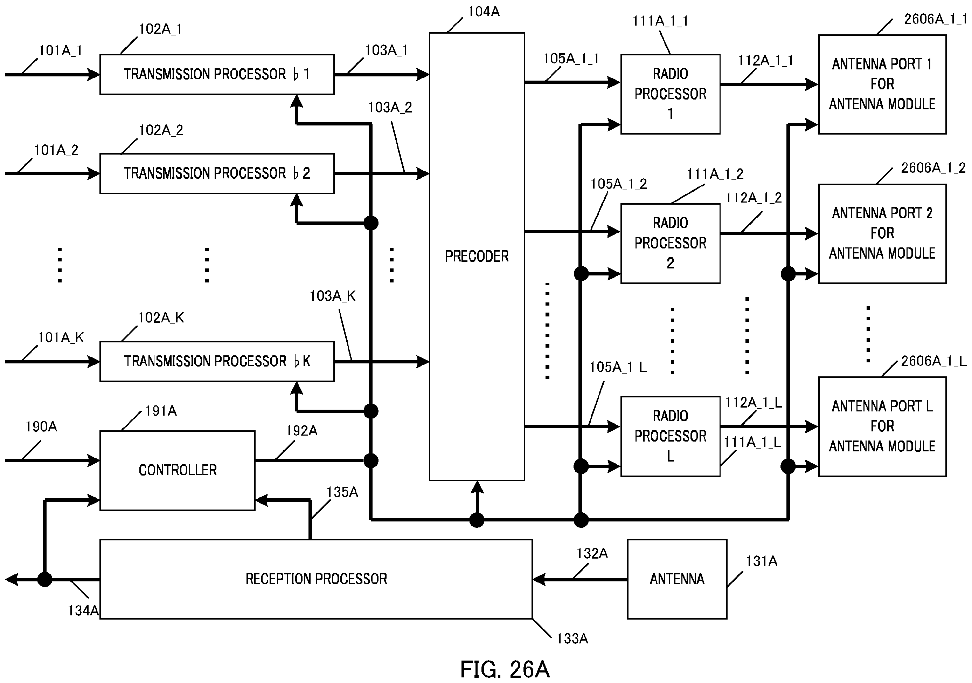

FIG. 26A is a diagram illustrating a configuration example of a communication apparatus;

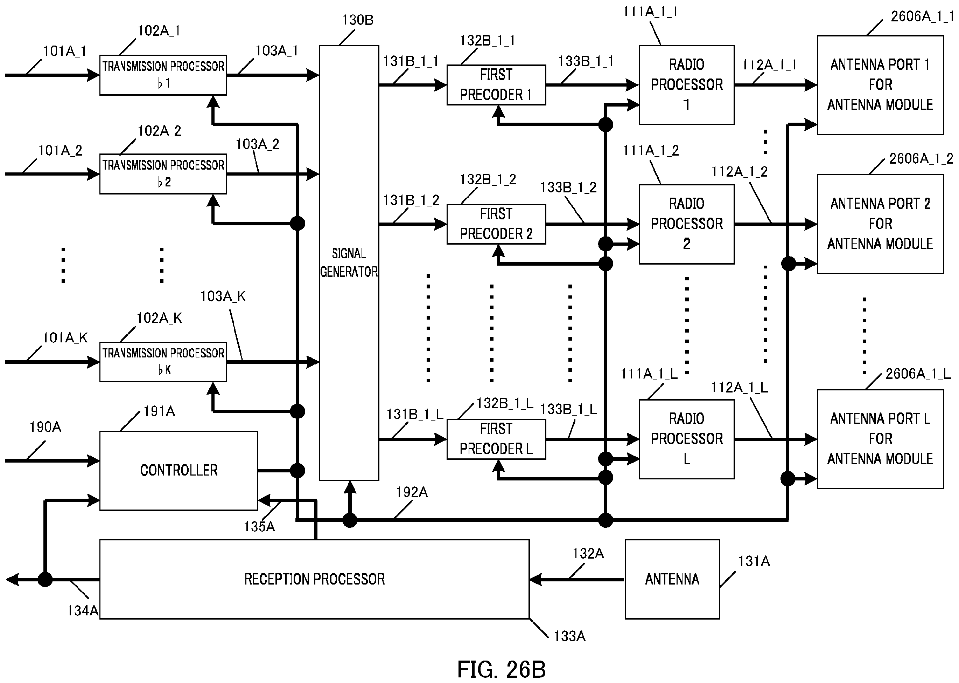

FIG. 26B is a diagram illustrating a configuration example of a communication apparatus;

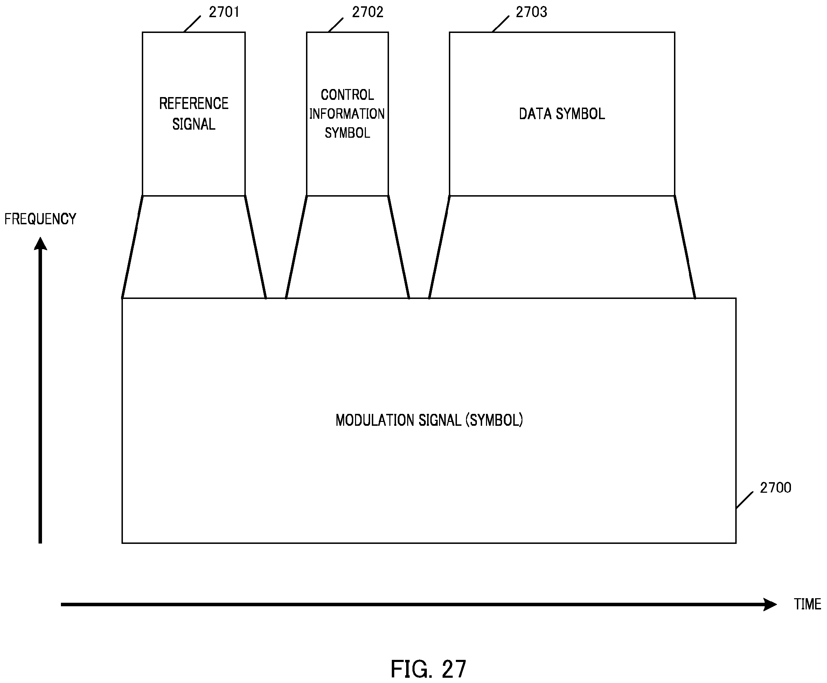

FIG. 27 is a diagram illustrating a configuration example of a modulation signal (symbol) transmitted by base station #1 in a time axis and a frequency axis;

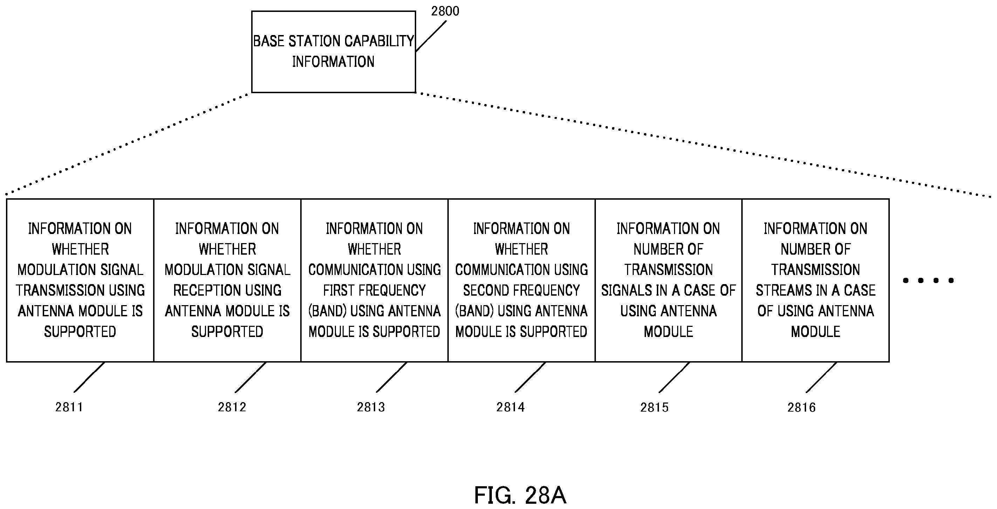

FIG. 28A is a diagram illustrating a configuration example of base station capability information transmitted by base station #1 (base station including base station #1);

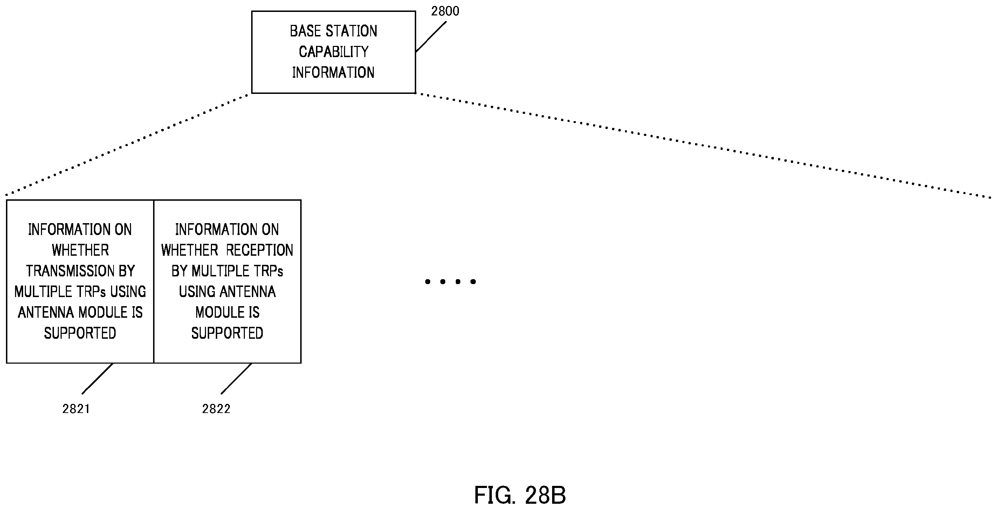

FIG. 28B is a diagram illustrating a configuration example of base station capability information transmitted by base station #1 (base station including base station #1) different from FIG. 28A;

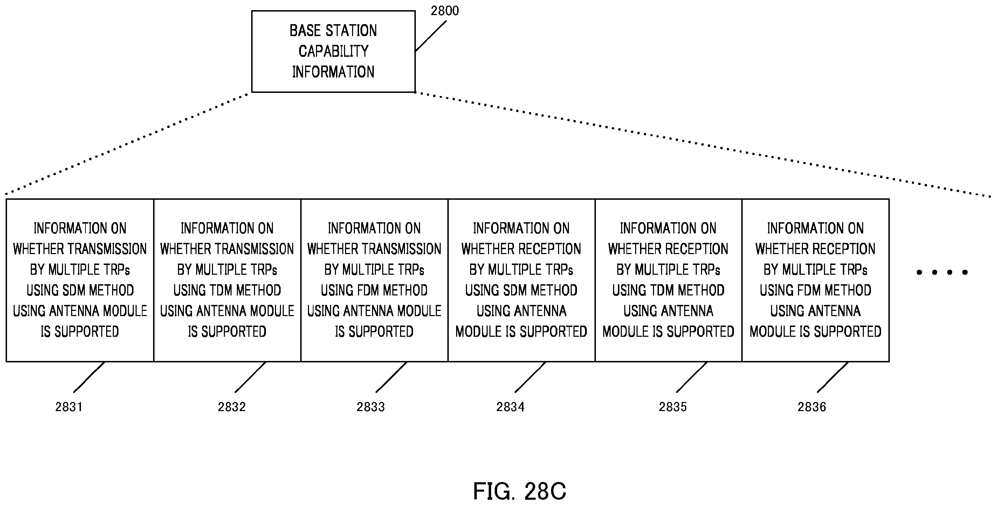

FIG. 28C is a diagram illustrating a configuration example of base station capability information transmitted by base station #1 (base station including base station #1) different from FIG. 28A and FIG. 28B;

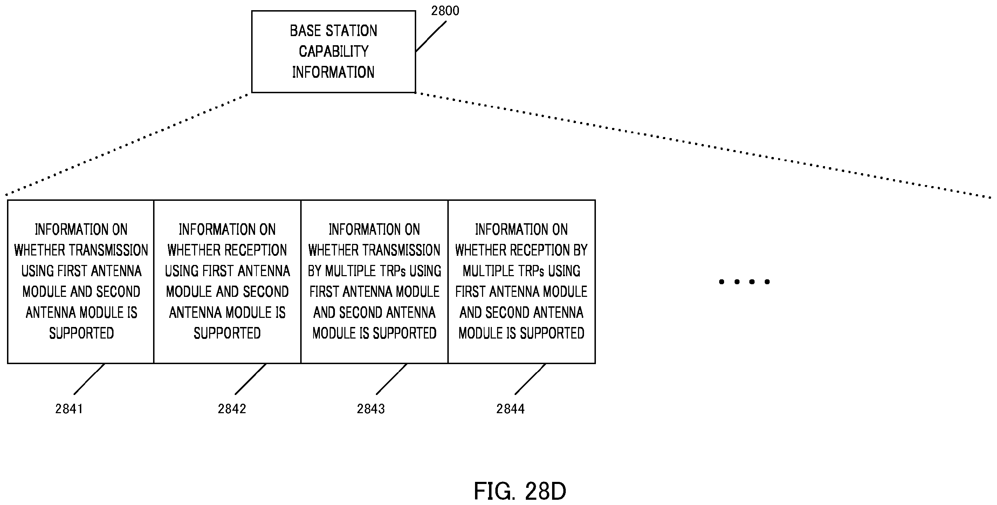

FIG. 28D is a diagram illustrating a configuration example of base station capability information transmitted by base station #1 (base station including base station #1) different from FIG. 28A, FIG. 28B, and FIG. 28C;

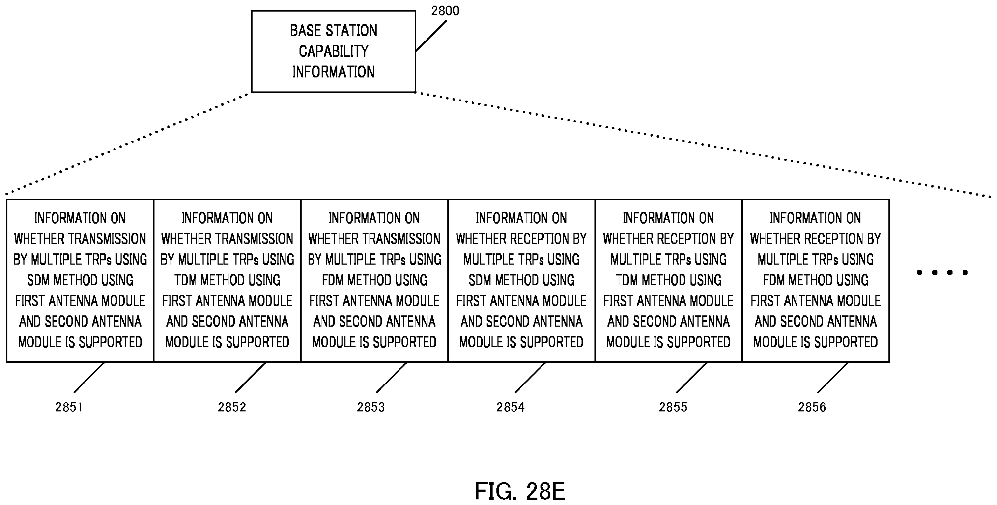

FIG. 28E is a diagram illustrating a configuration example of base station capability information transmitted by base station #1 (base station including base station #1) different from FIG. 28A, FIG. 28B, FIG. 28C, and FIG. 28D;

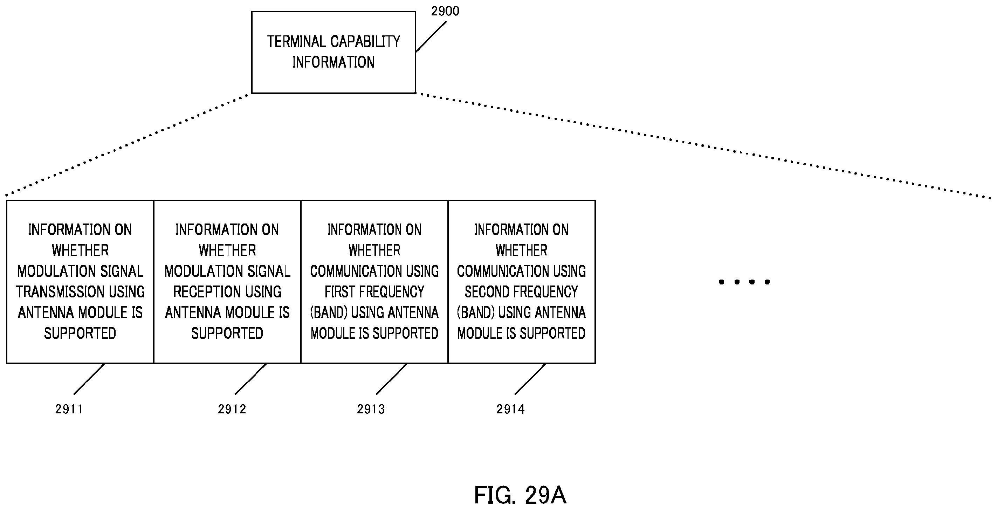

FIG. 29A is a diagram illustrating a configuration example of terminal capability information transmitted by terminal #1 (terminal including terminal #1);

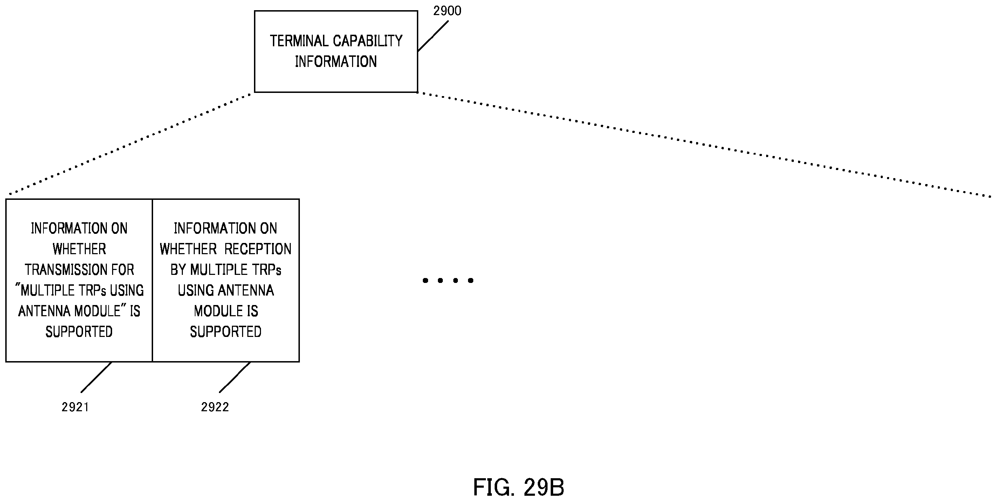

FIG. 29B is a diagram illustrating a configuration example of terminal capability information transmitted by terminal #1 (terminal including terminal #1) different from FIG. 29A;

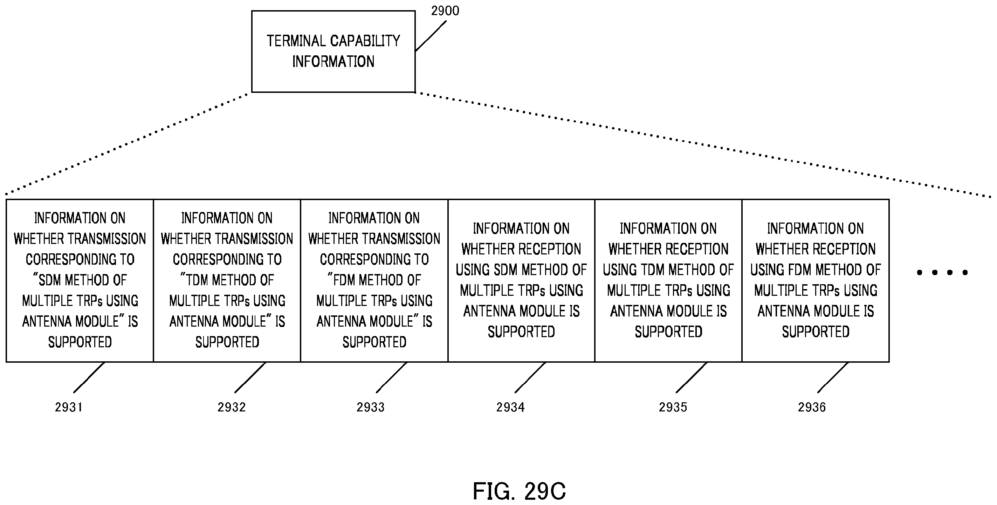

FIG. 29C is a diagram illustrating a configuration example of terminal capability information transmitted by terminal #1 (terminal including terminal #1) different from FIG. 29A and FIG. 29B;

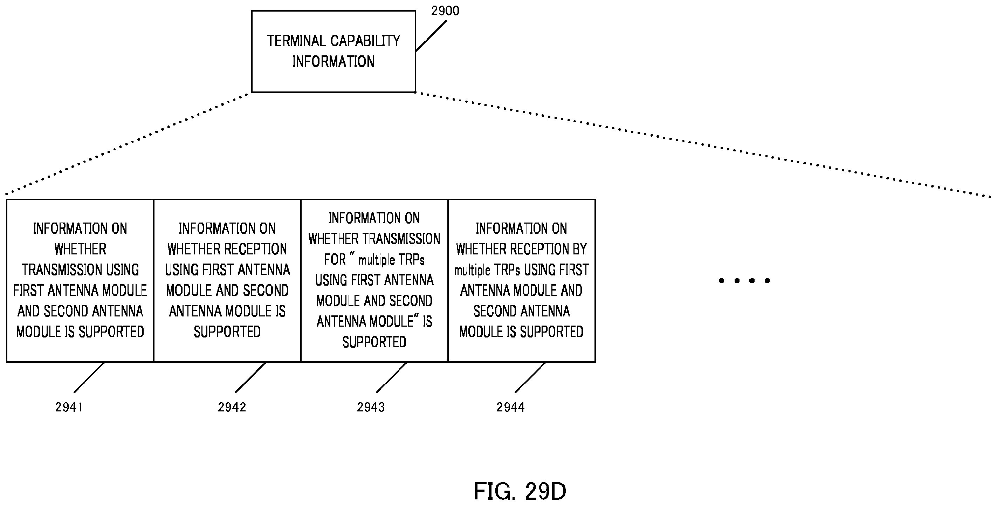

FIG. 29D is a diagram illustrating a configuration example of terminal capability information transmitted by terminal #1 (terminal including terminal #1) different from FIG. 29A, FIG. 29B, and FIG. 29C;

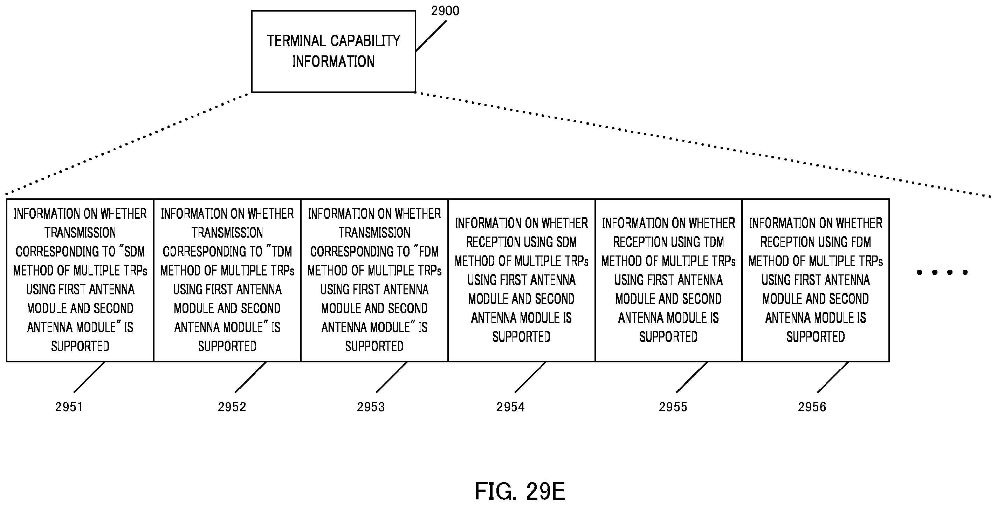

FIG. 29E is a diagram illustrating a configuration example of terminal capability information transmitted by terminal #1 (terminal including terminal #1) different from FIG. 29A, FIG. 29B, FIG. 29C, and FIG. 29D;

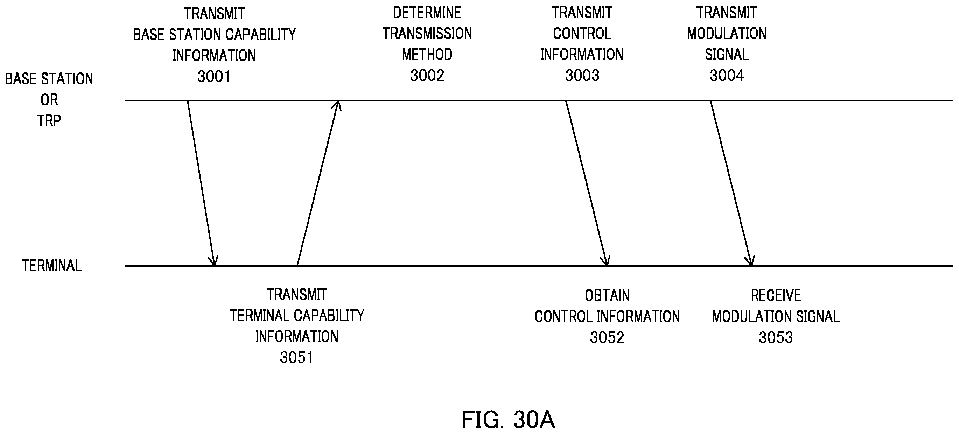

FIG. 30A is a diagram illustrating an example of an exchange between a "base station or TRP" and a terminal;

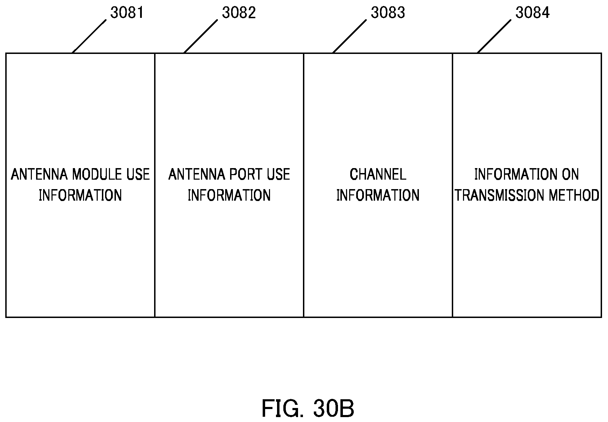

FIG. 30B is a diagram illustrating a configuration example of control information transmitted by a base station as in FIG. 30A;

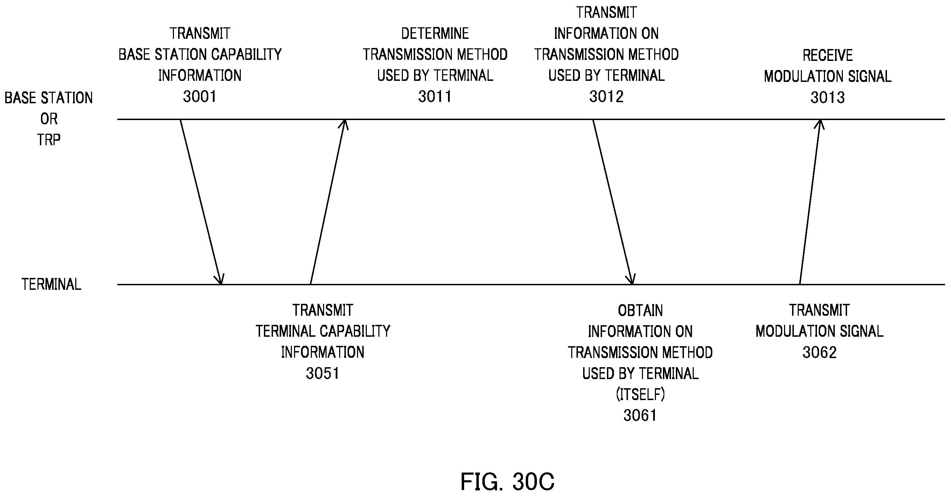

FIG. 30C is a diagram illustrating another example of an exchange between a "base station or TRP" and a terminal;

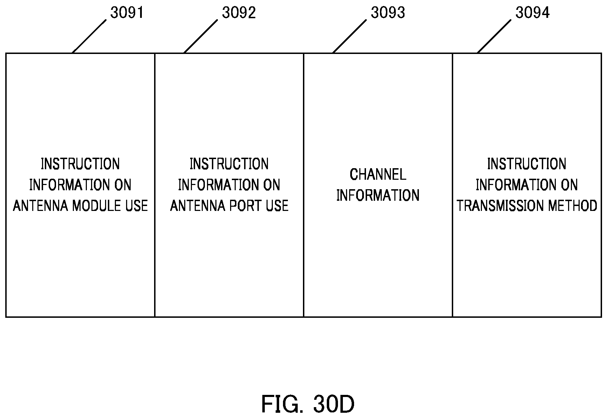

FIG. 30D is a diagram illustrating a configuration example of "information on a transmission method used by a terminal" transmitted by a base station as in FIG. 30C;

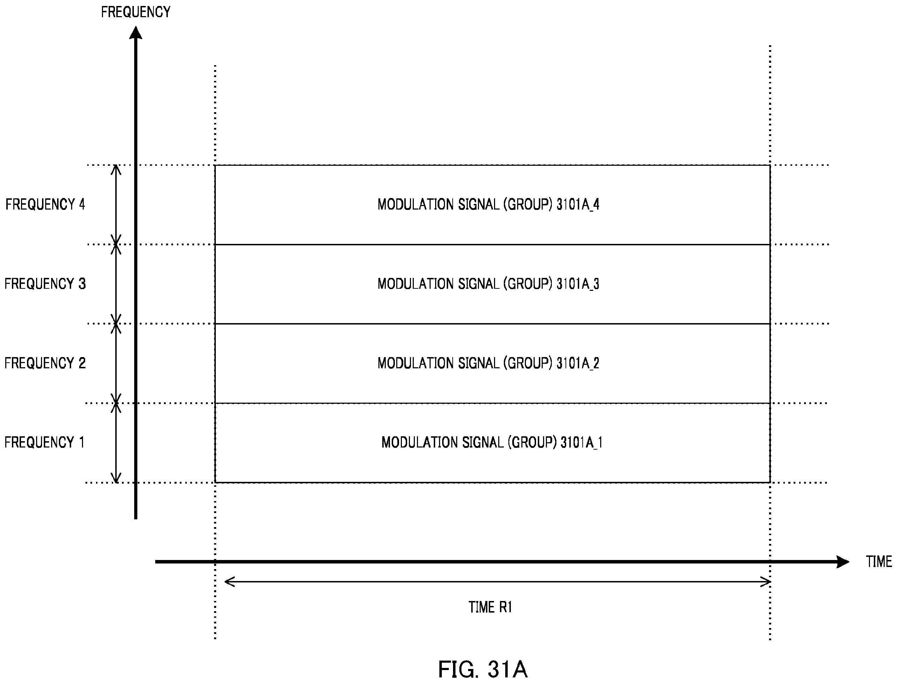

FIG. 31A is a diagram illustrating a mapping example of a frame in a time axis and a frequency axis in a case where a communication apparatus transmits a modulation signal using an antenna module;

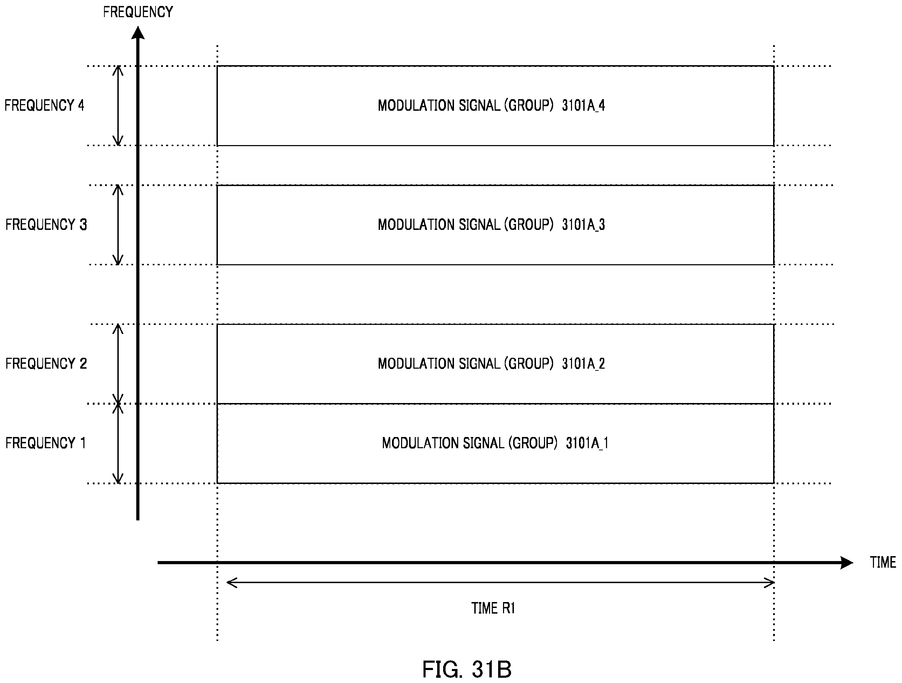

FIG. 31B is a diagram illustrating a mapping example of a frame in a time axis and a frequency axis in a case where a communication apparatus transmits a modulation signal using an antenna module, which is different from FIG. 31A;

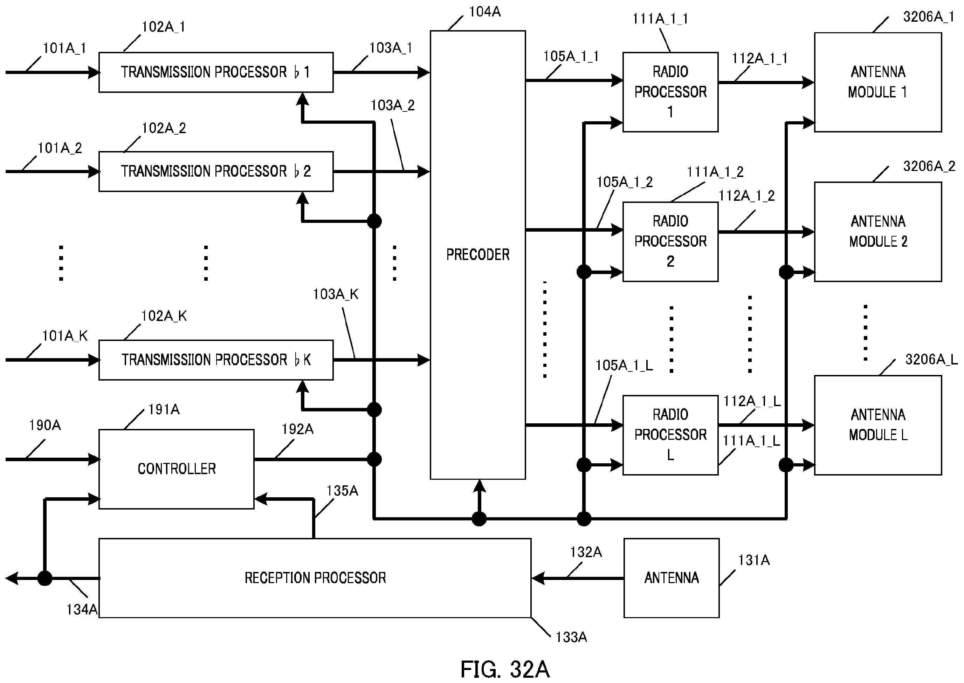

FIG. 32A is a diagram illustrating a configuration of a communication apparatus for transmitting a modulation signal (group) of the frame of "FIG. 31A or FIG. 31B";

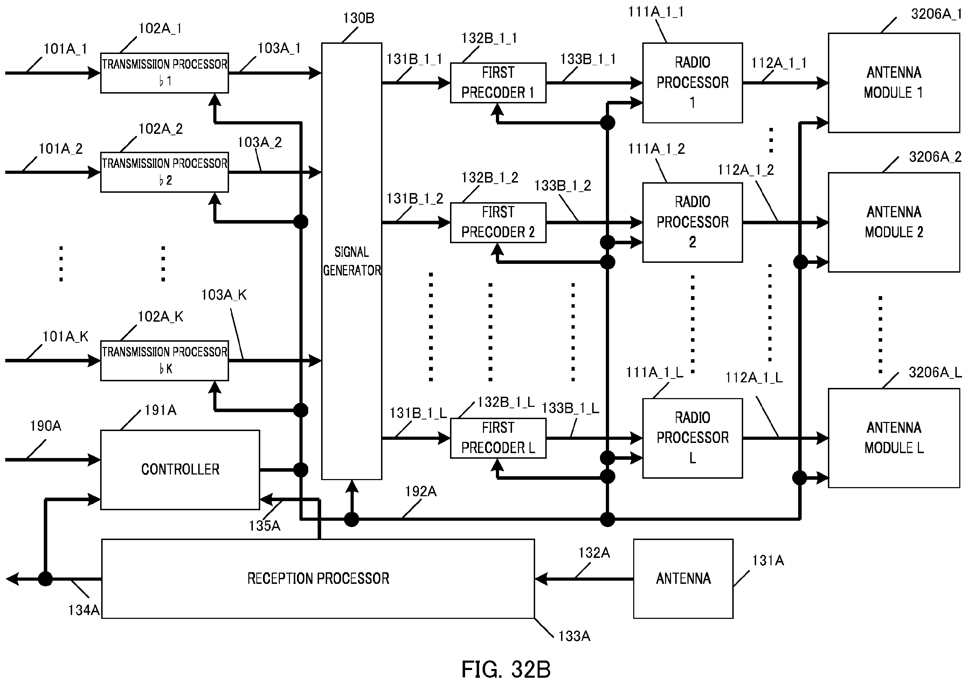

FIG. 32B is a diagram illustrating a configuration of a communication apparatus for transmitting a modulation signal (group) of the frame of "FIG. 31A or FIG. 31B";

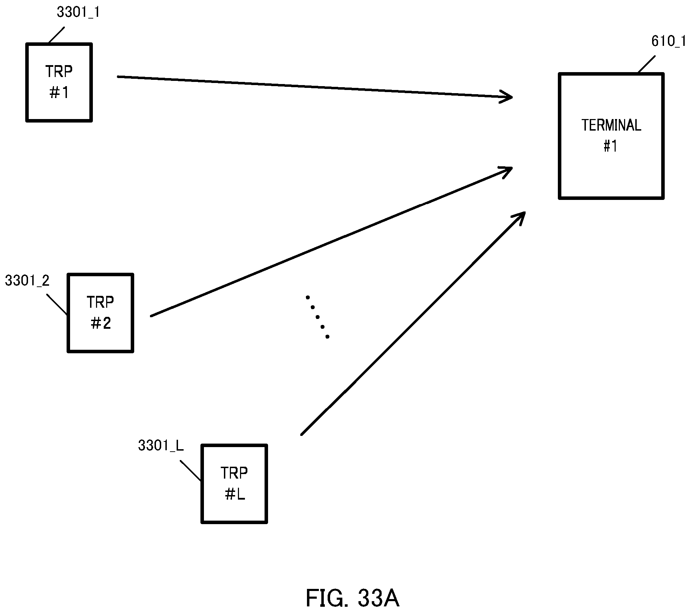

FIG. 33A is a diagram illustrating a configuration of a system including a TRP for transmitting a modulation signal (group) of the frame of "FIG. 31A or FIG. 31B";

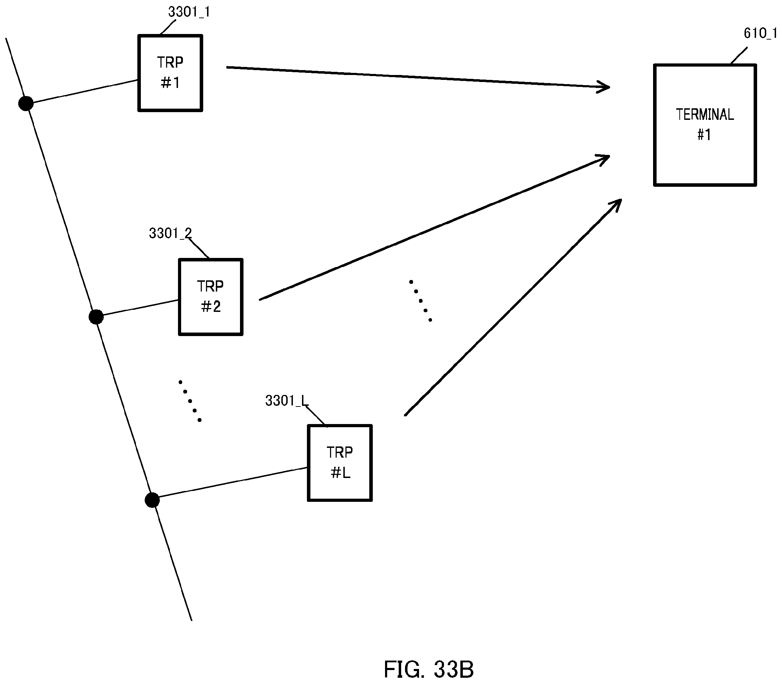

FIG. 33B is a diagram illustrating a configuration of a system including a TRP for transmitting a modulation signal (group) of the frame of "FIG. 31A or FIG. 31B";

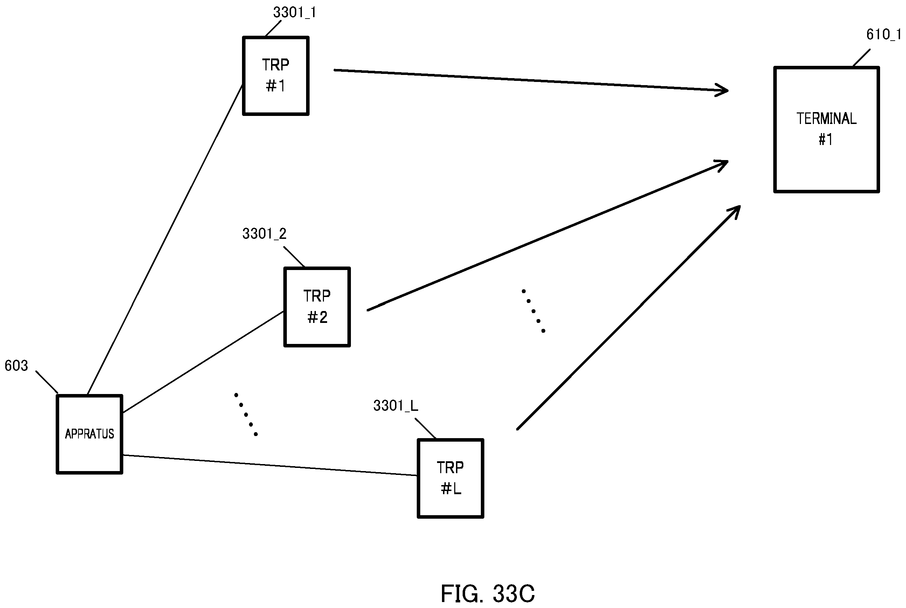

FIG. 33C is a diagram illustrating a configuration of a system including a TRP for transmitting a modulation signal (group) of the frame of "FIG. 31A or FIG. 31B";

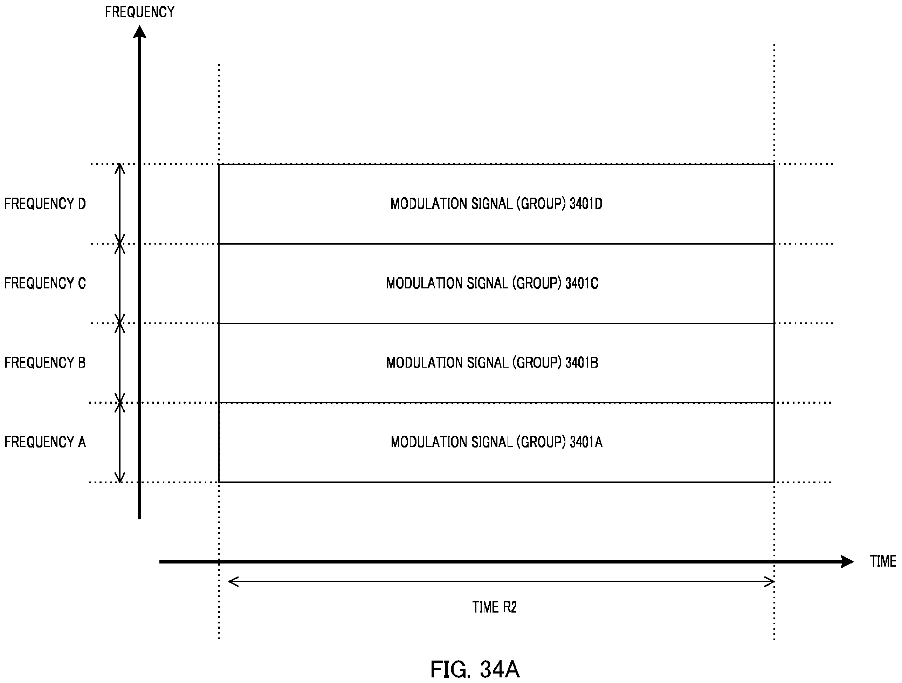

FIG. 34A is a diagram illustrating a mapping example of a frame in a time axis and a frequency axis in a case where a communication apparatus transmits a modulation signal using an antenna module;

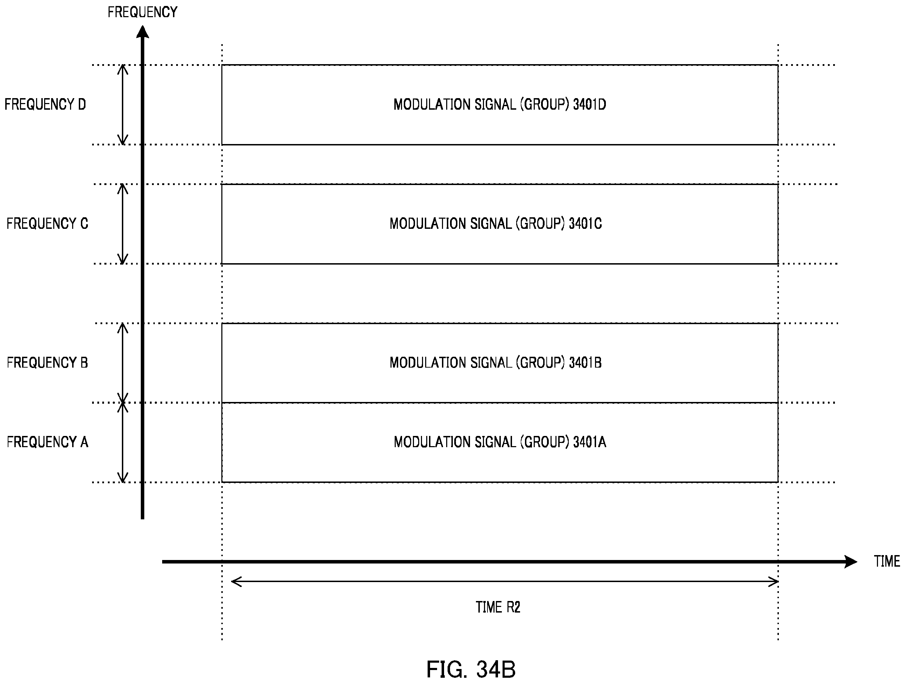

FIG. 34B is a diagram illustrating a mapping example of a frame in a time axis and a frequency axis in a case where a communication apparatus transmits a modulation signal using an antenna module, which is different from FIG. 34A; and

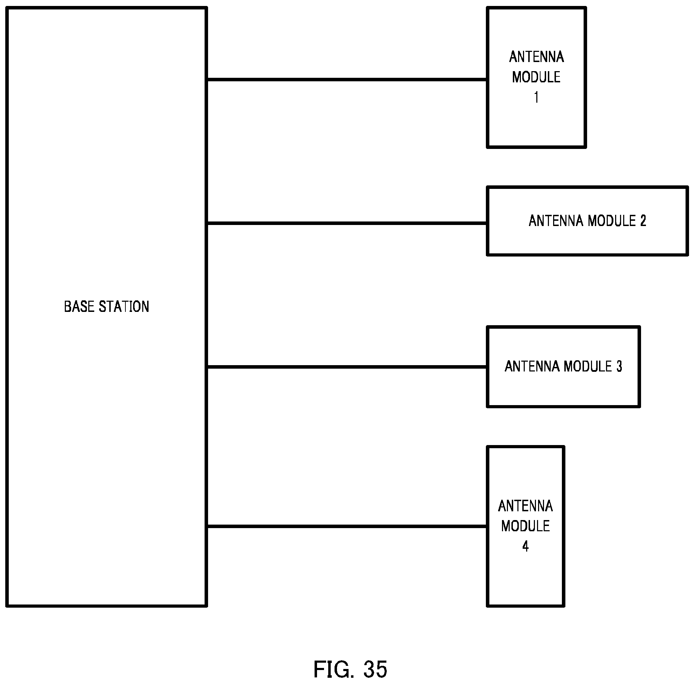

FIG. 35 is a diagram illustrating an example of a base station according to the related art.

Description of Embodiments

Hereinafter, embodiments of the present disclosure will be described in detail with reference to the accompanying drawings.

(Embodiment 1)

In Embodiment 1, a radio communication system and an apparatus will be described.

FIG. 1A1 is a configuration example of a communication apparatus (transmission/reception apparatus) in the present embodiment, such as a base station or an access point. Hereinafter, a description will be given with a communication apparatus referred to as a base station.

For example, antenna 131A receives a signal transmitted by a terminal that is a communication counterpart and obtains received signal 132A. Reception processor 133A performs reception processing on received signal 132A as input and outputs reception status information 135A and reception data 134A.

Controller 191A receives, as input, control information 190A, reception data 134A, and reception status information 135A, and outputs control signal 192A including "control information on a transmission method, control information on a precoding method, control information on an antenna module, and the like".

Transmission processor $b1$ of 102A_1 receives transmission data 101A_1 and control signal 192A, performs processing such as error correction coding and mapping based on information such as a modulation scheme and an error correction coding method (error correction code, encoding rate, and the like) included in control signal 192A, generates a modulation signal, and outputs modulation signal $b1$ of 103A_1.

Therefore, transmission processor $bu$ of 102A_u receives transmission data 101A_u and control signal 192A, performs processing such as error correction coding and mapping (modulation based on a modulation scheme) based on information such as a modulation scheme and an error correction coding method (error correction code, encoding rate, and the like) included in control signal 192A, generates a modulation signal, and outputs modulation signal $bu$ of 103A_u. Here, u is an integer of 1 or greater and K or less. In this case, K is an integer of 1 or greater or an integer of 2 or greater. Modulation signal bu of 103A_u can also be considered as a signal after mapping or a baseband signal.

Transmission processor $bu$ (u is an integer of 1 or greater and K or less) of 102A_u may have a configuration as in FIG. 1A2. In FIG. 1A2, the same reference numerals are assigned to components that operate in the same manner as in FIG. 1A1.

Transmission processor 102A in FIG. 1A2 receives transmission data 101a and control signal 192A, performs processing such as error correction coding and mapping (modulation based on a modulation scheme) based on information such as a modulation scheme and an error correction coding method (error correction code, encoding rate, and the like) included in control signal 192A, generates a modulation signal, and outputs modulation signal $bu$ of 103A_u. Here, u is an integer of 1 or greater and K or less. In this case, K is an integer of 1 or greater or an integer of 2 or greater. Modulation signal bu of 103A_u can also be considered as a signal after mapping or a baseband signal.

Precoder 104A of FIG. 1A1 receives "modulation signal $b1$ of 103A_1, modulation signal $b2$ of 103A_2, ..., modulation signal $bK$ of 103A_K" and control signal 192A, performs precoding based on information on precoding included in control signal 192A, and outputs "signal group 1 after precoding of 105A_1_1, signal group 2 after precoding of 105A_1_2, ..., signal group L after precoding of 105A_1_L" and/or "signal group #1 after precoding of 105A_2_1, signal group #2 after precoding of 105A_2_2, ..., signal group #M after precoding of 105A_2_M".

Note that all of "signal group 1 after precoding of 105A_1_1, signal group 2 after precoding of 105A_1_2, ..., signal group L after precoding of 105A_1_L" may not be present, and all of "signal group #1 after precoding of 105A_2_1, signal group #2 after precoding of 105A_2_2, ..., signal group #M after precoding of 105A_2_M" may not be present. Further, a specific precoding method in precoder 104A will be described later.

Radio processor 1 of 111A_1_1 receives signal group 1 after precoding of 105A_1_1 and control signal 192A, performs processing such as frequency conversion on signal group 1 after precoding of 105A_1_1, generates and outputs transmission signal group 1 of 112A_1_1.

Therefore, radio processor v of 111A_1_v receives signal group v after precoding of 105A_1_v and control signal 192A, performs processing such as frequency conversion on signal group v after precoding of 105A_1_v, generates and outputs transmission signal group v of 112A_1_v. Here, v is an integer of 1 or greater and L or less, and L is an integer of 1 or greater or an integer of 2 or greater.

Radio processor #1 of 111A_2_1 receives signal group #1 after precoding of 105A_2_1 and control signal 192A, performs processing such as frequency conversion on signal group #1 after precoding of 105A_2_1, generates and outputs transmission signal group #1 of 112A_2_1.

Therefore, radio processor #w of 111A_2_w receives signal group #w after precoding of 105A_2_w and control signal 192A, performs processing such as frequency conversion on signal group #w after precoding of 105A_2_w, generates and outputs transmission signal group #w of 112A_2_w. Here, w is an integer of 1 or greater and M or less, and M is an integer of 1 or greater or an integer of 2 or greater.

First antenna module 1 of 106A_1_1 receives transmission signal group 1 of 112A_1_1 and control signal 192A, and outputs transmission signal group 1 of 112A_1_1 as radio waves. First antenna module 1 of 106A_1_1 may perform beam forming (directivity control) based on control signal 192A.

Therefore, first antenna module v of 106A_1_v receives transmission signal group v of 112A_1_v and control signal 192A, and outputs transmission signal group v of 112A_1_v as radio waves. Here, v is an integer of 1 or greater and L or less, and L is an integer of 1 or greater or an integer of 2 or greater. First antenna module v of 106A_1_v may perform beam forming (directivity control) based on control signal 192A.

Second antenna module #1 of 106A_2_1 receives transmission signal group #1 of 112A_2_1 and control signal 192A, and outputs transmission signal group #1 of 112A_2_1 as radio waves. Second antenna module #1 of 106A_2_1 may perform beam forming (directivity control) based on control signal 192A.

Therefore, second antenna module #w of 106A_2_w receives transmission signal group #w of 112A_2_w and control signal 192A, and outputs transmission signal group #w of 112A_2_w as radio waves. Here, w is an integer of 1 or greater and M or less, and M is an integer of 1 or greater or an integer of 2 or greater. Second antenna module #w of 106A_2_w may perform beam forming (directivity control) based on control signal 192A.

Note that a configuration may be adopted in which "first antenna module v of 106A_1_v and second antenna module #w of 106A_2_w" that are transmission antennas and "antenna 131A" that is a reception antenna are shared, and the configuration is referred to as a "transmission/reception antenna module" and a "transmission/reception antenna".

Further, in a case where the base station having the configuration of FIG. 1A1 transmits a modulation signal, the base station transmits a modulation signal from at least one of first antenna modules v and transmits a modulation signal from at least one of second antenna modules #w. First antenna module v and second antenna module #w may be elevation antenna modules.

FIG. 1B is a diagram illustrating a configuration example of a communication apparatus (transmission/reception apparatus) according to the present embodiment, which is different from FIG. 1A1, for example, a base station or an access point. In FIG. 1B, the same reference numerals are assigned to components that operate in the same manner as in FIG. 1A1, and since the description has already been made, a part of the description will be omitted.

For example, antenna 131A receives a signal transmitted by the terminal that is a communication counterpart, to obtain received signal 132A. Reception processor 133A receives received signal 132A, performs processing for reception, and outputs reception status information 135A and reception data 134A.

Controller 191A receives control information 190A, reception data 134A, and reception status information 135A, and outputs a control signal 192A including "control information on a transmission method, control information on a precoding method, control information on an antenna module, and the like".

Transmission processor ♭1 of 102A_1 receives transmission data 101A_1 and control signal 192A, performs processing such as error correction coding and mapping (modulation based on a modulation scheme) based on information such as a modulation scheme and an error correction coding method (error correction code, encoding rate, and the like) included in control signal 192A, generates a modulation signal, and outputs modulation signal $b1$ of 103A_1.

Therefore, transmission processor $bu$ of 102A_u receives transmission data 101A_u and control signal 192A, performs processing such as error correction coding and mapping (modulation based on a modulation scheme) based on information such as a modulation scheme and an error correction coding method (error correction code, encoding rate, and the like) included in control signal 192A, generates a modulation signal, and outputs modulation signal $bu$ of 103A_u. Here, u is an integer of 1 or greater and K or less. In this case, K is an integer of 1 or greater or an integer of 2 or greater. Modulation signal bu of 103A_u can also be considered as a signal after mapping or a baseband signal.

Transmission processor $bu$ (u is an integer of 1 or greater and K or less) of 102A_u may have a configuration as in FIG. 1A2. In FIG. 1A2, the same reference numerals are assigned to components that operate in the same manner as in FIG. 1A1.

Transmission processor 102A in FIG. 1A2 receives transmission data 101a and control signal 192A, performs processing such as error correction coding and mapping (modulation based on a modulation scheme) based on information such as a modulation scheme and an error correction coding method (error correction code, encoding rate, and the like) included in control signal 192A, generates a modulation signal, and outputs modulation signal $bu$ of 103A_u. Here, u is an integer of 1 or greater and K or less. In this case, K is an integer of 1 or greater or an integer of 2 or greater. Modulation signal bu of 103A_u can also be considered as a signal after mapping or a baseband signal.

Signal generator 130B of FIG. 1B receives "modulation signal $b1$ of 103A_1, modulation signal $b2$ of 103A_2, ..., modulation signal $bK$ of 103A_K" and control signal 192A, generates a signal group from "modulation signal $b1$ of 103A_1, modulation signal $b2$ of 103A_2, ..., modulation signal $bK$ of 103A_K" based on control signal 192A, and outputs "signal group 1 of 131B_1_1, signal group 2 of 131B_1_2, ..., signal group L of 131B_1_L" and/or "signal group #2 of 131B_2_1, signal group #2 of 131B_2_2, ..., signal group #M of 131B_2_M".

Note that all of "signal group 1 of 131B_1_1, signal group 2 of 131B_1_2, ..., signal group L of 131B_1_L" may not be present, and all of "signal group #1 of 131B_2_1, signal group #2 of 131B_2_2, ..., signal group #M of 131B_2_M" may not be present.

First precoder 1 of 132B_1_1 receives signal group 1 of 131B_1_1 and control signal 192A, performs precoding on signal group 1 of 131B_1_1 based on information on precoding included in control signal 192A, and outputs a signal group 1 after precoding of 133B_1_1.

Therefore, first precoder v of 132B_1_v receives signal group v of 131B_1_v and control signal 192A, performs precoding on signal group v of 131B_1_v based on information on precoding included in control signal 192A, and outputs a signal group v after precoding of 133B_1_v. Here, v is an integer of 1 or greater and L or less, and L is an integer of 1 or greater or an integer of 2 or greater.

Second precoder #1 of 132B_2_1 receives signal group #1 of 131B_2_1 and control signal 192A, performs precoding on signal group #1 of 131B_2_1 based on information on precoding included in control signal 192A, and outputs a signal group #1 after precoding of 133B_2_1.

Therefore, second precoder #w of 132B_2_w receives signal group #w of 131B_2_w and control signal 192A, performs precoding on signal group #w of 131B_2_w based on information on precoding included in control signal 192A, and outputs a signal group #w after precoding of 133B_2_w. Here, w is an integer of 1 or greater and M or less, and M is an integer of 1 or greater or an integer of 2 or greater.

A specific precoding method in first precoder v of 132B_1_v and second precoder #w of 132B_2_w will be described later.

The radio processor 1 of 111A_1_1 receives signal group 1 after precoding of 133B_1_1 and control signal 192A, performs processing such as frequency conversion on signal group 1 after precoding of 133B_1_1, generates and outputs transmission signal group 1 of 112A_1_1.

Therefore, the radio processor v of 111A_1_v receives signal group v after precoding of 133B_1_v and control signal 192A, performs processing such as frequency conversion on signal group v after precoding of 133B_1_v, generates and outputs transmission signal group v of 112A_1_v. Here, v is an integer of 1 or greater and L or less, and L is an integer of 1 or greater or an integer of 2 or greater.

Radio processor #1 of 111A_2_1 receives signal group #1 after precoding of 133B_2_1 and control signal 192A, performs processing such as frequency conversion on signal group #1 after precoding of 133B_2_1, generates and outputs transmission signal group #1 of 112A_2_1.

Therefore, radio processor #w of 111A_2_w receives signal group #w after precoding of 133B_2_w and control signal 192A, performs processing such as frequency conversion on signal group #w after precoding of 133B_2_w, generates and outputs transmission signal group #w of 112A_2_w. Here, w is an integer of 1 or greater and M or less, and M is an integer of 1 or greater or an integer of 2 or greater.

First antenna module 1 of 106A_1_1 receives transmission signal group 1 of 112A_1_1 and control signal 192A, and outputs transmission signal group 1 of 112A_1_1 as radio waves. First antenna module 1 of 106A_1_1 may perform beam forming (directivity control) based on control signal 192A.

Therefore, first antenna module v of 106A_1_v receives transmission signal group v of 112A_1_v and control signal 192A, and outputs transmission signal group v of 112A_1_v as radio waves. Here, v is an integer of 1 or greater and L or less, and L is an integer of 1 or greater or an integer of 2 or greater. First antenna module v of 106A_1_v may perform beam forming (directivity control) based on control signal 192A.

Second antenna module #1 of 106A_2_1 receives transmission signal group #1 of 112A_2_1 and control signal 192A, and outputs transmission signal group #1 of 112A_2_1 as radio waves. Second antenna module #1 of 106A_2_1 may perform beam forming (directivity control) based on control signal 192A.

Therefore, second antenna module #w of 106A_2_w receives transmission signal group #w of 112A_2_w and control signal 192A, and outputs transmission signal group #w of 112A_2_w as radio waves. Here, w is an integer of 1 or greater and M or less, and M is an integer of 1 or greater or an integer of 2 or greater. Second antenna module #w of 106A_2_w may perform beam forming (directivity control) based on control signal 192A.

Note that a configuration may be adopted in which "first antenna module v of 106A_1_v and second antenna module #w of 106A_2_w" that are transmission antennas and "antenna 131A" that is a reception antenna are shared, and the configuration is referred to as a "transmission/reception antenna module" and a "transmission/reception antenna".

Further, in a case where the base station having the configuration of FIG. 1B transmits the modulation signal, the base station transmits the modulation signal from at least one of first antenna modules v and transmits the modulation signal from at least one of the second antenna modules #w. First antenna module v and second antenna module #w may be elevation antenna modules.

Note that in FIG. 1A1, FIG. 1B, and the following description, "antenna module" may be interchangeably used with other expressions such as "antenna part", "antenna", and "antenna unit". Further, in FIG. 1A1, FIG. 1B, and the following description, at least one of the configurations of the transmission processor, the precoder, the radio processor, the reception processor, and the like included in the communication apparatus may be regarded as an example of a controller or a processor, or may be included in the controller or the processor. The controller may be referred to as a control circuit, and the processor may be referred to as a processing circuit.

The "first antenna module v of 106A_1_v and second antenna module #w of 106A_2_w" of FIG. 1A1 and FIG. 1B include one or more antennas or two or more antennas. In this case, each antenna constituting the "first antenna module v of 106A_1_v and second antenna module #w of 106A_2_w" may have a configuration as in FIG. 1C1 and may perform beam forming (directivity control). However, the configuration of each antenna constituting the "first antenna module v of 106A_1_v and second antenna module #w of 106A_2_w" is not limited thereto, and for example, each antenna constituting the "first antenna module v of 106A_1_v and second antenna module #w of 106A_2_w" may be configured by one antenna.

FIG. 1C1 illustrates a configuration example of the antenna provided in the "first antenna module v of 106A_1_v and second antenna module #w of 106A_2_w" of FIG. 1A1 and FIG. 1B. Here, v is an integer of 1 or greater and L or less, and w is an integer of 1 or greater and M or less. However, the number of antennas constituting the antennas provided in the "first antenna module v of 106A_1_v and second antenna module #w of 106A_2_w" is not limited to 4, and may be 1 or greater.

Distributor 152C receives input signal 151C corresponding to "signal constituting transmission signal group v of 112A_1_v" and "signal constituting transmission signal group #w of 112A_2_w" in FIG. 1A1 and FIG. 1B, distributes input signal 151C, and outputs signal 153C_1, signal 153C_2, signal 153C_3, and signal 153C_4.

Multiplier 154C_1 receives signal 153C_1 and control signal 150C, multiplies signal 153C_1 by a multiplication coefficient based on control signal 150C, generates signal 155C_1 after coefficient multiplication, and outputs signal 155C_1. Then, signal 155C_1 after coefficient multiplication is output from antenna 156C_1 as radio waves. Control signal 150C corresponds to, for example, control signal 192A of FIG. 1A1 and FIG. 1B.

A description will be specifically given. Signal 153C_1 is represented by tp1(t). Note that, t represents time. In a case where the multiplication coefficient is represented by w1, signal 155C_1 after coefficient multiplication can be represented by tp1(t) × w1. Note that, tp1(t) can be represented by a complex number, and thus may be a real number. Further, w1 can be represented by a complex number and thus may be a real number.

Multiplication operator 154C_2 receives signal 153C_2 and control signal 150C, multiplies signal 153C_2 by a multiplication coefficient based on control signal 150C to generate a signal 155C_2 after coefficient multiplication and outputs signal 155C_2. Signal 155C_2 after coefficient multiplication is output from antenna 156C_2 as a radio wave. Control signal 150C corresponds to, for example, control signal 192A of FIG. 1A1 and FIG. 1B.

A description will be specifically given. Signal 153C_2 is represented by tp2(t). Note that, t represents time. In a case where the multiplication coefficient is represented by w2, signal 155C_2 after coefficient multiplication can be represented by tp2(t) × w2. Note that, tp2(t) can be represented by a complex number, and thus may be a real number. Further, w2 can be represented by a complex number and thus may be a real number.

Multiplication operator 154C_3 receives signal 153C_3 and control signal 150C, multiplies signal 153C_3 by a multiplication coefficient based on control signal 150C to generate a signal 155C_3 after coefficient multiplication and outputs signal 155C_3. Signal 155C_3 after coefficient multiplication is output from antenna 156C_3 as a radio wave. Control signal 150C corresponds to, for example, control signal 192A of FIG. 1A1 and FIG. 1B.

A description will be specifically given. Signal 153C_3 is represented by tp3(t). Note that, t represents time. In a case where the multiplication coefficient is represented by w3, signal 155C_3 after coefficient multiplication can be represented by $tp3(t) \times w3$. Note that, tp3(t) can be represented by a complex number, and thus may be a real number. Further, w3 can be represented by a complex number and thus may be a real number.

Multiplication operator 154C_4 receives signal 153C_4 and control signal 150C, multiplies signal 153C_4 by a multiplication coefficient based on control signal 150C to generate signal 155C_4 after coefficient multiplication and outputs signal 155C_4. Signal 155C_4 after coefficient multiplication is output from antenna 156C_4 as a radio wave. Control signal 150C corresponds to, for example, control signal 192A of FIG. 1A1 and FIG. 1B.

A description will be specifically given. Signal 153C_4 is represented by tp4(t). Note that, t represents time. In a case where the multiplication coefficient is represented by w4, signal 155C_4 after coefficient multiplication can be represented by $tp4(t) \times w4$. Note that, tp4(t) can be represented by a complex number, and thus may be a real number. Further, w4 can be represented by a complex number and thus may be a real number.

Note that, "the absolute values of w1, w2, w3, and w4 may be equal to each other." This corresponds to a case in which phase change is performed. Needless to say, the absolute values of w1, w2, w3, and w4 may not be equal to each other.

The values of w1, w2, w3, and w4 are set based on control signal 150C. The values of w1, w2, w3, and w4 may be switchable.

The "first antenna module v of 106A_1_v and second antenna module #w of 106A_2_w" of FIG. 1A1 and FIG. 1B may include a plurality of "parts configured as in FIG. 1C1". In this case, the "first antenna module v of 106A_1_v" of FIG. 1A1 and FIG. 1B includes a plurality of configurations as in FIG. 1C1, and the "second antenna module #w of 106A_2_w" of FIG. 1A1 and FIG. 1B includes a plurality of configurations as in FIG. 1C1. As a result, the "first antenna module v of 106A_1_v" of FIG. 1A1 and FIG. 1B can transmit a plurality of transmission signals, and the "second antenna module #w of 106A_2_w" of FIG. 1A1 and FIG. 1B can transmit a plurality of transmission signals.

The "first antenna module v of 106A_1_v and second antenna module #w of 106A_2_w" of FIG. 1A1 and FIG. 1B include one or more antennas or two or more antennas. In this case, each antenna constituting the "first antenna module v of 106A_1_v and second antenna module #w of 106A_2_w" may have a configuration as in FIG. 1C2 and may perform beam forming (directivity control).

FIG. 1C2 illustrates a configuration example of the antenna provided in the "first antenna module v of 106A_1_v and second antenna module #w of 106A_2_w" of FIG. 1A1 and FIG. 1B. Here, v is an integer of 1 or greater and L or less, and w is an integer of 1 or greater and M or less. In FIG. 1C2, the same reference numerals are assigned to components that operate in the same manner as in FIG. 1C1, and a part of the description thereof will be omitted.

Multiplication operator 154C_1 receives signal 153C_1 and control signal 150C, multiplies signal 153C_1 by a multiplication coefficient based on control signal 150C to generate a signal 155C_1 after coefficient multiplication and outputs signal 155C_1. Signal 155C_1 after coefficient multiplication is output from antenna 156C_1 as a radio wave. Control signal 150C corresponds to, for example, control signal 192A of FIG. 1A1 and FIG. 1B, and signal 153C_1 corresponds to "signal constituting transmission signal group v of 112A_1_v" and "signal constituting transmission signal group #w of 112A_2_w" in FIG. 1A1 and FIG. 1B.

A description will be specifically given. Signal 153C_1 is represented by tp1(t). Note that, t represents time. In a case where the multiplication coefficient is represented by w1, signal 155C_1 after coefficient multiplication can be represented by $tp1(t) \times w1$. Note that, tp1(t) can be represented by a complex number and thus may be a real number. Further, w1 can be represented by a complex number and thus may be a real number. The value of w1 is set based on control signal 150C. The value of w1 may be switchable.

The "first antenna module v of 106A_1_v and second antenna module #w of 106A_2_w" of FIG. 1A1 and FIG. 1B may include a plurality of "parts configured as in FIG. 1C2". In this case, the "first antenna module v of 106A_1_v" of FIG. 1A1 and FIG. 1B includes a plurality of configurations as in FIG. 1C2, and the "second antenna module #w of 106A_2_w" of FIG. 1A1 and FIG. 1B includes a plurality of configurations as in FIG. 1C2. As a result, the "first antenna module v of 106A_1_v" of FIG. 1A1 and FIG. 1B can transmit a plurality of transmission signals, and the "second antenna module #w of 106A_2_w" of FIG. 1A1 and FIG. 1B can transmit a plurality of transmission signals.

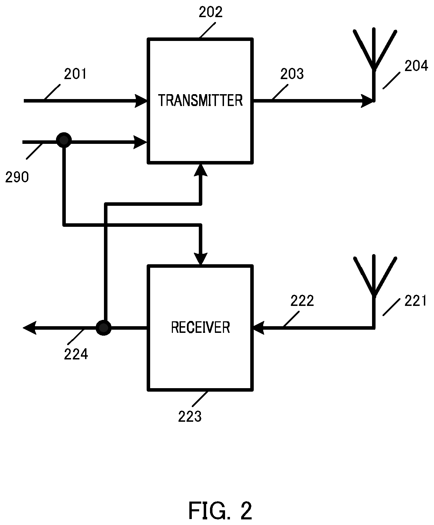

FIG. 2 is a configuration of a terminal that is a communication counterpart of the base station having the configuration of FIG. 1A1 and FIG. 1B. Transmitter 202 receives transmission data 201, control signal 290, and reception data 224, determines a transmission method based on control signal 290 and reception data 224, performs error correction coding, modulation, frequency conversion, and the like on transmission data 201, generates one or more transmission signals, and outputs transmission signal group 203. Then, transmission signal group 203 is output from antenna group 204 as radio waves. Antenna group 204 is configured by one or more antennas.

Receiver 223 receives received signal group 222 received by antenna group 221 and control signal 290, performs processing such as frequency conversion, demodulation, and decoding of an error correction code on received signal group 222 based on control signal 290, and outputs reception data 224. Antenna group 221 is one or more antennas, and received signal group 222 is configured by one or more received signals.

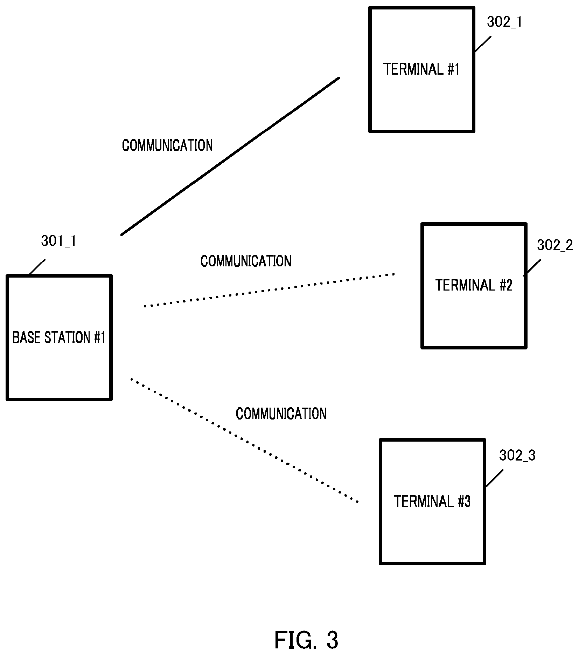

FIG. 3 illustrates a state of a "base station having the configuration of FIG. 1A1 and FIG. 1B" and a "terminal having the configuration of FIG. 2".

It is assumed that base station #1 301_1 having the configuration of FIG. 1A1 and FIG. 1B communicates with "terminal #1 302_1, terminal #2 302_2 and terminal #3 302_3 having the configuration of FIG. 2".

As described above, the base station communicates with one or more terminals. In FIG. 3, an example is illustrated in which the base station communicates with three terminals, but the number of terminals with which the base station communicates is not limited to three.

Therefore, transmission data 101A_u in FIG. 1A and FIG. 1B of base station #1 301_1 having the configuration of FIG. 1A1 and FIG. 1B includes data for each terminal.

Further, in a case where base station #1 301_1 has the configuration of FIG. 1A2B, transmission data 101a includes data for each terminal.

In base station #1 301_1 having the configuration of FIG. 1A1, Transmission processor $\flat$u of 102A_u, precoder 104A, the radio processor v of 111A_1_v, and first antenna module v of 106A_1_v include a configuration capable of communicating with one or more terminals.

In base station #1 301_1 having the configuration of FIG. 1B, Transmission processor $\flat$u of 102A_u, signal generator 130B, first precoder v of 132B_1_v, the radio processor v of 111A_1_v, and first antenna module v of 106A_1_v include a configuration capable of communicating with one or more terminals.

In base station #1 301_1 having the configuration of FIG. 1A1 and FIG. 1B, antenna 131A and reception processor 133A include a configuration capable of communicating with one or more terminals.

In the following description, an example will be described in which base station #1 301_1 communicates with terminal #1 302_1. In this case, the "base station #1 301_1" will be referred to as a "base station", and the "terminal #1 302_1" will be referred to as a "terminal".

Further, the "modulation signal $\flat$u of 103A_u" in FIG. 1A1 and FIG. 1B is a signal after mapping performed by the modulation scheme (or a baseband signal), and the "modulation signal $\flat$u of 103A_u" may be referred to as a "stream $\flat$u" or a "layer bu". Here, u is an integer of 1 or greater and K or less. In this case, K is an integer of 1 or greater or an integer of 2 or greater.

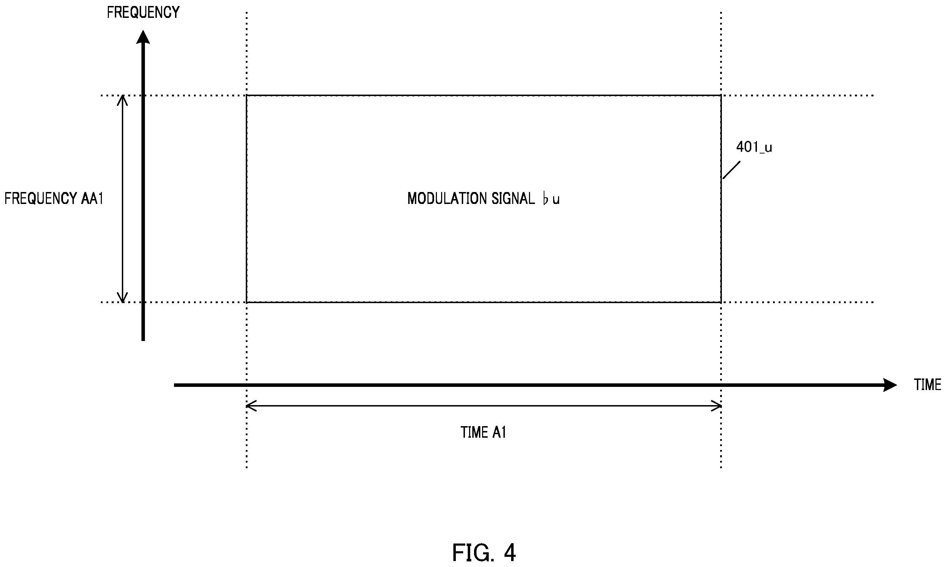

FIG. 4 illustrates a mapping example of the "modulation signal bu of 103A_u" in a time-frequency axis. As illustrated in FIG. 4, the "modulation signal $\flat$u of 103A_u" is included in a signal of frequency AA1 and time A1. The "modulation signal bu of 103A_u" is present at the same (common) frequency and the same (common) time. Therefore, the "modulation signal $\flat$u of 103A_u" is transmitted using a multiple-input multiple-output (MIMO) method or a multiple-input single-output (MISO) method.

Therefore, in a case where a signal is present in transmission signal group v of 112A_1_v, the signal is present at frequency AA1 and time A1. Further, in a case where a signal is present in transmission signal group #w of 112A_2_w, the signal is present at frequency AA1 and time A1.

In the following, a difference between the first antenna module and the second antenna module in FIG. 1A1 will be described using an example.

In FIG. 1A1, "modulation signal $\flat$u of 103A_u" (u is an integer of 1 or greater and K or less. In this case, K is an integer of 1 or greater or an integer of 2 or greater. It is assumed that two or more signals are present. In this case, the number of present signals is denoted by F. (Therefore, F is an integer of 2 or greater.)

For example, in "modulation signal $\flat$u of 103A_u", in a case where two signals are present, modulation signal $\flat$1 of 103A_1 and modulation signal $\flat$2 of 103A_2 are present.

Regarding first antenna module:

Then, the number of "modulation signals $\flat$u of 103A_u" included in signal group v after precoding of 105A_1_v of FIG. 1A1 is F or 0. Here, v is an integer of 1 or greater and L or less, and L is an integer of 1 or greater or an integer of 2 or greater. (In this case, in a case where the number of "modulation signals $\flat$u of 103A_u" included in signal group v after precoding of 105A_1_v is 0, it means that no signal is present).

Regarding second antenna module:

Then, the number of "modulation signals $\flat$u of 103A_u" included in signal group #w after precoding of 105A_2_w of FIG. 1A1 is an integer of less than F (an integer of F-1 or less). Here, w is an integer of 1 or greater and M or less, and M is an integer of 1 or greater or an integer of 2 or greater. (In this case, in a case where the number of "modulation signals $\flat$u of 103A_u" included in signal group #w after precoding of 105A_2_w of FIG. 1A1 is 0, it means that no signal is present). However, although some other descriptions will be made below, in a case where the other descriptions are implemented, the number of "modulation signals ♭u of 103A_u" included in signal group #w after precoding of 105A_2_w of FIG. 1A1 may be F.

Regarding first antenna module:

Therefore, the number of "modulation signals ♭u of 103A_u" included in transmission signal group v of 112A_1_v of FIG. 1A1 is F or 0. Here, v is an integer of 1 or greater and L or less, and L is an integer of 1 or greater or an integer of 2 or greater. (In this case, in a case where the number of "modulation signals ♭u of 103A_u" included in transmission signal group v of 112A_1_v is 0, it means that no signal is present).

Regarding second antenna module:

Then, the number of "modulation signals ♭u of 103A_u" included in transmission signal group #w of 112A_2_w of FIG. 1A1 is an integer of 0 or greater and less than F (an integer of 0 or greater and F-1 or less). Here, w is an integer of 1 or greater and M or less, and M is an integer of 1 or greater or an integer of 2 or greater. (In this case, in a case where the number of "modulation signals ♭u of 103A_u" included in transmission signal group #w of 112A_2_w of FIG. 1A1 is 0, it means that no signal is present). However, although some other descriptions will be made below, in a case where the other descriptions are implemented, the number of "modulation signals ♭u of 103A_u" included in transmission signal group #w of 112A_2_w of FIG. 1A1 may be F.

In this way, in the terminal that is the communication counterpart of the base station, an effect of improving the reception quality of the data can be obtained, and as a result, an effect of improving the transmission efficiency of the data of the system can be obtained.

Further, for example, upper limit values B1max and B2max of the number of modulation signals (modulation signal ♭u of 103A_u) included in the transmission signal group (transmission signal group v of 112A_1_v and transmission signal group #w of 112A_2_w) are set. B1max is an integer of 2 or greater, B2max is an integer of 1 or greater, and B1max > B2max is established. In this case, an upper limit value of the number of modulation signals included in the transmission signal transmitted from the first antenna module is denoted by B1max, and an upper limit value of the number of modulation signals included in the transmission signal transmitted from the second antenna module is denoted by B2max. In this way, the same effect can be obtained.

The above will be described focusing on the point of the precoding.

Regarding first antenna module:

The number of "modulation signals ♭u of 103A_u" included in transmission signal group v of 112A_1_v of FIG. 1A1 is F or 0. Here, v is an integer of 1 or greater and L or less, and L is an integer of 1 or greater or an integer of 2 or greater. Therefore, in transmission signal group v of 112A_1_v including the signal, transmission signal group v of 112A_1_v includes F or more signals.

Since the number of signals present in "modulation signal bu of 103A_u" is F, F signals are represented by $Tx\_1\_i(t, f)$. Here, i is an integer of 1 or greater and F or less, t represents time, and f represents frequency. In this case, vector $s1(t, f) = (Tx\_1\_1(t, f), Tx\_1\_2(t, f), ..., Tx\_1\_F(t, f))^T$ is set. Here, in a case where A is a vector, $A^T$ is a transposed vector of vector A. Further, in a case where A is a matrix, $A^T$ is a transposed matrix of matrix A.

It is assumed that signal group v after precoding of 105A_1_v in which the signal is present includes Pv signals. The Pv signals are represented by $Rx\_1\_v,k(t, f)$. Here, k is an integer of 1 or greater and Pv or less. Here, Pv is an integer of 1 or greater. In this case, vector $rlv(t, f) = (Rx\_1\_v,1(t, f), Rx\_1\_v,2(t, f), ..., Rx\_1\_v,Pv(t, f))^T$ is set.

Then, $rlv(t, f) = Xv \times s1(t, f)$ is established. In this case, Xv is a precoding matrix and is a matrix of F rows and Pv columns.

Regarding second antenna module:

Then, the number of "modulation signals ♭u of 103A_u" included in transmission signal group #w of 112A_2_w of FIG. 1A1 is an integer of less than F (an integer of F-1 or less). Here, w is an integer of 1 or greater and M or less, and M is an integer of 1 or greater or an integer of 2 or greater. Therefore, in transmission signal group #w of 112A_2_w of FIG. 1A1 including the signal, transmission signal group #w of 112A_2_w of FIG. 1A1 includes F-1 or more signals.

The number of "modulation signals ♭u of 103A_u" included in signal group #w after precoding of 105A_2_w of FIG. 1A1 is an integer of less than F (an integer of F-1 or less). In this case, the number of "modulation signals ♭u of 103A_u" included in signal group #w after precoding of 105A_2_w is denoted by Gw. Here, Gw is an integer of 0 or greater and less than F (an integer of 0 or greater and F-1 or less). The Gw signals are represented by $Tx\_2\_i(t, f)$. Here, i is an integer of 1 or greater and Gw or less, t represents time, and f represents frequency. In this case, vector $s2w(t, f) = (Tx\_2\_1(t, f), Tx\_2\_2(t, f), ..., Tx\_2\_Gw(t, f))^T$ is set.

It is assumed that signal group #w after precoding of 105A_2_w includes Qw signals. The Qw signals are represented by $Rx\_2\_w,k(t, f)$. Here, k is an integer of 1 or greater and Qw or less. Here, Qw is an integer of 1 or greater. In this case, vector r2w(t, f) = (Rx_2_w,1(t, f), Rx_2_w,2(t, f), ..., Rx_2_w,Qw(t, f))$^T$ is set.

Then, r2w(t, f) = Yw × s2w(t, f) is established. In this case, Yw is a precoding matrix and is a matrix of Gw rows and Qw columns.

In this way, in the terminal that is the communication counterpart of the base station, an effect of improving the reception quality of the data can be obtained, and as a result, an effect of improving the transmission efficiency of the data of the system can be obtained.

The "precoding matrix Xv used in the first antenna module" is selected from among a plurality of precoding matrices. The plurality of precoding matrices at this time are referred to as a first precoding matrix group.

The "precoding matrix Yw used in the second antenna module" is selected from among a plurality of precoding matrices. The plurality of precoding matrices at this time are referred to as a second precoding matrix group.

In this case, the same precoding matrix is not present in the precoding matrix included in the first precoding matrix group and the precoding matrix included in the second precoding matrix group.

This is because the number of rows of the precoding matrix included in the first precoding matrix group is F, the number of rows of the precoding matrix included in the second precoding matrix group is Gw, and F ≠ Gw is established.

Further, the modulation signal (modulation signal ♭C of 103A_C) in which u = C may be transmitted from "one or more first antenna modules and one or more second antenna modules".

Another example will be described.

A first antenna module that transmits the transmission signal group is focused on among first antenna modules v of 106A_1_v of FIG. 1A1. In a case where the number of transmission signals included in transmission signal group v of 112A_1_v transmitted from first antenna module v of 106A_1_v that is focused on is denoted by Hv, in v that is an integer of 1 or greater and L or less, a minimum value of Hv is denoted by Hmin.

A second antenna module that transmits the transmission signal group is focused on among the second antenna modules #w of 106A_2_w of FIG. 1A1. In a case where the number of transmission signals included in transmission signal group #w of 112A_2_w transmitted from second antenna module #w of 106A_2_w that is focused on is denoted by Iw, in w that is an integer of 1 or greater and M or less, a maximum value of Iw is denoted by Imax.

In this case, Hmin > Imax is established. In this way, in the terminal that is the communication counterpart of the base station, an effect of improving the reception quality of the data can be obtained, and as a result, an effect of improving the transmission efficiency of the data of the system can be obtained.

The conditions of the number of "modulation signals ♭u of 103A_u" included in transmission signal group v of 112A_1_v and the number of "modulation signals bu of 103A_u" included in transmission signal group #w of 112A_2_w may not satisfy the conditions described above.

Further, in a case where the number of antennas constituting first antenna module v of 106A_1_v of FIG. 1A1 is denoted by Jv, in v that is an integer of 1 or greater and L or less, a minimum value of Jv is denoted by Jmin.

In a case where the number of antennas constituting second antenna module #w of 106A_2_w of FIG. 1A1 is denoted by Kw, in w that is an integer of 1 or greater and M or less, a maximum value of Kw is denoted by Kmax.

In this case, Jmin > Kmax is established. In this way, in the terminal that is the communication counterpart of the base station, an effect of improving the reception quality of the data can be obtained, and as a result, an effect of improving the transmission efficiency of the data of the system can be obtained.

The conditions of the number of "modulation signals ♭u of 103A_u" included in transmission signal group v of 112A_1_v and the number of "modulation signals ♭u of 103A_u" included in transmission signal group #w of 112A_2_w may not satisfy the conditions described above.

The second antenna module may have a non-uniform antenna shape, and the first antenna module may be an antenna for full dimension (FD)-MIMO.

The number of antennas constituting the first antenna module and the number of antennas constituting the second antenna module may be limited.

For example, upper limit values L1max and L2max of the number of antennas are set. L1max is an integer of 2 or greater, L2max is an integer of 1 or greater, and L1max > L2max is established. Then, the upper limit value of the number of antennas constituting the first antenna module may be set to L1max, and the upper limit value of the number of antennas constituting the second antenna module may be set to L2max.

Hereinafter, the above will be described with examples.

In FIG. 1A1, it is assumed that two modulation signals ("modulation signal ♭1 of 103A_1" and "modulation signal ♭2 of 103A_2") (two streams and two layers) are present.

Regarding first antenna module:

Then, in a case where v is an integer of 1 or greater and L or less, L is an integer of 1 or greater or an integer of 2 or greater, and signal group v after precoding of 105A_1_v of FIG. 1A1 is present as a signal, the number of "modulation signals ♭u of 103A_u" included in signal group v after precoding of 105A_1_v is 2.

Regarding second antenna module:

Then, in a case where w is an integer of 1 or greater and M or less, M is an integer of 1 or greater or an integer of 2 or greater, and signal group #w after precoding of 105A_2_w of FIG. 1A1 is present as a signal, the number of "modulation signals bu of 103A_u" included in signal group #w after precoding of 105A _2_w is 1. However, although some other descriptions will be made below, in a case where the other descriptions are implemented, the number of "modulation signals bu of 103A_u" included in signal group #w after precoding of 105A_2_w of FIG. 1A1 may be 2.

Regarding first antenna module:

Therefore, in a case where v is an integer of 1 or greater and L or less, L is an integer of 1 or greater or an integer of 2 or greater, and transmission signal group v of 112A_1_v of FIG. 1A1 is present as a signal, the number of "modulation signals bu of 103A_u" included in transmission signal group v of 112A_1_v is 2.

Regarding second antenna module:

Then, in a case where w is an integer of 1 or greater and M or less, M is an integer of 1 or greater or an integer of 2 or greater, and transmission signal group #w of 112A_2_w of FIG. 1A1 is present as a signal, the number of "modulation signals bu of 103A_u" included in transmission signal group #w of 112A_2_w of FIG. 1A1 is 1. However, although some other descriptions will be made below, in a case where the other descriptions are implemented, the number of "modulation signals bu of 103A_u" included in transmission signal group #w of 112A_2_w of FIG. 1A1 may be 2.

In this way, in the terminal that is the communication counterpart of the base station, an effect of improving the reception quality of the data can be obtained, and as a result, an effect of improving the transmission efficiency of the data of the system can be obtained.

Further, for example, upper limit values B1max and B2max of the number of modulation signals (modulation signal bu of 103A_u) included in the transmission signal group (transmission signal group v of 112A_1_v and transmission signal group #w of 112A_2_w) are set. B1max is 2, B2max is 1, and B1max > B2max is established. In this case, an upper limit value of the number of modulation signals included in the transmission signal transmitted from the first antenna module is denoted by B1max, and an upper limit value of the number of modulation signals included in the transmission signal transmitted from the second antenna module is denoted by B2max. In this way, the same effect can be obtained.
The above will be described focusing on the point of the precoding.

Regarding first antenna module:

In a case where v is an integer of 1 or greater and L or less, L is an integer of 1 or greater or an integer of 2 or greater, and transmission signal group v of 112A_1_v of FIG. 1A1 is present as a signal, transmission signal group v of 112A_1_v includes 2 or more signals.
Since the number of signals present in "modulation signal bu of 103A_u" is 2, two signals are represented by Tx_1_i(t, f). Here, i is an integer of 1 or greater and 2 or less, t represents time, and f represents frequency. In this case, vector s1(t, f) = (Tx_1_1(t, f), Tx_1_2(t, f))$^T$ is set.
It is assumed that signal group v after precoding of 105A_1_v in which the signal is present includes Pv signals. The Pv signals are represented by Rx_1_v,k(t, f). Here, k is an integer of 1 or greater and Pv or less. Here, Pv is an integer of 1 or greater. In this case, vector rlv(t, f) = (Rx_1_v,1(t, f), Rx_1_v,2(t, f), ..., Rx_1_v,Pv(t, f))$^T$ is set.
Then, rlv(t, f) = Xv × s1(t, f) is established. In this case, Xv is a precoding matrix and is a matrix of two rows and Pv columns.

Regarding second antenna module:

In a case where w is an integer of 1 or greater and M or less, M is an integer of 1 or greater or an integer of 2 or greater, and transmission signal group #w of 112A_2_w of FIG. 1A1 is present as a signal, transmission signal group #w of 112A_2_w of FIG. 1A1 includes 1 or more signals.

The number of "modulation signals bu of 103A_u" included in signal group #w after precoding of 105A_2_w of FIG. 1A1 is 1, and this signal is represented by Tx_2_1(t, f). In this case, vector s2w(t, f) = (Tx_2_1(t, f))$^T$ is set.
It is assumed that signal group #w after precoding of 105A_2_w includes Qw signals. The Qw signals are represented by Rx_2_w,k(t, f). Here, k is an integer of 1 or greater and Qw or less. Here, Qw is an integer of 1 or greater. In this case, vector r2w(t, f) = (Rx_2_w,1(t, f), Rx_2_w,2(t, f), ..., Rx_2_w,Qw(t, f))$^T$ is set.
Then, r2w(t, f) = Yw × s2w(t, f) is established. In this case, Yw is a precoding matrix and is a matrix of 1 row and Qw columns.
In this way, in the terminal that is the communication counterpart of the base station, an effect of improving the reception quality of the data can be obtained, and as a result, an effect of improving the transmission efficiency of the data of the system can be obtained.
The "precoding matrix Xv used in the first antenna module" is selected from among a plurality of precoding matrices. The plurality of precoding matrices at this time are referred to as a first precoding matrix group.

The "precoding matrix Yw used in the second antenna module" is selected from among a plurality of precoding matrices. The plurality of precoding matrices at this time are referred to as a second precoding matrix group.

In this case, the same precoding matrix is not present in the precoding matrix included in the first precoding matrix group and the precoding matrix included in the second precoding matrix group.

This is because the number of rows of the precoding matrix included in the first precoding matrix group is 2, and the number of rows of the precoding matrix included in the second precoding matrix group is 1.

Further, the modulation signal (modulation signal $\flat$C of 103A _C) in which u = C may be transmitted from "one or more first antenna modules and one or more second antenna modules".

Another example will be described.

A first antenna module that transmits the transmission signal group is focused on among first antenna modules v of 106A_1_v of FIG. 1A1. In a case where the number of transmission signals included in transmission signal group v of 112A_1_v transmitted from first antenna module v of 106A_1_v that is focused on is denoted by Hv, in v that is an integer of 1 or greater and L or less, a minimum value of Hv is denoted by Hmin.

A second antenna module that transmits the transmission signal group is focused on among the second antenna modules #w of 106A_2_w of FIG. 1A1. In a case where the number of transmission signals included in transmission signal group #w of 112A_2_w transmitted from second antenna module #w of 106A_2_w that is focused on is denoted by Iw, in w that is an integer of 1 or greater and M or less, a maximum value of Iw is denoted by Imax.

In this case, Hmin > Imax is established. In this way, in the terminal that is the communication counterpart of the base station, an effect of improving the reception quality of the data can be obtained, and as a result, an effect of improving the transmission efficiency of the data of the system can be obtained.

The conditions of the number of "modulation signals $\flat$u of 103A_u" included in transmission signal group v of 112A_1_v and the number of "modulation signals $\flat$u of 103A_u" included in transmission signal group #w of 112A_2_w may not satisfy the conditions described above.

Further, in a case where the number of antennas constituting first antenna module v of 106A_1_v of FIG. 1A1 is denoted by Jv, in v that is an integer of 1 or greater and L or less, a minimum value of Jv is denoted by Jmin.

In a case where the number of antennas constituting second antenna module #w of 106A_2_w of FIG.

1A1 is denoted by Kw, in w that is an integer of 1 or greater and M or less, a maximum value of Kw is denoted by Kmax.

In this case, Jmin > Kmax is established. In this way, in the terminal that is the communication counterpart of the base station, an effect of improving the reception quality of the data can be obtained, and as a result, an effect of improving the transmission efficiency of the data of the system can be obtained.

The conditions of the number of "modulation signals $\flat$u of 103A_u" included in transmission signal group v of 112A_1_v and the number of "modulation signals $\flat$u of 103A_u" included in transmission signal group #w of 112A_2_w may not satisfy the conditions described above.

The second antenna module may have a non-uniform antenna shape, and the first antenna module may be an antenna for full dimension (FD)-MIMO.

The number of antennas constituting the first antenna module and the number of antennas constituting the second antenna module may be limited.

For example, upper limit values L1max and L2max of the number of antennas are set. L1max is an integer of 2 or greater, L2max is an integer of 1 or greater, and L1max > L2max is established. Then, the upper limit value of the number of antennas constituting the first antenna module may be set to L1max, and the upper limit value of the number of antennas constituting the second antenna module may be set to L2max.

Another example will be described. In FIG. 1A1, it is assumed that four modulation signals ("modulation signal $\flat$1 of 103A_1", "modulation signal $\flat$2 of 103A_2", "modulation signal $\flat$3 of 103A_3", and "modulation signal $\flat$4 of 103A_4") (four streams and four layers) are present.

Regarding first antenna module:

Then, in a case where v is an integer of 1 or greater and L or less, L is an integer of 1 or greater or an integer of 2 or greater, and signal group v after precoding of 105A_1_v of FIG. 1A1 is present as a signal, the number of "modulation signals bu of 103A_u" included in signal group v after precoding of 105A_1_v is 4.

Regarding second antenna module:

Then, in a case where w is an integer of 1 or greater and M or less, M is an integer of 1 or greater or an integer of 2 or greater, and signal group #w after precoding of 105A_2_w of FIG. 1A1 is present as a signal, the number of "modulation signals bu of 103A_u" included in signal group #w after precoding of 105A_2_w is any of 1, 2, or 3. However, although some other descriptions will be made below, in a case where the other descriptions are implemented, the number of "modulation signals $\flat$u of

103A_u" included in signal group #w after precoding of 105A_2_w of FIG. 1A1 may be 4.

Regarding first antenna module:

Therefore, in a case where v is an integer of 1 or greater and L or less, L is an integer of 1 or greater or an integer of 2 or greater, and transmission signal group v of 112A_1_v of FIG. 1A1 is present as a signal, the number of "modulation signals ♭u of 103A_u" included in transmission signal group v of 112A_1_v is 4.

Regarding second antenna module:

Then, in a case where w is an integer of 1 or greater and M or less, M is an integer of 1 or greater or an integer of 2 or greater, and transmission signal group #w of 112A_2_w of FIG. 1A1 is present as a signal, the number of "modulation signals ♭u of 103A_u" included in transmission signal group #w of 112A_2_w of FIG. 1A1 is any of 1, 2, or 3. However, although some other descriptions will be made below, in a case where the other descriptions are implemented, the number of "modulation signals ♭u of 103A_u" included in transmission signal group #w of 112A_2_w of FIG. 1A1 may be 4.

In this way, in the terminal that is the communication counterpart of the base station, an effect of improving the reception quality of the data can be obtained, and as a result, an effect of improving the transmission efficiency of the data of the system can be obtained.

Further, for example, upper limit values B1max and B2max of the number of modulation signals (modulation signal ♭u of 103A_u) included in the transmission signal group (transmission signal group v of 112A_1_v and transmission signal group #w of 112A_2_w) are set. B1max is 2, B2max is 1, and B1max > B2max is established. In this case, an upper limit value of the number of modulation signals included in the transmission signal transmitted from the first antenna module is denoted by B1max, and an upper limit value of the number of modulation signals included in the transmission signal transmitted from the second antenna module is denoted by B2max. In this way, the same effect can be obtained.

The above will be described focusing on the point of the precoding.

Regarding first antenna module:

In a case where v is an integer of 1 or greater and L or less, L is an integer of 1 or greater or an integer of 2 or greater, and transmission signal group v of 112A_1_v of FIG. 1A1 is present as a signal, transmission signal group v of 112A_1_v includes 4 or more signals.

Since the number of signals present in "modulation signal ♭u of 103A_u" is 4, four signals are represented by Tx_1_i(t, f). Here, i is an integer of 1 or greater and 4 or less, t represents time, and f represents frequency. In this case, vector s1(t, f) = (Tx_1_1(t, f), Tx_1_2(t, f), Tx_1_3(t, f), Tx_1_4(t, f))$^T$ is set.

It is assumed that signal group v after precoding of 105A_1_v in which the signal is present includes Pv signals. The Pv signals are represented by Rx_1_v,k(t, f). Here, k is an integer of 1 or greater and Pv or less. Here, Pv is an integer of 1 or greater. In this case, vector r1v(t, f) = (Rx_1_v,1(t, f), Rx_1_v,2(t, f), ..., Rx_1_v,Pv(t, f))$^T$ is set.

Then, r1v(t, f) = Xv × s1(t, f) is established. In this case, Xv is a precoding matrix and is a matrix of four rows and Pv columns.

Regarding second antenna module:

In a case where w is an integer of 1 or greater and M or less, M is an integer of 1 or greater or an integer of 2 or greater, and transmission signal group #w of 112A_2_w of FIG. 1A1 is present as a signal, transmission signal group #w of 112A_2_w of FIG. 1A1 includes 3 or more signals.

The number of "modulation signals ♭u of 103A_u" included in signal group #w after precoding of 105A_2_w of FIG. 1A1 is an integer of 3 or less. In this case, the number of "modulation signals ♭u of 103A_u" included in signal group #w after precoding of 105A_2_w is denoted by Gw. Here, Gw is an integer of 0 or greater and 3 or less. The Gw signals are represented by Tx_2_i(t, f). Here, i is an integer of 1 or greater and Gw or less, t represents time, and f represents frequency. In this case, vector s2w(t, f) = (Tx_2_1(t, f), Tx_2_2(t, f), ..., Tx_2_Gw(t, f))$^T$ is set.

It is assumed that signal group #w after precoding of 105A_2_w includes Qw signals. The Qw signals are represented by Rx_2_w,k(t, f). Here, k is an integer of 1 or greater and Qw or less. Here, Qw is an integer of 1 or greater. In this case, vector r2w(t, f) = (Rx_2_w,1(t, f), Rx_2_w,2(t, f), ..., Rx_2_w,Qw(t, f))$^T$ is set.

Then, r2w(t, f) = Yw × s2w(t, f) is established. In this case, Yw is a precoding matrix and is a matrix of Gw rows and Qw columns.

In this way, in the terminal that is the communication counterpart of the base station, an effect of improving the reception quality of the data can be obtained, and as a result, an effect of improving the transmission efficiency of the data of the system can be obtained.

The "precoding matrix Xv used in the first antenna module" is selected from among a plurality of precoding matrices. The plurality of precoding matrices at this time are referred to as a first precoding matrix group.

The "precoding matrix Yw used in the second antenna module" is selected from among a plurality of precoding matrices. The plurality of precoding matrices at this time are referred to as a second precoding matrix group.

In this case, the same precoding matrix is not present in the precoding matrix included in the first precoding matrix group and the precoding matrix included in the second precoding matrix group.

This is because the number of rows of the precoding matrix included in the first precoding matrix group is 4, and the number of rows of the precoding matrix included in the second precoding matrix group is Gw.

Further, the modulation signal (modulation signal ♭C of 103A _C) in which u = C may be transmitted from "one or more first antenna modules and one or more second antenna modules".

Another example will be described.

A first antenna module that transmits the transmission signal group is focused on among first antenna modules v of 106A_1_v of FIG. 1A1. In a case where the number of transmission signals included in transmission signal group v of 112A_1_v transmitted from first antenna module v of 106A_1_v that is focused on is denoted by Hv, in v that is an integer of 1 or greater and L or less, a minimum value of Hv is denoted by Hmin.

A second antenna module that transmits the transmission signal group is focused on among the second antenna modules #w of 106A_2_w of FIG. 1A1. In a case where the number of transmission signals included in transmission signal group #w of 112A_2_w transmitted from second antenna module #w of 106A_2_w that is focused on is denoted by Iw, in w that is an integer of 1 or greater and M or less, a maximum value of Iw is denoted by Imax.

In this case, Hmin > Imax is established. In this way, in the terminal that is the communication counterpart of the base station, an effect of improving the reception quality of the data can be obtained, and as a result, an effect of improving the transmission efficiency of the data of the system can be obtained.

The conditions of the number of "modulation signals ♭u of 103A_u" included in transmission signal group v of 112A_1_v and the number of "modulation signals ♭u of 103A_u" included in transmission signal group #w of 112A_2_w may not satisfy the conditions described above.

Further, in a case where the number of antennas constituting first antenna module v of 106A_1_v of FIG. 1A1 is denoted by Jv, in v that is an integer of 1 or greater and L or less, a minimum value of Jv is denoted by Jmin.

In a case where the number of antennas constituting second antenna module #w of 106A_2_w of FIG. 1A1 is denoted by Kw, in w that is an integer of 1 or greater and M or less, a maximum value of Kw is denoted by Kmax.

In this case, Jmin > Kmax is established. In this way, in the terminal that is the communication counterpart of the base station, an effect of improving the reception quality of the data can be obtained, and as a result, an effect of improving the transmission efficiency of the data of the system can be obtained.

The conditions of the number of "modulation signals ♭u of 103A_u" included in transmission signal group v of 112A_1_v and the number of "modulation signals bu of 103A_u" included in transmission signal group #w of 112A_2_w may not satisfy the conditions described above.

The second antenna module may have a non-uniform antenna shape, and the first antenna module may be an antenna for full dimension (FD)-MIMO.

The number of antennas constituting the first antenna module and the number of antennas constituting the second antenna module may be limited.

For example, upper limit values L1max and L2max of the number of antennas are set. L1max is an integer of 2 or greater, L2max is an integer of 1 or greater, and L1max > L2max is established. Then, the upper limit value of the number of antennas constituting the first antenna module may be set to L1max, and the upper limit value of the number of antennas constituting the second antenna module may be set to L2max.

In the following, a difference between the first antenna module and the second antenna module in FIG. 1B will be described using an example.

In FIG. 1B, "modulation signal ♭u of 103A_u" (u is an integer of 1 or greater and K or less. In this case, K is an integer of 1 or greater or an integer of 2 or greater. It is assumed that two or more signals are present. In this case, the number of present signals is denoted by F. (Therefore, F is an integer of 2 or greater.)

For example, in "modulation signal ♭u of 103A_u", in a case where two signals are present, modulation signal ♭1 of 103A_1 and modulation signal ♭2 of 103A_2 are present.

Regarding first antenna module:

Then, the number of "modulation signals ♭u of 103A_u" included in signal group v after precoding of 133B_1_v of FIG. 1B is F or 0. Here, v is an integer of 1 or greater and L or less, and L is an integer of 1 or greater or an integer of 2 or greater. (In this case, in a case where the number of "modulation signals ♭u of 103A_u" included in signal group v after precoding of 133B_1_v is 0, it means that no signal is present).

Regarding second antenna module:

Then, the number of "modulation signals ♭u of 103A_u" included in signal group #w after precoding of 133B_2_w of FIG. 1B is an integer of less than F (an integer of F-1 or less). Here, w is an integer of 1 or greater and M or less, and M is an integer of 1 or greater or an integer of 2 or greater. (In this case, in a case where the number of "modulation signals ♭u of 103A_u" included in signal group #w after precoding of 133B_2_w of FIG. 1B is 0, it means that no signal is present). However, although some other descriptions will be made below, in a case where the other descriptions are implemented, the number of "modulation signals ♭u of 103A_u" included in signal group #w after precoding of 133B_2_w of FIG. 1B may be F.

Regarding first antenna module:

Therefore, the number of "modulation signals ♭u of 103A_u" included in transmission signal group v of 112A_1_v of FIG. 1B is F or 0. Here, v is an integer of 1 or greater and L or less, and L is an integer of 1 or greater or an integer of 2 or greater. (In this case, in a case where the number of "modulation signals ♭u of 103A_u" included in transmission signal group v of 112A_1_v is 0, it means that no signal is present).

Regarding second antenna module:

Then, the number of "modulation signals ♭u of 103A_u" included in transmission signal group #w of 112A_2_w of FIG. 1B is an integer of 0 or greater and less than F (an integer of 0 or greater and F-1 or less). Here, w is an integer of 1 or greater and M or less, and M is an integer of 1 or greater or an integer of 2 or greater. (In this case, in a case where the number of "modulation signals ♭u of 103A_u" included in transmission signal group #w of 112A_2_w of FIG. 1A1 is 0, it means that no signal is present). However, although some other descriptions will be made below, in a case where the other descriptions are implemented, the number of "modulation signals ♭u of 103A_u" included in transmission signal group #w of 112A_2_w of FIG. 1B may be F.

In this way, in the terminal that is the communication counterpart of the base station, an effect of improving the reception quality of the data can be obtained, and as a result, an effect of improving the transmission efficiency of the data of the system can be obtained.

Further, for example, upper limit values B1max and B2max of the number of modulation signals (modulation signal ♭u of 103A_u) included in the transmission signal group (transmission signal group v of 112A_1_v and transmission signal group #w of 112A_2_w) are set. B1max is an integer of 2 or greater, B2max is an integer of 1 or greater, and B1max > B2max is established. In this case, an upper limit value of the number of modulation signals included in the transmission signal transmitted from the first antenna module is denoted by B1max, and an upper limit value of the number of modulation signals included in the transmission signal transmitted from the second antenna module is denoted by B2max. In this way, the same effect can be obtained.
The above will be described focusing on the point of the precoding.

Regarding first antenna module:

The number of "modulation signals ♭u of 103A_u" included in transmission signal group v of 112A_1_v of FIG. 1B is F or 0. Here, v is an integer of 1 or greater and L or less, and L is an integer of 1 or greater or an integer of 2 or greater. Therefore, in transmission signal group v of 112A_1_v including the signal, transmission signal group v of 112A_1_v includes F or more signals.
Since the number of signals present in "modulation signal ♭u of 103A_u" is F, F signals are represented by Tx1i(t, f). Here, i is an integer of 1 or greater and F or less, t represents time, and f represents frequency. In this case, vector $s1(t, f) = (Tx\_1\_1(t, f), Tx\_1\_2(t, f), ..., Tx\_1\_F(t, f))^T$ is set. Here, in a case where A is a vector, $A^T$ is a transposed vector of vector A. Further, in a case where A is a matrix, $A^T$ is a transposed matrix of matrix A.
It is assumed that signal group v after precoding of 133B_1_v in which the signal is present includes Pv signals. The Pv signals are represented by Rx_1_v,k(t, f). Here, k is an integer of 1 or greater and Pv or less. Here, Pv is an integer of 1 or greater. In this case, vector $r1v(t, f) = (Rx\_1\_v,1(t, f), Rx\_1\_v,2(t, f), ..., Rx\_1\_v,Pv(t, f))^T$ is set.
Then, $r1v(t, f) = Xv \times s1(t, f)$ is established. In this case, Xv is a precoding matrix and is a matrix of F rows and Pv columns.

Regarding second antenna module:

Then, the number of "modulation signals ♭u of 103A_u" included in transmission signal group #w of 112A_2_w of FIG. 1B is an integer of less than F (an integer of F-1 or less). Here, w is an integer of 1 or greater and M or less, and M is an integer of 1 or greater or an integer of 2 or greater. Therefore, in transmission signal group #w of 112A_2_w of FIG. 1B including the signal, transmission signal group #w of 112A_2_w of FIG. 1B includes F-1 or more signals.

The number of "modulation signals ♭u of 103A_u" included in signal group #w after precoding of 133B_2_w of FIG. 1B is an integer of less than F (an integer of F-1 or less). In this case, the number of "modulation signals ♭u of 103A_u" included in signal group #w after precoding of 133B_2_w is denoted by Gw. Here, Gw is an integer of 0 or greater and less than F (an integer of 0 or greater and F-1 or less). The Gw signals are represented by Tx_2_i(t, f). Here, i is an integer of 1 or greater and Gw or less, t represents time, and f represents frequency. In this case, vector $s2w(t, f) = (Tx\_2\_1(t, f),$

$Tx\_2\_2(t, f), ..., Tx\_2\_Gw(t, f))^T$ is set.

It is assumed that signal group #w after precoding of 133B_2_w includes Qw signals. The Qw signals are represented by Rx_2_w,k(t, f). Here, k is an integer of 1 or greater and Qw or less. Here, Qw is an integer of 1 or greater. In this case, vector $r2w(t, f) = (Rx\_2\_w,1(t, f), Rx\_2\_w,2(t, f), ..., Rx\_2\_w,Qw(t, f))^T$ is set.

Then, $r2w(t, f) = Yw \times s2w(t, f)$ is established. In this case, Yw is a precoding matrix and is a matrix of Gw rows and Qw columns.

In this way, in the terminal that is the communication counterpart of the base station, an effect of improving the reception quality of the data can be obtained, and as a result, an effect of improving the transmission efficiency of the data of the system can be obtained.

The "precoding matrix Xv used in the first antenna module" is selected from among a plurality of precoding matrices. The plurality of precoding matrices at this time are referred to as a first precoding matrix group.

The "precoding matrix Yw used in the second antenna module" is selected from among a plurality of precoding matrices. The plurality of precoding matrices at this time are referred to as a second precoding matrix group.

In this case, the same precoding matrix is not present in the precoding matrix included in the first precoding matrix group and the precoding matrix included in the second precoding matrix group.

This is because the number of rows of the precoding matrix included in the first precoding matrix group is F, the number of rows of the precoding matrix included in the second precoding matrix group is Gw, and $F \neq Gw$ is established.

Further, the modulation signal (modulation signal ♭C of 103A _C) in which u = C may be transmitted from "one or more first antenna modules and one or more second antenna modules".

Another example will be described.

A first antenna module that transmits the transmission signal group is focused on among first antenna modules v of 106A_1_v of FIG. 1B. In a case where the number of transmission signals included in transmission signal group v of 112A_1_v transmitted from first antenna module v of 106A_1_v that is focused on is denoted by Hv, in v that is an integer of 1 or greater and L or less, a minimum value of Hv is denoted by Hmin.

A second antenna module that transmits the transmission signal group is focused on among the second antenna modules #w of 106A_2_w of FIG. 1B. In a case where the number of transmission signals included in transmission signal group #w of 112A_2_w transmitted from second antenna module #w of 106A_2_w that is focused on is denoted by Iw, in w that is an integer of 1 or greater and M or less, a maximum value of Iw is denoted by Imax.

In this case, Hmin > Imax is established. In this way, in the terminal that is the communication counterpart of the base station, an effect of improving the reception quality of the data can be obtained, and as a result, an effect of improving the transmission efficiency of the data of the system can be obtained.

The conditions of the number of "modulation signals ♭u of 103A_u" included in transmission signal group v of 112A_1_v and the number of "modulation signals ♭u of 103A_u" included in transmission signal group #w of 112A_2_w may not satisfy the conditions described above.

Further, in a case where the number of antennas constituting first antenna module v of 106A_1_v of FIG. 1B is denoted by Jv, in v that is an integer of 1 or greater and L or less, a minimum value of Jv is denoted by Jmin.

In a case where the number of antennas constituting second antenna module #w of 106A_2_w of FIG. 1B is denoted by Kw, in w that is an integer of 1 or greater and M or less, a maximum value of Kw is denoted by Kmax.

In this case, Jmin > Kmax is established. In this way, in the terminal that is the communication counterpart of the base station, an effect of improving the reception quality of the data can be obtained, and as a result, an effect of improving the transmission efficiency of the data of the system can be obtained.

The conditions of the number of "modulation signals ♭u of 103A_u" included in transmission signal group v of 112A_1_v and the number of "modulation signals bu of 103A_u" included in transmission signal group #w of 112A_2_w may not satisfy the conditions described above.

The second antenna module may have a non-uniform antenna shape, and the first antenna module may be an antenna for full dimension (FD)-MIMO.

The number of antennas constituting the first antenna module and the number of antennas constituting the second antenna module may be limited.

For example, upper limit values L1max and L2max of the number of antennas are set. L1max is an integer of 2 or greater, L2max is an integer of 1 or greater, and L1max > L2max is established. Then, the upper limit value of the number of antennas constituting the first antenna module may be set to L1max, and the upper limit value of the number of antennas constituting the second antenna module may be set to L2max.

Hereinafter, the above will be described with examples.

In FIG. 1B, it is assumed that two modulation signals ("modulation signal ♭1 of 103A_1" and "modulation signal ♭2 of 103A_2") (two streams and two layers) are present.

Regarding first antenna module:

Then, in a case where v is an integer of 1 or greater and L or less, L is an integer of 1 or greater or an integer of 2 or greater, and signal group v after precoding of 133B_1_v of FIG. 1B is present as a signal, the number of "modulation signals bu of 103A_u" included in signal group v after precoding of 133B_1_v is 2.

Regarding second antenna module:

Then, in a case where w is an integer of 1 or greater and M or less, M is an integer of 1 or greater or an integer of 2 or greater, and signal group #w after precoding of 133B_2_w of FIG. 1B is present as a signal, the number of "modulation signals bu of 103A_u" included in signal group #w after precoding of 133B_2_w is 1. However, although some other descriptions will be made below, in a case where the other descriptions are implemented, the number of "modulation signals bu of 103A_u" included in signal group #w after precoding of 133B_2_w of FIG. 1B may be 2.

Regarding first antenna module:

Therefore, in a case where v is an integer of 1 or greater and L or less, L is an integer of 1 or greater or an integer of 2 or greater, and transmission signal group v of 112A_1_v of FIG. 1B is present as a signal, the number of "modulation signals bu of 103A_u" included in transmission signal group v of 112A_1_v is 2.

Regarding second antenna module:

Then, in a case where w is an integer of 1 or greater and M or less, M is an integer of 1 or greater or an integer of 2 or greater, and transmission signal group #w of 112A_2_w of FIG. 1B is present as a signal, the number of "modulation signals bu of 103A_u" included in transmission signal group #w of 112A_2_w of FIG. 1B is 1. However, although some other descriptions will be made below, in a case where the other descriptions are implemented, the number of "modulation signals bu of 103A_u" included in transmission signal group #w of 112A_2_w of FIG. 1B may be 2.

In this way, in the terminal that is the communication counterpart of the base station, an effect of improving the reception quality of the data can be obtained, and as a result, an effect of improving the transmission efficiency of the data of the system can be obtained.

Further, for example, upper limit values B1max and B2max of the number of modulation signals (modulation signal bu of 103A_u) included in the transmission signal group (transmission signal group v of 112A_1_v and transmission signal group #w of 112A_2_w) are set.

B1max is 2, B2max is 1, and B1max > B2max is established. In this case, an upper limit value of the number of modulation signals included in the transmission signal transmitted from the first antenna module is denoted by B1max, and an upper limit value of the number of modulation signals included in the transmission signal transmitted from the second antenna module is denoted by B2max. In this way, the same effect can be obtained.

The above will be described focusing on the point of the precoding.

Regarding first antenna module:

In a case where v is an integer of 1 or greater and L or less, L is an integer of 1 or greater or an integer of 2 or greater, and transmission signal group v of 112A_1_v of FIG. 1A1 is present as a signal, transmission signal group v of 112A_1_v includes 2 or greater signals.

Since the number of signals present in "modulation signal bu of 103A_u" is 2, two signals are represented by $Tx\_1\_i(t, f)$. Here, i is an integer of 1 or greater and 2 or less, t represents time, and f represents frequency. In this case, vector $s1(t, f) = (Tx\_1\_1(t, f), Tx\_1\_2(t, f))^T$ is set.

It is assumed that signal group v after precoding of 133B_1_v in which the signal is present includes Pv signals. The Pv signals are represented by $Rx\_1\_v,k(t, f)$. Here, k is an integer of 1 or greater and Pv or less. Here, Pv is an integer of 1 or greater. In this case, vector $r1v(t, f) = (Rx\_1\_v,1(t, f), Rx\_1\_v,2(t, f), ..., Rx\_1\_v,Pv(t, f))^T$ is set.

Then, $r1v(t, f) = Xv \times s1(t, f)$ is established. In this case, Xv is a precoding matrix and is a matrix of two rows and Pv columns.

Regarding second antenna module:

In a case where w is an integer of 1 or greater and M or less, M is an integer of 1 or greater or an integer of 2 or greater, and transmission signal group #w of 112A_2_w of FIG. 1B is present as a signal, transmission signal group #w of 112A_2_w of FIG. 1B includes 1 or more signals.

The number of "modulation signals bu of 103A_u" included in signal group #w after precoding of 133B_2_w of FIG. 1B is 1, and this signal is represented by $Tx\_2\_1(t, f)$. In this case, vector $s2w(t, f) = (Tx\_2\_1(t, f))^T$ is set.

It is assumed that signal group #w after precoding of 133B_2_w includes Qw signals. The Qw signals are represented by $Rx\_2\_w,k(t, f)$. Here, k is an integer of 1 or greater and Qw or less. Here, Qw is an integer of 1 or greater. In this case, vector $r2w(t, f) = (Rx\_2\_w,1(t, f), Rx\_2\_w,2(t, f), ..., Rx\_2\_w,Qw(t, f))^T$ is set.

Then, $r2w(t, f) = Yw \times s2w(t, f)$ is established. In this case, Yw is a precoding matrix and is a matrix of 1 row and Qw columns.

In this way, in the terminal that is the communication counterpart of the base station, an effect of improving the reception quality of the data can be obtained, and as a result, an effect of improving the transmission efficiency of the data of the system can be obtained.

The "precoding matrix Xv used in the first antenna module" is selected from among a plurality of precoding matrices. The plurality of precoding matrices at this time are referred to as a first precoding matrix group.

The "precoding matrix Yw used in the second antenna module" is selected from among a plurality of precoding matrices. The plurality of precoding matrices at this time are referred to as a second precoding matrix group.

In this case, the same precoding matrix is not present in the precoding matrix included in the first precoding matrix group and the precoding matrix included in the second precoding matrix group.

This is because the number of rows of the precoding matrix included in the first precoding matrix group is 2, and the number of rows of the precoding matrix included in the second precoding matrix group is 1.

Further, the modulation signal (modulation signal $β_C$ of 103A_C) in which u = C may be transmitted from "one or more first antenna modules and one or more second antenna modules".

Another example will be described.

A first antenna module that transmits the transmission signal group is focused on among first antenna modules v of 106A_1_v of FIG. 1B. In a case where the number of transmission signals included in transmission signal group v of 112A_1_v transmitted from first antenna module v of 106A_1_v that is focused on is denoted by Hv, in v that is an integer of 1 or greater and L or less, a minimum value of Hv is denoted by Hmin.

A second antenna module that transmits the transmission signal group is focused on among the second antenna modules #w of 106A_2_w of FIG. 1B. In a case where the number of transmission signals included in transmission signal group #w of 112A_2_w transmitted from second antenna module #w of 106A_2_w that is focused on is denoted by Iw, in w that is an integer of 1 or greater and M or less, a maximum value of Iw is denoted by Imax.

In this case, Hmin > Imax is established. In this way, in the terminal that is the communication counterpart of the base station, an effect of improving the reception quality of the data can be obtained, and as a result, an effect of improving the transmission efficiency of the data of the system can be obtained.

The conditions of the number of "modulation signals $β_u$ of 103A_u" included in transmission signal group v of 112A_1_v and the number of "modulation signals $β_u$ of 103A_u" included in transmission signal group #w of 112A_2_w may not satisfy the conditions described above.

Further, in a case where the number of antennas constituting first antenna module v of 106A_1_v of FIG. 1B is denoted by Jv, in v that is an integer of 1 or greater and L or less, a minimum value of Jv is denoted by Jmin.

In a case where the number of antennas constituting second antenna module #w of 106A_2_w of FIG. 1B is denoted by Kw, in w that is an integer of 1 or greater and M or less, a maximum value of Kw is denoted by Kmax.

In this case, Jmin > Kmax is established. In this way, in the terminal that is the communication counterpart of the base station, an effect of improving the reception quality of the data can be obtained, and as a result, an effect of improving the transmission efficiency of the data of the system can be obtained.

The conditions of the number of "modulation signals $β_u$ of 103A_u" included in transmission signal group v of 112A_1_v and the number of "modulation signals $β_u$ of 103A_u" included in transmission signal group #w of 112A_2_w may not satisfy the conditions described above.

The second antenna module may have a non-uniform antenna shape, and the first antenna module may be an antenna for full dimension (FD)-MIMO.

The number of antennas constituting the first antenna module and the number of antennas constituting the second antenna module may be limited.

For example, upper limit values L1max and L2max of the number of antennas are set. L1max is an integer of 2 or greater, L2max is an integer of 1 or greater, and L1max > L2max is established. Then, the upper limit value of the number of antennas constituting the first antenna module may be set to L1max, and the upper limit value of the number of antennas constituting the second antenna module may be set to L2max.

Another example will be described. In FIG. 1B, it is assumed that four modulation signals ("modulation signal $β_1$ of 103A_1", "modulation signal $β_2$ of 103A_2", "modulation signal $β_3$ of 103A_3", and "modulation signal $β_4$ of 103A_4") (four streams and four layers) are present.

Regarding first antenna module:

Then, in a case where v is an integer of 1 or greater and L or less, L is an integer of 1 or greater or an integer of 2 or greater, and signal group v after precoding of 133B_1_v of FIG. 1B is present as a signal, the number of "modulation signals $β_u$ of 103A_u" included in signal group v after precoding of 133B_1_v is 4.

Regarding second antenna module:

Then, in a case where w is an integer of 1 or greater and M or less, M is an integer of 1 or greater or an integer of 2 or greater, and signal group #w after precoding of 133B_2_w of FIG. 1B is present as a signal, the number of "modulation signals ♭u of 103A_u" included in signal group #w after precoding of 133B_2_w is any of 1, 2, or 3. However, although some other descriptions will be made below, in a case where the other descriptions are implemented, the number of "modulation signals ♭u of 103A_u" included in signal group #w after precoding of 133B_2_w of FIG. 1B may be 4.

Regarding first antenna module:

Therefore, in a case where v is an integer of 1 or greater and L or less, L is an integer of 1 or greater or an integer of 2 or greater, and transmission signal group v of 112A_1_v of FIG. 1B is present as a signal, the number of "modulation signals ♭u of 103A_u" included in transmission signal group v of 112A_1_v is 4.

Regarding second antenna module:

Then, in a case where w is an integer of 1 or greater and M or less, M is an integer of 1 or greater or an integer of 2 or greater, and transmission signal group #w of 112A_2_w of FIG. 1B is present as a signal, the number of "modulation signals ♭u of 103A_u" included in transmission signal group #w of 112A_2_w of FIG. 1B is any of 1, 2, or 3. However, although some other descriptions will be made below, in a case where the other descriptions are implemented, the number of "modulation signals ♭u of 103A_u" included in transmission signal group #w of 112A_2_w of FIG. 1B may be 4.

In this way, in the terminal that is the communication counterpart of the base station, an effect of improving the reception quality of the data can be obtained, and as a result, an effect of improving the transmission efficiency of the data of the system can be obtained.

Further, for example, upper limit values B1max and B2max of the number of modulation signals (modulation signal ♭u of 103A_u) included in the transmission signal group (transmission signal group v of 112A_1_v and transmission signal group #w of 112A_2_w) are set. B1max is 2, B2max is 1, and B1max > B2max is established. In this case, an upper limit value of the number of modulation signals included in the transmission signal transmitted from the first antenna module is denoted by B1max, and an upper limit value of the number of modulation signals included in the transmission signal transmitted from the second antenna module is denoted by B2max. In this way, the same effect can be obtained.

The above will be described focusing on the point of the precoding.

Regarding first antenna module:

In a case where v is an integer of 1 or greater and L or less, L is an integer of 1 or greater or an integer of 2 or greater, and transmission signal group v of 112A_1_v of FIG. 1B is present as a signal, transmission signal group v of 112A_1_v includes 4 or more signals.

Since the number of signals present in "modulation signal ♭u of 103A_u" is 4, four signals are represented by Tx_1_i(t, f). Here, i is an integer of 1 or greater and 4 or less, t represents time, and f represents frequency. In this case, vector s1(t, f) = (Tx_1_1(t, f), Tx_1_2(t, f), Tx_1_3(t, f), Tx_1_4(t, f))$^T$ is set.

It is assumed that signal group v after precoding of 133B_1_v in which the signal is present includes Pv signals. The Pv signals are represented by Rx_1_v,k(t, f). Here, k is an integer of 1 or greater and Pv or less. Here, Pv is an integer of 1 or greater. In this case, vector r1v(t, f) = (Rx_1_v,1(t, f), Rx_1_v,2(t, f), ..., Rx_1_v,Pv(t, f))$^T$ is set.

Then, r1v(t, f) = Xv × s1(t, f) is established. In this case, Xv is a precoding matrix and is a matrix of four rows and Pv columns.

Regarding second antenna module:

In a case where w is an integer of 1 or greater and M or less, M is an integer of 1 or greater or an integer of 2 or greater, and transmission signal group #w of 112A_2_w of FIG. 1B is present as a signal, transmission signal group #w of 112A_2_w of FIG. 1B includes three or more signals.

The number of "modulation signals ♭u of 103A_u" included in signal group #w after precoding of 133B_2_w of FIG. 1B is an integer of 3 or less. In this case, the number of "modulation signals ♭u of 103A_u" included in signal group #w after precoding of 133B_2_w is denoted by Gw. Here, Gw is an integer of 0 or greater and 3 or less. The Gw signals are represented by Tx_2_i(t, f). Here, i is an integer of 1 or greater and Gw or less, t represents time, and f represents frequency. In this case, vector s2w(t, f) = (Tx_2_1(t, f), Tx_2_2(t, f), ..., Tx_2_Gw(t, f))$^T$ is set.

It is assumed that signal group #w after precoding of 133B_2_w includes Qw signals. The Qw signals are represented by Rx_2_w,k(t, f). Here, k is an integer of 1 or greater and Qw or less. Here, Qw is an integer of 1 or greater. In this case, vector r2w(t, f) = (Rx_2_w,1(t, f), Rx_2_w,2(t, f), ..., Rx_2_w,Qw(t, f))$^T$ is set.

Then, r2w(t, f) = Yw × s2w(t, f) is established. In this case, Yw is a precoding matrix and is a matrix of Gw rows and Qw columns.

In this way, in the terminal that is the communication counterpart of the base station, an effect of improving the reception quality of the data can be obtained, and as a result, an effect of improving the transmission efficiency of the data of the system can be obtained.

The "precoding matrix Xv used in the first antenna module" is selected from among a plurality of precoding matrices. The plurality of precoding matrices at this time are referred to as a first precoding matrix group.

The "precoding matrix Yw used in the second antenna module" is selected from among a plurality of precoding matrices. The plurality of precoding matrices at this time are referred to as a second precoding matrix group.

In this case, the same precoding matrix is not present in the precoding matrix included in the first precoding matrix group and the precoding matrix included in the second precoding matrix group.

This is because the number of rows of the precoding matrix included in the first precoding matrix group is 4, and the number of rows of the precoding matrix included in the second precoding matrix group is Gw.

Further, the modulation signal (modulation signal $\flat C$ of 103A _C) in which u = C may be transmitted from "one or more first antenna modules and one or more second antenna modules".

Another example will be described.

A first antenna module that transmits the transmission signal group is focused on among first antenna modules v of 106A_1_v of FIG. 1B. In a case where the number of transmission signals included in transmission signal group v of 112A_1_v transmitted from first antenna module v of 106A_1_v that is focused on is denoted by Hv, in v that is an integer of 1 or greater and L or less, a minimum value of Hv is denoted by Hmin.

A second antenna module that transmits the transmission signal group is focused on among the second antenna modules #w of 106A_2_w of FIG. 1B. In a case where the number of transmission signals included in transmission signal group #w of 112A_2_w transmitted from second antenna module #w of 106A_2_w that is focused on is denoted by Iw, in w that is an integer of 1 or greater and M or less, a maximum value of Iw is denoted by Imax.

In this case, Hmin > Imax is established. In this way, in the terminal that is the communication counterpart of the base station, an effect of improving the reception quality of the data can be obtained, and as a result, an effect of improving the transmission efficiency of the data of the system can be obtained.

The conditions of the number of "modulation signals $\flat u$ of 103A_u" included in transmission signal group v of 112A_1_v and the number of "modulation signals $\flat u$ of 103A_u" included in transmission signal group #w of 112A_2_w may not satisfy the conditions described above.

Further, in a case where the number of antennas constituting first antenna module v of 106A_1_v of FIG. 1B is denoted by Jv, in v that is an integer of 1 or greater and L or less, a minimum value of Jv is denoted by Jmin.

In a case where the number of antennas constituting second antenna module #w of 106A_2_w of FIG. 1B is denoted by Kw, in w that is an integer of 1 or greater and M or less, a maximum value of Kw is denoted by Kmax.

In this case, Jmin > Kmax is established. In this way, in the terminal that is the communication counterpart of the base station, an effect of improving the reception quality of the data can be obtained, and as a result, an effect of improving the transmission efficiency of the data of the system can be obtained.

The conditions of the number of "modulation signals $\flat u$ of 103A_u" included in transmission signal group v of 112A_1_v and the number of "modulation signals $\flat u$ of 103A_u" included in transmission signal group #w of 112A_2_w may not satisfy the conditions described above.

The second antenna module may have a non-uniform antenna shape, and the first antenna module may be an antenna for full dimension (FD)-MIMO.

The number of antennas constituting the first antenna module and the number of antennas constituting the second antenna module may be limited.

For example, upper limit values L1max and L2max of the number of antennas are set. L1max is an integer of 2 or greater, L2max is an integer of 1 or greater, and L1max > L2max is established. Then, the upper limit value of the number of antennas constituting the first antenna module may be set to L1max, and the upper limit value of the number of antennas constituting the second antenna module may be set to L2max.

For example, there are Nx layers (Nx is an integer of 1 or greater) generated from data (e.g., transmission data 101A_u of FIG. 1A1 or the like, or a part thereof), and the first antenna module performs a first operation of transmitting Ax transmission signals (Ax is an integer of 2 or greater) generated from the Nx layers. For example, in a case of two layers, the Nx layers correspond to two layers of "modulation signal $\flat 1$ of 103A_1" and "modulation signal $\flat 2$ of 103A_2".

Further, for example, the second antenna module performs a second operation of transmitting Bx transmission signals (Bx is an integer of 1 or greater and less than Ax) generated from the above-described Nx layers or Mx layers (Mx is an integer of 1 or greater and N x or less) that are a part of the Nx layers. For example, in a case where the Nx layers are two layers of "modulation signal $\flat 1$ of 103A_1" and "modulation signal $\flat 2$ of 103A_2", the Mx layers correspond to a part or all of the two layers of "modulation signal $\flat 1$ of 103A_1" and "modulation signal $\flat 2$ of 103A_2".

Further, Nx is not limited to 2, and may be 1 or 3 or greater. Note that, as one example, Ax is 2 and Bx is 1, but Ax is not limited to 2, and Bx is not limited to 1. For example, Ax may be 4 and Bx may be 2.

Next, a control method of an antenna port in the base station having the configuration of FIG. 1A1 and FIG. 1B will be described.

The antenna port may be a logical antenna (antenna group) configured by one or a plurality of physical antennas. That is, the antenna port does not necessarily refer to one physical antenna, and may refer to an array antenna, an antenna module, or the like configured by a plurality of antennas. For example, the number of physical antennas constituting the antenna port is not defined, and the antenna port may be defined as a minimum unit at which the terminal station can transmit a reference signal (reference signal). Further, the antenna port may be defined as a unit for multiplying a precoding vector or a weight of a precoding matrix, or a minimum unit. However, the interpretation of the antenna port is not limited to these examples, and a new concept or configuration can be added.

Note that "antenna port" may be interchangeably used with other expressions such as "antenna part", "antenna", and "antenna unit".

FIG. 5A is a diagram illustrating an example of a configuration around an antenna port in a case where an antenna port is provided instead of the "first antenna module v of 106A_1_v" and the "second antenna module #w of 106A _2 w" in the base station having the configuration of FIG. 1A1 and FIG. 1B. In FIG. 5A, the same reference numerals are assigned to components that operate in the same manner as in FIG. 1A and FIG. 1B, and a part of the description will be omitted for portions that have already been described.

First selector 501A receives control signal 192A, and selects the antenna port based on information on the antenna port to be used included in control signal 192A.

Then, first selector 501A transmits transmission signal group v of 112A_1_v by using the selected antenna port.

For example, in a case where antenna port 0 of 590A_0 is selected as the antenna port that transmits the transmission signal group, first selector 501A outputs any of the transmission signal groups v of 112A_1_v as signal group 511A_1_0, and signal group 511A_1_0 is output as radio waves from antenna port 0 of 590A_0. Antenna port 0 of 590A_0 may receive as input control signal 192A, and antenna port 0 of 590A_0 may perform beam forming (directivity control) based on control signal 192A.

Therefore, in a case where the antenna port p of 590A_p is selected as the antenna port that transmits the transmission signal group, first selector 501A outputs any of the transmission signal groups v of 112A_1_v as signal group 511A_1_p, and signal group 511A_1_p is output as radio waves from the antenna port p of 590A_p. The antenna port p of 590A_p may receive as input control signal 192A, and the antenna port p of 590A_p may perform beam forming (directivity control) based on control signal 192A. Here, p can be represented by an integer of 0 or greater and 31 or less.

Therefore, the "antenna port 0 of 590A_0 to antenna port 31 of 590A_31" is an antenna port capable of transmitting one or more transmission signals. The "antenna port 0 of 590A_0 to antenna port 31 of 590A_31" is an antenna port for the first antenna module.

Second selector 502A receives control signal 192A, and selects the antenna port based on information on the antenna port to be used included in control signal 192A.

Then, second selector 502A transmits transmission signal group #w of 112A_2_w by using the selected antenna port.

For example, in a case where antenna port 32 of 590A_32 is selected as the antenna port that transmits the transmission signal group, second selector 502A outputs any of the transmission signal groups #w of 112A_2_w as signal group 511A_2_32, and signal group 511A_2_32 is output as radio waves from antenna port 32 of 590A_32. Antenna port 32 of 590A_32 may receive as input control signal 192A, and antenna port 32 of 590A_32 may perform beam forming (directivity control) based on control signal 192A.

Therefore, in a case where the antenna port q of 590A_q is selected as the antenna port that transmits the transmission signal group, second selector 502A outputs any of the transmission signal groups #w of 112A_2_w as signal group 511A_2_q, and signal group 511A_2_q is output as radio waves from the antenna port q of 590A_q. The antenna port q of 590A_q may receive as input control signal 192A, and the antenna port q of 590A_q may perform beam forming (directivity control) based on control signal 192A. Here, q can be represented by an integer of 32 or greater and 63 or less.

Therefore, the "antenna port 32 of 590A_32 to antenna port 63 of 590A_63" is an antenna port capable of transmitting one or more transmission signals. The "antenna port 32 of 590A_32 to antenna port 63 of 590A_63" is an antenna port for the second antenna module.

An operation example related to FIG. 5A will be described. For example, as illustrated in FIG. 5B1, first selector 501A receives control signal 192A, transmission signal group 1 of 112A_1_1, and transmission signal group 2 of 112A_1_2, and determines to transmit transmission signal group 1 of 112A_1_1 by using antenna port 30 of 590A _30 and to transmit transmission signal group 2 of 112A_1_2 by using antenna port 4 of 590A_4 based on the information on the antenna port to be used included in control signal 192A, and outputs transmission signal group 1 of 112A_1_1 as signal group 511A_1_30 and transmission signal group 2 of 112A_1_2 as signal group 511A_1_4. Then, signal group 511A_1_30 is output as radio waves from antenna port 30 of 590A_30, and signal group 511A _1_4 is output as radio waves from antenna port 4 of 590A_4.

Further, as illustrated in FIG. 5B1, second selector 502A receives control signal 192A, transmission signal group 1 of 112A_2_1, transmission signal group 2 of 112A_2_2, transmission signal group 3 of 112A_2_3, and transmission signal group 4 of 112A_2_4, and determines to transmit transmission signal group 1 of 112A_2_1 by using antenna port 62 of 590A_62, to transmit transmission signal group 2 of 112A_2_2 by using antenna port 53 of 590A_53, to transmit transmission signal group 3 of 112A_2_3 by using antenna port 47 of 590A_47, and to transmit transmission signal group 4 of 112A_2_4 by using antenna port 59 of 590A_59 based on the information on the antenna port to be used included in control signal 192A, and outputs transmission signal group 1 of 112A_2_1 as signal group 511A_2_62, transmission signal group 2 of 112A_2_2 as signal group 511A_2_53, transmission signal group 3 of 112A_2_3 as signal group 511A_2_47, and transmission signal group 4 of 112A_2_4 as signal group 511A_2_59. Then, signal group 511A_2_62 is output as radio waves from antenna port 62 of 590A_62, signal group 511A_2_53 is output as radio waves from antenna port 53 of 590A_53, signal group 511A_2_47 is output as radio waves from antenna port 47 of 590A_47, and signal group 511A_2_59 is output as radio waves from antenna port 59 of 590A_59.

In this way, each transmission signal group for the first antenna module may be transmitted by using one antenna port. Further, each transmission signal group for the second antenna module may be transmitted by using one antenna port.

There may be a plurality of transmission signal groups for the first antenna module, and there may be a plurality of transmission signal groups for the second antenna module.

An operation example related to FIG. 5A will be described. For example, as illustrated in FIG. 5B2, first selector 501A receives control signal 192A and transmission signal group 1 of 112A_1_1, and determines to transmit transmission signal group 1 of 112A_1_1 by using antenna port 29 of 590A_29 based on the information on the antenna port to be used included in control signal 192A, and outputs transmission signal group 1 of 112A_1_1 as signal group 511A_1_29. Then, signal group 511A_1_29 is output as radio waves from antenna port 29 of 590A_29.

Further, as illustrated in FIG. 5B2, second selector 502A receives control signal 192A, transmission signal group 1 of 112A_2_1, and transmission signal group 2 of 112A_2_2, and determines to transmit transmission signal group 1 of 112A_2_1 by using antenna port 47 of 590A_47 and to transmit transmission signal group 2 of 112A_2_2 by using antenna port 61 of 590A_61 based on the information on the antenna port to be used included in control signal 192A, and outputs transmission signal group 1 of 112A_2_1 as signal group 511A_2_47 and transmission signal group 2 of 112A_2_2 as signal group 511A_2_61. Then, signal group 511A_2_47 is output as radio waves from antenna port 47 of 590A_47, and signal group 511A_2_61 is output as radio waves from antenna port 61 of 590A_61.

In this way, each transmission signal group for the first antenna module may be transmitted by using one antenna port. Further, each transmission signal group for the second antenna module may be transmitted by using one antenna port.

There may be one transmission signal group for the first antenna module, and there may be a plurality of transmission signal groups for the second antenna module.

An operation example related to FIG. 5A will be described. For example, as illustrated in FIG. 5B3, first selector 501A receives control signal 192A, transmission signal group 1 of 112A_1_1, and transmission signal group 2 of 112A_1_2, and determines to transmit transmission signal group 1 of 112A_1_1 by using antenna port 7 of 590A_7 and to transmit transmission signal group 2 of 112A_1_2 by using antenna port 9 of 590A_9 based on the information on the antenna port to be used included in control signal 192A, and outputs transmission signal group 1 of 112A_1_1 as signal group 511A_1_7 and transmission signal group 2 of 112A_1_2 as signal group 511A_1_9. Then, signal group 511A_1_7 is output as radio waves from antenna port 7 of 590A_7, and signal group 511A_1_9 is output as radio waves from antenna port 9 of 590A _9.

Further, as illustrated in FIG. 5B3, second selector 502A receives control signal 192A and transmission signal group 1 of 112A _2_1, and determines to transmit transmission signal group 1 of 112A_2_1 by using antenna port 60 of 590A_60 based on the information on the antenna port to be used included in control signal 192A, and outputs transmission signal group 1 of 112A_2_1 as signal group 511A_2_60. Then, signal group 511A_2_60 is output as radio waves from antenna port 60 of 590A_60.

In this way, each transmission signal group for the first antenna module may be transmitted by using one antenna port. Further, each transmission signal group for the second antenna module may be transmitted by using one antenna port.

There may be a plurality of transmission signal groups for the first antenna module, and there may be one transmission signal group for the second antenna module.

FIG. 5C is a diagram illustrating an example of a configuration around an antenna port different from FIG. 5A, in a case where an antenna port is provided instead of the "first antenna module v of 106A_1_v" and the "second antenna module #w of 106A _2 w" in the base station having the configuration of FIG. 1A1 and FIG. 1B. In FIG. 5C, the same reference numerals are assigned to components that operate in the same manner as in FIG. 1A and FIG. 1B, and a part of the description will be omitted for portions that have already been described.

First selector 501C receives control signal 192A, and selects the antenna port based on information on the antenna port to be used included in control signal 192A.

Then, first selector 501C transmits the transmission signal included in transmission signal group v of 112A_1_v by using the selected antenna port.

For example, in a case where antenna port 0 of 590C_0 is selected as the antenna port that transmits the transmission signal included in the transmission signal group, first selector 501C outputs the transmission signal included in any of the transmission signal groups v of 112A_1_v as a signal 521C_1_0, and signal 521C_1_0 is output as radio waves from antenna port 0 of 590C_0. Antenna port 0 of 590C_0 may receive as input control signal 192A, and antenna port 0 of 590C_0 may perform beam forming (directivity control) based on control signal 192A.

Therefore, in a case where the antenna port p of 590C_p is selected as the antenna port that transmits the transmission signal included in the transmission signal group, first selector 501C outputs the transmission signal included in any of the transmission signal groups v of 112A_1_v as a signal 521C_1_p, and signal 521C_1_p is output as radio waves from the antenna port p of 590C_p. The antenna port p of 590C_p may receive as input control signal 192A, and the antenna port p of 590C_p may perform beam forming (directivity control) based on control signal 192A. Here, p can be represented by an integer of 0 or greater and 255 or less.

Therefore, the "antenna port 0 of 590C_0 to antenna port 255 of 590C_255" is an antenna port capable of transmitting one transmission signal included in the transmission signal group. The "antenna port 0 of 590C_0 to antenna port 255 of 590C_255" is an antenna port for the first antenna module.

Second selector 502C receives control signal 192A, and selects the antenna port based on information on the antenna port to be used included in control signal 192A.

Then, second selector 502C transmits the transmission signal included in transmission signal group #w of 112A_2_w by using the selected antenna port.

For example, in a case where antenna port 256 of 590C_256 is selected as the antenna port that transmits the transmission signal included in the transmission signal group, second selector 502C outputs the transmission signal included in any of the transmission signal groups #w of 112A_2_w as a signal 521C_2_256, and signal 521C_2_256 is output as radio waves from antenna port 256 of 590C_256. Antenna port 256 of 590C_256 may receive as input control signal 192A, and antenna port 256 of 590C_256 may perform beam forming (directivity control) based on control signal 192A.

Therefore, in a case where the antenna port q of 590C_q is selected as the antenna port that transmits the transmission signal included in the transmission signal group, second selector 502C outputs the transmission signal included in any of the transmission signal groups #w of 112A_2_w as a signal 521C_2_q, and signal 521C_2_q is output as radio waves from the antenna port q of 590C_q. The antenna port q of 590C_q may receive as input control signal 192A, and the antenna port q of 590C_q may perform beam forming (directivity control) based on control signal 192A. Here, q can be represented by an integer of 256 or greater and 511 or less.

Therefore, the "antenna port 256 of 590C_256 to antenna port 511 of 590C_511" is an antenna port capable of transmitting one transmission signal included in the transmission signal group. The "antenna port 256 of 590C_256 to antenna port 511 of 590C_511" is an antenna port for the second antenna module.

An operation example related to FIG. 5C will be described. For example, as illustrated in FIG. 5D1, first selector 501C receives control signal 192A, transmission signal group 1 of 112A_1_1, and transmission signal group 2 of 112A_1_2, and determines to transmit transmission signal group 1 of 112A _1_1 by using the "antenna port 30 of 590C_30, antenna port 31 of 590C_31, antenna port 32 of 590C_32, and antenna port 33 of 590C_33" and to transmit transmission signal group 2 of 112A_1_2 by using the "antenna port 40 of 590C_40, antenna port 3 of 590C_3, antenna port 60 of 590C_60, and antenna port 157 of 590C_157" based on the information on the antenna port to be used included in control signal 192A, and outputs transmission signal group 1 of 112A_1_1 as "signal 521C_1_30, signal 521C_1_31, signal 521C_1_32, and signal 521C_1_33" and transmission signal group 2 of 112A_1_2 as "signal 521C_1_40, signal 521C_1_3, signal 521C_1_60, and signal 521C_1_157". That is, transmission signal group 1 of 112A_1_1 includes four transmission signals, and transmission signal group 2 of 112A_1_2 includes four transmission signals.

Then, signal 521C_1_30 is output as radio waves from antenna port 30 of 590C_30, signal 521C_1_31 is output as radio waves from antenna port 31 of 590C_31, signal 521C_1_32 is output as radio waves from antenna port 32 of 590C_32, and signal 521C_1_33 is output as radio waves from antenna port 33 of 590C_33.

Further, signal 521C_1_40 is output as radio waves from antenna port 40 of 590C_40, signal 521C_1_3 is output as radio waves from antenna port 3 of 590C_3, signal 521C_1_60 is output as radio waves from antenna port 60 of 590C_60, and signal 521C_1_157 is output as radio waves from antenna port 157 of 590C_157.

As illustrated in FIG. 5D1, second selector 502C receives control signal 192A, transmission signal group 1 of 112A_2_1, and transmission signal group 2 of 112A_2_2, and determines to transmit transmission signal group 1 of 112A_2_1 by using the "antenna port 256 of 590C_256 and antenna port 500 of 590C_500" and to transmit transmission signal group 2 of 112A_2_2 by using the "antenna port 298 of 590C_298 and antenna port 312 of 590C_312" based on the information on the antenna port to be used included in control signal 192A, and outputs transmission signal group 1 of 112A_2_1 as "signal 521C_2_256 and signal 521C_2_500" and transmission signal group 2 of 112A_2_2 as "signal 521C_2_298 and signal 521C_2_312". That is, transmission signal group 1 of 112A_2_1 includes two transmission signals, and transmission signal group 2 of 112A_2_2 includes two transmission signals. Then, signal 521C_2_256 is output as radio waves from antenna port 256 of 590C_256, and signal 521C_2_500 is output as radio waves from antenna port 500 of 590C_500. Further, signal 521C_2_298 is output as radio waves from antenna port 298 of 590C_298, and signal 521C_2_312 is output as radio waves from antenna port 312 of 590C_500.

In this way, a plurality of transmission signal groups for the first antenna module may be transmitted by using a plurality of antenna ports. Further, a plurality of transmission signal groups for the second antenna module may be transmitted by using a plurality of antenna ports.

An operation example related to FIG. 5C will be described. For example, as illustrated in FIG. 5D2, first selector 501C receives control signal 192A, transmission signal group 1 of 112A_1_1, and transmission signal group 2 of 112A_1_2, and determines to transmit transmission signal group 1 of 112A_1_1 by using the "antenna port 5 of 590C_5, antenna port 7 of 590C_7, antenna port 10 of 590C_10, antenna port 14 of 590C_14, antenna port 20 of 590C_20, antenna port 25 of 590C_25, antenna port 41 of 590C_41, and the antenna port 87 of 590C_87" and to transmit transmission signal group 2 of 112A_1_2 by using the "antenna port 128 of 590C_128, antenna port 140 of 590C_140, antenna port 179 of 590C_179, and antenna port 216 of 590C_216" based on the information on the antenna port to be used included in control signal 192A, and outputs transmission signal group 1 of 112A_1_1 as "signal 521C_1_5, signal 521C_1_7, signal 521C_1_10, signal 521C_1_14, signal 521C_1_20, signal 521C_1_25, signal 521C_1_41, and signal 521C_1_87" and transmission signal group 2 of 112A_1_2 as "signal 521C_1_128, signal 521C_1_140, signal 521C_1_179, and signal 521C_1_216". That is, transmission signal group 1 of 112A_1_1 includes eight transmission signals, and transmission signal group 2 of 112A_1_2 includes four transmission signals.

Then, signal 521C_1_5 is output as radio waves from antenna port 5 of 590C_5, signal 521C_1_7 is output as radio waves from antenna port 7 of 590C_7, signal 521C_1_10 is output as radio waves from antenna port 10 of 590C_10, signal 521C_1_14 is output as radio waves from antenna port 14 of 590C_14, signal 521C_1_20 is output as radio waves from antenna port 20 of 590C_20, signal 521C_1_25 is output as radio waves from antenna port 25 of 590C_25, signal 521C_1_41 is output as radio waves from antenna port 41 of 590C_41, and signal 521C_1_87 is output as radio waves from the antenna port 87 of 590C_87.

Further, signal 521C_1_128 is output as radio waves from antenna port 128 of 590C_128, signal 521C_1_140 is output as radio waves from antenna port 140 of 590C_140, signal 521C_1_179 is output as radio waves from antenna port 179 of 590C_179, and signal 521C_1_216 is output as radio waves from antenna port 216 of 590C_216.

As illustrated in FIG. 5D2, second selector 502C receives control signal 192A, transmission signal group 1 of 112A_2_1, and transmission signal group 2 of 112A_2_2, and determines to transmit transmission signal group 1 of 112A_2_1 by using the "antenna port 258 of 590C_258 and antenna port 302 of 590C_302" and to transmit transmission signal group 2 of 112A_2_2 by using the "antenna port 457 of 590C_457" based on the information on the antenna port to be used included in control signal 192A, and outputs transmission signal group 1 of 112A_2_1 as "signal 521C_2_258 and signal 521C_2_302" and transmission signal group 2 of 112A_2_2 as "signal 521C_2_457". That is, transmission signal group 1 of 112A_2_1 includes two transmission signals, and transmission signal group 2 of 112A_2_2 includes one transmission signal.

Then, signal 521C_2_258 is output as radio waves from antenna port 258 of 590C_258, and signal 521C_2_302 is output as radio waves from antenna port 302 of 590C_302.

Further, signal 521C_2_457 is output as radio waves from antenna port 457 of 590C_457.

In this way, a plurality of transmission signal groups for the first antenna module may be transmitted by using a plurality of antenna ports. In this case, the number of ports of the antenna to be used may be different depending on the transmission signal group.

Further, a plurality of transmission signal groups for the second antenna module may be transmitted by using a plurality of antenna ports. In this case, the number of ports of the antenna to be used may be different depending on the transmission signal group.

An operation example related to FIG. 5C will be described. For example, as illustrated in FIG. 5D3, first selector 501C receives control signal 192A and transmission signal group 1 of 112A_1_1, and determines to transmit transmission signal group 1 of 112A_1_1 by using the "antenna port 30 of 590C_30, antenna port 68 of 590C_68, antenna port 111 of 590C_111, and antenna port 239 of 590C_239" based on the information on the antenna port to be used included in control signal 192A, and outputs transmission signal group 1 of 112A_1_1 as "signal 521C_1_30, signal 521C_1_68, signal 521C_1_111, and signal 521C_1_239". That is, transmission signal group 1 of 112A_1_1 includes four transmission signals.

Then, signal 521C_1_30 is output as radio waves from antenna port 30 of 590C_30, signal 521C_1_68 is output as radio waves from antenna port 68 of 590C_68, signal 521C_1_111 is output as radio waves from antenna port 111 of 590C_111, and signal 521C_1_239 is output as radio waves from antenna port 239 of 590C_239.

Further, as illustrated in FIG. 5D3, second selector 502C receives control signal 192A, transmission signal group 1 of 112A_2_1, and transmission signal group 2 of 112A_2_2, and determines to transmit transmission signal group 1 of 112A_2_1 by using the "antenna port 278 of 590C_278 and antenna port 279 of 590C_279" and to transmit transmission signal group 2 of 112A_2_2 by using the "antenna port 356 of 590C_356 and antenna port 497 of 590C_497" based on the information on the antenna port to be used included in control signal 192A, and outputs transmission signal group 1 of 112A_2_1 as "signal 521C_2_278 and signal 521C_2_279" and transmission signal group 2 of 112A_2_2 as "signal 521C_2_356 and signal 521C_2_497". That is, transmission signal group 1 of 112A_2_1 includes two transmission signals, and transmission signal group 2 of 112A_2_2 includes two transmission signals.

Then, signal 521C_2_278 is output as radio waves from antenna port 278 of 590C_278, and signal 521C_2_279 is output as radio waves from antenna port 279 of 590C_279.

Further, signal 521C_2_356 is output as radio waves from antenna port 356 of 590C_356, and signal 521C_2_497 is output as radio waves from antenna port 497 of 590C_497.

In this way, one transmission signal group for the first antenna module may be transmitted by using a plurality of antenna ports. Further, a plurality of transmission signal groups for the second antenna module may be transmitted by using a plurality of antenna ports.

An operation example related to FIG. 5C will be described. For example, as illustrated in FIG. 5D4, first selector 501C receives control signal 192A, transmission signal group 1 of 112A_1_1, and transmission signal group 2 of 112A_1_2, and determines to transmit transmission signal group 1 of 112A_1_1 by using "antenna port 2 of 590C_2, antenna port 3 of 590C_3, antenna port 4 of 590C_4, and antenna port 5 of 590C_5" and to transmit transmission signal group 2 of 112A_1_2 by using "antenna port 123 of 590C_123, antenna port 124 of 590C_124, antenna port 125 of 590C_125, and antenna port 126 of 590C_126" based on the information on the antenna port to be used included in control signal 192A, and outputs transmission signal group 1 of 112A_1_1 as "signal 521C_1_2, signal 521C_1_3, signal 521C_1_4, and signal 521C_1_5" and transmission signal group 2 of 112A_1_2 as "signal 521C_1_123, signal 521C_1_124, signal 521C_1_125, and signal 521C_1_126". That is, transmission signal group 1 of 112A_1_1 includes two transmission signals, and transmission signal group 2 of 112A_1_2 includes two transmission signals.

Then, signal 521C_1_2 is output as radio waves from antenna port 2 of 590C_2, signal 521C_1_3 is output as radio waves from antenna port 3 of 590C_3, signal 521C_1_4 is output as radio waves from antenna port 4 of 590C_4, and signal 521C_1_5 is output as radio waves from antenna port 5 of 590C_5.

Further, signal 521C_1_123 is output as radio waves from antenna port 123 of 590C_123, signal 521C_1_124 is output as radio waves from antenna port 124 of 590C_124, signal 521C_1_125 is output as radio waves from antenna port 125 of 590C_125, and signal 521C_1_126 is output as radio waves from antenna port 126 of 590C_126.

As illustrated in FIG. 5D4, second selector 502C receives control signal 192A and transmission signal group 1 of 112A_2_1, and determines to transmit transmission signal group 1 of 112A_2_1 by using "antenna port 478 of 590C_478 and antenna port 501 of 590C_501" based on the information on the antenna port to be used included in control signal 192A, and outputs transmission signal group 1 of 112A_2_1 as "signal 521C_2_478 and signal 521C_2_501". That is, transmission signal group 1 of 112A_2_1 includes two transmission signals.

Then, signal 521C_2_478 is output as radio waves from antenna port 478 of 590C_478, and signal 521C_2_501 is output as radio waves from antenna port 501 of 590C_501.

In this way, a plurality of transmission signal groups for the first antenna module may be transmitted by using a plurality of antenna ports. Further, one transmission signal group for the second antenna module may be transmitted by using a plurality of antenna ports.

FIG. 5E is a diagram illustrating an example of a configuration around an antenna port in a case where an antenna port is provided instead of the "first antenna module v of 106A_1_v" and the "second antenna module #w of 106A_2_w" in the base station having the configuration of FIG. 1A1 and FIG. 1B. In FIG. 5E, the same reference numerals are assigned to components that operate in the same manner as in FIG. 1A and FIG. 1B, and a part of the description will be omitted for portions that have already been described.

Selector 530E receives control signal 192A, and selects the antenna port based on information on the antenna port to be used included in control signal 192A.

Then, selector 530E transmits transmission signal group v of 112A_1_v and transmission signal group #w of 112A_2_w by using the selected antenna port.

For example, in a case where antenna port 0 of 590E_0 is selected as the antenna port that transmits the transmission signal group, selector 530E outputs "any of the transmission signal groups v of 112A_1_v" or "any of the transmission signal groups #w of 112A_2_w" as signal group 531E_0, and signal group 531E_0 is output as radio waves from antenna port 0 of 590E_0. Antenna port 0 of 590E_0 may input control signal 192A, and antenna port 0 of 590E_0 may perform beam forming (directivity control) based on control signal 192A.

Therefore, in a case where the antenna port p of 590E_p is selected as the antenna port that transmits the transmission signal group, selector 530E outputs "any of the transmission signal groups v of 112A_1_v" or "any of the transmission signal groups "w of 112A_2_w" as signal group 531E_p, and signal group 531E_p is output as radio waves from the antenna port p of 590E_p. The antenna port p of 590E_p may input control signal 192A, and the antenna port p of 590E_p may perform beam forming (directivity control) based on control signal 192A. Here, p can be represented by an integer of 0 or greater and 63 or less.

Therefore, the "antenna port 0 of 590E_0 to antenna port 63 of 590E_63" is an antenna port capable of transmitting one or more transmission signals. The "antenna port 0 of 590E_0 to antenna port 63 of 590E_63" is an antenna port for the first antenna module and the second antenna module.

An operation example related to FIG. 5E will be described. For example, as illustrated in FIG. 5F1, selector 530E receives control signal 192A, transmission signal group 1 of 112A_1_1, transmission signal group 2 of 112A_1_2, transmission signal group 1 of 112A_2_1, transmission signal group 2 of 112A_2_2, transmission signal group 3 of 112A_2_3, and transmission signal group 4 of 112A_2_4, and determines to transmit transmission signal group 1 of 112A_1_1 by using antenna port 63 of 590E_63, to transmit transmission signal group 2 of 112A_1_2 by using antenna port 4 of 590E_4, to transmit transmission signal group 1 of 112A_2_1 by using antenna port 3 of 590E_3, to transmit transmission signal group 2 of 112A_2_2 by using antenna port 53 of 590E_53, to transmit transmission signal group 3 of 112A_2_3 by using antenna port 23 of 590E_23, and to transmit transmission signal group 4 of 112A_2_4 by using antenna port 59 of 590E_59 based on the information on the antenna port to be used included in control signal 192A, and outputs transmission signal group 1 of 112A_1_1 as signal group 531E_63, transmission signal group 2 of 112A_1_2 as signal group 531E_4, transmission signal group 1 of 112A_2_1 as signal group 531E_3, transmission signal group 2 of 112A_2_2 as signal group 531E_53, transmission signal group 3 of 112A_2_3 as signal group 531E_23, and transmission signal group 4 of 112A_2_4 as signal group 531E_59. Then, signal group 531E_63 is output as radio waves from antenna port 63 of 590E_63, signal group 531E_4 is output as radio waves from antenna port 4 of 590E_4, signal group 531E_3 is output as radio waves from antenna port 3 of 590E_3, signal group 531E_53 is output as radio waves from antenna port 53 of 590E_53, signal group 531E_23 is output as radio waves from antenna port 23 of 590E_23, and signal group 531E_59 is output as radio waves from antenna port 59 of 590E_59.

In this way, each transmission signal group for the first antenna module may be transmitted by using one antenna port. Further, each transmission signal group for the second antenna module may be transmitted by using one antenna port.

There may be a plurality of transmission signal groups for the first antenna module, and there may be a plurality of transmission signal groups for the second antenna module.

An operation example related to FIG. 5E will be described. For example, as illustrated in FIG. 5F2, selector 530E receives control signal 192A, transmission signal group 1 of 112A_1_1, transmission signal group 1 of 112A_2_1, and transmission signal group 2 of 112A_2_2, and determines to transmit transmission signal group 1 of 112A_1_1 by using antenna port 46 of 590E_46, to transmit transmission signal group 1 of 112A_2_1 by using antenna port 0 of 590E_0, and to transmit transmission signal group 2 of 112A_2_2 by using antenna port 61 of 590E_61 based on the information on the antenna port to be used included in control signal 192A, and outputs transmission signal group 1 of 112A_1_1 as signal group 531E_46, transmission signal group 1 of 112A_2_1 as signal group 531E_0, and transmission signal group 2 of 112A_2_2 as signal group 531E_61. Then, signal group 531E_46 is output as radio waves from antenna port 46 of 590E_46, signal group 531E_0 is output as radio waves from antenna port 0 of 590E_0, and signal group 531E_61 is output as radio waves from antenna port 61 of 590E_61.

In this way, each transmission signal group for the first antenna module may be transmitted by using one antenna port. Further, each transmission signal group for the second antenna module may be transmitted by using one antenna port.

There may be one transmission signal group for the first antenna module, and there may be a plurality of transmission signal groups for the second antenna module.

An operation example related to FIG. 5E will be described. For example, as illustrated in FIG. 5F3, selector 530E receives control signal 192A, transmission signal group 1 of 112A_1_1, transmission signal group 2 of 112A_1_2, and transmission signal group 1 of 112A_2_1, and determines to transmit transmission signal group 1 of 112A_1_1 by using antenna port 37 of 590E_37, to transmit transmission signal group 2 of 112A_1_2 by using antenna port 9 of 590E_9, and to transmit transmission signal group 1 of 112A_2_1 by using antenna port 60 of 590E_60 based on the information on the antenna port to be used included in control signal 192A, and outputs transmission signal group 1 of 112A_1_1 as signal group 531E_37, transmission signal group 2 of 112A_1_2 as signal group 531E_9, and transmission signal group 1 of 112A_2_1 as signal group 531E_60. Then, signal group 531E_37 is output as radio waves from antenna port 37 of 590E_37, signal group 531E_9 is output as radio waves from antenna port 9 of 590E_9, and signal group 531E_60 is output as radio waves from antenna port 60 of 590E_60.

In this way, each transmission signal group for the first antenna module may be transmitted by using one antenna port. Further, each transmission signal group for the second antenna module may be transmitted by using one antenna port.

There may be a plurality of transmission signal groups for the first antenna module, and there may be one transmission signal group for the second antenna module.

FIG. 5G is a diagram illustrating an example of a configuration around an antenna port in a case where an antenna port is provided instead of the "first antenna module v of 106A_1_v" and the "second antenna module #w of 106A_2 w" in the base station having the configuration of FIG. 1A1 and FIG. 1B. In FIG. 5G, the same reference numerals are assigned to components that operate in the same manner as in FIG. 1A and FIG. 1B, and a part of the description will be omitted for portions that have already been described.

Selector 530G receives control signal 192A, and selects the antenna port based on information on the antenna port to be used included in control signal 192A.

Then, selector 530G transmits the transmission signal included in transmission signal group v of 112A_1_v and the transmission signal included in transmission signal group #w of 112A_2_w by using the selected antenna port.

For example, in a case where antenna port 0 of 590G_0 is selected as the antenna port that transmits the transmission signal included in the transmission signal group, selector 530G outputs "the transmission signal included in any of the transmission signal groups v of 112A_1_v" or "the transmission signal included in any of the transmission signal groups #w of 112A_2_w" as a signal 541G_0, and signal 541G_0 is output as radio waves from antenna port 0 of 590G_0. Antenna port 0 of 590G_0 may input control signal 192A, and antenna port 0 of 590G_0 may perform beam forming (directivity control) based on control signal 192A.

Therefore, in a case where the antenna port p of 590G_p is selected as the antenna port that transmits the transmission signal included in the transmission signal group, selector 530G outputs "the transmission signal included in any of the transmission signal groups v of 112A_1_v" or "the transmission signal included in any of the transmission signal groups #w of 112A_2_w" as a signal 541G_p, and signal 541G_p is output as radio waves from the antenna port p of 590G_p. The antenna port p of 590G_p may input control signal 192A, and the antenna port p of 590G_p may perform beam forming (directivity control) based on control signal 192A. Here, p can be represented by an integer of 0 or greater and 511 or less.

Therefore, the "antenna port 0 of 590G_0 to antenna port 511 of 590G_511" is an antenna port capable of transmitting one transmission signal included in the transmission signal group. The "antenna port 0 of 590G_0 to antenna port 511 of 590G_511" is an antenna port for the first antenna module and an antenna port for the second antenna module.

An operation example related to FIG. 5G will be described. For example, as illustrated in FIG. 5H1, selector 530G receives control signal 192A, transmission signal group 1 of 112A_1_1, transmission signal group 2 of 112A_1_2, transmission signal group 1 of 112A_2_1, and transmission signal group 2 of 112A_2_2, and determines to transmit transmission signal group 1 of 112A_1_1 by using the "antenna port 30 of 590G_30, antenna port 510 of 590G_510, antenna port 259 of 590G_259, and antenna port 9 of 590G_9", to transmit transmission signal group 2 of 112A_1_2 by using the "antenna port 92 of 590G_92, antenna port 360 of 590G_360, antenna port 503 of 590G_503, and antenna port 157 of 590G_157", to transmit transmission signal group 1 of 112A_2_1 by using "antenna port 4 of 590G_4 and antenna port 500 of 590G_500", and to transmit transmission signal group 2 of 112A_2_2 by using the "antenna port 16 of 590G_16 and antenna port 312 of 590G_312" based on the information on the antenna port to be used included in control signal 192A, and outputs transmission signal group 1 of 112A_1_1 as "signal 541G_30, signal 541G_510, signal 541G_259, and signal 541G_9", transmission signal group 2 of 112A_1_2 as "signal 541G_92, signal 541G_360, signal 541G_503, and signal 541G_157", transmission signal group 1 of 112A_2_1 as "signal 541G_4 and signal 541G_500", and transmission signal group 2 of 112A_2_2 as "signal 541G_16 and signal 541G_312". That is, transmission signal group 1 of 112A_1_1 includes four transmission signals, transmission signal group 2 of 112A_1_2 includes four transmission signals, transmission signal group 1 of 112A_2_1 includes two transmission signals, and transmission signal group 2 of 112A_2_2 includes two transmission signals.

Then, signal 541G_30 is output as radio waves from antenna port 30 of 590G_30, signal 541G_510 is output as radio waves from antenna port 510 of 590G_510, signal 541G_259 is output as radio waves from antenna port 259 of 590G_259, signal 541G_9 is output as radio waves from antenna port 9 of 590G_9, signal 541G_92 is output as radio waves from antenna port 92 of 590G_92, signal 541G_360 is output as radio waves from antenna port 360 of 590G_360, signal 541G_503 is output as radio waves from antenna port 503 of 590G_503, signal 541G_157 is output as radio waves from antenna port 157 of 590G_157, signal 541G_4 is output as radio waves from antenna port 4 of 590G_4, signal 541G_500 is output as radio waves from antenna port 500 of 590G_500, signal 541G_16 is output as radio waves from antenna port 16 of 590G_16, and signal 541G_312 is output as radio waves from antenna port 312 of 590G_312.

In this way, a plurality of transmission signal groups for the first antenna module may be transmitted by using a plurality of antenna ports. Further, a plurality of transmission signal groups for the second antenna module may be transmitted by using a plurality of antenna ports.

An operation example related to FIG. 5G will be described. For example, as illustrated in FIG. 5H2, selector 530G receives control signal 192A, transmission signal group 1 of 112A_1_1, transmission signal group 2 of 112A_1_2, transmission signal group 1 of 112A_2_1, and transmission signal group 2 of 112A_2_2, and determines to transmit transmission signal group 1 of 112A_1_1 by using "antenna port 5 of 590G_5, antenna port 301 of 590G_301, antenna port 409 of 590G_409, antenna port 14 of 590G_14, antenna port 20 of 590G_20, antenna port 367 of 590G_367, antenna port 41 of 590G_41, and antenna port 87 of 590G_87", to transmit transmission signal group 2 of 112A_1_2 by using "antenna port 128 of 590G_128, antenna port 140 of 590G_140, antenna port 494 of 590G_494, and antenna port 216 of 590G_216", to transmit transmission signal group 1 of 112A_2_1 by using "antenna port 258 of 590G_258 and antenna port 302 of 590G_302", and to transmit transmission signal group 2 of 112A_2_2 by using "antenna port 39 of 590G_39" based on the information on the antenna port to be used included in control signal 192A, and outputs transmission signal group 1 of 112A_1_1 as "signal 541G_5, signal 541G_301, signal 541G_409, signal 541G_14, signal 541G_20, signal 541G_367, signal 541G_41, and signal 541G_87", transmission signal group 2 of 112A_1_2 as "signal 541G_128, signal 541G_140, signal 541G_494, and signal 541G_216", transmission signal group 1 of 112A_2_1 as "signal 541G_258 and signal 541G_302", and transmission signal group 2 of 112A_2_2 as "signal 541G_39".

That is, transmission signal group 1 of 112A_1_1 includes eight transmission signals, transmission signal group 2 of 112A_1_2 includes four transmission signals, transmission signal group 1 of 112A_2_1 includes two transmission signals, and transmission signal group 2 of 112A_2_2 includes one transmission signal.

Then, signal 541G_5 is output as radio waves from antenna port 5 of 590G_5, signal 541G_301 is output as radio waves from antenna port 301 of 590G_301, signal 541G_409 is output as radio waves from antenna port 409 of 590G_409, signal 541G_14 is output as radio waves from antenna port 14 of 590G_14, signal 541G_20 is output as radio waves from antenna port 20 of 590G_20, signal 541G_367 is output as radio waves from antenna port 367 of 590G_367, signal 541G_41 is output as radio waves from antenna port 41 of 590G_41, signal 541G_87 is output as radio waves from antenna port 87 of 590G_87, signal 541G_128 is output as radio waves from antenna port 128 of 590G_128, signal 541G_140 is output as radio waves from antenna port 140 of 590G_140, signal 541G_494 is output as radio waves from antenna port 494 of 590G_494, signal 541G_216 is output as radio waves from antenna port 216 of 590G_216, signal 541G_258 is output as radio waves from antenna port 258 of 590G_258, signal 541G_302 is output as radio waves from antenna port 302 of 590G_302, and signal 541G_39 is output as radio waves from antenna port 39 of 590G_39.

In this way, a plurality of transmission signal groups for the first antenna module may be transmitted by using a plurality of antenna ports. In this case, the number of ports of the antenna to be used may be different depending on the transmission signal group.

Further, a plurality of transmission signal groups for the second antenna module may be transmitted by using a plurality of antenna ports. In this case, the number of ports of the antenna to be used may be different depending on the transmission signal group.

An operation example related to FIG. 5G will be described. For example, as illustrated in FIG. 5H3, selector 530G receives control signal 192A, transmission signal group 1 of 112A_1_1, transmission signal group 1 of 112A_2_1, and transmission signal group 2 of 112A_2_2, and determines to transmit transmission signal group 1 of 112A_1_1 by using "antenna port 30 of 590G_30, antenna port 68 of 590G_68, antenna port 470 of 590G_470, and antenna port 239 of 590G_239", to transmit transmission signal group 1 of 112A_2_1 by using "antenna port 278 of 590G_278 and antenna port 1 of 590G_1", and to transmit transmission signal group 2 of 112A_2_2 by using "antenna port 356 of 590G_356 and antenna port 497 of 590G_497" based on the information on the antenna port to be used included in control signal 192A, and outputs transmission signal group 1 of 112A_1_1 as "signal 541G_30, signal 541G_68, signal 541G_470, and signal 541G_239", transmission signal group 1 of 112A_2_1 as "signal 541G_278 and signal 541G_1", and transmission signal group 2 of 112A_2_2 as "signal 541G_356 and signal 541G_497". That is, transmission signal group 1 of 112A_1_1 includes four transmission signals, transmission signal group 1 of 112A_2_1 includes two transmission signals, and transmission signal group 2 of 112A_2_2 includes two transmission signals.

Then, signal 541G_30 is output as radio waves from antenna port 30 of 590G_30, signal 541G_68 is output as radio waves from antenna port 68 of 590G_68, signal 541G_470 is output as radio waves from antenna port 470 of 590G_470, signal 541G_239 is output as radio waves from antenna port 239 of 590G_239, signal 541G_278 is output as radio waves from antenna port 278 of 590G_278, signal 541G_1 is output as radio waves from antenna port 1 of 590G_1, signal 541G_356 is output as radio waves from antenna port 356 of 590G_356, and signal 541G_497 is output as radio waves from antenna port 497 of 590G_497.

In this way, one transmission signal group for the first antenna module may be transmitted by using a plurality of antenna ports. Further, a plurality of transmission signal groups for the second antenna module may be transmitted by using a plurality of antenna ports.

An operation example related to FIG. 5G will be described. For example, as illustrated in FIG. 5H4, selector 530G receives control signal 192A, transmission signal group 1 of 112A_1_1, transmission signal group 2 of 112A_1_2, and transmission signal group 1 of 112A_2_1, and determines to transmit transmission signal group 1 of 112A_1_1 by using "antenna port 2 of 590G_2, antenna port 3 of 590G_3, antenna port 298 of 590G_298, and antenna port 5 of 590G_5", to transmit transmission signal group 2 of 112A_1_2 by using "antenna port 25 of 590G_25, antenna port 9 of 590G_9, antenna port 125 of 590G_125, and antenna port 473 of 590G_473", and to transmit transmission signal group 1 of 112A_2_1 by using "antenna port 22 of 590G_22, antenna port 23 of 590G_23" based on the information on the antenna port to be used included in control signal 192A, and outputs transmission signal group 1 of 112A_1_1 as " signal 541G_2, signal 541G_3, signal 541G_298, signal 541G_5," transmission signal group 2 of 112A_1_2 as "signal 541G_25, signal 541G_9, signal 541G_125, signal 541G_473," and transmission signal group 1 of 112A_2_1 as "signal 541G_22, signal 541G_23." That is, transmission signal group 1 of 112A_1_1 includes four transmission signals, transmission signal group 2 of 112A_1_2 includes four transmission signals, and transmission signal group 1 of 112A_2_1 includes two transmission signals.

Then, signal 541G_2 is output as radio waves from antenna port 2 of 590G_2, signal 541G_3 is output as radio waves from antenna port 3 of 590G_3, signal 541G_298 is output as radio waves from antenna port 298 of 590G_298, signal 541G_5 is output as radio waves from antenna port 5 of 590G_5, signal 541G_25 is output as radio waves from antenna port 25 of 590G_25, signal 541G_9 is output as radio waves from antenna port 9 of 590G_9, signal 541G_125 is output as radio waves from antenna port 125 of 590G_125, signal 541G_473 is output as radio waves from antenna port 473 of 590G_473, signal 541G_22 is output as radio waves from antenna port 22 of 590G_22, and signal 541G_23 is output as radio waves from antenna port 23 of 590G_23.

In this way, a plurality of transmission signal groups for the first antenna module may be transmitted by using a plurality of antenna ports. Further, one transmission signal group for the second antenna module may be transmitted by using a plurality of antenna ports.

With the above-described method of using the antenna port as an example, the base station transmits the transmission signal group for the first antenna module and the transmission signal group for the second antenna module, so that in the terminal that is the communication counterpart of the base station, an effect of improving the reception quality of the data can be obtained, and as a result, an effect of improving the transmission efficiency of the data of the system can be obtained.

As the above-described variation, the number of "transmission signal groups for the first antenna module" transmitted by the base station may be changed depending on a communication situation, a propagation situation of the radio wave, a terminal that is a destination, and the like. Similarly, the number of "transmission signal groups for the second antenna module" transmitted by the base station may be changed depending on the communication situation, the propagation situation of the radio wave, the terminal that is the destination, and the like.

Further, in conjunction with this, the number of antenna ports used for the "transmission signal groups for the first antenna module" transmitted by the base station may be changed depending on the communication situation, the propagation situation of the radio wave, the terminal that is the destination, and the like. Similarly, the number of antenna ports used for the "transmission signal groups for the second antenna module" transmitted by the base station may be changed depending on the communication situation, the propagation situation of the radio wave, the terminal that is the destination, and the like.

In the present embodiment and the present specification, the example has been described using the term "antenna module", but the "antenna module" may be replaced with another term (e.g., an antenna, an antenna group, an antenna unit, an antenna array, and the like. However, these examples are not limited thereto, and the same applies to the case where the examples are implemented. In this case, the conditions, the constraints, and the like described in the present embodiment and the present specification will be applied.

Using FIGS. 5A, 5C, 5E, and 5G, the base station, the communication apparatus such as a TRP ((transmission/reception (Tx/Rx) point (transmitter/receiver (TX/RX) point)), a relay, and a terminal, which includes the antenna port corresponding to the antenna module, has been described. Using FIGS. 5A, 5C, 5E, and 5G, the communication apparatus including the "antenna port corresponding to the antenna module" may include an antenna port other than the "antenna port corresponding to the antenna module". In this case, in a case where the communication apparatus determines to "transmit the transmission signal by using the antenna module", the "antenna port corresponding to the antenna module" described in FIGS. 5A, 5C, 5E, and 5G or the like is designated to transmit the transmission signal. In a case of transmitting the transmission signal by using another transmission method, the communication apparatus may designate the antenna port other than the "antenna port corresponding to the antenna module" to transmit the transmission signal.

In the present embodiment, the base station has been described, but the base station may be implemented as any of a "TRP (Tx(Transmission)/Rx (Reception) point) (Tx (Transmitter)/Rx (Receiver) point), a relay, a terminal, an access point, a broadcasting station, an e Node B (eNB), a g Node B (gNB) node, a server, a satellite, or the like," and the same can be performed in this case. Therefore, the base station of the present embodiment may be referred to as a "base station, TRP, relay, terminal, access point, broadcasting station, eNB, gNB, node, server, satellite, or the like". However, the present disclosure is not limited thereto.

Further, in the present embodiment, the terminal has been described, but the terminal may be implemented as any of a "mobile phone, smartphone, tablet, notebook computer, computer, personal computer, home appliance (household electric machine), an apparatus in a factory, a communication apparatus/broadcasting apparatus such as an Internet of Things (IoT) apparatus, or an apparatus capable of moving, such as a "car (e.g., an electric vehicle or the like), a bicycle (e.g., an electric bicycle, an electrically assisted bicycle, or the like), a motorcycle, a ship, a satellite, an aircraft, a drone, a robot, or the like" as an example, and the same can be performed in this case. Therefore, the terminal of the present embodiment may be referred to as a "mobile phone, smartphone, tablet, notebook computer, computer, personal computer, home appliance (household electric machine), an apparatus in a factory, a communication apparatus/broadcasting apparatus such as an IoT apparatus, or an apparatus capable of moving, such as the above-described apparatus as an example". However, the present disclosure is not limited thereto.

Therefore, the terminal may use the transmission method using the antenna module described in the present embodiment, or the terminal may have the configuration of the apparatus described in the present embodiment.

The "first antenna module v of 106A_1_v and second antenna module #w of 106A_2_w" that are the transmission antennas in FIG. 1A1 and 1B may be used as the reception antenna. In this case, the modulation signal transmitted by the terminal that is the communication counterpart may be received.

Further, the antenna ports illustrated in FIGS. 5A, 5C, 5E, and 5G may be used as the reception antennas. In this case, the modulation signal transmitted by the terminal that is the communication counterpart may be received.

The method of configuring the apparatus such as the base station and the terminal described in the present embodiment, and the communication method (e.g., the configuration of the antenna module, the number of the antenna modules, the configuration of the antenna port, the number of the antenna ports, the precoding method, the frame configuration, the number of the transmission signals, the number of the received signals, and the like) to be implemented are considered as the examples described in the present specification, but the present invention is not limited to these examples.

Further, the communication apparatus may transmit the modulation signal by using the antenna port, but in this case, a unique signal is assigned as a demodulation reference signal (DMRS) or the like, which is a reference signal (RS) for each antenna port in order to notify the communication counterpart of the number of the antenna port used (in order for the communication counterpart to identify the antenna port used for transmitting the modulation signal).

Then, the communication apparatus transmits the (unique) RS corresponding to the antenna port used for transmitting the modulation signal together with the modulation signal.

In this case, the unique signal may be assigned to the RS such that it is made possible to identify whether the antenna module is used, whether the first antenna module is used, and whether the second antenna module is used by the RS.

For example, the unique signal in a case of transmission using the antenna module may be present, and the communication apparatus transmits the signal including the unique signal in a case of transmission using the antenna module.

The unique signal in a case of transmission using the first antenna module may be present, and the communication apparatus transmits the signal including the unique signal in a case of transmission using the antenna module.

The unique signal in a case of transmission using the second antenna module may be present. The communication apparatus transmits the signal including the unique signal in a case of transmission using the antenna module.

(Embodiment 2)

In Embodiment 2, a variation in which the base station described in Embodiment 1 is applied to a transmission/reception (Tx/Rx) point (transmitter/receiver (TX/RX) point) will be described.

FIGS. 6A1, 6A2, and 6A3 illustrate an example of a state of the TRPs and the terminal. TRP #1_1 of 601_1 transmits the transmission signal group by using the first antenna module. Further, TRP #1_1 of 601_1 may transmit the transmission signal group by using the second antenna module. The details of the operation will be described later.

TRP #2_1 of 602_1 transmits the transmission signal group by using the second antenna module. The details of the operation will be described later.

Therefore, TRP_#2_i of 602_i transmits the transmission signal group by using the second antenna module. Here, i is an integer of 1 or greater and Y or less, and Y is an integer of 1 or greater or an integer of 2 or greater. The details of the operation will be described later.

"TRP #1_1 of 601_1" and "TRP #2_1 of 602_1, TRP #2_2 of 602_2, ..., TRP #2_Y of 602_Y" may be communicable by radio as illustrated in FIG. 6A1.

"TRP #1_1 of 601_1" and "TRP #2_1 of 602_1, TRP #2_2 of 602_2, ..., TRP #2_Y of 602_Y" may be communicable by radio as illustrated in FIG. 6A2.

"TRP #1_1 of 601_1" and "TRP #2_1 of 602_1, TRP #2_2 of 602_2, ..., TRP #2_Y of 602_Y" may be communicable via apparatus 603 as illustrated in FIG. 6A3.

FIGS. 6B1, 6B2, and 6B3 illustrate an example of a state of TRPs and a terminal. TRP #1_1 of 601_1 transmits the transmission signal group by using the first antenna module. Further, TRP #1_1 of 601_1 may transmit the transmission signal group by using the second antenna module. The details of the operation will be described later.

Therefore, TRP #1_k of 601_k transmits the transmission signal group by using the first antenna module. Further, TRP #1_k of 601_k may transmit the transmission signal group by using the second antenna module. Here, k is an integer of 1 or greater and X or less, and X is an integer of 1 or greater or an integer of 2 or greater. The details of the operation will be described later.

TRP #2_1 of 602_1 transmits the transmission signal group by using the second antenna module. The details of the operation will be described later.

Therefore, TRP #2_i of 602_i transmits the transmission signal group by using the second antenna module. Here, i is an integer of 1 or greater and Y or less, and Y is an integer of 1 or greater or an integer of 2 or greater. The details of the operation will be described later.

"TRP #1_1 of 601_1, TRP #1_2 of 601_2, ..., TRP #1_X of 601_X" and "TRP #2_1 of 602_1, TRP #2_2 of 602_2, ..., TRP #2_Y of 602_Y" may be communicable by radio as illustrated in FIG. 6B1.

"TRP #1_1 of 601_1, TRP #1_2 of 601_2, ..., TRP #1_X of 601_X" and "TRP #2_1 of 602_1, TRP #2_2 of 602_2, ..., TRP #2_Y of 602_Y" may be communicable by radio as illustrated in FIG. 6B2.

"TRP #1_1 of 601_1, TRP #1_2 of 601_2, ..., TRP #1_X of 601 X" and "TRP #2_1 of 602_1, TRP #2_2 of 602_2, ..., TRP #2_Y of 602_Y" may be communicable via apparatus 603 as illustrated in FIG. 6B3.

Next, a configuration example and an operation example of TRP #1_k of 601_k and TRP #2_i of 602_i in "FIGS. 6A1, 6A2, and 6A3" and "FIGS. 6B1, 6B2, and 6B3" will be described.

TRP #1_k of 601_k may have, for example, the configuration of "FIG. 1A1", the configuration of "FIG. 1B", the configuration of "FIG. 1A1 with FIG. 1A2 applied", and the configuration of "FIG. 1B with FIG. 1A2 applied". As described in Embodiment 1, TRP #1_k of 601_k may include the antenna port as the first antenna module and the second antenna module. Since the operations of FIGS. 1A1, 1B, and 1A2 have already been described, the description of the details of the operations will be partially omitted.

In a case where TRP #1_k of 601_k has the configuration of "FIG. 1A1", the configuration of "FIG. 1B", the configuration of "FIG. 1A1 with FIG. 1A2 applied", and the configuration of "FIG. 1B with FIG. 1A2 applied", modulation signal $\flat u$ of 103A_u is transmitted by using first antenna module v of 106A_1_v.

As described above, TRP #1_k of 601_k may transmit modulation signal $\flat u$ of 103A_u by using second antenna module #w of 106A_2_w.

Since the details of the operation have been described in Embodiment 1, the description will be omitted.

TRP #2_i of 602_i may have, for example, the configuration of "FIG. 1A1", the configuration of "FIG. 1B", the configuration of "FIG. 1A1 with FIG. 1A2 applied", and the configuration of "FIG. 1B with FIG. 1A2 applied". As described in Embodiment 1, TRP #2_i of 602_i may include the antenna port as the first antenna module and the second antenna module. Since the operations of FIG. 1A1, 1B, and 1A2 have already been described, the description of the details of the operations will be partially omitted.

In a case where TRP #2_i of 602_i has the configuration of "FIG. 1A1", the configuration of "FIG. 1B", the configuration of "FIG. 1A1 with FIG. 1A2 applied", and the configuration of "FIG. 1B with FIG. 1A2 applied", modulation signal $\flat u$ of 103A_u is transmitted by using second antenna module #w of 106A_2_w.

Since the details of the operation have been described in Embodiment 1, the description will be omitted.

The "modulation signal $\flat 1$ of 103A_1 transmitted by TRP #1_k of 601_k" and the "modulation signal $\flat 1$ of 103A_1 transmitted by TRP #2_i of 602_i" are the same signal. Therefore, the "modulation signal $\flat f$ of 103A_f transmitted by TRP #1_k of 601_k" and the "modulation signal $\flat f$ of 103A_f transmitted by TRP #2_i of 602_i" are the same signal (f is an integer of 1 or greater and K or less).

It is assumed that the "modulation signal $\flat u$ of 103A_u" transmitted by TRP #1_k of 601_k by using first antenna module v of 106A_1_v is present at frequency AA1 and time A1 as illustrated in FIG. 4. (Here, in a case where TRP #1_k of 601_k transmits "modulation signal $\flat u$ of 103A_u" by using the second antenna module of 106A_2_w, it is assumed that the "modulation signal $\flat u$ of 103A_u" is present at frequency AA1 and time A1 as illustrated in FIG. 4.)

Similarly, it is assumed that the "modulated signal $\flat u$ of 103A_u" transmitted by TRP#2_i of 602_i by using second antenna module #w of 106A_2_w is also present at frequency AA1 and time A1.

Therefore, transmission signal group v of 112A_1_v transmitted by TRP#1_k of 601_k using first antenna module v of 106A_1_v, and transmission signal group #w of 112A_2_w transmitted by TRP#2_i of 602_i using second antenna module #w of 106A_2_w are present at frequency AA1 and time A1 (the same (common) frequency, the same (common) time). (Here, in a case where TRP #1_k of 601_k transmits transmission signal group #w of 112A_2_w by using the second antenna module of 106A_2_w, transmission signal group #w of 112A_2_w is present at frequency AA1 and time A1.)

In this way, in the terminal that is the communication counterpart of the base station, an effect of improving the reception quality of the data can be obtained, and as a result, an effect of improving the transmission efficiency of the data of the system can be obtained.

Note that TRP #2_i of 602_i having the configuration of "FIG. 1A1", the configuration of "FIG. 1B", the configuration of "FIG. 1A1 with FIG. 1A2 applied", and the configuration of "FIG. 1B with FIG. 1A2 applied" and performing the above-described operation can also transmit modulation signal ♭u of 103A_u by using first antenna module v depending on the communication situation, the propagation situation of the radio wave, the terminal that is the destination, and the like. That is, TRP #2_i of 602_i can also be TRP #1_k of 601_k depending on the communication situation, the propagation situation of the radio wave, the terminal that is the destination, and the like.

Similarly, TRP #1_k of 601_k having the configuration of "FIG. 1A1", the configuration of "FIG. 1B", the configuration of "FIG. 1A1 with FIG. 1A2 applied", and the configuration of "FIG. 1B with FIG. 1A2 applied" and performing the above-described operation can also transmit modulation signal ♭u of 103A_u without using first antenna module v depending on the communication situation, the propagation situation of the radio wave, the terminal that is the destination, and the like. That is, TRP #1_k of 601_k can also be TRP #2_i of 602_i depending on the communication situation, the propagation situation of the radio wave, the terminal that is the destination, and the like.

Therefore, since a suitable TRP can be set for each terminal that is the communication counterpart, in the terminal, an effect of improving the reception quality of the data can be obtained, and as a result, an effect of improving the transmission efficiency of the data of the system can be obtained.

Another example of the configuration and the operation of TRP #1_k of 601_k and TRP #2_i of 602_i in "FIGS. 6A1, 6A2, and 6A3" and "FIGS. 6B1, 6B2, and 6B3" will be described.

TRP #1_k of 601_k may have, for example, the configuration of "FIG. 1A1", the configuration of "FIG. 1B", the configuration of "FIG. 1A1 with FIG. 1A2 applied", and the configuration of "FIG. 1B with FIG. 1A2 applied". As described in Embodiment 1, TRP #1_k of 601_k may include the antenna port as the first antenna module and the second antenna module. Since the operations of FIG. 1A1, 1B, and 1A2 have already been described, the description of the details of the operations will be partially omitted.

In a case where TRP #1_k of 601_k has the configuration of "FIG. 1A1", the configuration of "FIG. 1B", the configuration of "FIG. 1A1 with FIG. 1A2 applied", and the configuration of "FIG. 1B with FIG. 1A2 applied", modulation signal ♭u of 103A_u is transmitted by using first antenna module v of 106A_1_v.

As described above, TRP #1_k of 601_k may transmit modulation signal ♭u of 103A_u by using second antenna module #w of 106A_2_w.

Since the details of the operation have been described in Embodiment 1, the description will be omitted.

TRP #2_i of 602_i may have, for example, the configuration of "FIG. 8A", the configuration of "FIG. 8B", the configuration of "FIG. 8A with FIG. 1A2 applied", and the configuration of "FIG. 8B with FIG. 1A2 applied".

FIG. 8A illustrates an example of the configuration of TRP #2_i of 602_i, and the same reference numerals are assigned to components that operate in the same manner as in FIG. 1A1. A difference between FIG. 8A and FIG. 1A1 is that FIG. 8A does not include a portion related to the first antenna module. As described in Embodiment 1, TRP #2_i of 602_i may include the antenna port as the second antenna module.

Since the components included in FIG. 8A have been described using FIGS. 1A1, 1B, and 1A2 in Embodiment 1, the description of the details of the operation will be partially omitted.

In FIG. 8A, transmission processor ♭u of 102A_u (u is an integer of 1 or greater and K or less) may have a configuration as in FIG. 1A2. Since FIG. 1A2 has been described in Embodiment 1, the description will be omitted.

FIG. 8B illustrates an example of the configuration of TRP #2_i of 602_i, and the same reference numerals are assigned to components that operate in the same manner as in FIG. 1B. A difference between FIG. 8B and FIG. 1B is that FIG. 8B does not include a portion related to the first antenna module. As described in Embodiment 1, TRP #2_i of 602_i may include the antenna port as the second antenna module.

Since the components included in FIG. 8B have been described using FIGS. 1A1, 1B, and 1A2 in Embodiment 1, the description of the details of the operations will be partially omitted.

In FIG. 8B, transmission processor ♭u of 102A_u (u is an integer of 1 or greater and K or less) may have a configuration as in FIG. 1A2. Since FIG. 1A2 has been described in Embodiment 1, the description will be omitted.

In a case where TRP #2_i of 602_i has the configuration of "FIG. 8A", the configuration of "FIG. 8B", the configuration of "FIG. 8A with FIG. 1A2 applied", and the configuration of "FIG. 8B with FIG. 1A2 applied", modulation signal ♭u of 103A_u is transmitted by using second antenna module #w of 106A_2_w.

Since the details of the operation have been described in Embodiment 1, the description will be omitted.

The "modulation signal ♭1 of 103A_1 transmitted by TRP #1_k of 601_k" and the "modulation signal

♭1 of 103A_1 transmitted by TRP #2_i of 602_i" are the same signal. Therefore, the "modulation signal ♭f of 103A_f transmitted by TRP #1_k of 601_k" and the "modulation signal ♭f of 103A_f transmitted by TRP #2_i of 602_i" are the same signal (f is an integer of 1 or greater and K or less).

It is assumed that the "modulation signal ♭u of 103A_u" transmitted by TRP #1_k of 601_k by using first antenna module v of 106A_1_v is present at frequency AA1 and time A1 as illustrated in FIG. 4. (Here, in a case where TRP #1_k of 601_k transmits "modulation signal ♭u of 103A_u" by using the second antenna module of 106A_2_w, it is assumed that the "modulation signal ♭u of 103A_u" is present at frequency AA1 and time A1 as illustrated in FIG. 4.)

Similarly, it is assumed that the "modulated signal ♭u of 103A_u" transmitted by TRP#2_i of 602_i by using second antenna module #w of 106A_2_w is also present at frequency AA1 and time A1.

Therefore, transmission signal group v of 112A_1_v transmitted by TRP#1_k of 601_k using first antenna module v of 106A_1_v, and transmission signal group #w of 112A_2_w transmitted by TRP#2_i of 602_i using second antenna module #w of 106A_2_w are present at frequency AA1 and time A1 (the same (common) frequency, the same (common) time). (Here, in a case where TRP #1_k of 601_k transmits transmission signal group #w of 112A_2_w by using the second antenna module of 106A_2_w, transmission signal group #w of 112A_2_w is present at frequency AA1 and time AI.)

In this way, in the terminal that is the communication counterpart of the base station, an effect of improving the reception quality of the data can be obtained, and as a result, an effect of improving the transmission efficiency of the data of the system can be obtained.

Note that TRP #1_k of 601_k having the configuration of "FIG. 1A1", the configuration of "FIG. 1B", the configuration of "FIG. 1A1 with FIG. 1A2 applied", and the configuration of "FIG. 1B with FIG. 1A2 applied" and performing the above-described operation can also transmit modulation signal ♭u of 103A_u without using first antenna module v depending on the communication situation, the propagation situation of the radio wave, the terminal that is the destination, and the like. That is, TRP #1_k of 601_k can also be TRP #2_i of 602_i depending on the communication situation, the propagation situation of the radio wave, the terminal that is the destination, and the like.

Further, in a case where TRP #1_k of 601_k transmits transmission signal group #w of 112A_2_w by using second antenna module #w of 106A_2_w, the "modulation signal ♭u of 103A_u" is present at frequency AA1 and time A1 as illustrated in FIG. 4.

Therefore, since a suitable TRP can be set for each terminal that is the communication counterpart, in the terminal, an effect of improving the reception quality of the data can be obtained, and as a result, an effect of improving the transmission efficiency of the data of the system can be obtained.

Another example of the configuration and the operation of TRP #1_k of 601_k and TRP #2_i of 602_i in FIGS. 6A1, 6A2, and 6A3, and FIGS. 6B1, 6B2, and 6B3 will be described.

TRP #1_k of 601_k may have, for example, the configuration of "FIG. 7A", the configuration of "FIG. 7B", the configuration of "FIG. 7A with FIG. 1A2 applied", and the configuration of "FIG. 7B with FIG. 1A2 applied".

FIG. 7A illustrates an example of the configuration of TRP #1_k of 601_k, and the same reference numerals are assigned to components that operate in the same manner as in FIG. 1A1. A difference between FIG. 7A and FIG. 1A1 is that FIG. 7A does not include a portion related to the second antenna module. As described in Embodiment 1, TRP #1_k of 601_k may include the antenna port as the first antenna module.

Since the components included in FIG. 7A have been described using FIGS. 1A1, 1B, and 1A2 in Embodiment 1, the description of the details of the operations will be partially omitted.

In FIG. 7A, transmission processor ♭u of 102A_u (u is an integer of 1 or greater and K or less) may have a configuration as in FIG. 1A2. Since FIG. 1A2 has been described in Embodiment 1, the description will be omitted.

FIG. 7B illustrates an example of the configuration of TRP #1_k of 601_k, and the same reference numerals are assigned to components that operate in the same manner as in FIG. 1B. A difference between FIG. 7B and FIG. 1B is that FIG. 7B does not include a portion related to the second antenna module. As described in Embodiment 1, TRP #1_k of 601_k may include the antenna port as the first antenna module.

Since the components included in FIG. 7B have been described using FIGS. 1A1, 1B, and 1A2 in Embodiment 1, the description of the details of the operations will be partially omitted.

In FIG. 7B, transmission processor ♭u of 102A_u (u is an integer of 1 or greater and K or less) may have a configuration as in FIG. 1A2. Since FIG. 1A2 has been described in Embodiment 1, the description will be omitted.

In a case where TRP #1_k of 601_k has the configuration of "FIG. 7A", the configuration of "FIG. 7B", the configuration of "FIG. 7A with FIG. 1A2 applied", and the configuration of "FIG. 7B with FIG. 1A2 applied", modulation signal ♭u of 103A_u is transmitted by using first antenna module v of 106A_1_v.

Since the details of the operation have been described in Embodiment 1, the description will be omitted.

TRP #2_i of 602_i may have, for example, the configuration of "FIG. 1A1", the configuration of "FIG. 1B", the configuration of "FIG. 1A1 with FIG. 1A2 applied", and the configuration of "FIG. 1B with FIG. 1A2 applied". As described in Embodiment 1, TRP #2_i of 602_i may include the antenna port as the first antenna module and the second antenna module. Since the operations of FIGS. 1A1, 1B, and 1A2 have already been described, the description of the details of the operations will be partially omitted.

In a case where TRP #2_i of 602_i has the configuration of "FIG. 1A1", the configuration of "FIG. 1B", the configuration of "FIG. 1A1 with FIG. 1A2 applied", and the configuration of "FIG. 1B with FIG. 1A2 applied", modulation signal ♭u of 103A_u is transmitted by using second antenna module #w of 106A_2_w.

Since the details of the operation have been described in Embodiment 1, the description will be omitted.

The "modulation signal ♭1 of 103A_1 transmitted by TRP #1_k of 601_k" and the "modulation signal ♭1 of 103A_1 transmitted by TRP #2_i of 602_i" are the same signal. Therefore, the "modulation signal ♭f of 103A_f transmitted by TRP #1_k of 601_k" and the "modulation signal ♭f of 103A_f transmitted by TRP #2_i of 602_i" are the same signal (f is an integer of 1 or greater and K or less).

It is assumed that the "modulation signal ♭u of 103A_u" transmitted by TRP #1_k of 601_k by using first antenna module v of 106A_1_v is present at frequency AA1 and time A1 as illustrated in FIG. 4. (Here, in a case where TRP #1_k of 601_k transmits "modulation signal ♭u of 103A_u" by using the second antenna module of 106A_2_w, it is assumed that the "modulation signal ♭u of 103A_u" is present at frequency AA1 and time A1 as illustrated in FIG. 4.)

Similarly, it is assumed that the "modulated signal ♭u of 103A_u" transmitted by TRP#2_i of 602_i using second antenna module #w of 106A_2_w is also present at frequency AA1 and time A1.

Therefore, transmission signal group v of 112A_1_v transmitted by TRP#1_k of 601_k using first antenna module v of 106A_1_v, and transmission signal group #w of 112A_2_w transmitted by TRP#2_i of 602_i using second antenna module #w of 106A_2_w are present at frequency AA1 and time A1 (the same (common) frequency, the same (common) time). (Here, in a case where TRP #1_k of 601_k transmits transmission signal group #w of 112A_2_w by using the second antenna module of 106A_2_w, transmission signal group #w of 112A_2_w is present at frequency AA1 and time A1.)

In this way, in the terminal that is the communication counterpart of the base station, an effect of improving the reception quality of the data can be obtained, and as a result, an effect of improving the transmission efficiency of the data of the system can be obtained.

Note that TRP #2_i of 602_i having the configuration of "FIG. 1A1", the configuration of "FIG. 1B", the configuration of "FIG. 1A1 with FIG. 1A2 applied", and the configuration of "FIG. 1B with FIG. 1A2 applied" and performing the above-described operation can also transmit modulation signal ♭u of 103A_u by using first antenna module v depending on the communication situation, the propagation situation of the radio wave, the terminal that is the destination, and the like. That is, TRP #2_i of 602_i can also be TRP #1_k of 601_k depending on the communication situation, the propagation situation of the radio wave, the terminal that is the destination, and the like.

Therefore, since a suitable TRP can be set for each terminal that is the communication counterpart, in the terminal, an effect of improving the reception quality of the data can be obtained, and as a result, an effect of improving the transmission efficiency of the data of the system can be obtained.

Another example of the configuration and the operation of TRP #1_k of 601_k and TRP #2_i of 602_i in FIGS. 6A1, 6A2, and 6A3, and FIGS. 6B1, 6B2, and 6B3 will be described.

TRP #1_k of 601_k may have, for example, the configuration of "FIG. 7A", the configuration of "FIG. 7B", the configuration of "FIG. 7A with FIG. 1A2 applied", and the configuration of "FIG. 7B with FIG. 1A2 applied".

FIG. 7A illustrates an example of the configuration of TRP #1_k of 601_k, and the same reference numerals are assigned to components that operate in the same manner as in FIG. 1A1. A difference between FIG. 7A and FIG. 1A1 is that FIG. 7A does not include a portion related to the second antenna module. As described in Embodiment 1, TRP #1_k of 601_k may include the antenna port as the first antenna module.

Since the components included in FIG. 7A have been described using FIGS. 1A1, 1B, and 1A2 in Embodiment 1, the description of the details of the operations will be partially omitted.

In FIG. 7A, transmission processor ♭u of 102A_u (u is an integer of 1 or greater and K or less) may have a configuration as in FIG. 1A2. Since FIG. 1A2 has been described in Embodiment 1, the description will be omitted.

FIG. 7B illustrates an example of the configuration of TRP #1_k of 601_k, and the same reference numerals are assigned to components that operate in the same manner as in FIG. 1B. A difference between FIG. 7B and FIG. 1B is that FIG. 7B does not include a portion related to the second antenna module. As described in Embodiment 1, TRP #1_k of 601_k may include the antenna port as the first antenna module.

Since the components included in FIG. 7B have been described using FIGS. 1A1, 1B, and 1A2 in Embodiment 1, the description of the details of the operation will be partially omitted.

In FIG. 7B, transmission processor ♭u of 102A_u (u is an integer of 1 or greater and K or less) may have a configuration as in FIG. 1A2. Since FIG. 1A2 has been described in Embodiment 1, the description will be omitted.

In a case where TRP #1_k of 601_k has the configuration of "FIG. 7A", the configuration of "FIG. 7B", the configuration of "FIG. 7A with FIG. 1A2 applied", and the configuration of "FIG. 7B with FIG. 1A2 applied", modulation signal ♭u of 103A_u is transmitted by using first antenna module v of 106A_1_v.

Since the details of the operation have been described in Embodiment 1, the description will be omitted.

TRP #2_i of 602_i may have, for example, the configuration of "FIG. 8A", the configuration of "FIG. 8B", the configuration of "FIG. 8A with FIG. 1A2 applied", and the configuration of "FIG. 8B with FIG. 1A2 applied".

FIG. 8A illustrates an example of the configuration of TRP #2_i of 602_i, and the same reference numerals are assigned to components that operate in the same manner as in FIG. 1A1. A difference between FIG. 8A and FIG. 1A1 is that FIG. 8A does not include a portion related to the first antenna module. As described in Embodiment 1, TRP #2_i of 602_i may include the antenna port as the second antenna module.

Since the components included in FIG. 8A have been described using FIGS. 1A1, 1B, and 1A2 in Embodiment 1, the description of the details of the operation will be partially omitted.

In FIG. 8A, transmission processor bu of 102A_u (u is an integer of 1 or greater and K or less) may have a configuration as in FIG. 1A2. Since FIG. 1A2 has been described in Embodiment 1, the description will be omitted.

FIG. 8B illustrates an example of the configuration of TRP #2_i of 602_i, and the same reference numerals are assigned to components that operate in the same manner as in FIG. 1B. A difference between FIG. 8B and FIG. 1B is that FIG. 8B does not include a portion related to the first antenna module. As described in Embodiment 1, TRP #2_i of 602_i may include the antenna port as the second antenna module.

Since the components included in FIG. 8B have been described using FIGS. 1A1, 1B, and 1A2 in Embodiment 1, the description of the details of the operation will be partially omitted.

In FIG. 8B, transmission processor bu of 102A_u (u is an integer of 1 or greater and K or less) may have a configuration as in FIG. 1A2. Since FIG. 1A2 has been described in Embodiment 1, the description will be omitted.

In a case where TRP #2_i of 602_i has the configuration of "FIG. 8A", the configuration of "FIG. 8B", the configuration of "FIG. 8A with FIG. 1A2 applied", and the configuration of "FIG. 8B with FIG. 1A2 applied", modulation signal bu of 103A_u is transmitted by using second antenna module #w of 106A_2_w.

Since the details of the operation have been described in Embodiment 1, the description will be omitted.

The "modulation signal ♭1 of 103A_1 transmitted by TRP #1_k of 601_k" and the "modulation signal ♭1 of 103A_1 transmitted by TRP #2_i of 602_i" are the same signal. Therefore, the "modulation signal ♭f of 103A_f transmitted by TRP #1_k of 601_k" and the "modulation signal ♭f of 103A_f transmitted by TRP #2_i of 602_i" are the same signal (f is an integer of 1 or greater and K or less).

It is assumed that the "modulation signal bu of 103A_u" transmitted by TRP #1_k of 601_k TRP #1_k of 601_k by using first antenna module v of 106A_1_v is present at frequency AA1 and time A1 as illustrated in FIG. 4. (Here, in a case where TRP #1_k of 601_k transmits "modulation signal bu of 103A_u" by using the second antenna module of 106A_2_w, it is assumed that the "modulation signal bu of 103A_u" is present at frequency AA1 and time A1 as illustrated in FIG. 4.)

Similarly, it is assumed that the "modulated signal bu of 103A_u" transmitted by TRP#2_i of 602_i using second antenna module #w of 106A_2_w is also present at frequency AA1 and time A1.

Therefore, transmission signal group v of 112A_1_v transmitted by TRP#1_k of 601_k using first antenna module v of 106A_1_v, and transmission signal group #w of 112A_2_w transmitted by TRP#2_i of 602_i using second antenna module #w of 106A_2_w are present at frequency AA1 and time A1 (the same (common) frequency, the same (common) time). (Here, in a case where TRP #1_k of 601_k transmits transmission signal group #w of 112A_2_w by using the second antenna module of 106A_2_w, transmission signal group #w of 112A_2_w is present at frequency AA1 and time A1.)

In this way, in the terminal that is the communication counterpart of the base station, an effect of improving the reception quality of the data can be obtained, and as a result, an effect of improving the transmission efficiency of the data of the system can be obtained.

The configuration and the operation example of the "apparatus 603, TRP #1_k of 601_k, and TRP #2_i of 602_i" in FIGS. 6A3 and 6B3 will be described.

Apparatus 603 may have, for example, the configuration of "FIG. 9A" and the configuration of "FIG. 9B".

FIG. 9A illustrates an example of the configuration of apparatus 603, and the same reference numerals are assigned to components that operate in the same manner as in FIG. 1A1. A characteristic point of FIG. 9A is that the portion related to transmission processor bu of 102A_u in FIG. 1A1 is included. Since the components included in FIG. 9A have been described using FIGS.

1A1,1B, and 1A2 in Embodiment 1, the description of the details of the operations will be partially omitted.

Apparatus 603 having the configuration of FIG. 9A transmits the generated modulation signal bu of 103A_u to TRP #1_k of 601_k and TRP #2_i of 602_i.

FIG. 9B illustrates a configuration example of apparatus 603 different from FIG. 9A, and the same reference numerals are assigned to components that operate in the same manner as in FIG. 1A1 and FIG. 1A2. A characteristic point of FIG. 9A is that the portion related to transmission processor 102A in FIG. 1A2 is included. Since the components included in FIG. 9B have been described using FIGS. 1A1, 1B, and 1A2 in Embodiment 1, the description of the details of the operation will be partially omitted.

Apparatus 603 having the configuration of FIG. 9B transmits the generated modulation signal bu of 103A_u to TRP #1_k of 601_k and TRP #2_i of 602_i.

TRP #1_k of 601_k may have, for example, the configuration of "FIG. 10A" and the configuration of "FIG. 10B". As described in Embodiment 1, TRP #1_k of 601_k may include the antenna port as the first antenna module and the second antenna module.

FIG. 10A illustrates an example of the configuration of TRP #1_k of 601_k, and the same reference numerals are assigned to components that operate in the same manner as in FIG. 1A1. A characteristic point of FIG. 10A is that the processing is performed on modulation signal bu of 103A_u obtained from apparatus 603. Since the components included in FIG. 10A have been described using FIGS. 1A1, 1B, and 1A2 in Embodiment 1, the description of the details of the operations will be partially omitted.

FIG. 10B illustrates a configuration example of TRP #1_k of 601_k different from FIG. 10A, and the same reference numerals are assigned to components that operate in the same manner as in FIG. 1B. A characteristic point of FIG. 10B is that the processing is performed on modulation signal bu of 103A_u obtained from apparatus 603. Since the components included in FIG. 10B have been described using FIGS. 1A1, 1B, and 1A2 in Embodiment 1, the description of the details of the operation will be partially omitted.

In a case where TRP #1_k of 601_k has the configuration of "FIG. 10A" and the configuration of "FIG. 10B", modulation signal bu of 103A_u is transmitted by using first antenna module v of 106A_1_v.

As described above, TRP #1_k of 601_k may transmit modulation signal bu of 103A_u by using second antenna module #w of 106A_2_w.

Since the details of the operation have been described in Embodiment 1, the description will be omitted.

TRP #2_i of 602_i may have, for example, the configuration of "FIG. 10A" and the configuration of "FIG. 10B". As described in Embodiment 1, TRP #2_i of 602_i may include the antenna port as the first antenna module and the second antenna module.

FIG. 10A illustrates an example of the configuration of TRP #2_i of 602_i, and the same reference numerals are assigned to components that operate in the same manner as in FIG. 1A1. A characteristic point of FIG. 10A is that the processing is performed on modulation signal bu of 103A_u obtained from apparatus 603. Since the components included in FIG. 10A have been described using FIGS. 1A1, 1B, and 1A2 in Embodiment 1, the description of the details of the operations will be partially omitted.

FIG. 10B illustrates a configuration example of TRP #2_i of 602_i different from FIG. 10A, and the same reference numerals are assigned to components that operate in the same manner as in FIG. 1B. A characteristic point of FIG. 10B is that the processing is performed on modulation signal bu of 103A_u obtained from apparatus 603. Since the components included in FIG. 10B have been described using FIGS. 1A1, 1B, and 1A2 in Embodiment 1, the description of the details of the operations will be partially omitted.

In a case where TRP #2_i of 602_i has the configuration of "FIG. 10A" and the configuration of "FIG. 10B", modulation signal bu of 103A_u is transmitted by using second antenna module #w of 106A_2_w.

Since the details of the operation have been described in Embodiment 1, the description will be omitted.

The "modulation signal $\flat 1$ of 103A_1 transmitted by TRP #1_k of 601_k" and the "modulation signal $\flat 1$ of 103A_1 transmitted by TRP #2_i of 602_i" are the same signal. Therefore, the "modulation signal $\flat f$ of 103A_f transmitted by TRP #1_k of 601_k" and the "modulation signal $\flat f$ of 103A_f transmitted by TRP #2_i of 602_i" are the same signal (f is an integer of 1 or greater and K or less).

I t is assumed that the "modulation signal bu of 103A_u" transmitted by TRP #1_k of 601_k by using first antenna module v of 106A_1_v is present at frequency AA1 and time A1 as illustrated in FIG. 4. (Here, in a case where TRP #1_k of 601_k transmits "modulation signal bu of 103A_u" by using the second antenna module of 106A_2_w, it is assumed that the "modulation signal bu of 103A_u" is present at frequency AA1 and time A1 as illustrated in FIG. 4.)

Similarly, it is assumed that the "modulated signal bu of 103A_u" transmitted by TRP#2_i of 602_i using second antenna module #w of 106A_2_w is also present at frequency AA1 and time A1.

Therefore, transmission signal group v of 112A_1_v transmitted by TRP#1_k of 601_k using first antenna module v of 106A_1_v, and transmission signal group #w of 112A_2_w transmitted by TRP#2_i of 602_i using second antenna module #w of 106A_2_w are present at frequency AA1 and time A1 (the same (common) frequency, the same (common) time). (Here, in a case where TRP #1_k of 601_k transmits transmission signal group #w of 112A_2_w by using the second antenna module of 106A_2_w, transmission signal group #w of 112A_2_w is present at frequency AA1 and time A1.)

In this way, in the terminal that is the communication counterpart of the base station, an effect of improving the reception quality of the data can be obtained, and as a result, an effect of improving the transmission efficiency of the data of the system can be obtained.

Note that TRP #2_i of 602_i having the configuration of "FIG. 10A" and the configuration of "FIG. 10B" and performing the above-described operation can also transmit modulation signal bu of 103A_u by using first antenna module v depending on the communication situation, the propagation situation of the radio wave, the terminal that is the destination, and the like. That is, TRP #2_i of 602_i can also be TRP #1_k of 601_k depending on the communication situation, the propagation situation of the radio wave, the terminal that is the destination, and the like.

Similarly, TRP #1_k of 601_k having the configuration of "FIG. 10A" and the configuration of "FIG. 10B" and performing the above-described operation can also transmit modulation signal bu of 103A_u without using first antenna module v depending on the communication situation, the propagation situation of the radio wave, the terminal that is the destination, and the like. That is, TRP #1_k of 601_k can also be TRP #2_i of 602_i depending on the communication situation, the propagation situation of the radio wave, the terminal that is the destination, and the like.

Therefore, since a suitable TRP can be set for each terminal that is the communication counterpart, in the terminal, an effect of improving the reception quality of the data can be obtained, and as a result, an effect of improving the transmission efficiency of the data of the system can be obtained.

Another example of the configuration and the operation of TRP #1_k of 601_k and TRP #2_i of 602_i in FIGS. 6A3 and 6B3 will be described.

Apparatus 603 may have, for example, the configuration of "FIG. 9A" and the configuration of "FIG. 9B".

FIG. 9A illustrates an example of the configuration of apparatus 603, and the same reference numerals are assigned to components that operate in the same manner as in FIG. 1A1. A characteristic point of FIG. 9A is that the portion related to transmission processor bu of 102A_u in FIG. 1A1 is included. Since the components included in FIG. 9A have been described using FIGS. 1A1, 1B, and 1A2 in Embodiment 1, the description of the details of the operations will be partially omitted.

Apparatus 603 having the configuration of FIG. 9A transmits the generated modulation signal bu of 103A_u to TRP #1_k of 601_k and TRP #2_i of 602_i.

FIG. 9B illustrates a configuration example of apparatus 603 different from FIG. 9A, and the same reference numerals are assigned to components that operate in the same manner as in FIG. 1A1 and FIG.

1A2. A characteristic point of FIG. 9A is that the portion related to transmission processor 102A in FIG. 1A2 is included. Since the components included in FIG. 9B have been described using FIGS. 1A1, 1B, and 1A2 in Embodiment 1, the description of the details of the operations will be partially omitted.

Apparatus 603 having the configuration of FIG. 9B transmits the generated modulation signal bu of 103A_u to TRP #1_k of 601_k and TRP #2_i of 602_i.

TRP #1_k of 601_k may have, for example, the configuration of "FIG. 10A" and the configuration of "FIG. 10B". As described in Embodiment 1, TRP #1_k of 601_k may include the antenna port as the first antenna module and the second antenna module.

FIG. 10A illustrates an example of the configuration of TRP #1_k of 601_k, and the same reference numerals are assigned to components that operate in the same manner as in FIG. 1A1. A characteristic point of FIG. 10A is that the processing is performed on modulation signal bu of 103A_u obtained from apparatus 603. Since the components included in FIG. 10A have been described using FIGS. 1A1, 1B, and 1A2 in Embodiment 1, the description of the details of the operations will be partially omitted.

FIG. 10B illustrates a configuration example of TRP #1_k of 601_k different from FIG. 10A, and the same reference numerals are assigned to components that operate in the same manner as in FIG. 1B. A characteristic point of FIG. 10B is that the processing is performed on modulation signal bu of 103A_u obtained from apparatus 603. Since the components included in FIG. 10B have been described using FIGS. 1A1, 1B, and 1A2 in Embodiment 1, the description of the details of the operations will be partially omitted.

In a case where TRP #1_k of 601_k has the configuration of "FIG. 10A" and the configuration of "FIG. 10B", modulation signal bu of 103A_u is transmitted by using first antenna module v of 106A_1_v.

As described above, TRP #1_k of 601_k may transmit modulation signal bu of 103A_u by using second antenna module #w of 106A_2_w.

Since the details of the operation have been described in Embodiment 1, the description will be omitted.

TRP #2_i of 602_i may have, for example, the configuration of "FIG. 12A" and the configuration of "FIG. 12B".

FIG. 12A illustrates an example of the configuration of TRP #2_i of 602_i, and the same reference numerals are assigned to components that operate in the same manner as in FIG. 1A1. A characteristic point of FIG. 12A is that the processing is performed on modulation signal bu of 103A_u obtained from apparatus 603. As described in Embodiment 1, TRP #2_i of 602_i may include the antenna port as the second antenna module. Since the components included in FIG. 12A have been described using FIGS. 1A1, 1B, and 1A2 in Embodiment 1, the description of the details of the operations will be partially omitted.

FIG. 12B illustrates an example of the configuration of TRP #2_i of 602_i, and the same reference numerals are assigned to components that operate in the same manner as in FIG. 1B. A characteristic point of FIG. 12B is that the processing is performed on modulation signal bu of 103A_u obtained from apparatus 603. As described in Embodiment 1, TRP #2_i of 602_i may include the antenna port as the second antenna module. Since the components included in FIG. 12B have been described using FIGS. 1A1, 1B, and 1A2 in Embodiment 1, the description of the details of the operations will be partially omitted.

In a case where TRP #2_i of 602_i has the configuration of "FIG. 12A" and the configuration of "FIG. 12B", modulation signal bu of 103A_u is transmitted by using second antenna module #w of 106A_2_w.

Since the details of the operation have been described in Embodiment 1, the description will be omitted.

The "modulation signal $\flat 1$ of 103A_1 transmitted by TRP #1_k of 601_k" and the "modulation signal $\flat 1$ of 103A_1 transmitted by TRP #2_i of 602_i" are the same signal. Therefore, the "modulation signal $\flat f$ of 103A_f transmitted by TRP #1_k of 601_k" and the "modulation signal $\flat f$ of 103A_f transmitted by TRP #2_i of 602_i" are the same signal (f is an integer of 1 or greater and K or less).

It is assumed that the "modulation signal bu of 103A_u" transmitted by TRP #1_k of 601_k by using first antenna module v of 106A_1_v is present at frequency AA1 and time A1 as illustrated in FIG. 4. (Here, in a case where TRP #1_k of 601_k transmits "modulation signal bu of 103A_u" by using the second antenna module of 106A_2_w, it is assumed that the "modulation signal bu of 103A_u" is present at frequency AA1 and time A1 as illustrated in FIG. 4.)

Similarly, it is assumed that the "modulated signal bu of 103A_u" transmitted by TRP#2_i of 602_i using second antenna module #w of 106A_2_w is also present at frequency AA1 and time A1.

Therefore, transmission signal group v of 112A_1_v transmitted by TRP#1_k of 601_k using first antenna module v of 106A_1_v, and transmission signal group #w of 112A_2_w transmitted by TRP#2_i of 602_i using second antenna module #w of 106A_2_w are present at frequency AA1 and time A1 (the same (common) frequency, the same

(common) time). (Here, in a case where TRP #1_k of 601_k transmits transmission signal group #w of 112A_2_w by using the second antenna module of 106A_2_w, transmission signal group #w of 112A_2_w is present at frequency AA1 and time A1.)

Note that TRP #1_k of 601_k having the configuration of "FIG. 10A" and the configuration of "FIG. 10B" and performing the above-described operation can also transmit modulation signal bu of 103A_u without using first antenna module v depending on the communication situation, the propagation situation of the radio wave, the terminal that is the destination, and the like. That is, TRP #1_k of 601_k can also be TRP #2_i of 602_i depending on the communication situation, the propagation situation of the radio wave, the terminal that is the destination, and the like.

In this way, in the terminal that is the communication counterpart of the base station, an effect of improving the reception quality of the data can be obtained, and as a result, an effect of improving the transmission efficiency of the data of the system can be obtained.

Further, in a case where TRP #1_k of 601_k transmits transmission signal group #w of 112A_2_w by using second antenna module #w of 106A_2_w, the "modulation signal bu of 103A_u" is present at frequency AA1 and time A1 as illustrated in FIG. 4.

Therefore, since a suitable TRP can be set for each terminal that is the communication counterpart, in the terminal, an effect of improving the reception quality of the data can be obtained, and as a result, an effect of improving the transmission efficiency of the data of the system can be obtained.

Another example of the configuration and the operation of TRP #1_k of 601_k and TRP #2_i of 602_i in FIGS. 6A3 and 6B3 will be described.

Apparatus 603 may have, for example, the configuration of "FIG. 9A" and the configuration of "FIG. 9B".

FIG. 9A illustrates an example of the configuration of apparatus 603, and the same reference numerals are assigned to components that operate in the same manner as in FIG. 1A1. A characteristic point of FIG. 9A is that the portion related to transmission processor bu of 102A_u in FIG. 1A1 is included. Since the components included in FIG. 9A have been described using FIGS. 1A1, 1B, and 1A2 in Embodiment 1, the description of the details of the operations will be partially omitted.

Apparatus 603 having the configuration of FIG. 9A transmits the generated modulation signal bu of 103A_u to TRP #1_k of 601_k and TRP #2_i of 602_i.

FIG. 9B illustrates a configuration example of apparatus 603 different from FIG. 9A, and the same reference numerals are assigned to components that operate in the same manner as in FIG. 1A1 and FIG. 1A2. A characteristic point of FIG. 9A is that the portion related to transmission processor 102A in FIG. 1A2 is included. Since the components included in FIG. 9B have been described using FIGS. 1A1, 1B, and 1A2 in Embodiment 1, the description of the details of the operations will be partially omitted.

Apparatus 603 having the configuration of FIG. 9B transmits the generated modulation signal bu of 103A_u to TRP #1_k of 601_k and TRP #2_i of 602_i.

TRP #1_k of 601_k may have, for example, the configuration of "FIG. 11A" and the configuration of "FIG. 11B".

FIG. 11A illustrates an example of the configuration of TRP #1_k of 601_k, and the same reference numerals are assigned to components that operate in the same manner as in FIG. 1A1. A characteristic point of FIG. 11A is that the processing is performed on modulation signal bu of 103A_u obtained from apparatus 603. As described in Embodiment 1, TRP #1_k of 601_k may include the antenna port as the first antenna module. Since the components included in FIG. 11A have been described using FIGS. 1A1, 1B, and 1A2 in Embodiment 1, the description of the details of the operations will be partially omitted.

FIG. 11B illustrates an example of the configuration of TRP #1_k of 601_k, and the same reference numerals are assigned to components that operate in the same manner as in FIG. 1B. A characteristic point of FIG. 11B is that the processing is performed on modulation signal bu of 103A_u obtained from apparatus 603. As described in Embodiment 1, TRP #1_k of 601_k may include the antenna port as the first antenna module. Since the components included in FIG. 11B have been described using FIGS. 1A1, 1B, and 1A2 in Embodiment 1, the description of the details of the operations will be partially omitted.

In a case where TRP #1_k of 601_k has the configuration of "FIG. 11A" and the configuration of "FIG. 11B", modulation signal bu of 103A_u is transmitted by using first antenna module v of 106A_1_v.

Since the details of the operation have been described in Embodiment 1, the description will be omitted.

TRP #2_i of 602_i may have, for example, the configuration of "FIG. 10A" and the configuration of "FIG. 10B". As described in Embodiment 1, TRP #2_i of 602_i may include the antenna port as the first antenna module and the second antenna module.

FIG. 10A illustrates an example of the configuration of TRP #2_i of 602_i, and the same reference numerals are assigned to components that operate in the same manner as in FIG. 1A1. A characteristic point of FIG. 10A is that the processing is performed on modulation signal bu of 103A_u obtained from apparatus 603. Since the components included in FIG. 10A have been described using FIGS. 1A1, 1B, and 1A2 in Embodiment 1, the description of the details of the operations will be partially omitted.

FIG. 10B illustrates a configuration example of TRP #2_i of 602_i different from FIG. 10A, and the same reference numerals are assigned to components that operate in the same manner as in FIG. 1B. A characteristic point of FIG. 10B is that the processing is performed on modulation signal bu of 103A_u obtained from apparatus 603. Since the components included in FIG. 10B have been described using FIGS. 1A1, 1B, and 1A2 in Embodiment 1, the description of the details of the operations will be partially omitted.

In a case where TRP #2_i of 602_i has the configuration of "FIG. 10A" and the configuration of "FIG. 10B", modulation signal bu of 103A_u is transmitted by using second antenna module #w of 106A_2_w.

Since the details of the operation have been described in Embodiment 1, the description will be omitted.

The "modulation signal ♭1 of 103A_1 transmitted by TRP #1_k of 601_k" and the "modulation signal ♭1 of 103A_1 transmitted by TRP #2_i of 602_i" are the same signal. Therefore, the "modulation signal ♭f of 103A_f transmitted by TRP #1_k of 601_k" and the "modulation signal ♭f of 103A_f transmitted by TRP #2_i of 602_i" are the same signal (f is an integer of 1 or greater and K or less).

It is assumed that the "modulation signal bu of 103A_u" transmitted by TRP #1_k of 601_k by using first antenna module v of 106A_1_v is present at frequency AA1 and time A1 as illustrated in FIG. 4. (Here, in a case where TRP #1_k of 601_k transmits "modulation signal bu of 103A_u" by using the second antenna module of 106A_2_w, it is assumed that the "modulation signal bu of 103A_u" is present at frequency AA1 and time A1 as illustrated in FIG. 4.)

Similarly, it is assumed that the "modulated signal bu of 103A_u" transmitted by TRP#2_i of 602_i using second antenna module #w of 106A_2_w is also present at frequency AA1 and time A1.

Therefore, transmission signal group v of 112A_1_v transmitted by TRP#1_k of 601_k using first antenna module v of 106A_1_v, and transmission signal group #w of 112A_2_w transmitted by TRP#2_i of 602_i using second antenna module #w of 106A_2_w are present at frequency AA1 and time A1 (the same (common) frequency, the same (common) time). (Here, in a case where TRP #1_k of 601_k transmits transmission signal group #w of 112A_2_w by using the second antenna module of 106A_2_w, transmission signal group #w of 112A_2_w is present at frequency AA1 and time A1.)

In this way, in the terminal that is the communication counterpart of the base station, an effect of improving the reception quality of the data can be obtained, and as a result, an effect of improving the transmission efficiency of the data of the system can be obtained.

Note that TRP #2_i of 602_i having the configuration of "FIG. 10A" and the configuration of "FIG. 10B" and performing the above-described operation can also transmit modulation signal bu of 103A_u by using first antenna module v depending on the communication situation, the propagation situation of the radio wave, the terminal that is the destination, and the like. That is, TRP #2_i of 602_i can also be TRP #1_k of 601_k depending on the communication situation, the propagation situation of the radio wave, the terminal that is the destination, and the like.

Therefore, since a suitable TRP can be set for each terminal that is the communication counterpart, in the terminal, an effect of improving the reception quality of the data can be obtained, and as a result, an effect of improving the transmission efficiency of the data of the system can be obtained.

Another example of the configuration and the operation of TRP #1_k of 601_k and TRP #2_i of 602_i in FIGS. 6A3 and 6B3 will be described.

Apparatus 603 may have, for example, the configuration of "FIG. 9A" and the configuration of "FIG. 9B".

FIG. 9A illustrates an example of the configuration of apparatus 603, and the same reference numerals are assigned to components that operate in the same manner as in FIG. 1A1. A characteristic point of FIG. 9A is that the portion related to transmission processor bu of 102A_u in FIG. 1A1 is included. Since the components included in FIG. 9A have been described using FIGS. 1A1, 1B, and 1A2 in Embodiment 1, the description of the details of the operations will be partially omitted.

Apparatus 603 having the configuration of FIG. 9A transmits the generated modulation signal bu of 103A_u to TRP #1_k of 601_k and TRP #2_i of 602_i.

FIG. 9B illustrates a configuration example of apparatus 603 different from FIG. 9A, and the same reference numerals are assigned to components that operate in the same manner as in FIG. 1A1 and FIG. 1A2. A characteristic point of FIG. 9A is that the portion related to transmission processor 102A in FIG. 1A2 is included. Since the components included in FIG. 9B have been described using FIGS. 1A1, 1B, and 1A2 in Embodiment 1, the description of the details of the operations will be partially omitted.

Apparatus 603 having the configuration of FIG. 9B transmits the generated modulation signal bu of 103A_u to TRP #1_k of 601_k and TRP #2_i of 602_i.

TRP #1_k of 601_k may have, for example, the configuration of "FIG. 11A" and the configuration of "FIG. 11B".

FIG. 11A illustrates an example of the configuration of TRP #1_k of 601_k, and the same reference numerals are assigned to components that operate in the same manner as in FIG. 1A1. A characteristic point of FIG. 11A is that the processing is performed on modulation signal bu of 103A_u obtained from apparatus 603. As described in Embodiment 1, TRP #1_k of 601_k may include the antenna port as the first antenna module. Since the components included in FIG. 11A have been described using FIGS. 1A1, 1B, and 1A2 in Embodiment 1, the description of the details of the operations will be partially omitted.

FIG. 11B illustrates an example of the configuration of TRP #1_k of 601_k, and the same reference numerals are assigned to components that operate in the same manner as in FIG. 1B. A characteristic point of FIG. 11B is that the processing is performed on modulation signal bu of 103A_u obtained from apparatus 603. As described in Embodiment 1, TRP #1_k of 601_k may include the antenna port as the first antenna module. Since the components included in FIG. 11B have been described using FIGS. 1A1, 1B, and 1A2 in Embodiment 1, the description of the details of the operations will be partially omitted.

In a case where TRP #1_k of 601_k has the configuration of "FIG. 11A" and the configuration of "FIG. 11B", modulation signal bu of 103A_u is transmitted by using first antenna module v of 106A_1_v.

Since the details of the operation have been described in Embodiment 1, the description will be omitted.

TRP #2_i of 602_i may have, for example, the configuration of "FIG. 12A" and the configuration of "FIG. 12B".

FIG. 12A illustrates an example of the configuration of TRP #2_i of 602_i, and the same reference numerals are assigned to components that operate in the same manner as in FIG. 1A1. A characteristic point of FIG. 12A is that the processing is performed on modulation signal bu of 103A_u obtained from apparatus 603. As described in Embodiment 1, TRP #2_i of 602_i may include the antenna port as the second antenna module. Since the components included in FIG. 12A have been described using FIGS. 1A1, 1B, and 1A2 in Embodiment 1, the description of the details of the operations will be partially omitted.

FIG. 12B illustrates an example of the configuration of TRP #2_i of 602_i, and the same reference numerals are assigned to components that operate in the same manner as in FIG. 1B. A characteristic point of FIG. 12B is that the processing is performed on modulation signal bu of 103A_u obtained from apparatus 603. As described in Embodiment 1, TRP #2_i of 602_i may include the antenna port as the second antenna module. Since the components included in FIG. 12B have been described using FIGS. 1A1, 1B, and 1A2 in Embodiment 1, the description of the details of the operations will be partially omitted.

In a case where TRP #2_i of 602_i has the configuration of "FIG. 12A" and the configuration of "FIG. 12B", modulation signal bu of 103A_u is transmitted by using second antenna module #w of 106A_2_w.

Since the details of the operation have been described in Embodiment 1, the description will be omitted.

The "modulation signal $\flat$1 of 103A_1 transmitted by TRP #1_k of 601_k" and the "modulation signal $\flat$1 of 103A_1 transmitted by TRP #2_i of 602_i" are the same signal. Therefore, the "modulation signal $\flat$f of 103A_f transmitted by TRP #1_k of 601_k" and the "modulation signal $\flat$f of 103A_f transmitted by TRP #2_i of 602_i" are the same signal (f is an integer of 1 or greater and K or less).

It is assumed that the "modulation signal bu of 103A_u" transmitted by TRP #1_k of 601_k by using first antenna module v of 106A_1_v is present at frequency AA1 and time A1 as illustrated in FIG. 4. (Here, in a case where TRP #1_k of 601_k transmits "modulation signal bu of 103A_u" by using the second antenna module of 106A_2_w, it is assumed that the "modulation signal bu of 103A_u" is present at frequency AA1 and time A1 as illustrated in FIG. 4.)

Similarly, it is assumed that the "modulated signal bu of 103A_u" transmitted by TRP#2_i of 602_i using second antenna module #w of 106A_2_w is also present at frequency AA1 and time A1.

Therefore, transmission signal group v of 112A_1_v transmitted by TRP#1_k of 601_k using first antenna module v of 106A_1_v, and transmission signal group #w of 112A_2_w transmitted by TRP#2_i of 602_i using second antenna module #w of 106A_2_w are present at frequency AA1 and time A1 (the same (common) frequency, the same (common) time). (Here, in a case where TRP #1_k of 601_k transmits transmission signal group #w of 112A_2_w by using the second antenna module of 106A_2_w, transmission signal group #w of 112A_2_w is present at frequency AA1 and time A1.)

In this way, in the terminal that is the communication counterpart of the base station, an effect of improving the reception quality of the data can be obtained, and as a result, an effect of improving the transmission efficiency of the data of the system can be obtained.

Note that, in a case of FIGS. 6A1 and 6A2, TRP #1_1 of 601_1 may have a control function of controlling other TRPs. Further, in a case of FIGS. 6B1 and 6B2, one or more of TRP #1_k of 601_k may have a control function of controlling another TRP.

In FIGS. 6A3 and 6B3, the description has been made using "FIGS. 9A and 9B" as an example of the components included in apparatus 603, "FIGS. 10A, 10B, 11A, and 11B" as an example of the components included in TRP #1_k of 601_k, and "FIGS. 10A, 10B, 12A, and 12B" as an example of the components included in TRP #2_i of 602_i, but the distribution of "the components included in apparatus 603, the components included in TRP #1_k of 601_k, and the components included in TRP #2_i of 602_i" is not limited thereto, and for example, apparatus 603 may include a processor other than the transmission processor, and TRP #1_k of 601_k and TRP #2_i of 602_i may include a processing portion other than the processing portion included in apparatus 603.

In FIGS. 6A1, 6A2, and 6A3, "TRP #1_1 of 601_1" and "TRP #2_1 of 602_1, TRP #2_2 of 602_2, ..., TRP #2_Y of 602_Y" may be configured by one apparatus (e.g., base station, gNB, or the like) or a plurality of apparatuses.

In FIGS. 6A1, 6A2, and 6A3, "TRP #1_1 of 601_1" and "TRP #2_1 of 602_1, TRP #2_2 of 602_2, ..., TRP#2_Y of 602_Y" may be included in one apparatus (e.g., base station, gNB, or the like) or a plurality of apparatuses.

In FIGS. 6B1, 6B2, and 6B3, "TRP #1_1 of 601_1, TRP #1_2 of 601_2, ..., TRP #1_X of 601_X" and "TRP #2_1 of 602_1, TRP #2_2 of 602_2, ..., TRP #2_Y of 602_Y" may be configured by one apparatus (e.g., base station, gNB, or the like) or a plurality of apparatuses.

In FIGS. 6B1, 6B2, and 6B3, "TRP #1_1 of 601_1, TRP #1_2 of 601_2, ..., TRP #1_X of 601_X" and "TRP #2_1 of 602_1, TRP #2_2 of 602_2, ..., TRP #2_Y of 602_Y" may be included in one apparatus (e.g., base station, gNB, or the like) or a plurality of apparatuses.

Another example of the modification in which the base station described in Embodiment 1 is applied to the TRP will be described. FIGS. 13A1, 13A2, and 13A3 illustrate an example of a state of TRPs and a terminal.

""TRP_1#1_1 of 1311_1" and "TRP_1#2_1 of 1312_1, ..., TRP_1#2_Y1 of 1312_Y1" in FIGS. 13A1, 13A2, and 13A3" are referred to as a first TRP set. The first TRP set plays a role of ""TRP #1_1 of 601_1" and "TRP #2_1 of 602_1, ..., TRP #2_Y of 602_Y" in FIGS. 6A1, 6A2, and 6A3. Here, Y1 is an integer of 1 or greater or an integer of 2 or greater. Therefore, the first "modulation signal" set (modulation signal bu of 103A_u) is transmitted by the first TRP set of ""TRP_1#1_1 of 1311_1" and "TRP_1#2_1 of 1312_1, ..., TRP_1#2_Y1 of 1312_Y1". Since the method for the presence of frequency and the time of the first "modulation signal" set has been described using FIG. 4 above, the description will be omitted.

TRP_1#1_1 of 1311_1 corresponds to TRP #1_1 of 601_1 in "FIGS. 6A1, 6A2, and 6A3". As described in Embodiment 1, TRP_1#1_1 of 1311_1 may include the first antenna module and/or the second antenna module, or may include the antenna port as the first antenna module and/or the second antenna module.

TRP_1#2_i of 1312_i corresponds to TRP #2_i of 602_i in FIGS. 6A1, 6A2, and 6A3. (i is an integer of 1 or greater) As described in Embodiment 1, TRP_1#2_i of 1312_i may include the first antenna module and/or the second antenna module, or may include the antenna port as the first antenna module and/or the second antenna module.

TRP_1#1_1 of 1311_1 transmits the transmission signal group by using the first antenna module. Further, TRP_1#1_1 of 1311_1 may transmit the transmission signal group by using the second antenna module. The details of the operation of TRP_1#1_1 of 1311_1 have already been described as the operation of TRP #1_1 of 601_1 in "FIGS. 6A1, 6A2, and 6A3," so that the description will be omitted.

TRP_1#2_i of 1312_i transmits the transmission signal group by using the second antenna module. Here, i is an integer of 1 or greater. The details of the operation of TRP_1#2_i of 1312_i have already been described as the operation of TRP #2_i of 602_i in "FIGS. 6A1, 6A2, and 6A3," so that the description will be omitted.

""TRP_2#1_1 of 1321_1" and "TRP_2#2_1 of 1322_1, ..., TRP_2#2_Y2 of 1322_Y2" in FIGS. 13A1, 13A2, and 13A3" are referred to as a second TRP set.

The second TRP set plays a role of ""TRP #1_1 of 601_1" and "TRP #2_1 of 602_1, ..., TRP #2_Y of 602_Y" in FIGS. 6A1, 6A2, and 6A3. Here, Y2 is an integer of 1 or greater or an integer of 2 or greater. Therefore, the second "modulation signal" set (modulation signal bu of 103A_u) is transmitted by the second TRP set of ""TRP_2#1_1 of 1321_1" and "TRP_2#2_1 of 1322_1, ..., TRP_2#2_Y2 of 1322_Y2". Since the method for the presence of frequency and the time of the second "modulation signal" set has been described using FIG. 4 above, the description will be omitted.

TRP_2#1_1 of 1321_1 corresponds to TRP #1_1 of 601_1 in "FIGS. 6A1, 6A2, and 6A3". As described in Embodiment 1, TRP_2#1_1 of 1321_1 may include the first antenna module and/or the second antenna module, or may include the antenna port as the first antenna module and/or the second antenna module.

TRP_2#2_i of 1322_i corresponds to TRP #2_i of 602_i in "FIGS. 6A1, 6A2, and 6A3". (i is an integer of 1 or greater) As described in Embodiment 1, TRP_2#2_i of 1322_i may include the first antenna module and/or the second antenna module, or may include the antenna port as the first antenna module and/or the second antenna module.

TRP_2#1_1 of 1321_1 transmits the transmission signal group by using the first antenna module. Further, TRP_2#1_1 of 1321_1 may transmit the transmission signal group by using the second antenna module. The details of the operation of TRP_2#1_1 of 1321_1 have already been described as the operation of TRP #1_1 of 601_1 in "FIGS. 6A1, 6A2, and 6A3", so that the description will be omitted.

TRP_2#2_i of 1322_i transmits the transmission signal group by using the second antenna module. Here, i is an integer of 1 or greater. The details of the operation of TRP_2#2_i of 1322_i have already been described as the operation of TRP #2_i of 602_i in "FIGS. 6A1, 6A2, and 6A3", so that the description will be omitted.

FIGS. 13A1, 13A2, and 13A3 are examples in which the TRP set transmits the transmission signal to the terminal, and can be examples of downlink multiple TRPs.

The first TRP set of ""TRP_1#1_1 of 1311_1" and "TRP_1#2_1 of 1312_1, ..., TRP_1#2_Y1 of 1312_Y1" may be communicable by radio as illustrated in FIG. 13A1.

The second TRP set of ""TRP_2#1_1 of 1321_1" and "TRP_2#2_1 of 1322_1, ..., TRP_2#2_Y2 of 1322_Y2" may be communicable by radio as illustrated in FIG. 13A1.

The first TRP set of ""TRP_1#1_1 of 1311_1" and "TRP_1#2_1 of 1312_1, ..., TRP_1#2_Y1 of 1312_Y1" may be communicable by radio as illustrated in FIG. 13A2.

The second TRP set of ""TRP_2 #1_1 of 1321_1" and "TRP_2#2_1 of 1322_1, ..., TRP_2#2_Y2 of 1322_Y2" may be communicable by radio as illustrated in FIG. 13A2.

The first TRP set of ""TRP_1#1_1 of 1311_1" and "TRP_1#2_1 of 1312_1, ..., TRP_1#2_Y1 of 1312_Y1" may be communicable via apparatus 1303 as illustrated in FIG. 13A3.

The second TRP set of ""TRP_2#1_1 of 1321_1" and "TRP_2#2_1 of 1322_1, ..., TRP_2#2_Y2 of 1322_Y2" may be communicable via apparatus 1303 as illustrated in FIG. 13A3.

Apparatus 1303 may have, for example, the configuration of FIG. 13B.

As illustrated in FIG. 13B, apparatus 1303 includes first TRP set transmission processor 1380_1 (transmission processor for first TRP set) and second TRP set transmission processor 1380_2 (transmission processor for second TRP set).

First TRP set transmission processor 1380_1 has the configurations of FIGS. 9A and 9B. Therefore, the first TRP set transmission processor 1380_1 receives first TRP set transmission data 1381_1 (e.g., transmission data 101A_u and transmission data 101a) (transmission data for first TRP set) and a control signal 1383, and outputs a first TRP set modulation signal (group) (e.g., modulation signal bu of 103A_u) 1382_1 (modulation signal for first TRP set).

Second TRP set transmission processor 1380_2 has the configurations of FIGS. 9A and 9B. Therefore, second TRP set transmission processor 1380_2 receives second TRP set transmission data 1381_2 (e.g., transmission data 101A_u and transmission data 101a) (transmission data for second TRP set) and control signal 1383, and outputs second TRP set modulation signal (group) (e.g., modulation signal bu of 103A_u) 1382_2 (modulation signal for second TRP set).

Control signal 1383 is a signal for controlling a relationship between "frequency and time at which first TRP set modulation signal 1382_1 is present" and "frequency and time at which second TRP set modulation signal 1382_2 is present".

In a case of FIGS. 13A1 and 13A2, first TRP set modulation signal (group) (e.g., modulation signal bu of 103A_u) 1382_1 is generated by "TRP_1#1_1 of 1311_1" and "TRP_1#2_1 of 1312_1, ..., TRP_1#2_Y1 of 1312_Y1", and second TRP set modulation signal (group) (e.g., modulation signal bu of 103A_u) 1382_2 is generated by "TRP_2 #1_1 of 1321_1" and "TRP_2 #2_1 of 1322_1, ..., TRP_2#2_Y2 of 1322_Y2".

The one or more TRPs in the first TRP set and/or the one or more TRPs in the second TRP set of FIGS. 13A1, 13A2, and 13A3 may include a portion corresponding to the configuration of FIG. 13B. The TRP including the portion corresponding to the configuration of FIG. 13B transmits "first TRP set modulation signal (group) (e.g., modulation signal bu of 103A_u) 1382_1 and second TRP set modulation signal (group) (e.g., modulation signal bu of 103A_u) 1382_2 to "TRP constituting first TRP set and TRP constituting second TRP set".

The first "modulation signal" set (modulation signal bu of 103A_u) transmitted by the first TRP set of ""TRP_1#1_1 of 1311_1" and "TRP_1#2_1 of 1312_1, ..., TRP_1#2_Y1 of 1312_Y1" is referred to as a "first TRP set modulation signal (group)".

The second "modulation signal" set (modulation signal bu of 103A_u) transmitted by the second TRP set of ""TRP_2#1_1 of 1321_1" and "TRP_2#2_1 of 1322_1, ..., TRP_2#2_Y2 of 1322_Y2" is referred to as a "second TRP set modulation signal (group)".

In this case, FIG. 13C1, FIG. 13C2, FIG. 13C3, and FIG. 13C4 illustrate a mapping example in a time-frequency axis in a case of transmitting the "first TRP set modulation signal (group)" and the "second TRP set modulation signal (group)" by using a spatial division multiplexing (SDM) method (e.g., fully overlapping, partially-overlapping, and the like). Here, in FIG. 13C1, FIG. 13C2, FIG. 13C3, and FIG. 13C4, the horizontal axis is time and the vertical axis is frequency.

Example 1-1 of SDM:

It is assumed that the "first TRP set modulation signal (group) 1382_1" is present at frequency CC1 and time C1 as illustrated in FIG. 13C1. (It is assumed that the transmission signal (group) transmitted by the TRP constituting the first TRP set is present at frequency CC1 and time C1.) In this case, it is assumed that the "second TRP set modulation signal (group) 1382_2" is present at frequency CC1 and time C1 as illustrated in FIG. 13C1. (It is assumed that the transmission signal (group) transmitted by the TRP constituting the second TRP set is present at frequency CC1 and time C1.)

SDM Example 1-2:

It is assumed that the "first TRP set modulation signal (group) 1382_1" is present at frequency CC1 and time C1 as illustrated in FIG. 13C1. (It is assumed that the transmission signal (group) transmitted by the TRP constituting the first TRP set is present at frequency CC1 and time C1.) In this case, it is assumed that the "second TRP set modulation signal (group) 1382_2" is present at a part of frequency CC1 and time C1 as illustrated in FIG. 13C2. (It is assumed that the transmission signal (group) transmitted by the TRP constituting the second TRP set is present at a part of frequency CC1 and time C1.)

SDM Examples 1-3:

It is assumed that the "first TRP set modulation signal (group) 1382_1" is present at frequency CC1 and time C1 as illustrated in FIG. 13C1. (It is assumed that the transmission signal (group) transmitted by the TRP constituting the first TRP set is present at frequency CC1 and time C1.) In this case, it is assumed that the "second TRP set modulation signal (group) 1382_2" is present at frequency CC1 and a part of time C1 as illustrated in FIG. 13C3. (It is assumed that the transmission signal (group) transmitted by the TRP constituting the second TRP set is present at frequency CC1 and a part of time C1 and a part of time C1.)

SDM Example 1-4:

It is assumed that the "first TRP set modulation signal (group) 1382_1" is present at frequency CC1 and time C1 as illustrated in FIG. 13C1. (It is assumed that the transmission signal (group) transmitted by the TRP constituting the first TRP set is present at frequency CC1 and time C1.) In this case, it is assumed that the "second TRP set modulation signal (group) 1382_2" is present at a part of frequency CC1 and a part of time C1 as illustrated in FIG. 13C4. (It is assumed that the transmission signal (group) transmitted by the TRP constituting the second TRP set is present at a part of frequency CC1 and a part of time C1 and a part of time C1.)

SDM Example 1-5:

It is assumed that the "first TRP set modulation signal (group) 1382_1" is present at frequency CC1 and time C1 as illustrated in FIG. 13C1. (It is assumed that the transmission signal (group) transmitted by the TRP constituting the first TRP set is present at frequency CC1 and time C1.) In this case, it is assumed that the frequency used by the "second TRP set modulation signal (group) 1382_2" and the time overlap with a part of frequency CC1 and/or a part of time C1. (It is assumed that the frequency used by the transmission signal (group) transmitted by the TRP constituting the second TRP set and the time overlap with a part of frequency CC1 and/or a part of time C1.)

Further, the "first TRP set modulation signal (group)" and the "second TRP set modulation signal (group)" may be transmitted by using a time division multiplexing (TDM) method (e.g., tdmScheme, non-overlapping, and the like). FIG. 13D1 and FIG. 13D2 illustrate a mapping example in a time-frequency axis in this case. Here, in FIGS. 13D1 and 13D2, the horizontal axis is time and the vertical axis is frequency.

TDM Example 1-1:

It is assumed that the "first TRP set modulation signal (group) 1382_1" is present at frequency DD1 and time D1 as illustrated in FIG. 13D1. (It is assumed that the transmission signal (group) transmitted by the TRP constituting the first TRP set is present at frequency DD1 and time D1.) In this case, it is assumed that the "second TRP set modulation signal (group) 1382_2" is present at frequency DD1 and time D2 as illustrated in FIG. 13D1. (It is assumed that the transmission signal (group) transmitted by the TRP constituting the second TRP set is present at frequency DD1 and time D2.)

TDM Example 1-2:

It is assumed that the "first TRP set modulation signal (group) 1382_1" is present at frequency DD1 and time D1 as illustrated in FIG. 13D2. (It is assumed that the transmission signal (group) transmitted by the TRP constituting the first TRP set is present at frequency DD1 and time D1.) In this case, it is assumed that the "second TRP set modulation signal (group) 1382_2" is present at a part of frequency DD1 and time D2 as illustrated in FIG. 13D2. (It is assumed that the transmission signal (group) transmitted by the TRP constituting the second TRP set is present at frequency DD1 and time D2.)

The "first TRP set modulation signal (group)" and the "second TRP set modulation signal (group)" may be transmitted by using a frequency division multiplexing (FDM) method (e.g., fdmScheme, non-overlapping, and the like). FIG. 13E1, FIG. 13E2, and FIG. 13E3 illustrate a mapping example in a time-frequency axis in this case. Here, in FIGS. 13E1, 13E2, and 13E3, the horizontal axis is time and the vertical axis is frequency.

FDM Example 1-1:

It is assumed that the "first TRP set modulation signal (group) 1382_1" is present at frequency EE1 and time E1 as illustrated in FIG. 13E1. (It is assumed that the transmission signal (group) transmitted by the TRP constituting the first TRP set is present at frequency EE1 and time E1.) In this case, it is assumed that the "second TRP set modulation signal (group) 1382_2" is present at frequency EE2 and time E1 as illustrated in FIG. 13E1. (It is assumed that the transmission signal (group) transmitted by the TRP constituting the second TRP set is present at frequency EE2 and time E1.)

FDM Example 1-2:

It is assumed that the "first TRP set modulation signal (group) 1382_1" is present at frequency EE1 and time E1 as illustrated in FIG. 13E2. (It is assumed that the transmission signal (group) transmitted by the TRP constituting the first TRP set is present at frequency EE1 and time E1.) In this case, it is assumed that the "second TRP set modulation signal (group) 1382_2" is present at frequency EE2 and a part of time E1 as illustrated in FIG. 13E2. (It is assumed that the transmission signal (group) transmitted by the TRP constituting the second TRP set is present at frequency EE2 and a part of time E1.)

FDM Example 1-3:

It is assumed that the "first TRP set modulation signal (group) 1382_1" is present at frequency EE1 and time E1 as illustrated in FIG. 13E3. (It is assumed that the transmission signal (group) transmitted by the TRP constituting the first TRP set is present at frequency EE1 and time E1.) In this case, it is assumed that the "second TRP set modulation signal (group) 1382_2" is present at frequency EE2 and time E2 as illustrated in FIG. 13E3. (It is assumed that the transmission signal (group) transmitted by the TRP constituting the second TRP set is present at frequency EE2 and time E2.)

FDM Example 1-4:

It is assumed that the "first TRP set modulation signal (group) 1382_1" is present at frequency EE1 and time E1. (It is assumed that the transmission signal (group) transmitted by the TRP constituting the first TRP set is present at frequency EE1 and time E1. In this case, it is assumed that the "second TRP set modulation signal (group) 1382_2" is present at frequency EE2 and time E2. (It is assumed that the transmission signal (group) transmitted by the TRP constituting the second TRP set is present at frequency EE2 and time E2.) Then, time E1 and time E2 partially overlap with each other.

In this way, in the terminal that is the communication counterpart of the base station, an effect of improving the reception quality of the data can be obtained, and as a result, an effect of improving the transmission efficiency of the data of the system can be obtained. Further, since the TRP set transmits a set of a plurality of modulation signals and the terminal can receive the set of a plurality of modulation signals, an effect of improving the transmission efficiency of the data and improving the reception quality of the data can be obtained.

Note that the "first TRP set modulation signal (group)" that is the first "modulation signal" set and the "second TRP set modulation signal (group)" that is the second "modulation signal" set in the above description may include the same data. Therefore, repetition may be applied to the "first TRP set modulation signal (group)" that is the first "modulation signal" set and the "second TRP set modulation signal (group)" that is the second "modulation signal" set.

Further, the mapping of the "first TRP set modulation signal (group)" that is the first "modulation signal" set and the "second TRP set modulation signal (group)" that is the second "modulation signal" set in the time-frequency axis in a case of applying the SDM method, the TDM method, and the FDM method is not limited to the examples of FIGS. 13C1, 13C2, 13C3, 13C4, 13D1, 13D2, 13E1, 13E2, and 13E3.

The "transmission signal set including the "first TRP set modulation signal (group)" that is the first "modulation signal" set" and the "transmission signal set including the "second TRP set modulation signal (group)" that is the second "modulation signal" set" may be in a (full) coherent relationship, a partial coherent relationship, or a non-coherent relationship.

Another example will be described. ""TRP_1#1_1 of 1311_1, ..., TRP_1#1_X1 of 1311_X1" and "TRP_1#2_1 of 1312_1, ..., TRP_1#2_Y1 of 1312_Y1" in FIGS. 13F1, 13F2, and 13F3" are referred to as a third TRP set. The third TRP set plays a role of ""TRP #1_1 of 601_1, ..., TRP_#1_X of 601_X" and "TRP #2_1 of 602_1, ..., TRP #2_Y of 602_Y" in FIGS. 6B1, 6B2, and 6B3. Here, X1 is "an integer of 1 or greater or an integer of 2 or greater", and Y1 is "an integer of 1 or greater or an integer of 2 or greater". Therefore, the third "modulation signal" set (modulation signal bu of 103A_u) is transmitted by the third TRP set of ""TRP_1#1_1 of 1311_1, ..., TRP_1#1_X1 of 1311_X1" and "TRP_1#2_1 of 1312_1, ..., TRP_1#2_Y1 of 1312_Y1". Since the method for the presence of frequency and the time of the third "modulation signal" set has been described using FIG. 4 above, the description will be omitted.

TRP_1#1_k of 1311_k corresponds to TRP #1_k of 601_k in FIGS. 6B1, 6B2, and 6B3. (k is an integer of 1 or greater) As described in Embodiment 1, TRP_1#1_k of 1311_k may include the first antenna module and/or the second antenna module or may include the antenna port as the first antenna module and/or the second antenna module.

TRP_1#2_i of 1312_i corresponds to TRP #2_i of 602_i in "FIGS. 6B1, 6B2, and 6B3". (i is an integer of 1 or greater) As described in Embodiment 1, TRP_1#2_i of 1312_i may include the first antenna module and/or the second antenna module or may include the antenna port as the first antenna module and/or the second antenna module.

TRP_1#1_k of 1311_k transmits the transmission signal group by using the first antenna module. Further, TRP_1#1_k of 1311_k may transmit the transmission signal group by using the second antenna module. The details of the operation of TRP_1#1_k of 1311_k have already been described as the operation of TRP #1_k of 601_k in "FIGS. 6B1, 6B2, and 6B3," so that the description will be omitted.

TRP_1#2_i of 1312_i transmits the transmission signal group by using the second antenna module. Here, i is an integer of 1 or greater. The details of the operation of TRP_1#2_i of 1312_i have already been described as the operation of TRP #2_i of 602_i in "FIGS. 6B1, 6B2, and 6B3", so that the description will be omitted.

""TRP_2#1_1 of 1321_1, ..., TRP_2#1_X2 of 1321_X2" and "TRP_2#2_1 of 1322_1, ..., TRP_2#2_Y2 of 1322_Y2" in FIGS. 13F1, 13F2, and 13F3" are referred to as a fourth TRP set. The fourth TRP set plays a role of ""TRP #1_1 of 601_1, ..., TRP #1_X of 601_X" and "TRP #2_1 of 602_1, ..., TRP #2_Y of 602_Y" in FIGS. 6B1, 6B2, and 6B3. Here, X2 is "an integer of 1 or greater or an integer of 2 or greater", and Y2 is an integer of 1 or greater or an integer of 2 or greater. Therefore, the fourth "modulation signal" set (modulation signal bu of 103A_u) is transmitted by the fourth TRP set of ""TRP_2#1_1 of 1321_1, ..., TRP_2#1_X2 of 1321_X2" and "TRP_2#2_1 of 1322_1, ..., TRP_2#2_Y2 of 1322_Y2". Since the method for the presence of frequency and the time of the fourth "modulation signal" set has been described using FIG. 4 above, the description will be omitted.

TRP_2#1_k of 1321_k corresponds to TRP #1_k of 601_k in FIGS. 6B1, 6B2, and 6B3. (k is an integer of 1 or greater) As described in Embodiment 1, TRP_2#1_k of 1321_k may include the first antenna module and/or the second antenna module or may include the antenna port as the first antenna module and/or the second antenna module.

TRP_2#2_i of 1322_i corresponds to TRP #2_i of 602_i in FIGS. 6B1, 6B2, and 6B3. (i is an integer of 1 or greater) As described in Embodiment 1, TRP_2#2_i of 1322_i may include the first antenna module and/or the second antenna module, or may include the antenna port as the first antenna module and/or the second antenna module.

TRP_2#1_k of 1321_k transmits the transmission signal group by using the first antenna module. Further, TRP_#2_k of 1321_k may transmit the transmission signal group by using the second antenna module. The details of the operation of TRP_2#1_k of 1321_k have already been described as the operation of TRP #1_k of 601_k in "FIGS. 6B1, 6B2, and 6B3", so that the description will be omitted.

TRP_2#2_i of 1322_i transmits the transmission signal group by using the second antenna module. Here, i is an integer of 1 or greater. The details of the operation of TRP_2#2_i of 1322_i have already been described as the operation of TRP #2_i of 602_i in "FIGS. 6B1, 6B2, and 6B3", so that the description will be omitted.

FIGS. 13F1, 13F2, and 13F3 are examples in which the TRP set transmits the transmission signal to the terminal, and can be examples of downlink multiple TRPs.

The third TRP set of ""TRP #1_1 of 1311_1, ..., TRP_1#1_X1 of 1311_X1" and "TRP_1#2_1 of 1312_1, ..., TRP_1#2_Y1 of 1312_Y1" may be communicable by radio as illustrated in FIG. 13F1.

The fourth TRP set of ""TRP_2#1_1 of 1321_1, ..., TRP_2#1_X2 of 1321_X2" and "TRP_2#2_1 of 1322_1, ..., TRP_2#2_Y2 of 1322_Y2" may be communicable by radio as illustrated in FIG. 13F1.

The third TRP set of ""TRP_1#1_1 of 1311_1, ..., TRP_1#1_X1 of 1311_X1" and "TRP_1#2_1 of 1312_1, ..., TRP_1#2_Y1 of 1312_Y1" may be communicable by radio as illustrated in FIG. 13F2.

The fourth TRP set of ""TRP_2#1_1 of 1321_1, ..., TRP_2#1_X2 of 1321_X2" and "TRP_2#2_1 of 1322_1, ..., TRP_2#2_Y2 of 1322_Y2" may be communicable by radio as illustrated in FIG. 13F2.

The third TRP set of ""TRP_1#1_1 of 1311_1, ..., TRP_1#1_X1 of 1311_X1" and "TRP_1#2_1 of 1312_1, ..., TRP_1#2_Y1 of 1312_Y1" may be communicable via apparatus 1303 as illustrated in FIG. 13F3.

The fourth TRP set of ""TRP_2#1_1 of 1321_1, ..., TRP_2#1_X2 of 1321_X2" and "TRP_2#2_1 of 1322_1, ..., TRP_2#2_Y2 of 1322_Y2" may be communicable via apparatus 1303 as illustrated in FIG. 13F3.

Apparatus 1303 may have, for example, the configuration of FIG. 13B.

As illustrated in FIG. 13B, apparatus 1303 includes third TRP set transmission processor 1380_1 (transmission processor for third TRP set) and a fourth TRP set transmission processor 1380_2 (transmission processor for fourth TRP set).

Third TRP set transmission processor 1380_1 has the configurations of FIGS. 9A and 9B. Therefore, third TRP set transmission processor 1380_1 receives third TRP set transmission data 1381_1 (e.g., transmission data 101A_u and transmission data 101a) (transmission data for third TRP set) and control signal 1383, and outputs a third TRP set modulation signal (group) (e.g., modulation signal bu of 103A_u) 1382_1 (modulation signal for third TRP set).

Fourth TRP set transmission processor 1380_2 has the configurations of FIGS. 9A and 9B. Therefore, fourth TRP set transmission processor 1380_2 receives fourth TRP set transmission data 1381_2 (e.g., transmission data 101A_u and transmission data 101a) (transmission data for fourth TRP set) and control signal 1383, and outputs a fourth TRP set modulation signal (group) (e.g., modulation signal bu of 103A_u) 1382_2 (modulation signal for fourth TRP set).

Control signal 1383 is a signal for controlling a relationship between "frequency and time at which the third TRP set modulation signal 1382_1 is present" and "frequency and time at which the fourth TRP set modulation signal 1382_2 is present".

In a case of FIGS. 13F1 and 13F2, the third TRP set modulation signal (group) (e.g., modulation signal bu of 103A_u) 1382_1 is generated by ""TRP_1#1_1 of 1311_1, ..., TRP_1#1_X1 of 1311_X1" and "TRP_1#2_1 of 1312_1, ..., TRP_1#2_Y1 of 1312_Y1"", and the fourth TRP set modulation signal (group) (e.g., modulation signal bu of 103A_u) 1382_2 is generated by ""TRP_2#1_1 of 1321_1, ..., TRP_2#1_X2 of 1321_X2" and "TRP_2#2_1 of 1322_1, ..., TRP_2#2_Y2 of 1322_Y2"".

The one or more TRPs in the third TRP set and/or the one or more TRPs in the fourth TRP set of FIGS. 13F1, 13F2, and 13F3 may include a portion corresponding to the configuration of FIG. 13B. The TRP including the portion corresponding to the configuration of FIG. 13B transmits "third TRP set modulation signal (group) (e.g., modulation signal bu of 103A_u) 1382_1 and fourth TRP set modulation signal (group) (e.g., modulation signal bu of 103A_u) 1382_2" to "TRP constituting first TRP set and TRP constituting second TRP set".

The third "modulation signal" set (modulation signal bu of 103A_u) transmitted by the third TRP set of ""TRP_1#1_1 of 1311_1, ..., TRP_1#1_X1 of 1311_X1" and "TRP_1#2_1 of 1312_1, ..., TRP_1#2_Y1 of 1312_Y1" is referred to as a "third TRP set modulation signal (group)".

The fourth "modulation signal" set (modulation signal bu of 103A_u) transmitted by the fourth TRP set of ""TRP_2#1_1 of 1321_1, ..., TRP_2#1_X2 of 1321_X2" and "TRP_2#2_1 of 1322_1, ..., TRP_2#2_Y2 of 1322_Y2" is referred to as a "fourth TRP set modulation signal (group)".

In this case, FIGS. 13G1, 13G2, 13G3, and 13G4 illustrate a mapping example in a time-frequency axis in a case of transmitting the "third TRP set modulation signal (group)" and the "fourth TRP set modulation signal (group)" by using a spatial division multiplexing (SDM) method (e.g., fully overlapping, partially-overlapping, and the like). Here, in FIGS. 13G1, 13G2, 13G3, and 13G4, the horizontal axis is time and the vertical axis is frequency.

SDM Example 2-1:

It is assumed that the "third TRP set modulation signal (group) 1382_1" is present at frequency GG1 and time G1 as illustrated in FIG. 13G1. (It is assumed that the transmission signal (group) transmitted by the TRP constituting the third TRP set is present at frequency GG1 and time G1.) In this case, it is assumed that the "fourth TRP set modulation signal (group) 1382_2" is present at frequency GG1 and time G1 as illustrated in FIG. 13G1. (It is assumed that the transmission signal (group) transmitted by the TRP constituting the fourth TRP set is present at frequency GG1 and time G1.)

SDM Example 2-2:

It is assumed that the "third TRP set modulation signal (group) 1382_1" is present at frequency GG1 and time G1 as illustrated in FIG. 13G1. (It is assumed that the transmission signal (group) transmitted by the TRP constituting the third TRP set is present at frequency GG1 and time G1.) In this case, it is assumed that the "fourth TRP set modulation signal (group) 1382_2" is present at a part of frequency GG1 and time G1 as illustrated in FIG. 13G2. (It is assumed that the transmission signal (group) transmitted by the TRP constituting the fourth TRP set is present at a part of frequency GG1 and time G1.)

SDM Example 2-3:

It is assumed that the "third TRP set modulation signal (group) 1382_1" is present at frequency GG1 and time G1 as illustrated in FIG. 13G1. (It is assumed that the transmission signal (group) transmitted by the TRP constituting the third TRP set is present at frequency GG1 and time G1.) In this case, it is assumed that the "fourth TRP set modulation signal (group) 1382_2" is present at frequency GG1 and a part of time G1 as illustrated in FIG.

13G3. (It is assumed that the transmission signal (group) transmitted by the TRP constituting the fourth TRP set is present at frequency GG1 and a part of time G1.)

SDM Example 2-4:

It is assumed that the "third TRP set modulation signal (group) 1382_1" is present at frequency GG1 and time G1 as illustrated in FIG. 13G1. (It is assumed that the transmission signal (group) transmitted by the TRP constituting the third TRP set is present at frequency GG1 and time G1.) In this case, it is assumed that the "fourth TRP set modulation signal (group) 1382_2" is present at a part of frequency GG1 and a part of time G1 as illustrated in FIG. 13G4. (It is assumed that the transmission signal (group) transmitted by the TRP constituting the fourth TRP set is present at a part of frequency GG1 and a part of time G1.)

SDM Example 2-5:

It is assumed that the "third TRP set modulation signal (group) 1382_1" is present at frequency GG1 and time G1 as illustrated in FIG. 13G1. (It is assumed that the transmission signal (group) transmitted by the TRP constituting the third TRP set is present at frequency GG1 and time G1.) In this case, it is assumed that frequency and time used by the "fourth TRP set modulation signal (group) 1382_2" overlap with a part of frequency GG1 and/or a part of time G1. (It is assumed that frequency and time used by the transmission signal (group) transmitted by the TRP constituting the fourth TRP set overlap with a part of frequency GG1 and/or a part of time G1.)

Further, the "third TRP set modulation signal (group)" and the "fourth TRP set modulation signal (group)" may be transmitted by using a time division multiplexing (TDM) method (e.g., tdmScheme, non-overlapping, and the like). FIG. 13H1 and FIG. 13H2 illustrate a mapping example in a time-frequency axis in this case. Here, in FIGS. 13H1 and 13H2, the horizontal axis is time and the vertical axis is frequency.

TDM Example 2-1:

It is assumed that the "third TRP set modulation signal (group) 1382_1" is present at frequency HH1 and time H1 as illustrated in FIG. 13H1. (It is assumed that the transmission signal (group) transmitted by the TRP constituting the third TRP set is present at frequency HH1 and time H1.) In this case, it is assumed that the "fourth TRP set modulation signal (group) 1382_2" is present at frequency HH1 and time H2 as illustrated in FIG. 13H1. (It is assumed that the transmission signal (group) transmitted by the TRP constituting the fourth TRP set is present at frequency HH1 and time H2.)

TDM Example 2-2:

It is assumed that the "third TRP set modulation signal (group) 1382_1" is present at frequency HH1 and time H1 as illustrated in FIG. 13H2. (It is assumed that the transmission signal (group) transmitted by the TRP constituting the third TRP set is present at frequency HH1 and time H1.) In this case, it is assumed that the "fourth TRP set modulation signal (group) 1382_2" is present at a part of frequency HH1 and time H2 as illustrated in FIG. 13H2. (It is assumed that the transmission signal (group) transmitted by the TRP constituting the fourth TRP set is present at frequency HH1 and time H2.)

The "third TRP set modulation signal (group)" and the "fourth TRP set modulation signal (group)" may be transmitted by using a frequency division multiplexing (FDM) method (e.g., fdmScheme, non-overlapping, and the like). FIG. 13I1, FIG. 13I2, and FIG. 13I3 illustrate a mapping example in a time-frequency axis in this case. Here, in FIGS. 13I1, 13I2, and 13I3, the horizontal axis is time and the vertical axis is frequency.

FDM Example 2-1:

It is assumed that the "third TRP set modulation signal (group) 1382_1" is present at frequency II_1 and time I_1 as illustrated in FIG. 13I1. (It is assumed that the transmission signal (group) transmitted by the TRP constituting the third TRP set is present at frequency II_1 and time I_1.) In this case, it is assumed that the "fourth TRP set modulation signal (group) 1382_2" is present at frequency II_2 and time I_1 as illustrated in FIG. 13I1. (It is assumed that the transmission signal (group) transmitted by the TRP constituting the fourth TRP set is present at frequency II_2 and time I_1.)

FDM Example 2-2:

It is assumed that the "third TRP set modulation signal (group) 1382_1" is present at frequency II_1 and time I_1 as illustrated in FIG. 13I2. (It is assumed that the transmission signal (group) transmitted by the TRP constituting the third TRP set is present at frequency II_1 and time I_1.) In this case, it is assumed that the "fourth TRP set modulation signal (group) 1382_2" is present at frequency II_2 and a part of time I_1 as illustrated in FIG. 13I2. (It is assumed that the transmission signal (group) transmitted by the TRP constituting the fourth TRP set is present at frequency II_2 and a part of time I_1.)

FDM Example 2-3:

It is assumed that the "third TRP set modulation signal (group) 1382_1" is present at frequency II_1 and time I_1 as illustrated in FIG. 13I3. (It is assumed that the transmission signal (group) transmitted by the TRP constituting the third TRP set is present at frequency II_1 and time I_1.) In this case, it is assumed that the "fourth TRP set modulation signal (group) 1382_2" is present at frequencyII_2 and timeI_2 as illustrated in FIG. 13I3. (It is assumed that the transmission signal (group) transmitted by the TRP constituting the fourth TRP set is present at frequencyII_2 and timeI_2.)

FDM Example 2-4:

It is assumed that the "third TRP set modulation signal (group) 1382_1" is present at frequency II_1 and time I_1. (It is assumed that the transmission signal (group) transmitted by the TRP constituting the third TRP set is present at frequency II_1 and time I_1.) In this case, it is assumed that the "fourth TRP set modulation signal (group) 1382_2" is present at frequencyII_2 and timeI_2. (It is assumed that the transmission signal (group) transmitted by the TRP constituting the fourth TRP set is present at frequencyII_2 and timeI_2.) Then, time I_1 and time I_2 partially overlap with each other.

In this way, in the terminal that is the communication counterpart of the base station, an effect of improving the reception quality of the data can be obtained, and as a result, an effect of improving the transmission efficiency of the data of the system can be obtained. Further, since the TRP set transmits a set of a plurality of modulation signals and the terminal can receive the set of a plurality of modulation signals, an effect of improving the transmission efficiency of the data and improving the reception quality of the data can be obtained.

Note that the "third TRP set modulation signal (group)" that is the third "modulation signal" set and the "fourth TRP set modulation signal (group)" that is the fourth "modulation signal" set in the above description may include the same data. Therefore, repetition may be applied to the "third TRP set modulation signal (group)" that is the third "modulation signal" set and the "fourth TRP set modulation signal (group)" that is the fourth "modulation signal" set.

Further, the mapping of the "third TRP set modulation signal (group)" that is the third "modulation signal" set and the "fourth TRP set modulation signal (group)" that is the fourth "modulation signal" set in the time-frequency axis in a case of applying the SDM method, the TDM method, and the FDM method is not limited to the examples of FIGS. 13G1, 13G2, 13G3, 13G4, 13H1, 13H2, 13I1, 13I2, and 13I3.

The "transmission signal set including the "third TRP set modulation signal (group)" that is the third "modulation signal" set" and the "transmission signal set including the "fourth TRP set modulation signal (group)" that is the fourth "modulation signal" set" may be in a (full) coherent relationship, a partial coherent relationship, or a non-coherent relationship.

The TRP set including a plurality of TRPs may constitute a base station, a gNB, a relay, or the like.

As described above, in a case where the TRP set including a plurality of TRPs transmits a plurality of modulation signal sets to the terminal, the plurality of TRP sets may select any of "SDM method, TDM method, FDM method" described above, and the plurality of TRP sets may transmit the plurality of modulation signal sets of the selected method.

Note that the TRP may perform control of the time and frequency positions of the plurality of modulation signal sets of each method, or apparatus 1303 may perform the control. For example, the control may be performed by the base station or by an apparatus connected to the base station.

The first TRP set in FIGS. 13A1, 13A2, and 13A3 may be configured by one apparatus (e.g., base station, gNB, or the like) or a plurality of apparatuses.

One apparatus (e.g., base station, gNB, or the like) or a plurality of apparatuses may include the first TRP set in FIGS. 13A1, 13A2, and 13A3.

The second TRP set in FIGS. 13A1, 13A2, and 13A3 may be configured by one apparatus (e.g., base station, gNB, or the like) or a plurality of apparatuses.

One apparatus (e.g., base station, gNB, or the like) or a plurality of apparatuses may include the second TRP set in FIGS. 13A1, 13A2, and 13A3.

The "first TRP set and second TRP set" in FIGS. 13A1, 13A2, and 13A3 may be configured by one apparatus (e.g., base station, gNB, or the like) or a plurality of apparatuses.

One apparatus (e.g., base station, gNB, or the like) or a plurality of apparatuses may include "first TRP set and second TRP set" in FIGS. 13A1, 13A2, and 13A3.

The third TRP set in FIGS. 13F1, 13F2, and 13F3 may be configured by one apparatus (e.g., base station, gNB, or the like) or a plurality of apparatuses.

One apparatus (e.g., base station, gNB, or the like) or a plurality of apparatuses may include the third TRP set in FIGS. 13F1, 13F2, and 13F3.

The fourth TRP set in FIGS. 13F1, 13F2, and 13F3 may be configured by one apparatus (e.g., base station, gNB, or the like) or a plurality of apparatuses.

One apparatus (e.g., base station, gNB, or the like) or a plurality of apparatuses may include the fourth TRP set in FIGS. 13F1, 13F2, and 13F3.

The "third TRP set and fourth TRP set" in FIGS. 13F1, 13F2, and 13F3 may be configured by one apparatus (e.g., base station, gNB, or the like) or a plurality of apparatuses.

One apparatus (e.g., base station, gNB, or the like) or a plurality of apparatuses may include "third TRP set and fourth TRP set" in FIGS. 13F1, 13F2, and 13F3.

In the present embodiment, the example in which the set of TRPs transmits one "modulation signal" set using "FIG. 6A1, FIG. 6A2, FIG. 6A3" and the example in which the set of TRPs transmits two "modulation signal" sets using "FIGS. 13A1, 13A2,13A3" and "FIGS. 13F1, 13F2, 13F3" have been described, but the same applies to the case where the set of TRPs transmits three or more "modulation signal" sets.

The "first antenna module v of 106A_1_v and second antenna module #w of 106A_2_w" included in the TRP may be used as the reception antenna. In this case, the TRP may receive the modulation signal transmitted by the terminal that is the communication counterpart.

Further, the antenna port included in the TRP may be used as the reception antenna. In this case, the TRP may receive the modulation signal transmitted by the terminal that is the communication counterpart.

The method of configuring the apparatus such as the TRP and the terminal described in the present embodiment, and the communication method (e.g., the configuration of the antenna module, the number of antenna modules, the configuration of the antenna port, the number of antenna ports, the precoding method, the frame configuration, the number of transmission signals, the number of received signals, and the like) to be implemented are considered as the examples described in the present specification, but the present invention is not limited to these examples.

The terminal may use the transmission method using the antenna module described in the present embodiment, or the terminal may have the configuration of the apparatus described in the present embodiment.

Further, the TRP may transmit the modulation signal by using the antenna port, but in this case, a unique signal is assigned as a demodulation reference signal (DMRS) or the like, which is a reference signal (RS) for each antenna port in order to notify the communication counterpart of the antenna port number used (in order for the communication counterpart to identify the antenna port used for transmitting the modulation signal).

Then, the TRP transmits the (unique) RS corresponding to the antenna port used for transmitting the modulation signal together with the modulation signal.

In this case, a unique signal may be assigned to an RS for making it possible to identify "whether an antenna module is used," "whether the first antenna module is used," and "whether the second antenna module is used" by the RS.

For example, the unique signal in a case of transmission using the antenna module may be present, and the TRP transmits the signal including the unique signal in a case of transmission using the antenna module.

The unique signal in a case of transmission using the first antenna module may be present, and the TRP transmits the signal including the unique signal in a case of transmission using the antenna module.

The unique signal in a case of transmission using the second antenna module may be present. The TRP transmits the signal including the unique signal in a case of transmission using the antenna module.

Then, the communication counterpart of the TRP can know the type of TRP (e.g., TRP using the first antenna module, TRP using the second antenna module, and TRP using the first antenna module and the second antenna module) by obtaining the modulation signal transmitted by the TRP. As a result, the communication counterpart of the TRP can obtain an effect of easily selecting a suitable method as the transmission method of the modulation signal to be transmitted.

(Embodiment 3)

In Embodiment 2, the downlink in which the TRP transmits the modulation signal to the terminal has been described. In Embodiment 3, the uplink in which the terminal transmits the modulation signal to the TRP will be described.

FIG. 14A1 is a configuration example of a communication apparatus (transmission/reception apparatus) according to the present embodiment, for example, a terminal.

For example, antenna 1431A receives a signal transmitted by the base station that is a communication counterpart, to obtain received signal 1432A. Reception processor 1433A receives received signal 1432A, performs processing for reception, and outputs reception status information 1435A and reception data 1434A.

Controller 1491A receives control information 1490A, reception data 1434A, and reception status information 1435A, and outputs control signal 1492A including "control information on a transmission method, control information on a precoding method, control information on an antenna part, and the like".

Transmission processor ♭1 of 1402A_1 receives transmission data 1401A_1 and control signal 1492A, performs processing such as error correction coding and mapping based on information such as a modulation scheme and an error correction coding method (error correction code, encoding rate, and the like) included in control signal 1492A, generates a modulation signal, and outputs modulation signal ♭1 of 1403A_1.

Therefore, transmission processor bu of 1402A_u receives transmission data 1401A_u and control signal 1492A, performs processing such as error correction coding and mapping (modulation based on a modulation scheme) based on information such as a modulation scheme and an error correction coding method (error correction code, encoding rate, and the like) included in control signal 1492A, generates a modulation signal, and outputs modulation signal bu of 1403A_u. Here, u is an integer of 1 or greater and P or less. In this case, P is an integer of 1 or greater or an integer of 2 or greater. Modulation signal bu of 1403A_u can also be considered as a signal after mapping or a baseband signal.

Transmission processor bu of 1402A_u (u is an integer of 1 or greater and P or less) may have a configuration as in FIG. 14A2. In FIG. 14A2, the same reference numerals are assigned to components that operate in the same manner as in FIG. 14A1.

Transmission processor 1402A in FIG. 14A2 receives transmission data 1401A and control signal 1492A, performs processing such as error correction coding and mapping (modulation based on a modulation scheme) based on information such as a modulation scheme and an error correction coding method (error correction code, encoding rate, and the like) included in control signal 1492A, generates a modulation signal, and outputs modulation signal bu of 1403A_u. Here, u is an integer of 1 or greater and P or less. In this case, P is an integer of 1 or greater or an integer of 2 or greater. Modulation signal bu of 1403A_u can also be considered as a signal after mapping or a baseband signal.

Further, transmission processor bu of 1402A_u (u is an integer of 1 or greater and P or less) may have a configuration as in FIG. 14A3. In FIG. 14A3, the same reference numerals are assigned to components that operate in the same manner as in FIG. 14A2. In FIG. 14A3, a part of modulation signal bu of 1403A_u is set as a first "modulation signal" set destined to the first TRP set, and a part of modulation signal bu of 1403A_u is set as a second "modulation signal" set destined to the second TRP set.

As in FIG. 14A3, in FIG. 14A1, a part of modulation signal bu of 1403A_u may be set as a first "modulation signal" set destined to the first TRP set, and a part of modulation signal bu of 1403A_u may be set as a second "modulation signal" set destined to the second TRP set.

Transmission processor bu of 1402A_u (u is an integer of 1 or greater and P or less) may have a configuration as in FIG. 14A4. In FIG. 14A4, the same reference numerals are assigned to components that operate in the same manner as in FIG. 14A2. In FIG. 14A4, a part of modulation signal bu of 1403A_u is set as a third "modulation signal" set destined to the third TRP set, and a part of modulation signal bu of 1403A_u is set as a fourth "modulation signal" set destined to the fourth TRP set.

As in FIG. 14A3, in FIG. 14A1, a part of modulation signal bu of 1403A_u may be set as a third "modulation signal" set destined to the third TRP set, and a part of modulation signal bu of 1403A_u may be set as a fourth "modulation signal" set destined to the fourth TRP set.

The precoder 1404A of FIG. 14A1 receives "modulation signal $b1$ of 1403A_1, modulation signal $b2$ of 1403A_2, ..., modulation signal $bP$ of 1403A_P" and control signal 1492A, performs precoding based on information on precoding included in control signal 1492A, and outputs "signal group 1 after precoding of 1405A_1, signal group 2 after precoding of 1405A_2, ..., signal group Q after precoding of 1405A_Q".

Note that none of "signal group 1 after precoding of 1405A_1, signal group 2 after precoding of 1405A_2, ..., signal group Q after precoding of 1405A_Q" may be present.

Radio processor 1 of 1411A_1 receives signal group 1 after precoding of 1405A_1 and control signal 1492A, performs processing such as frequency conversion on signal group 1 after precoding of 1405A_1, generates and outputs transmission signal group 1 of 1412A_1.

Therefore, radio processor v of 1411A_v receives signal group v after precoding of 1405A_v and control signal 1492A, performs processing such as frequency conversion on signal group v after precoding of 1405A_v, generates and outputs transmission signal group v of 1412A_v. Here, v is an integer of 1 or greater and Q or less, and Q is an integer of 1 or greater or an integer of 2 or greater.

Antenna part 1 of 1406A_1 receives transmission signal group 1 of 1412A_1 and control signal 1492A, and outputs transmission signal group 1 of 1412A_1 as radio waves. Antenna part 1 of 1406A_1 may perform beam forming (directivity control) based on control signal 1492A.

Therefore, antenna part v of 1406A_v receives transmission signal group v of 1412A_v and control signal 1492A, and outputs transmission signal group v of 1412A_v as radio waves. Here, v is an integer of 1 or greater and Q or less, and Q is an integer of 1 or greater or an integer of 2 or greater. Antenna part v of 1406A_v may perform beam forming (directivity control) based on control signal 1492A.

Note that a configuration may be adopted in which antenna part v of 1406A_v that is a transmission antenna and the "antenna 1431A" that is a reception antenna are shared, and the configuration is referred to as a "transmission/reception antenna module" and a "transmission/reception antenna".

FIG. 14B is a configuration example of a communication apparatus (transmission/reception apparatus) according to the present embodiment, for example, a terminal, different from FIG. 14A1. In FIG. 14B, the same reference numerals are assigned to components that operate in the same manner as in FIG. 14A1, and since the description has already been made, a part of the description will be omitted.

For example, antenna 1431A receives a signal transmitted by the base station that is a communication counterpart, to obtain received signal 1432A. Reception processor 1433A receives received signal 1432A, performs processing for reception, and outputs reception status information 1435A and reception data 1434A.

Controller 1491A receives control information 1490A, reception data 1434A, and reception status information 1435A, and outputs control signal 1492A including "control information on a transmission method, control information on a precoding method, control information on an antenna part, and the like".

Transmission processor $b1$ of 1402A_1 receives transmission data 1401A_1 and control signal 1492A, performs processing such as error correction coding and mapping (modulation based on a modulation scheme) based on information such as a modulation scheme and an error correction coding method (error correction code, encoding rate, and the like) included in control signal 1492A, generates a modulation signal, and outputs modulation signal ♭1 of 1403A_1.

Therefore, transmission processor bu of 1402A_u receives transmission data 1401A_u and control signal 1492A, performs processing such as error correction coding and mapping (modulation based on a modulation scheme) based on information such as a modulation scheme and an error correction coding method (error correction code, encoding rate, and the like) included in control signal 1492A, generates a modulation signal, and outputs modulation signal bu of 1403A_u. Here, u is an integer of 1 or greater and P or less. In this case, P is an integer of 1 or greater or an integer of 2 or greater. Modulation signal bu of 1403A_u can also be considered as a signal after mapping or a baseband signal.

Transmission processor bu of 1402A_u (u is an integer of 1 or greater and P or less) may have a configuration as in FIG. 14A2. In FIG. 14A2, the same reference numerals are assigned to components that operate in the same manner as in FIG. 14A1.

Transmission processor 1402A in FIG. 14A2 receives transmission data 1401A and control signal 1492A, performs processing such as error correction coding and mapping (modulation based on a modulation scheme) based on information such as a modulation scheme and an error correction coding method (error correction code, encoding rate, and the like) included in control signal 1492A, generates a modulation signal, and outputs modulation signal bu of 1403A_u. Here, u is an integer of 1 or greater and P or less. In this case, P is an integer of 1 or greater or an integer of 2 or greater. Modulation signal bu of 1403A_u can also be considered as a signal after mapping or a baseband signal.

Further, transmission processor bu of 1402A_u (u is an integer of 1 or greater and P or less) may have a configuration as in FIG. 14A3. In FIG. 14A3, the same reference numerals are assigned to components that operate in the same manner as in FIG. 14A2. In FIG. 14A3, a part of modulation signal bu of 1403A_u is set as a first "modulation signal" set destined to the first TRP set, and a part of modulation signal bu of 1403A_u is set as a second "modulation signal" set destined to the second TRP set.

As in FIG. 14A3, in FIG. 14B, a part (or all) of modulation signal bu of 1403A_u may be set as a first "modulation signal" set destined to the first TRP set, and a part of modulation signal bu of 1403A_u may be set as a second "modulation signal" set (or all) destined to the second TRP set.

Transmission processor bu of 1402A_u (u is an integer of 1 or greater and P or less) may have a configuration as in FIG. 14A4. In FIG. 14A4, the same reference numerals are assigned to components that operate in the same manner as in FIG. 14A2. In FIG. 14A4, a part of modulation signal bu of 1403A_u is set as a third "modulation signal" set destined to the third TRP set, and a part of modulation signal bu of 1403A_u is set as a fourth "modulation signal" set destined to the fourth TRP set.

As in FIG. 14A3, in FIG. 14B, a part of modulation signal bu of 1403A_u may be set as a third "modulation signal" set destined to the third TRP set, and a part of modulation signal bu of 1403A_u may be set as a fourth "modulation signal" set destined to the fourth TRP set.

Signal generator 1430B of FIG. 14B receives "modulation signal ♭1 of 1403A_1, modulation signal ♭2 of 1403A_2, ..., modulation signal ♭P of 1403A_P" and control signal 1492A, generates a signal group from "modulation signal ♭1 of 1403A_1, modulation signal ♭2 of 1403A_2, ..., modulation signal bP of 1403A_P" based on control signal 1492A, and outputs "signal group 1 of 1431B_1, signal group 2 of 1431B_2, ..., signal group Q of 1431B_Q".

Note that none of "signal group 1 of 1431B_1, signal group 2 of 1431B_2, ..., signal group Q of 1431B_Q" may be present.

The precoder 1 of 1432B_1 receives signal group 1 of 1431B_1 and control signal 1492A, performs precoding on signal group 1 of 1431B_1 based on information on precoding included in control signal 1492A, and outputs signal group 1 after precoding of 1433B_1.

Therefore, precoder v of 1432B_v receives signal group v of 1431B_v and control signal 1492A, performs precoding on signal group v of 1431B_v based on information on precoding included in control signal 1492A, and outputs signal group v after precoding of 1433B_v. Here, v is an integer of 1 or greater and Q or less, and Q is an integer of 1 or greater or an integer of 2 or greater.

Radio processor 1 of 1411A_1 receives signal group 1 after precoding of 1433B_1 and control signal 1492A, performs processing such as frequency conversion on signal group 1 after precoding of 1433B_1, generates and outputs transmission signal group 1 of 1412A_1.

Therefore, radio processor v of 1411A_v receives signal group v after precoding of 1433B_v and control signal 1492A, performs processing such as frequency conversion on signal group v after precoding of 1433B_v, generates and outputs transmission signal group v of 1412A_v. Here, v is an integer of 1 or greater and Q or less, and Q is an integer of 1 or greater or an integer of 2 or greater.

Antenna part 1 of 1406A_1 receives transmission signal group 1 of 1412A_1 and control signal 1492A, and outputs transmission signal group 1 of 1412A_1 as radio waves. Antenna part 1 of 1406A_1 may perform beam forming (directivity control) based on control signal 1492A.

Therefore, antenna part v of 1406A_v receives transmission signal group v of 1412A_v and control signal 1492A, and outputs transmission signal group v of 1412A_v as radio waves. Here, v is an integer of 1 or greater and Q or less, and Q is an integer of 1 or greater or an integer of 2 or greater. Antenna part v of 1406A_v may perform beam forming (directivity control) based on control signal 1492A.

Note that a configuration may be adopted in which antenna part v of 1406A_v that is a transmission antenna and the "antenna 1431A" that is a reception antenna are shared, and the configuration is referred to as a "transmission/reception antenna module" and a "transmission/reception antenna".

Antenna part v of 1406A_v of FIG. 14A1 and FIG. 14B includes one or greater antennas or two or more antennas. In this case, each antenna constituting antenna part v of 1406A_v may have a configuration as in FIG. 1C1 and may perform beam forming (directivity control). However, the configuration of each antenna constituting antenna part v of 1406A_v is not limited thereto, and for example, each antenna constituting antenna part v of 1406A_v may be configured by one antenna.

FIG. 1C1 illustrates a configuration example of the antenna provided in antenna part v of 1406A_v of FIG. 14A1 and FIG. 14B. Here, v is an integer of 1 or greater and Q or less. However, the number of antennas constituting the antenna provided in antenna part v of 1406A_v is not limited to four, and may be one or more. Since the description of FIG. 1C1 has already been made, the description will be omitted.

Antenna part v of 1406A_v of FIG. 14A1 and FIG. 14B includes one or more antennas or two or more antennas. In this case, each antenna constituting antenna part v of 1406A_v may have a configuration as in FIG. 1C2 and can perform beam forming (directivity control).

FIG. 1C2 illustrates a configuration example of the antenna provided in antenna part v of 1406A_v of FIG. 14A1 and FIG. 14B. Here, v is an integer of 1 or greater and Q or less. Since the description of FIG. 1C2 has already been made, the description will be omitted.

Since the configurations of the transmitter and the receiver of the TRP that is the communication counterpart of the terminal have been described in Embodiment 1 and Embodiment 2, the detailed description will be omitted.

The TRP may have, for example, the configurations of FIGS. 1A1, 1B, 5A, 5C, 5E, 5G, 7A, 7B, 8A, 8B, 10A, 10B, 11A, 11B, 12A, and 12B, and may use the antenna modules and the antenna ports illustrated in these figures as the reception "antenna, antenna module, and antenna port". In this case, the TRP receives the transmission signal transmitted by the terminal by using these "antennas, antenna modules, and antenna ports".

Further, as another method, the TRP may include a reception "antenna, antenna module, and antenna port" separately, and the TRP may receive the transmission signal transmitted by the terminal by using the reception "antenna, antenna module, and antenna port".

The uplink in which the terminal transmits modulation signal to the TRP will be described.

FIG. 14C illustrates an example of a state of TRPs and a terminal. In FIG. 14C, the same reference numerals are assigned to the same components as in FIG. 13A1 and the like, and the description will be omitted for the portions that have already been described.

""TRP_1#1_1 of 1311_1" and "TRP_1#2_1 of 1312_1, ..., TRP_1#2_Y1 of 1312_Y1" are referred to as a first TRP set. Further, ""TRP_2#1_1 of 1321_1" and "TRP_2#2_1 of 1322_1, ..., TRP_2#2_Y2 of 1322_Y2" are referred to as a second TRP set.

As illustrated in FIG. 14C, terminal #1 of 1390_1 transmits a first "modulation signal" set destined to the first TRP set and a second "modulation signal" set destined to the second TRP set. Therefore, FIG. 14C is an example in which the terminal transmits the transmission signal to a plurality of TRP sets, and can be an example of uplink multiple TRPs.

Note that terminal #1 of 1390_1 may perform "transmitting the first "modulation signal" set destined to the first TRP set to the first TRP set" or "transmitting the second "modulation signal" set destined to the second TRP set to the second TRP set".

Apparatus 1 of 1451_1 receives a "signal based on the signal received by TRP_1#1_1 of 131 1_1", a "signal based on the signal received by TRP_1#2_1 of 1312_1", ..., and a "signal based on the signal received by TRP_1#2_Y1 of 1312_Y1", performs processing such as demodulation and decoding of the error correction code, obtains data 1452_1 included in the first "modulation signal" set, and outputs data 1452_1.

Apparatus 2 of 1451_2 receives a "signal based on the signal received by TRP_2#1_1 of 1321_1", a "signal based on the signal received by TRP_2#2_1 of 1322_1", ..., and a "signal based on the signal received by TRP_2#2_Y2 of 1322_Y2", performs processing such as demodulation and decoding of the error correction code, obtains data 1452_2 included in the second "modulation signal" set, and outputs data 1452_2.

The first "modulation signal" set destined to the first TRP set transmitted by terminal #1 of 1390_1 of FIG. 14C includes any of modulation signals bu of 1403A_u. Further, the second "modulation signal" set destined to the second TRP set transmitted by terminal #1 of 1390_1 includes any of modulation signals bu of 1403A_u.

FIG. 15A1 illustrates a configuration example of a system including ""TRP_1#1_1 of 1311_1" and "TRP_1#2_1 of 1312_1, ..., TRP_1#2_Y1 of 1312_Y1", and apparatus 1 of 1451_1" in FIG. 14C.

"TRP_1#1_1 of 1311_1" includes, for example, antenna module group 1#1_1 of 1511A_1_1 and signal processor 1#1_1 of 1513A_1_1.

"TRP_1#2_1 of 1312_1" includes, for example, antenna module group 1#2_1 of 1521A_1_1 and signal processor 1#2_1 of 1523A_1_1.

Therefore, "TRP_1#2_n of 1312_n" includes, for example, antenna module group 1#2_n of 1521A_1_n and signal processor 1#2_n of 1523A_1_n. Here, n is an integer of 1 or greater and Y1 or less.

Apparatus 1 of 1451_1 includes, for example, signal processor 1530A_1 and controller 1541A_1.

Controller 1541A_1 receives signal 1540_1, and outputs control signal 1542A_1 including information such as information on the signal processing method.

In "TRP_1#1_1 of 1311_1", signal processor 1#1_1 of 1513A_1_1 receives received signal group 1512A_1_1 received by antenna module group 1#1_1 of 1511A_1_1 and control signal 1542A_1, determines an operation method based on control signal 1542A_1, performs, for example, processing such as frequency conversion, and outputs received signal group 1514A_1_1 after the signal processing.

In "TRP_1#2_1 of 1312_1", signal processor 1#2_1 of 1523A_1_1 receives received signal group 1522A_1_1 received by antenna module group 1#2_1 of 1521A_1_1 and control signal 1542A_1, determines an operation method based on control signal 1542A_1, performs, for example, processing such as frequency conversion, and outputs received signal group 1524A_1_1 after the signal processing.

Therefore, in "TRP_1#2_n of 1312_n", signal processor 1#2_n of 1523A_1_n receives received signal group 1522A_1_n received by antenna module group 1#2_n of 1521A_1_n and control signal 1542A_1, determines an operation method based on control signal 1542A_1, performs, for example, processing such as frequency conversion, and outputs received signal group 1524A_1_n after the signal processing.

In apparatus 1 of 1451_1, signal processor 1530A_1 receives control signal 1542A_1, received signal group 1514A_1_1 after the signal processing, and "received signal group 1524A_1_1 after the signal processing, ..., received signal group 1524A_1_Y1 after the signal processing", performs processing such as demodulation and error correction decoding on "received signal group 1514A_1_1 after the signal processing, and "received signal group 1524A_1_1 after the signal processing, ..., received signal group 1524A_1_Y1 after the signal processing" based on control signal 1542A_1, obtains and outputs reception data 1531A_1.

FIG. 15A2 illustrates a configuration example of a system including ""TRP_2#1_1 of 1321_1" and "TRP_2#2_1 of 1322_1, ..., TRP_2#2_Y2 of 1322_Y2", and the apparatus 2 of 1451_2" in FIG. 14C.

"TRP_2#1_1 of 1321_1" includes, for example, antenna module group 2#1_1 of 1511A_2_1 and signal processor 2#1_1 of 1513A_2_1.

"TRP_2#2_1 of 1322_1" includes, for example, antenna module group 2#2_1 of 1521A_2_1 and signal processor 2#2_1 of 1523A_2_1.

Therefore, "TRP_2#2_m of 1322_m" includes, for example, antenna module group 2#2_m of 1521A_2_m and signal processor 2#2_m of 1523A_2_m. Here, m is an integer of 1 or greater and Y2 or less.

Apparatus of 2 1451_2 includes, for example, signal processor 1530A_2 and controller 1541A_2.

Controller 1541A_2 receives signal 1540_2, and outputs control signal 1542A_2 including information such as information on the signal processing method.

In "TRP_2#1_1 of 1321_1", signal processor 2#1_1 of 1513A_2_1 receives received signal group 1512A_2_1 received by the antenna module group 2#1_1 of 1511A_2_1 and control signal 1542A_2, determines an operation method based on control signal 1542A_2, performs, for example, processing such as frequency conversion, and outputs received signal group 1514A_2_1 after the signal processing.

In "TRP_2#2_1 of 1322_1", signal processor 2#2_1 of 1523A_2_1 receives received signal group 1522A_2_1 received by the antenna module group 2#2_1 of 1521A_2_1 and control signal 1542A_2, determines an operation method based on control signal 1542A_2, performs, for example, processing such as frequency conversion, and outputs received signal group 1524A_2_1 after the signal processing.

Therefore, in "TRP_2#2_m of 1322_m", signal processor 2#2_m of 1523A_2_m receives received signal group 1522A_2_m received by the antenna module group 2#2_m of 1521A_2_m and control signal 1542A_2, determines an operation method based on control signal 1542A_2, performs, for example, processing such as frequency conversion, and outputs received signal group 1524A_2_m after the signal processing.

In apparatus 2 of 1451_2, signal processor 1530A_2 receives control signal 1542A_2, received signal group 1514A_2_1 after the signal processing, and "received signal group 1524A_2_1 after the signal processing, ..., received signal group 1524A_2_Y2 after the signal processing", performs processing such as demodulation and error correction decoding on "received signal group 1514A_2_1 after the signal processing, and "received signal group 1524A_2_1 after the signal processing, ..., received signal group 1524A_2_Y2 after the signal processing" based on control signal 1542A_2, obtains and outputs reception data 1531A_2.

FIG. 16 illustrates an example of a state of TRPs and a terminal different from FIG. 14C. In FIG. 16, the same reference numerals are assigned to the same components as in FIG. 13A1 and the like, and the description will be omitted for the portions that have already been described.

""TRP_1#1_1 of 1311_1" and "TRP_1#2_1 of 1312_1, ..., TRP_1#2_Y1 of 1312_Y1" are referred to as a first TRP set. Further, ""TRP_2#1_1 of 1321_1" and "TRP_2#2_1 of 1322_1, ..., TRP_2#2_Y2 of 1322_Y2" are referred to as a second TRP set.

As illustrated in FIG. 16, terminal #1 of 1390_1 transmits a first "modulation signal" set destined to the first TRP set and a second "modulation signal" set destined to the second TRP set. Therefore, FIG. 16 is an example in which the terminal transmits the transmission signal to the plurality of TRP sets, and can be an example of uplink multiple TRPs.

Note that terminal #1 of 1390_1 may perform "transmitting the first "modulation signal" set destined to the first TRP set to the first TRP set" or "transmitting the second "modulation signal" set destined to the second TRP set to the second TRP set".

TRP_1#1_1 of 1311_1 receives "signal 1612_1 based on the signal received by TRP_1#2_1 of 1312_1", ..., and "signal 1612_Y1 based on the signal received by TRP_1#2_Y1 of 1312_Y1", and TRP_1#1_1 of 1311_1 performs processing such as demodulation and decoding of the error correction code on "signal based on the signal received by TRP_1#1_1 of 1311_1" generated by itself and "signal 1612_1 based on the signal received by TRP_1#2_1 of 1312_1", ..., and "signal 1612_Y1 based on the signal received by TRP_1#2_Y1 of 1312_Y1", to obtain data 1611_1 included in the first "modulation signal" set, and outputs data 1611_1.

TRP_2#2_1 of 1321_1 receives "signal 1622_1 based on the signal received by TRP_2#2_1 of 1322_1", ..., and "signal 1622_Y2 based on the signal received by TRP_2#2_Y2 of 1322_Y2", and TRP_2#1_1 of 1321_1 performs processing such as demodulation and decoding of the error correction code on "signal based on the signal received by TRP_2#1_1 of 1321_1" generated by itself and "signal 1622_1 based on the signal received by TRP_2#2_1 of 1322_1", ..., and "signal 1622_Y2 based on the signal received by TRP_2#2_Y2 of 1322_Y2", to obtain data 1621_1 included in the second "modulation signal" set, and outputs data 1621_1.

The first "modulation signal" set destined to the first TRP set transmitted by terminal #1 of 1390_1 of FIG. 16 includes any of modulation signals ♭u of 1403A_u. Further, the second "modulation signal" set destined to the second TRP set transmitted by terminal #1 of 1390_1 includes any of modulation signals ♭u of 1403A_u.

FIG. 17A1 illustrates a configuration example of a system including ""TRP_1#1_1 of 1311_1" and "TRP_1#2_1 of 1312_1, ..., TRP_1#2_Y1 of 1312_Y1" in FIG. 16. In FIG. 17A1, the same reference numerals are assigned to the components that operate in the same manner as in FIG. 15A1, and a part of the description will be omitted.

"TRP_1#1_1 of 1311_1" includes, for example, antenna module group 1#1_1 of 1511A_1_1, signal processor 1#1_1 of 1513A_1_1, signal processor 1530A_1, and controller 1541A_1.

"TRP_1#2_1 of 1312_1" includes, for example, antenna module group 1#2_1 of 1521A_1_1 and signal processor 1#2_1 of 1523A_1_1.

Therefore, "TRP_1#2_n of 1312_n" includes, for example, antenna module group 1#2_n of 1521A_1_n and signal processor 1#2_n of 1523A_1_n. Here, n is an integer of 1 or greater and Y1 or less.

Since the operations of "controller 1541A_1", "signal processor 1530A_1", "antenna module group 1#1_1 of 1511A_1_1 and signal processor 1#1_1 of 1513A_1_1", and "antenna module group 1#2_n of 1521A_1_n and signal processor 1#2_n of 1523A_1_n" have been described using FIG. 15A1, the description will be omitted.

Note that, in FIGS. 16 and 17A1, it is assumed that the "signal processor 1530A_1 and controller 1541A_1" are provided in the "TRP_1#1_1 of 1311_1", but the present invention is not limited thereto, and the "signal processor 1530A_1 and controller 1541A_1" may be provided in the "TRP_1#2_n of 1312_n".

FIG. 17A2 illustrates a configuration example of a system including ""TRP_2#1_1 of 1321_1" and "TRP_2#2_1 of 1322_1, ..., TRP_2#2_Y2 of 1322_Y2" in FIG. 16. In FIG. 17A2, the same reference numerals are assigned to the components that operate in the same manner as in FIG. 15A2, and a part of the description will be omitted.

"TRP_2#1_1 of 1321_1" includes, for example, antenna module group 2#1_1 of 1511A_2_1, signal processor 2#1_1 of 1513A_2_1, signal processor 1530A_2, and controller 1541A_2.

"TRP_2#2_1 of 1322_1" includes, for example, antenna module group 2#2_1 of 1521A_2_1 and signal processor 2#2_1 of 1523A_2_1.

Therefore, "TRP_2#2_m of 1322_m" includes, for example, antenna module group 2#2_m of 1521A_2_m and signal processor 2#2_m of 1523A_2_m. Here, m is an integer of 1 or greater and Y2 or less.

Since the operations of "controller 1541A_2", "signal processor 1530A_2", "antenna module group 2#1_1 of 1511A_2_1 and signal processor 2#1_1 of 1513A_2_1", and "antenna module group 2#2_m of 1521A_2_m and signal processor 2#2_m of 1523A_2_m" have been described using FIG. 15A2, the description will be omitted.

Note that, in FIGS. 16 and 17A2, it is assumed that the "signal processor 1530A_2 and controller 1541A_2" are provided in the "TRP_2#1_1 of 1321_1", but the present invention is not limited thereto, and the "signal processor 1530A_2 and controller 1541A_2" may be provided in the "TRP_2#2_m of 1322_m".

As described above, in the system configuration in which the first TRP set receives the transmission signal transmitted by terminal #1 of 1390_1 and the second TRP set receives the transmission signal transmitted by terminal #1 of 1390_1, the first TRP set and the second TRP set can obtain an effect of improving the reception quality of the data.

Further, terminal #1 of 1390_1 can transmit the transmission signal of the first TRP set and/or the second TRP set, and as a result, an effect of improving the transmission efficiency of the data of the system and improving the reception quality of the data can be obtained.

Note that, an example in which terminal #1 of 1390_1 in FIGS. 14C and 16 transmits a transmission signal to two TRP sets of "first TRP set and second TRP set", but terminal #1 of 1390_1 may transmit a transmission signal to one TRP set, and terminal #1 of 1390_1 may transmit a transmission signal to three or more TRP sets.

Further, the method of configuring the TRP set is not limited to the configurations of "FIGS. 14C and 16", and the TRP set may be configured by one or more TRPs.

The first "modulation signal" set destined to the first TRP set (modulation signals ♭u of 1403A_u) transmitted by terminal #1 of 1390_1 to the first TRP set of ""TRP_1#1_1 of 1311_1" and "TRP_1#2_1 of 1312_1, ..., TRP_1#2_Y1 of 1312_Y1" is referred to as a "first TRP set modulation signal (group)".

The second "modulation signal" set destined to the second TRP set (modulation signals ♭u of 1403A_u) transmitted by terminal #1 of 1390_1 to the second TRP set of ""TRP_2#1_1 of 1321_1" and "TRP_2#2_1 of 1322_1, ..., TRP_2#2_Y2 of 1322_Y2" is referred to as a "second TRP set modulation signal (group)".

In this case, FIG. 18A1, FIG. 18A2, FIG. 18A3, and FIG. 18A4 illustrate a mapping example in a time-frequency axis in a case of transmitting the "first TRP set modulation signal (group)" and the "second TRP set modulation signal (group)" by using a spatial division multiplexing (SDM) method (e.g., fully overlapping, partially-overlapping, and the like). Here, in FIG. 18A1, FIG. 18A2, FIG. 18A3, and FIG. 18A4, the horizontal axis is time and the vertical axis is frequency.

SDM Example A-1:

It is assumed that the first "modulation signal" set destined to the first TRP set, which is the "first TRP set modulation signal (group)", is present at frequency AXX1 and time AX1 as illustrated in FIG. 18A1. In this case, it is assumed that the second "modulation signal" set destined to the second TRP set, which is the "second TRP set modulation signal (group)", is present at frequency AXX1 and time AX1 as illustrated in FIG. 18A1.

SDM Example A-2:

It is assumed that the first "modulation signal" set destined to the first TRP set, which is the "first TRP set modulation signal (group)", is present at frequency AXX1 and time AX1 as illustrated in FIG. 18A1. In this case, it is assumed that the second "modulation signal" set destined to the second TRP set, which is the "second TRP set modulation signal (group)", is present at a part of frequency AXX1 and time AX1 as illustrated in FIG. 18A2.

SDM Example A-3:

It is assumed that the first "modulation signal" set destined to the first TRP set, which is the "first TRP set modulation signal (group)", is present at frequency AXX1 and time AX1 as illustrated in FIG. 18A1. In this case, it is assumed that the second "modulation signal" set destined to the second TRP set, which is the "second TRP set modulation signal (group)", is present at frequency AXX1 and a part of time AX1 as illustrated in FIG. 18A3.

SDM Example A-4:

It is assumed that the first "modulation signal" set destined to the first TRP set, which is the "first TRP set modulation signal (group)", is present at frequency AXX1 and time AX1 as illustrated in FIG. 18A1. In this case, it is assumed that the second "modulation signal" set destined to the second TRP set, which is the "second TRP set modulation signal (group)", is present at a part of frequency AXX1 and a part of time AX1 as illustrated in FIG. 18A4.

SDM Example A-5:

It is assumed that the first "modulation signal" set destined to the first TRP set, which is the "first TRP set modulation signal (group)", is present at frequency AXX1 and time AX1 as illustrated in FIG. 18A1. In this case, it is assumed that the frequency used by the second "modulation signal" set destined to the second TRP set, which is the "second TRP set modulation signal (group)", and the time overlap with a part of frequency AXX1 and/or a part of time AX1.

Further, the "first TRP set modulation signal (group)" and the "second TRP set modulation signal (group)" may be transmitted by using a time division multiplexing (TDM) method (e.g., tdmScheme, non-overlapping, and the like). FIG. 18B1 and FIG. 18B2 illustrate a mapping example in a time-frequency axis in this case. Here, in FIGS. 18B1 and 18B2, the horizontal axis is time and the vertical axis is frequency.

TDM Example A-1:

It is assumed that the first "modulation signal" set destined to the first TRP set, which is the "first TRP set modulation signal (group)", is present at frequency BXX1 and time BX1 as illustrated in FIG. 18B1. In this case, it is assumed that the second "modulation signal" set destined to the second TRP set, which is the "second TRP set modulation signal (group)", is present at frequency BXX1 and time BX2 as illustrated in FIG. 18B1.

TDM Example A-2:

It is assumed that the first "modulation signal" set destined to the first TRP set, which is the "first TRP set modulation signal (group)", is present at frequency BXX1 and time BX1 as illustrated in FIG. 18B2. In this case, it is assumed that the second "modulation signal" set destined to the second TRP set, which is the "second TRP set modulation signal (group)", is present at a part of frequency BXX1 and time BX2 as illustrated in FIG. 18B2.

The "first TRP set modulation signal (group)" and the "second TRP set modulation signal (group)" may be transmitted by using a frequency division multiplexing (FDM) method (e.g., fdmScheme, non-overlapping, and the like). FIG. 18C1, FIG. 18C2, and FIG. 18C3 illustrate a mapping example in a time-frequency axis in this case. Here, in FIGS. 18C1, 18C2, and 18C3, the horizontal axis is time and the vertical axis is frequency.

FDM Example A-1:

It is assumed that the first "modulation signal" set destined to the first TRP set, which is the "first TRP set modulation signal (group)", is present at frequency CXX1 and time CX1 as illustrated in FIG. 18C1. In this case, it is assumed that the second "modulation signal" set destined to the second TRP set, which is the "second TRP set modulation signal (group)", is present at frequency CXX2 and time CX1 as illustrated in FIG. 18C1.

FDM Example A-2:

It is assumed that the first "modulation signal" set destined to the first TRP set, which is the "first TRP set modulation signal (group)", is present at frequency CXX1 and time CX1 as illustrated in FIG. 18C2. In this case, it is assumed that the second "modulation signal" set destined to the second TRP set, which is the "second TRP set modulation signal (group)", is present at frequency CXX2 and a part of time CX1 as illustrated in FIG. 18C2.

FDM Example A-3:

It is assumed that the first "modulation signal" set destined to the first TRP set, which is the "first TRP set modulation signal (group)", is present at frequency CXX1 and time CX1 as illustrated in FIG. 18C3. In this case, it is assumed that the second "modulation signal" set destined to the second TRP set, which is the "second TRP set modulation signal (group)", is present at frequency CXX2 and time CX2 as illustrated in FIG. 18C3.

FDM Example A-4:

It is assumed that the first "modulation signal" set destined to the first TRP set, which is the "first TRP set modulation signal (group)", is present at frequency CXX1 and time CX1. In this case, it is assumed that the second "modulation signal" set destined to the second TRP set, which is the "second TRP set modulation signal (group)", is present at frequency CXX2 and time CX2.

In this way, in the TRP that is the communication counterpart of the terminal, an effect of improving the reception quality of the data can be obtained, and as a result, an effect of improving the transmission efficiency of the data of the system can be obtained. Further, since the terminal transmits a set of a plurality of modulation signals and each TRP set can receive the modulation signal set, an effect of improving the transmission efficiency of the data and improving the reception quality of the data can be obtained.

Note that the first "modulation signal" set destined to the first TRP set, which is the "first TRP set modulation signal (group)", and the second "modulation signal" set destined to the second TRP set, which is the "second TRP set modulation signal (group)", in the above description may include the same data. Therefore, repetition may be applied to the first "modulation signal" set destined to the first TRP set, which is the "first TRP set modulation signal (group)", and the second "modulation signal" set destined to the second TRP set, which is the "second TRP set modulation signal (group)".

Further, the mapping of the first "modulation signal" set destined to the first TRP set, which is the "first TRP set modulation signal (group)", and the second "modulation signal" set destined to the second TRP set, which is the "second TRP set modulation signal (group)", in the time-frequency axis in a case of applying the SDM method, the TDM method, and the FDM method is not limited to the examples of FIG. 18A1, FIG. 18A2, FIG. 18A3, FIG. 18A4, FIG. 18B1, FIG. 18B2, FIG. 18C1, FIG. 18C2, and FIG. 18C3.

The first "modulation signal" set destined to the first TRP set, which is the "first TRP set modulation signal (group)", and the second "modulation signal" set destined to the second TRP set, which is the "second TRP set modulation signal (group)" may be in a (full) coherent relationship, a partial coherent relationship, or a non-coherent relationship.

Another example of uplink in which the terminal transmits the modulation signal to the TRP will be described.

FIG. 19 illustrates an example of a state of TRPs and a terminal. In FIG. 19, the same reference numerals are assigned to the same components as in FIG. 13A1 and the like, and the description will be omitted for the portions that have already been described.

""TRP_1#1_1 of 1311_1, ..., TRP_1#1_X1 of 1311_X1" and "TRP_1#2_1 of 1312_1, ..., TRP_1#2_Y1 of 1312_Y1" are referred to as a third TRP set. Further, ""TRP_2#1_1 of 1321_1, ..., TRP_2#1_X2 of 1321_X2" and "TRP_2#2_1 of 1322_1, ..., TRP_2#2_Y2 of 1322_Y2" are referred to as a fourth TRP set.

As illustrated in FIG. 19, terminal #1 of 1390_1 transmits a third "modulation signal" set destined to the third TRP set and a fourth "modulation signal" set destined to the fourth TRP set. Therefore, FIG. 19 is an example in which the terminal transmits the transmission signal to the plurality of TRP sets, and can be an example of uplink multiple TRPs.

Note that terminal #1 of 1390_1 may perform "transmitting the third "modulation signal" set destined to the third TRP set to the third TRP set" or "transmitting the fourth "modulation signal" set destined to the fourth TRP set to the fourth TRP set".

Apparatus 3 of 1951_3 receives "signal based on the signal received by TRP_1#1_1 of 1311_1", ..., and "signal based on the signal received by TRP_1#1_X1 of 1311_X1", "signal based on the signal received by TRP_1#2_1 of 1312_1", ..., and "signal based on the signal received by TRP_1#2_Y1 of 1312_Y1", performs processing such as demodulation and decoding of the error correction code, obtains data 1952_3 included in the third "modulation signal" set, and outputs data 1952_3.

Apparatus 4 1951_4 receives "signal based on the signal received by TRP_2#1_1 of 1321_1", ..., and "signal based on the signal received by TRP_2#1_X2 of 1321_X2", "signal based on the signal received by TRP_2#2_1 of 1322_1", ..., and "signal based on the signal received by TRP_2#2_Y2 of 1322_Y2", performs processing such as demodulation and decoding of the error correction code, obtains data 1952_4 included in the fourth "modulation signal" set, and outputs data 1952_4.

The third "modulation signal" set destined to the third TRP set transmitted by terminal #1 of 1390_1 of FIG.

19 includes any of modulation signals Ƅu of 1403A_u. Further, the fourth "modulation signal" set destined to the fourth TRP set transmitted by terminal #1 of 1390_1 includes any of modulation signals Ƅu of 1403A_u.

FIG. 20A1 illustrates a configuration example of a system including ""TRP_1#1_1 of 1311_1, ..., TRP_1#1_X1 of 1311_X1" and "TRP_1#2_1 of 1312_1, ..., TRP_1#2_Y1 of 1312_Y1", and apparatus 3 of 1951_3" in FIG. 19.

"TRP_1#1_1 of 1311_1" includes, for example, antenna module group 1#1_1 of 1511A_1_1 and signal processor 1#1_1 of 1513A_1_1.

Therefore, "TRP_1#1_f of 1311_f" includes, for example, antenna module group 1#1_f of 1511A_1_f and signal processor 1#1_f of 1513A_1_f. Here, f is an integer of 1 or greater and X1 or less.

"TRP_1#2_1 of 1312_1" includes, for example, antenna module group 1#2_1 of 1521A_1_1 and signal processor 1#2_1 of 1523A_1_1.

Therefore, "TRP_1#2_n of 1312_n" includes, for example, antenna module group 1#2_n of 1521A_1_n and signal processor 1#2_n of 1523A_1_n. Here, n is an integer of 1 or greater and Y1 or less.

Apparatus 3 of 1951_3 includes, for example, signal processor 1530A_1 and controller 1541A_1.

Controller 1541A_1 receives signal 1540_1, and outputs control signal 1542A_1 including information such as information on the signal processing method.

In "TRP_1#1_1 of 1311_1", signal processor 1#1_1 of 1513A_1_1 receives received signal group 1512A_1_1 received by antenna module group 1#1_1 of 1511A_1_1 and control signal 1542A_1, determines an operation method based on control signal 1542A_1, performs, for example, processing such as frequency conversion, and outputs received signal group 1514A_1_1 after the signal processing.

In "TRP_1#1_f of 1311_f", signal processor 1#1_f of 1513A_1_f receives received signal group 1512A_1_f received by antenna module group 1#1_f of 1511A_1_f and control signal 1542A_1, determines an operation method based on control signal 1542A_1, performs, for example, processing such as frequency conversion, and outputs received signal group 1514A_1_f after the signal processing.

In "TRP_1#2_1 of 1312_1", signal processor 1#2_1 of 1523A_1_1 receives received signal group 1522A_1_1 received by antenna module group 1#2_1 of 1521A_1_1 and control signal 1542A_1, determines an operation method based on control signal 1542A_1, performs, for example, processing such as frequency conversion, and outputs received signal group 1524A_1_1 after the signal processing.

Therefore, in "TRP_1#2_n of 1312_n", signal processor 1#2_n of 1523A_1_n receives received signal group 1522A_1_n received by antenna module group 1#2_n of 1521A_1_n and control signal 1542A_1, determines an operation method based on control signal 1542A_1, performs, for example, processing such as frequency conversion, and outputs received signal group 1524A_1_n after the signal processing.

In apparatus 3 of 1951_3, signal processor 1530A_1 receives control signal 1542A_1, "received signal group 1514A_1_1 after the signal processing, ..., received signal group 1514A_1_X1 after the signal processing", and "received signal group 1524A_1_1 after the signal processing, ..., received signal group 1524A_1_Y1 after the signal processing", performs processing such as demodulation and error correction decoding on ""received signal group 1514A_1_1 after the signal processing, ..., received signal group 1514A_1_X1 after the signal processing", and "received signal group 1524A_1_1 after the signal processing, ..., received signal group 1524A_1_Y1 after the signal processing" based on control signal 1542A_1, obtains and outputs reception data 1531A_1.

FIG. 20A2 illustrates a configuration example of a system including ""TRP_2#1_1 of 1321_1, ..., TRP_2#1_X2 of 1321_X2" and "TRP_2#2_1 of 1322_1, ..., TRP_2#2_Y2 of 1322_Y2", and apparatus 4 1951_4" in FIG. 19.

"TRP_2#1_1 of 1321_1" includes, for example, antenna module group 2#1_1 of 1511A_2_1 and signal processor 2#1_1 of 1513A_2_1.

Therefore, "TRP_2#1_g of 1321_1" includes, for example, antenna module group 2#1_g of 1511A_2_g and signal processor 2#1_g of 1513A_2_g. Here, g is an integer of 1 or greater and X2 or less.

"TRP_2#2_1 of 1322_1" includes, for example, antenna module group 2#2_1 of 1521A_2_1 and signal processor 2#2_1 of 1523A_2_1.

Therefore, "TRP_2#2_m of 1322_m" includes, for example, antenna module group 2#2_m of 1521A_2_m and signal processor 2#2_m of 1523A_2_m. Here, m is an integer of 1 or greater and Y2 or less.

Apparatus 4 1951_4 includes, for example, signal processor 1530A_2 and controller 1541A_2.

Controller 1541A_2 receives signal 1540_2, and outputs control signal 1542A_2 including information such as information on the signal processing method.

In "TRP_2#1_1 of 1321_1", signal processor 2#1_1 of 1513A_2_1 receives received signal group 1512A_2_1 received by the antenna module group 2#1_1 of 1511A_2_1 and control signal 1542A_2, determines an operation method based on control signal 1542A_2, performs, for example, processing such as frequency conversion, and outputs received signal group 1514A_2_1 after the signal processing.

Therefore, in "TRP_2#1_g of 1321_1", signal processor 2#1_g of 1513A_2_g receives received signal group 1512A_2_g received by antenna module group 2#1_g of 1511A_2_g and control signal 1542A_2, determines an operation method based on control signal 1542A_2, performs, for example, processing such as frequency conversion, and outputs received signal group 1514A_2_g after the signal processing.

In "TRP_2#2_1 of 1322_1", signal processor 2#2_1 of 1523A_2_1 receives received signal group 1522A_2_1 received by antenna module group 2#2_1 of 1521A_2_1 and control signal 1542A_2, determines an operation method based on control signal 1542A_2, performs, for example, processing such as frequency conversion, and outputs received signal group 1524A_2_1 after the signal processing.

Therefore, in "TRP_2#2_m of 1322_m", signal processor 2#2_m of 1523A_2_m receives received signal group 1522A_2_m received by antenna module group 2#2_m of 1521A_2_m and control signal 1542A_2, determines an operation method based on control signal 1542A_2, performs, for example, processing such as frequency conversion, and outputs received signal group 1524A_2_m after the signal processing.

In apparatus 4 of 1951_4, signal processor 1530A_2 receives control signal 1542A_2, "received signal group 1514A_2_1 after the signal processing, ..., received signal group 1514A_2_X2 after the signal processing", and "received signal group 1524A_2_1 after the signal processing, ..., received signal group 1524A_2_Y2 after the signal processing", performs processing such as demodulation and error correction decoding on ""received signal group 1514A_2_1 after the signal processing, ..., received signal group 1514A_2_X2 after the signal processing", and "received signal group 1524A_2_1 after the signal processing, ..., received signal group 1524A_2_Y2 after the signal processing" based on control signal 1542A_2, obtains and outputs reception data 1531A_2.

FIG. 21 illustrates an example of a state of TRPs and a terminal different from FIG. 19. In FIG. 21, the same reference numerals are assigned to the same components as in FIG. 13A1, FIG. 19, and the description will be omitted for the portions that have already been described.

""TRP_1#1_1 of 1311_1, ..., TRP_1#1_X1 of 1311_X1" and "TRP_1#2_1 of 1312_1, ..., TRP_1#2_Y1 of 1312_Y1" are referred to as a third TRP set. Further, ""TRP_2#1_1 of 1321_1, ..., TRP_2#1_X2 of 1321_X2" and "TRP_2#2_1 of 1322_1, ..., TRP_2#2_Y2 of 1322_Y2" are referred to as a fourth TRP set.

As illustrated in FIG. 21, terminal #1 of 1390_1 transmits a third "modulation signal" set destined to the third TRP set and a fourth "modulation signal" set destined to the fourth TRP set. Therefore, FIG. 21 is an example in which the terminal transmits the transmission signal to the plurality of TRP sets, and can be an example of uplink multiple TRPs.

Note that terminal #1 of 1390_1 may perform "transmitting the third "modulation signal" set destined to the third TRP set to the third TRP set" or "transmitting the fourth "modulation signal" set destined to the fourth TRP set to the fourth TRP set".

TRP_1#1_1 of 1311_1 receives "signal 2113_f based on the signal received by TRP_1#1_f of 1311_f where $f \neq 1$", and "signal 2112_1 based on the signal received by TRP_1#2_1 of 1312_1", ..., and "signal 2112_Y1 based on the signal received by TRP_1#2_Y1 of 1312_Y1", and TRP_1#1_1 of 1311_1 performs processing such as demodulation and decoding of the error correction code on "signal based on the signal received by TRP_1#1_1 of 1311_1" generated by itself and "signal 2113_f based on the signal received by TRP_1#1_f of 1311_f where $f \neq 1$", "signal 2112_1 based on the signal received by TRP_1#2_1 of 1312_1", ..., and "signal 2112_Y1 based on the signal received by TRP_1#2_Y1 of 1312_Y1", to obtain data 2111_1 included in the third "modulation signal" set, and outputs data 2111_1.

TRP_2#1_1 of 1321_1 receives "signal 2123_g based on the signal received by TRP_2#1_g of 1321_g where $g \neq 1$", and "signal 2122_1 based on the signal received by TRP_2#2_1 of 1322_1", ..., and "signal 2122_Y2 based on the signal received by TRP_2#2_Y2 of 1322_Y2", and TRP_2#1_1 of 1321_1 performs processing such as demodulation and decoding of the error correction code on "signal based on the signal received by TRP_2#1_1 of 1321_1" generated by itself and "signal 2123_g based on the signal received by TRP_2#1_g of 1321_g where $g \neq 1$", "signal 2122_1 based on the signal received by TRP_2#2_1 of 1322_1", ..., and "signal 2122_Y2 based on the signal received by TRP_2#2_Y2 of 1322_Y2", to obtain data 2121_1 included in the second "modulation signal" set, and outputs data 2121_1.

The third "modulation signal" set destined to the third TRP set transmitted by terminal #1 of 1390_1 of FIG. 21 includes any of modulation signals ♭u of 1403A_u. Further, the fourth "modulation signal" set destined to the fourth TRP set transmitted by terminal #1 of 1390_1 includes any of modulation signals ♭u of 1403A_u.

FIG. 22A1 illustrates a configuration example of a system including ""TRP_1#1_1 of 1311_1, ..., TRP_1#1_X1 of 1311_X1" and "TRP_1#2_1 of 1312_1, ..., TRP_1#2_Y1 of 1312_Y1" in FIG. 19. In FIG. 22A1, the same reference numerals are assigned to the components that operate in the same manner as in FIG. 20A1, and a part of the description will be omitted.

"TRP_1#1_1 of 1311_1" includes, for example, antenna module group 1#1_1 of 1511A_1_1, signal processor 1#1_1 of 1513A_1_1, signal processor 1530A_1, and controller 1541A_1.

"TRP_1#1_f of 1311_f" includes, for example, antenna module group 1#1_f of 1511A_1_f and signal processor 1#1_f of 1513A_1_f. Note that f ≠ 1.

"TRP_1#2_1 of 1312_1" includes, for example, antenna module group 1#2_1 of 1521A_1_1 and signal processor 1#2_1 of 1523A_1_1.

Therefore, "TRP_1#2_n of 1312_n" includes, for example, antenna module group 1#2_n of 1521A_1_n and signal processor 1#2_n of 1523A_1_n. Here, n is an integer of 1 or greater and Y1 or less.

Since the operations of "controller 1541A_1", "signal processor 1530A_1", "antenna module group 1#1_f of 1511A_1_f and signal processor 1#1_f of 1513A_1_f" (f is an integer of 1 or greater and X1 or less), and "antenna module group 1#2_n of 1521A_1_n and signal processor 1#2_n of 1523A_1_n" have been described using FIG. 20A1, the description will be omitted.

Note that, in FIGS. 21 and 22A1, it is assumed that the "signal processor 1530A_1 and controller 1541A_1" are provided in the "TRP_1#1_1 of 1311_1", but the present invention is not limited thereto, and the "signal processor 1530A_1 and controller 1541A_1" may be provided in the "TRP_1#1_f of 1311_f" and the "TRP_1#2_n of 1312_n".

FIG. 22A2 illustrates a configuration example of a system including ""TRP_2#1_1 of 1321_1, ..., TRP_2#1_X2 of 1321_X2" and "TRP_2#2_1 of 1322_1, ..., TRP_2#2_Y2 of 1322_Y2" in FIG. 21. In FIG. 22A2, the same reference numerals are assigned to the components that operate in the same manner as in FIG. 20A2, and a part of the description will be omitted.

"TRP_2#1_1 of 1321_1" includes, for example, antenna module group 2#1_1 of 1511A_2_1, signal processor 2#1_1 of 1513A_2_1, signal processor 1530A_2, and controller 1541A_2.

"TRP_2#1_g of 1321_1" includes, for example, antenna module group 2#1_g of 1511A_2_g and signal processor 2#1_g of 1513A_2_g. Note that g ≠ 1.

"TRP_2#2_1 of 1322_1" includes, for example, antenna module group 2#2_1 of 1521A_2_1 and signal processor 2#2_1 of 1523A_2_1.

Therefore, "TRP_2#2_m of 1322_m" includes, for example, antenna module group 2#2_m of 1521A_2_m and signal processor 2#2_m of 1523A_2_m. Here, m is an integer of 1 or greater and Y2 or less.

Since the operations of "controller 1541A_2", "signal processor 1530A_2", "antenna module group 2#1_g of 1511A_2_g and signal processor 2#1_g of 1513A_2_g" (g is an integer of 1 or greater and X2 or less), and "antenna module group 2#2_m of 1521A_2_m and signal processor 2#2_m of 1523A_2_m" have been described using FIG. 20A2, the description will be omitted.

Note that, in FIGS. 21 and 22A2, it is assumed that the "signal processor 1530A_2 and controller 1541A_2" are provided in the "TRP_2#1_1 of 1321_1", but the present invention is not limited thereto, and the "signal processor 1530A_2 and controller 1541A_2" may be provided in the "TRP_2#1_g of 1321_1" and the "TRP_2#2_m of 1322_m".

As described above, in the system configuration in which the third TRP set receives the transmission signal transmitted by terminal #1 of 1390_1 and the fourth TRP set receives the transmission signal transmitted by terminal #1 of 1390_1, the third TRP set and the fourth TRP set can obtain an effect of improving the reception quality of the data.

Further, terminal #1 of 1390_1 can transmit the transmission signal of the third TRP set and/or the fourth TRP set, and as a result, an effect of improving the transmission efficiency of the data of the system and improving the reception quality of the data can be obtained.

Note that, in FIGS. 19 and 21, terminal #1 of 1390_1 is an example in which the transmission signal is transmitted to two TRP sets of "third TRP set and fourth TRP set", but terminal #1 of 1390_1 may transmit the transmission signal to one TRP set, and terminal #1 of 1390_1 may transmit the transmission signal to three or more TRP sets.

Further, the method of configuring the TRP set is not limited to the configurations of "FIGS. 19 and 21", and the TRP set may be configured by one or more TRPs.

The third "modulation signal" set destined to the third TRP set (modulation signals ♭u of 1403A_u) transmitted by terminal #1 of 1390_1 to the third TRP set of ""TRP_1#1_1 of 1311_1, ..., TRP_1#1_X1 of 1311_X1" and "TRP_1#2_1 of 1312_1, ..., TRP_1#2_Y1 of 1312_Y1" is referred to as a "third TRP set modulation signal (group)".

The fourth "modulation signal" set destined to the fourth TRP set (modulation signals ♭u of 1403A_u) transmitted by terminal #1 of 1390_1 to the fourth TRP set of ""TRP_2#1_1 of 1321_1, ..., TRP_2#1_X2 of 1321_X2" and "TRP_2#2_1 of 1322_1, ..., TRP_2#2_Y2 of 1322_Y2" is referred to as a "fourth TRP set modulation signal (group)".

In this case, FIG. 23A1, FIG. 23A2, FIG. 23A3, and FIG. 23A4 illustrate a mapping example in a time-frequency axis in a case of transmitting the "third TRP set modulation signal (group)" and the "fourth TRP set modulation signal (group)" by using a spatial division multiplexing (SDM) method (e.g., fully overlapping, partially-overlapping, and the like). Here, in FIG. 23A1, FIG. 23A2, FIG. 23A3, and FIG. 23A4, the horizontal axis is time and the vertical axis is frequency.

SDM Example B-1:

It is assumed that the third "modulation signal" set destined to the third TRP set, which is the "third TRP set modulation signal (group)", is present at frequency AXX1 and time AX1 as illustrated in FIG. 23A1. In this case, it is assumed that the fourth "modulation signal" set destined to the fourth TRP set, which is the "fourth TRP set modulation signal (group)", is present at frequency AXX1 and time AX1 as illustrated in FIG. 23A1.

SDM Example B-2:

It is assumed that the third "modulation signal" set destined to the third TRP set, which is the "third TRP set modulation signal (group)", is present at frequency AXX1 and time AX1 as illustrated in FIG. 23A1. In this case, it is assumed that the fourth "modulation signal" set destined to the fourth TRP set, which is the "fourth TRP set modulation signal (group)", is present at a part of frequency AXX1 and time AX1 as illustrated in FIG. 23A2.

SDM Example B-3:

It is assumed that the third "modulation signal" set destined to the third TRP set, which is the "third TRP set modulation signal (group)", is present at frequency AXX1 and time AX1 as illustrated in FIG. 23A1. In this case, it is assumed that the fourth "modulation signal" set destined to the fourth TRP set, which is the "fourth TRP set modulation signal (group)", is present at frequency AXX1 and a part of time AX1 as illustrated in FIG. 23A3.

SDM Example B-4:

It is assumed that the third "modulation signal" set destined to the third TRP set, which is the "third TRP set modulation signal (group)", is present at frequency AXX1 and time AX1 as illustrated in FIG. 23A1. In this case, it is assumed that the fourth "modulation signal" set destined to the fourth TRP set, which is the "fourth TRP set modulation signal (group)", is present at a part of frequency AXX1 and a part of time AX1 as illustrated in FIG. 23A4.

SDM Example B-5:

It is assumed that the third "modulation signal" set destined to the third TRP set, which is the "third TRP set modulation signal (group)", is present at frequency AXX1 and time AX1 as illustrated in FIG. 23A1. In this case, it is assumed that the frequency used by the fourth "modulation signal" set destined to the fourth TRP set, which is the "fourth TRP set modulation signal (group)", and the time overlap with a part of frequency AXX1 and/or a part of time AX1.

Further, the "third TRP set modulation signal (group)" and the "fourth TRP set modulation signal (group)" may be transmitted by using a time division multiplexing (TDM) method (e.g., tdmScheme, non-overlapping, and the like). FIG. 23B1 and FIG. 23B2 illustrate a mapping example in a time-frequency axis in this case. Here, in FIGS. 23B1 and 23B2, the horizontal axis is time and the vertical axis is frequency.

TDM Example B-1:

It is assumed that the third "modulation signal" set destined to the third TRP set, which is the "third TRP set modulation signal (group)", is present at frequency BXX1 and time BX1 as illustrated in FIG. 23B1. In this case, it is assumed that the fourth "modulation signal" set destined to the fourth TRP set, which is the "fourth TRP set modulation signal (group)", is present at frequency BXX1 and time BX2 as illustrated in FIG. 23B1.

TDM Example B-2:

It is assumed that a third "modulation signal" set destined to a third TRP set, which is a "third TRP set modulation signal (group)", is present at frequency BXX1 and time BX1 as illustrated in FIG. 23B2. It is assumed that a fourth "modulation signal" set destined to a fourth TRP set, which is a "fourth TRP set modulation signal (group)", is present at a part of frequency BXX1 and time BX2 as illustrated in FIG. 23B2.

The "third TRP set modulation signal (group)" and the "fourth TRP set modulation signal (group)" may be transmitted by using a frequency division multiplexing (FDM) method (e.g., fdmScheme, non-overlapping, and the like). FIG. 23C1, FIG. 23C2, and FIG. 23C3 illustrate mapping examples of the time-frequency axis in this case. Note that, in FIG. 23C1, FIG. 23C2, and FIG. 23C3, the horizontal axis is a time and the vertical axis is a frequency.

FDM Example B-1:

It is assumed that a third "modulation signal" set destined to a third TRP set, which is a "third TRP set modulation signal (group)", is present at frequency CXX1 and time CX1 as illustrated in FIG. 23C1. It is assumed that a fourth "modulation signal" set destined to a fourth TRP set, which is a "fourth TRP set modulation signal (group)", is present at frequency CXX2 and time CX1 as illustrated in FIG. 23C1.

FDM Example B-2:

It is assumed that a third "modulation signal" set destined to a third TRP set, which is a "third TRP set modulation signal (group)", is present at frequency CXX1 and time CX1 as illustrated in FIG. 23C2. It is assumed that a fourth "modulation signal" set destined to a fourth TRP set, which is a "fourth TRP set modulation signal (group)", is present at frequency CXX2 and a part of time CX1 as illustrated in FIG. 23C2.

FDM Example B-3:

It is assumed that a third "modulation signal" set destined to a third TRP set, which is a "third TRP set modulation signal (group)", is present at frequency CXX1 and time CX1 as illustrated in FIG. 23C3. It is assumed that a fourth "modulation signal" set destined to a fourth TRP set, which is a "fourth TRP set modulation signal (group)", is present at frequency CXX2 and time CX2 as illustrated in FIG. 23C3.

FDM Example B-4:

It is assumed that a third "modulation signal" set destined to a third TRP set, which is a "third TRP set modulation signal (group)", is present at frequency CXX1 and time CX1. It is assumed that a fourth "modulation signal" set destined to a fourth TRP set, which is a "fourth TRP set modulation signal (group)", is present at frequency CXX2 and time CX2.

In this way, in the TRP that is the communication counterpart of the terminal, an effect of improving the reception quality of the data can be obtained, and as a result, an effect of improving the transmission efficiency of the data of the system can be obtained. Further, since the terminal transmits a set of a plurality of modulation signals and each TRP set can receive the modulation signal set, an effect of improving the transmission efficiency of the data and improving the reception quality of the data can be obtained.

Note that the third "modulation signal" set destined to a third TRP set, which is a "third TRP set modulation signal (group)", and the fourth "modulation signal" set destined to a fourth TRP set, which is a "fourth TRP set modulation signal (group)", in the above description may include the same data. Therefore, repetition may be applied to the third "modulation signal" set destined to a third TRP set, which is a "third TRP set modulation signal (group)", and the fourth "modulation signal" set destined to a fourth TRP set, which is a "fourth TRP set modulation signal (group)".

Further, mapping of the third "modulation signal" set destined to a third TRP set, which is a "third TRP set modulation signal (group)", and the fourth "modulation signal" set destined to a fourth TRP set, which is a "fourth TRP set modulation signal (group)", on the time-frequency axis in a case where the SDM method, the TDM method, and the FDM method are applied is not limited to examples of FIG. 23A1, FIG. 23A2, FIG. 23A3, FIG. 23A4, FIG. 23B1, FIG. 23B2, FIG. 23C1, FIG. 23C2, and FIG. 23C3.

Note that the third "modulation signal" set destined to a third TRP set, which is a "third TRP set modulation signal (group)", and the fourth "modulation signal" set destined to a fourth TRP set, which is a "fourth TRP set modulation signal (group)", may be in a (full) coherent relationship, a partial coherent relationship, or a non-coherent relationship.

The TRP set including a plurality of TRPs may constitute a base station, a gNB, a relay, or the like.

As described above, in a case where "the terminal transmits the plurality of modulation signal sets to the TRP set including the plurality of TRPs", the terminal may select any of the "SDM method, TDM method, and FDM method" described above, and transmit the plurality of modulation signal sets of the selected method.

Note that the TRP may control the time and frequency positions of the plurality of modulation signal sets of each method, or apparatus 1 of 1451_1, apparatus 2 of 1451_2, apparatus 3 of 1951_3, or apparatus 4 of 1951_4 may control the time and frequency positions of the plurality of modulation signal sets of each method. For example, the control may be performed by the base station or by an apparatus connected to the base station.

Note that the first TRP set in FIG. 14C and FIG. 16 may be configured by one apparatus (e.g., base station, gNB, or the like) or a plurality of apparatuses.

Note that the first TRP set in FIG. 14C and FIG. 16 may be included in one apparatus (e.g., base station, gNB, or the like) or a plurality of apparatuses.

Note that the second TRP set in FIG. 14C and FIG. 16 may be configured by one apparatus (e.g., base station, gNB, or the like) or a plurality of apparatuses.

Note that the second TRP set in FIG. 14C and FIG. 16 may be included in one apparatus (e.g., base station, gNB, or the like) or a plurality of apparatuses.

Note that the "first TRP set and the second TRP set" in FIG. 14C and FIG. 16 may be configured by one apparatus (e.g., base station, gNB, or the like) or a plurality of apparatuses.

Note that the "first TRP set and the second TRP set" in FIG. 14C and FIG. 16 may be included in one apparatus (e.g., base station, gNB, or the like) or a plurality of apparatuses.

Note that the third TRP set in FIG. 19 and FIG. 21 may be configured by one apparatus (e.g., base station, gNB, or the like) or a plurality of apparatuses.

Note that the third TRP set in FIG. 19 and FIG. 21 may be included in one apparatus (e.g., base station, gNB, or the like) or a plurality of apparatuses.

Note that the fourth TRP set in FIG. 19 and FIG. 21 may be configured by one apparatus (e.g., base station, gNB, or the like) or a plurality of apparatuses.

Note that the fourth TRP set in FIG. 19 and FIG. 21 may be included in one apparatus (e.g., base station, gNB, or the like) or a plurality of apparatuses.

Note that the "third TRP set and the fourth TRP set" in FIG. 19 and FIG. 21 may be configured by one apparatus (e.g., base station, gNB, or the like) or a plurality of apparatuses.

Note that the "third TRP set and the fourth TRP set" in FIG. 19 and FIG. 21 may be included in one apparatus (e.g., base station, gNB, or the like) or a plurality of apparatuses.

In the present embodiment, a description has been given, with reference to FIG. 14C, FIG. 16, FIG. 19, and FIG. 21, of the example in which the terminal transmits one "modulation signal" set to the set of TRPs and the example in which the terminal transmits two "modulation signal" sets to the set of TRPs, but the same can be implemented even in a case where the terminal transmits three or more "modulation signal" sets to the set of TRPs.

The method of configuring the apparatus such as the TRP and the terminal described in the present embodiment, and the communication method (e.g., the configuration of the antenna module, the number of antenna modules, the configuration of the antenna port, the number of antenna ports, the precoding method, the frame configuration, the number of transmission signals, the number of received signals, and the like) to be implemented are considered as the examples described in the present specification, but the present invention is not limited to these examples.

The terminal may transmit the modulation signal using the antenna port, but in this case, in order to notify the TRP and the base station that are communication counterparts of the antenna port number used (in order for the communication counterpart to identify the antenna port used to transmit the modulation signal), a unique signal is assigned as an RS such as a DMRS for each antenna port.

Then, the terminal transmits the (unique) RS corresponding to the antenna port used to transmit the modulation signal together in a case of transmitting the modulation signal.

In this case, a unique signal may be assigned to an RS for making it possible to identify "whether an antenna module is used," "whether the first antenna module is used," and "whether the second antenna module is used" by the RS.

For example, the unique signal in a case of transmission using an antenna module may be present, and the terminal transmits a signal including the unique signal in a case of transmission using an antenna module.

The unique signal in a case of transmission using the first antenna module may be present, and the terminal transmits a signal including the unique signal in a case of transmission using the antenna module.

The unique signal in a case of transmission using the second antenna module may be present. The terminal transmits a signal including the unique signal in a case of transmission using the antenna module.

Then, the communication counterpart of the terminal can know the type of terminal (e.g., terminal using the first antenna module, terminal using the second antenna module, and terminal using the first antenna module and second antenna module) by obtaining the modulation signal transmitted by the terminal. As a result, the communication counterpart of the terminal can obtain an effect that it is easy to select a suitable method as the transmission method of the modulation signal to be transmitted.

(Embodiment 4)

In Embodiments 1 to 3, a description has been given of communication apparatuses using the first antenna module (e.g., first antenna module v of 106A_1_v in FIG. 1A1, but the example of the first antenna module is not limited to this), and/or the second antenna module (e.g., second antenna module #w of 106A_2_w in FIG. 1A1 and FIG. 1B, but the example of the first antenna module is not limited to this), and of a system using these communication apparatuses, with reference to FIG. 1A1, FIG. 1B, FIG. 7A, FIG. 7B, FIG. 8A, FIG. 8B, FIG. 10A, FIG. 10B, FIG. 11A, FIG. 11B, FIG. 12A, FIG. 12B, FIG. 15A1, FIG. 15A2, FIG. 17A1, FIG. 17A2, FIG. 20A1, FIG. 20A2, FIG. 22A1, and FIG. 22A2.

In Embodiment 4, an example of a relationship between the first antenna module and the second antenna module of a variation of the examples described in other embodiments will be described.

FIG. 24A illustrates a configuration example of the first antenna module. For example, it is assumed that the first antenna module includes U types of antenna modules of "first_1 antenna module 2400A_1, first_2 antenna module 2400A_2, ..., first_U antenna module 2400A_U". Note that U is an integer of 1 or greater or an integer of 2 or greater.

It is assumed that the first_k antenna module 2400A_k is set to have an antenna module shape, the number of antennas, and the like. Note that k is an integer of 1 or greater and U or less.

It is assumed that the first_k antenna module 2400A_k includes one or more antennas or two or more antennas. It is assumed that the first_k antenna module 2400A_k can transmit one or more or two or more transmission signals.

The communication apparatus illustrated in FIG. 1A1, FIG. 1B, FIG. 7A, FIG. 7B, FIG. 10A, FIG. 10B, FIG. 11A, FIG. 11B, FIG. 15A1, FIG. 15A2, FIG. 17A1, FIG. 17A2, FIG. 20A1, FIG. 20A2, FIG. 22A1, and FIG. 22A2 includes any of the first antenna modules of "first_1 antenna module 2400A_1, first_2 antenna module 2400A_2, ..., first_U antenna module 2400A_U", and transmits the transmission signal and/or receives the modulation signal.

As another method, it is assumed that the communication apparatus illustrated in FIG. 1A1, FIG. 1B, FIG. 7A, FIG. 7B, FIG. 10A, FIG. 10B, FIG. 11A, FIG. 11B, FIG. 15A1, FIG. 15A2, FIG. 17A1, FIG. 17A2, FIG. 20A1, FIG. 20A2, FIG. 22A1, and FIG. 22A2 includes a plurality of first antenna modules among the first antenna modules of "first_1 antenna module 2400A_1, first_2 antenna module 2400A_2, ..., first_U antenna module 2400A_U".

It is assumed that the communication apparatus illustrated in FIG. 1A1, FIG. 1B, FIG. 7A, FIG. 7B, FIG.

10A, FIG. 10B, FIG. 11A, FIG. 11B, FIG. 15A1, FIG. 15A2, FIG. 17A1, FIG. 17A2, FIG. 20A1, FIG. 20A2, FIG. 22A1, and FIG. 22A2 determines the antenna module to be used from among the plurality of first antenna modules included in the communication apparatus in a case of transmitting the transmission signal and/or receiving the modulation signal, and transmits the transmission signal and/or receives the modulation signal using the determined antenna module.

FIG. 24B illustrates an example of a relationship between the first antenna module and the second antenna module.

As described using FIG. 24A, it is assumed that the first_k antenna module 2400A_k is one of the first antenna modules. It is assumed that first_k antenna module 2400A_k has a configuration (e.g., an antenna shape and the number of antennas) as illustrated in FIG. 24B.

It is assumed that the second antenna module is created by using a part of first_k antenna module 2400A_k. In FIG. 24B, it is assumed that Xk types of antenna modules of "second_k_1 antenna module 2401B_k_1, second_k_2 antenna module 2401B_k_2, ..., second_k_Xk antenna module 2401B_k_Xk" are used as the second antenna modules. Note that Xk is an integer of 1 or greater or an integer of 2 or greater. Note that k is an integer of 1 or greater and U or less.

Second_k_1 antenna module 2401B_k_1 (solid line in FIG. 24B) is an antenna module created by using a part of first_k antenna modules 2400A_k (dotted line in FIG. 24B), which is one of the first antenna modules.

Therefore, second_k_h antenna module 2401B_k_h is an antenna module created by using a part of first_k antenna modules 2400A_k (dotted line in FIG. 24B), which is one of the first antenna modules. Note that h is an integer of 1 or greater and Xk or less.

The communication apparatus illustrated in FIG. 1A1, FIG. 1B, FIG. 8A, FIG. 8B, FIG. 10A, FIG. 10B, FIG. 12A, FIG. 12B, FIG. 15A1, FIG. 15A2, FIG. 17A1, FIG. 17A2, FIG. 20A1, FIG. 20A2, FIG. 22A1, and FIG. 22A2 includes any of the second antenna modules of "second_k_1 antenna module 2401B_k_1, second_k_2 antenna module 2401B_k_2, ..., second_k_Xk antenna module 2401B_k_Xk", and transmits the transmission signal and/or receives the modulation signal.

As another method, it is assumed that the communication apparatus illustrated in FIG. 1A1, FIG. 1B, FIG. 8A, FIG. 8B, FIG. 10A, FIG. 10B, FIG. 12A, FIG. 12B, FIG. 15A1, FIG. 15A2, FIG. 17A1, FIG. 17A2, FIG. 20A1, FIG. 20A2, FIG. 22A1, and FIG. 22A2 includes a plurality of second antenna modules among the second antenna modules of "second_k_1 antenna module 2401B_k_1, second_k_2 antenna module 2401B_k_2, ..., second_k_Xk antenna module 2401B_k_Xk".

It is assumed that the communication apparatus illustrated in FIG. 1A1, FIG. 1B, FIG. 8A, FIG. 8B, FIG. 10A, FIG. 10B, FIG. 12A, FIG. 12B, FIG. 15A1, FIG. 15A2, FIG. 17A1, FIG. 17A2, FIG. 20A1, FIG. 20A2, FIG. 22A1, and FIG. 22A2 determines the antenna module to be used from among the plurality of second antenna modules included in the communication apparatus in a case of transmitting the transmission signal and/or receiving the modulation signal, and transmits the transmission signal and/or receives the modulation signal using the determined antenna module.

As described above, in the base station, the terminal, and the TRP, an effect of improving the reception quality of data can be obtained, and thus an effect of improving the transmission efficiency of data in the system can be obtained.

The TRPs illustrated in FIG. 6A1, FIG. 6A2, FIG. 6A3, FIG. 6B1, FIG. 6B2, FIG. 6B3, FIG. 13A1, FIG. 13A2, FIG. 13A3, FIG. 13F1, FIG. 13F2, FIG. 13F3, FIG. 14C, FIG. 16, FIG. 19, and FIG. 21 may include the first antenna module and the second antenna module in which the relationship between the first antenna module and the second antenna module as illustrated in FIG. 24A and FIG. 24B is established, and may perform the operations described in Embodiments 2 and 3, and the like.

As a result, in the terminal and the TRP, an effect of improving the reception quality of data can be obtained, and in a case where the multiple TRPs or the like are applied, an effect of improving the transmission efficiency of data in the system can be obtained.

As described in Embodiment 1, the communication apparatuses illustrated in FIG. 1A1, FIG. 1B, FIG. 7A, FIG. 7B, FIG. 8A, FIG. 8B, FIG. 10A, FIG. 10B, FIG. 11A, FIG. 11B, FIG. 12A, FIG. 12B, FIG. 15A1, FIG. 15A2, FIG. 17A1, FIG. 17A2, FIG. 20A1, FIG. 20A2, FIG. 22A1, and FIG. 22A2 may include the antenna port as the first antenna module and the second antenna module.

Next, a description will be given of a configuration of a communication apparatus in the present embodiment, such as a base station and a TRP, which is different from FIG. 1A1, FIG. 1B, FIG. 7A, FIG. 7B, FIG. 8A, FIG. 8B, FIG. 10A, FIG. 10B, FIG. 11A, FIG. 11B, FIG. 12A, FIG. 12B, FIG. 15A1, FIG. 15A2, FIG. 17A1, FIG. 17A2, FIG. 20A1, FIG. 20A2, FIG. 22A1, and FIG. 22A2.

FIG. 25A illustrates a configuration example of a communication apparatus such as a base station and a TRP, and the same reference numerals are assigned to those that operate in the same manner as in FIG. 1A1, and a part of the description will be omitted for the parts that have already been described.

First antenna module v of 2506A_1_v receives transmission signal group v of 112A_1_v and control signal 192A, performs control based on control signal 192A, and transmits transmission signal group v of 112A_1_v. Note that v is an integer of 1 or greater and L or less. The specific control method will be described using FIG. 25C.

In FIG. 25A, transmission processor ♭u of 102A_u (u is an integer of 1 or greater and K or less) may have a configuration as in FIG. 1A2. Since FIG. 1A2 has been described in Embodiment 1, the description will be omitted.

FIG. 25B illustrates a configuration example of a communication apparatus such as a base station and a TRP, and the same reference numerals are assigned to those that operate in the same manner as in FIG. 1B, and a part of the description will be omitted for the parts that have already been described.

First antenna module v of 2506A_1_v receives transmission signal group v of 112A_1_v and control signal 192A, performs control based on control signal 192A, and transmits transmission signal group v of 112A_1_v. The specific control method will be described using FIG. 25C.

In FIG. 25B, transmission processor ♭u of 102A_u (u is an integer of 1 or greater and K or less) may have a configuration as in FIG. 1A2. Since FIG. 1A2 has been described in Embodiment 1, the description will be omitted.

FIG. 25C illustrates a configuration of first antenna module v of 2506A_1_v in FIG. 25A and FIG. 25B, and the same reference numerals are assigned to those that operate in the same manner as in FIG. 25A and FIG. 25B, and a part of the description will be omitted for the parts that have already been described.

Distributor 2590C receives transmission signal group v of 112A_1_v and control signal 192A, and outputs distribution signal (group) 2591C in accordance with control signal 192A. In this case, it is assumed that control signal 192A includes antenna information indicating whether to operate first antenna module v of 2506A_1_v as the first antenna module or to operate first antenna module v of 2506A_1_v as the second antenna module.

In a case of operating first antenna module v of 2506A_1_v as the first antenna module, for example, the transmission signal (group) is transmitted using the antenna for operating as the first antenna module among "antenna 1 of 2592_1 to antenna P of 2592_P". Note that P is an integer of 1 or greater or an integer of 2 or greater.

Therefore, distributor 2593C determines to distribute transmission signal group v of 112A_1_v based on the information of control signal 192A that first antenna module v of 2506A_1_v is operated as the first antenna module, and outputs distribution signal (group) 2591C.

Further, antenna i of 2592_i receives control signal 192A and distribution signal (group) 2591C, determines the operation of the antenna based on the information of control signal 192A that first antenna module v of 2506A_1_v is operated as the first antenna module, and transmits distribution signal (group) 2591C or a part of distribution signal (group) 2591C.

As described above, it is made possible to operate first antenna module v of 2506A_1_v as the first antenna module.

In a case of operating first antenna module v of 2506A_1_v as the second antenna module, for example, the transmission signal (group) is transmitted using the antenna for operating as the second antenna module among "antenna 1 of 2592_1 to antenna P of 2592_P".

Therefore, distributor 2593C determines to distribute transmission signal group v of 112A_1_v based on the information of control signal 192A that first antenna module v of 2506A_1_v is operated as the second antenna module, and outputs distribution signal (group) 2591C.

Since the example in a case of operating first antenna module v of 2506A_1_v as the second antenna module has been described using FIG. 24B, the description thereof will be omitted.

In a case of "operating first antenna module v of 2506A_1_v as the second antenna module", for example, antenna 1 of 2592_1 in FIG. 25C is operated. In this case, antenna 1 of 2592_1 receives control signal 192A and distribution signal (group) 2591C, determines the operation of the antenna based on the information of control signal 192A that first antenna module v of 2506A_1_v is operated as the second antenna module, and transmits distribution signal (group) 2591C or a part of distribution signal (group) 2591C.

Therefore, antenna i of 2592_i receives control signal 192A and distribution signal (group) 2591C, and determines whether to operate the antenna based on the information of control signal 192A that first antenna module v of 2506A_1_v is operated as the second antenna module. In a case of determining to operate the antenna, antenna i of 2592_i transmits distribution signal (group) 2591C or a part of distribution signal (group) 2591C. In a case of determining not to operate the antenna, antenna i of 2592_i does not operate. Note that i is an integer of 1 or greater and P or less.

As described above, it is made possible to operate "first antenna module v of 2506A_1_v as the second antenna module".

First antenna modules 1 of 2506A_1_1 to first antenna modules L of 2506A_1_L may be the same type of first antenna module. Further, first antenna modules 1 of 2506A_1_1 to first antenna modules L of 2506A_1_L may be configured by a plurality of types of first antenna modules.

In the present embodiment, in a case of operating "first antenna module v of 2506A_1_v as the first antenna module", first antenna module v of 2506A_1_v is considered as the first antenna module "in Embodiments 1, 2, 3, and 4, and the like", in a case of operating "first antenna module v of 2506A_1_v as the second antenna module", first antenna module v of 2506A_1_v is considered as the second antenna module "in Embodiments 1, 2, 3, and 4, and the like", and the operation described "in Embodiments 1, 2, 3, and 4, and the like" can be performed.

In this case, in a case of "operating first antenna module v of 2506A_1_v as the first antenna module", and/or in a case of "operating first antenna module v of 2506A_1_v as the second antenna module", satisfying the requirements of the precoding, the number of transmission signals, and the transmission method described in Embodiments 1, 2, 3, and 4, and the like makes it possible to obtain the same effect.

Therefore, the operations described in Embodiments 1, 2, 3, and 4, and the like may be performed using the "apparatus such as a base station, a TRP, a relay apparatus, and a terminal" including the configurations of FIG. 25A and FIG. 25B.

A description will be given of a configuration of a communication apparatus in the present embodiment, such as a base station and a TRP, which is different from FIG. 1A1, FIG. 1B, FIG. 7A, FIG. 7B, FIG. 8A, FIG. 8B, FIG. 10A, FIG. 10B, FIG. 11A, FIG. 11B, FIG. 12A, FIG. 12B, FIG. 15A1, FIG. 15A2, FIG. 17A1, FIG. 17A2, FIG. 20A1, FIG. 20A2, FIG. 22A1, and FIG. 22A2 and is different from FIG. 25A.

FIG. 26A illustrates a configuration example of a communication apparatus such as a base station and a TRP, and the same reference numerals are assigned to those that operate in the same manner as in FIG. 1A1, and a part of the description will be omitted for the parts that have already been described.

Antenna port v for the antenna module of 2606A_1_v receives transmission signal group v of 112A_1_v and control signal 192A, performs control based on control signal 192A, and transmits transmission signal group v of 112A_1_v. Note that v is an integer of 1 or greater and L or less. The specific control method will be described using FIG. 25C.

In FIG. 26A, transmission processor ♭u of 102A_u (u is an integer of 1 or greater and K or less) may have a configuration as in FIG. 1A2. Since FIG. 1A2 has been described in Embodiment 1, the description will be omitted.

FIG. 26B illustrates a configuration example of a communication apparatus such as a base station and a TRP, and the same reference numerals are assigned to those that operate in the same manner as in FIG. 1B, and a part of the description will be omitted for the parts that have already been described.

Antenna port v for the antenna module of 2606A_1_v receives transmission signal group v of 112A_1_v and control signal 192A, performs control based on control signal 192A, and transmits transmission signal group v of 112A_1_v. Note that v is an integer of 1 or greater and L or less. The specific control method will be described using FIG. 25C.

In FIG. 26B, transmission processor ♭u of 102A_u (u is an integer of 1 or greater and K or less) may have a configuration as in FIG. 1A2. Since FIG. 1A2 has been described in Embodiment 1, the description will be omitted.

FIG. 25C illustrates a configuration of antenna port v for the antenna module of 2606A_1_v in FIG. 26A and FIG. 26B, and the same reference numerals are assigned to those that operate in the same manner as in FIG. 26A and FIG. 26B, and a part of the description will be omitted for the parts that have already been described.

Distributor 2590C receives transmission signal group v of 112A_1_v and control signal 192A, and outputs distribution signal (group) 2591C in accordance with control signal 192A. In this case, it is assumed that control signal 192A includes antenna information indicating whether to operate antenna port v for the antenna module of 2606A_1_v as the first antenna module or to operate antenna port v for the antenna module of 2606A_1_v as the second antenna module.

In a case of operating antenna port v for the antenna module of 2606A_1_v as the first antenna module, for example, the transmission signal (group) is transmitted using the antenna for operating as the first antenna module among "antenna 1 of 2592_1 to antenna P of 2592_P". Note that P is an integer of 1 or greater or an integer of 2 or greater.

Therefore, distributor 2593C determines to distribute transmission signal group v of 112A_1_v based on the information of control signal 192A that antenna port v for the antenna module of 2606A_1_v is operated as the first antenna module, and outputs distribution signal (group) 2591C.

Further, antenna i of 2592_i receives control signal 192A and distribution signal (group) 2591C, determines the operation of the antenna based on the information of control signal 192A that antenna port v for the antenna module of 2606A_1_v is operated as the first antenna module, and transmits distribution signal (group) 2591C or a part of distribution signal (group) 2591C.

As described above, it is made possible to operate antenna port v for the antenna module of 2606A_1_v as the first antenna module.

Antenna ports 1 of 2606A_1_1 to L of 2606A_1_L for the antenna module may be the same type of antenna port of the first antenna module. Further, "first antenna modules 1 of 2506A_1_1 to first antenna modules L of 2506A_1_L" may be configured by a plurality of types of antenna ports of the first antenna module.

In a case of operating antenna port v for the antenna module of 2606A_1_v as the second antenna module, for example, the transmission signal (group) is transmitted using the antenna for operating as the second antenna module among "antenna 1 of 2592_1 to antenna P of 2592_P".

Therefore, distributor 2593C determines to distribute transmission signal group v of 112A_1_v based on the information of control signal 192A that "antenna port v for the antenna module of 2606A_1_v is operated as the second antenna module", and outputs distribution signal (group) 2591C.

Since the example in a case of operating antenna port v for the antenna module of 2606A_1_v as the second antenna module has been described using FIG. 24B, the description thereof will be omitted.

In a case of "operating antenna port v for the antenna module of 2606A_1_v as the second antenna module", for example, antenna 1 of 2592_1 in FIG. 25C is operated. In this case, antenna 1 of 2592_1 receives control signal 192A and distribution signal (group) 2591C, determines the operation of the antenna based on the information of control signal 192A that "antenna port v for the antenna module of 2606A_1_v is operated as the second antenna module", and transmits distribution signal (group) 2591C or a part of distribution signal (group) 2591C.

Therefore, antenna i of 2592_i receives control signal 192A and distribution signal (group) 2591C, and determines whether to operate the antenna based on the information of control signal 192A that "antenna port v for the antenna module of 2606A_1_v is operated as the second antenna module". In a case of determining to operate the antenna, antenna i of 2592_i transmits distribution signal (group) 2591C or a part of distribution signal (group) 2591C. In a case of determining not to operate the antenna, antenna i of 2592_i does not operate. Note that i is an integer of 1 or greater and P or less.

As described above, it is made possible to operate antenna port v for the antenna module of 2606A_1_v as the second antenna module.

In the present embodiment, in a case of "operating antenna port v for the antenna module of 2606A_1_v as the first antenna module", antenna port v for the antenna module of 2606A_1_v is considered as the first antenna module "in Embodiments 1, 2, 3, and 4, and the like", in a case of "operating antenna port v for the antenna module of 2606A_1_v as the second antenna module", antenna port v for the antenna module of 2606A_1_v is considered as the second antenna module "in Embodiments 1, 2, 3, and 4, and the like", and the operation described "in Embodiments 1, 2, 3, and 4, and the like can be performed".

In this case, in a case of "operating antenna port v for the antenna module of 2606A_1_v as the first antenna module", and/or in a case of "operating antenna port v for the antenna module of 2606A_1_v as the second antenna module", and satisfying the requirements of the precoding, the number of transmission signals, and the transmission method described in Embodiments 1, 2, 3, and 4, and the like makes it possible to obtain the same effect.

Therefore, the operation described "in Embodiments 1, 2, 3, and 4, and the like" may be performed using the "apparatus such as a base station, a TRP, a relay apparatus, and a terminal" including the configurations of FIG. 26A and FIG. 26B.

The base station, the TRP (transmission (Tx)/reception (Rx) point) (transmitter (TX)/receiver (RX) point), the relay, and the communication apparatus such as the terminal including the antenna port corresponding to the antenna module have been described using FIG. 26A and FIG. 26B.

With refernece to FIG. 26A and FIG. 26B, the communication apparatus including the "antenna port corresponding to the antenna module" may include an antenna port other than the "antenna port corresponding to the antenna module".

In this case, in a case where the communication apparatus determines to "transmit the transmission signal using the antenna module", the communication apparatus transmits the transmission signal by designating the "antenna port corresponding to the antenna module" described in FIG. 26A, FIG. 26B, and the like. In a case of transmitting the transmission signal by using another transmission method, the communication apparatus may designate the antenna port other than the "antenna port corresponding to the antenna module" to transmit the transmission signal.

Further, in a case where the communication apparatus determines to "transmit the transmission signal using the antenna module", the communication apparatus receives the control signal including the information of whether the "antenna port corresponding to the antenna module" as described in FIG. 26A, FIG. 26B, and the like, for example, the "antenna port v for the antenna module of 2606A_1_v" "operates as the first antenna port or to operate as the second antenna port", to control the antenna.

As described above, in the terminal that is a communication counterpart of the base station and the TRP, an effect of improving the reception quality of data can be obtained, and thus an effect of improving the transmission efficiency of data in the system can be obtained.

Further, since a suitable TRP can be set for each terminal that is a communication counterpart, an effect of improving the reception quality of data can be obtained in the terminal, and thus an effect of improving the transmission efficiency of data in the system can be obtained.

The "first antenna module v of 2506A_1_v" that is the transmission antenna in FIG. 25A and FIG. 25B may be used as a reception antenna. In this case, the modulation signal transmitted by the terminal that is the communication counterpart may be received.

The "antenna port v for the antenna module of 2606A_1_v" that is the transmission antenna in FIG. 26A and FIG. 26B may be used as a reception antenna. In this case, the modulation signal transmitted by the terminal that is the communication counterpart may be received.

The configuration method of the apparatus such as the base station, the TRP, and the terminal described in the present embodiment, and the communication method (e.g., the configuration of the antenna module, the number of antenna modules, the configuration of the antenna port, the number of antenna ports, the precoding method, the frame configuration, the number of transmission signals, the number of received signals, and the like) to be performed are considered as examples described in the present specification, but are not limited to these examples.

Further, the configuration method of the first antenna module that can be used as the second antenna module is not limited to the present embodiment, and the first antenna module may have any configuration method as long as it can be used as the second antenna module.

Then, the transmission and the reception by the multiple TRPs described in Embodiment 2 and Embodiment 3 may be performed using the TRP having the configurations of FIG. 25A, FIG. 25B, FIG. 26A, and FIG. 26B.

The terminal may use the transmission method using the antenna module described in the present embodiment, or the terminal may have the configuration of the apparatus described in the present embodiment.

(Embodiment 5)

An example of performing the communication between the "base station or TRP" and the terminal described in Embodiments 1, 2, 3, and 4, and the like will be described. In the description of the present embodiment, the "base station or TRP" will be described as the base station.

For example, as illustrated in FIG. 3, base station #1 of 301_1 and the terminal perform the communication. Since FIG. 3 has already been described, the description thereof will be omitted. In the following, the communication between base station #1 of 301_1 and terminal #1 of 302_1 will be described as an example.

FIG. 27 illustrates a configuration example of modulation signal (symbol) 2700 transmitted by base station #1 of 301_1 on the time axis and frequency Axis. Note that the horizontal axis is the time and the vertical axis is frequency and as described in other embodiments, a plurality of modulation signals (symbols) 2700 may be present at the same time and the same (common) frequency.

As illustrated in FIG. 27, the modulation signal (symbol) 2700 includes, for example, reference signal 2701, control information symbol 2702, and data symbol 2703.

It is considered that reference signal 2701 is, for example, a known symbol (or the receiver may know the symbol transmitted by the transmitter by obtaining synchronization) modulated by PSK modulation in a radio power transmission apparatus, a charging apparatus, or a transceiver, a non-zero power signal, a zero power signal, a known signal in a transceiver, or the like, and the receiver uses these signals to perform "frequency synchronization", "time synchronization, (channel estimation of) each modulation signal (estimation of Channel State Information (CSI))", "signal detection", "reception state estimation", "transmission state estimation", "phase tracking due to phase noise or the like", and "estimation of a situation (such as a channel) for performing transmission beamforming and/or reception beamforming".

It is assumed that control information symbol 2702 includes, for example, information on transmission parameters such as "frequency, frequency bandwidth (number of carriers), number of streams of the signal, and modulation and coding scheme (MCS)" of the signal transmitted by the base station, "number of antennas, information on the antennas, and timing" for transmitting the signal, and information on the transmission method. Note that other examples will be described later.

Data symbol 2703 is a symbol for transmitting data, and the data is transmitted by using the transmission method described in Embodiments 1, 2, 3, and 4, and the like.

Further, FIG. 27 may be a configuration example of modulation signal (symbol) 2700 transmitted by the terminal such as terminal #1 of 302_1 on the time axis and frequency Axis. Details thereof are as described above.

Base station #1 of 301_1 (base station including base station #1) transmits the base station capability information to the terminal including terminal #1 of 302_1 in order to notify the terminal of the information on the capability of the method that can be processed by base station #1 of 301_1 itself, by using control information symbol 2702 of FIG. 27.

FIG. 28A illustrates a configuration example of the base station capability information transmitted by base station #1 of 301_1 (base station including base station #1).

It is assumed that base station capability information 2800 includes "information 2811 on whether the modulation signal transmission (downlink transmission) using the antenna module is supported", "information 2812 on whether the modulation signal reception using the antenna module is supported", "information 2813 on whether the communication using the first frequency (band) using the antenna module is supported", "information 2814 on whether the communication using the second frequency (band) using the antenna module is supported", "information 2815 on the number of transmission signals in a case of using the antenna module", and "information 2816 on the number of transmission streams in a case of using the antenna module".

The "information 2811 on whether the modulation signal transmission (downlink transmission) using the antenna module is supported" is information on whether the base station supports the "modulation signal transmission using the antenna module" described as an example in "Embodiments 1, 2, and 4, and the like". Note that the "modulation signal transmission method using the antenna module" is not limited to the transmission method described in "Embodiments 1, 2, and 4, and the like", and any transmission method may be used as long as the transmission method uses the antenna module. Further, a transmission method using the antenna port corresponding to the antenna module may be used.

Then, the terminal including terminal #1 of 302_1 obtains this information and then knows "whether the modulation signal transmission using the antenna module is supported" by the base station.

The "information 2812 on whether the modulation signal reception using the antenna module is supported" is information on whether the base station supports the "modulation signal reception using the antenna module" described as an example in "Embodiments 3 and 4, and the like". Note that the "modulation signal reception method using the antenna module" is not limited to the reception method described in "Embodiments 3 and 4, and the like", and any reception method may be used as long as the reception method uses the antenna module. Further, a reception method using the antenna port corresponding to the antenna module may be used.

Then, the terminal including terminal #1 of 302_1 obtains this information and then knows "whether the modulation signal reception using the antenna module is supported" by the base station.

The "information 2813 on whether the communication using the first frequency (band) using the antenna module is supported" is information on "whether the base station supports the "modulation signal transmission and/or reception using the antenna module" described as an example in "Embodiments 1, 2, 3, and 4, and the like" at the first frequency (band)". Note that the "modulation signal transmission and/or reception method using the antenna module" is not limited to the transmission and/or reception method described in "Embodiments 1, 2, 3, and 4, and the like", and any transmission and/or reception method may be used as long as the transmission and/or reception method uses the antenna module. Further, a transmission and/or reception method using the antenna port corresponding to the antenna module may be used.

Further, there is a method of setting the first frequency (band) to, for example, frequency range (FR) 1, FR2, FR2-1, and FR2-2. Note that FR1 is set to "frequency of 0.41 GHz to 6 GHz or less", FR2 is set to "frequency of 24.25 GHz to 52.6 GHz", FR2-1 is set to "frequency of 24.25 GHz to 52.6 GHz", and FR2-2 is set to "frequency of 52.6 GHz to 71.0 GHz".

Then, the terminal including terminal #1 of 302_1 obtains this information and then knows "whether the communication using the first frequency (band) using the antenna module is supported" by the base station.

The "information 2814 on whether the communication using the second frequency (band) using the antenna module is supported" is information on "whether the base station supports the "modulation signal transmission and/or reception using the antenna module" described as an example in "Embodiments 1, 2, 3, and 4, and the like" at the second frequency (band)". Note that the "modulation signal transmission and/or reception method using the antenna module" is not limited to the transmission and/or reception method described in "Embodiments 1, 2, 3, and 4, and the like", and any transmission and/or reception method may be used as long as the transmission and/or reception method uses the antenna module. Further, a transmission and/or reception method using the antenna port corresponding to the antenna module may be used.

Further, there is a method of setting the second frequency (band) to, for example, FR1, FR2, FR2-1, and FR2-2.

Then, the terminal including terminal #1 of 302_1 obtains this information and then knows "whether the communication using the second frequency (band) using the antenna module is supported" by the base station.

The "information 2815 on the number of transmission signals in a case of using the antenna module" is information on the "number of transmission signals that can be transmitted in a case of performing the modulation signal transmission using the antenna module" described as an example in "Embodiments 1, 2, and 4, and the like" by the base station. Note that the "modulation signal transmission method using the antenna module" is not limited to the transmission method described in "Embodiments 1, 2, and 4, and the like", and any transmission method may be used as long as the transmission method uses the antenna module. Further, a transmission method using the antenna port corresponding to the antenna module may be used.

Then, the terminal including terminal #1 of 302_1 obtains this information and then knows the "number of transmission signals that can be transmitted by the base station in a case of performing the modulation signal transmission using the antenna module".

The "information 2816 on the number of transmission streams in a case of using the antenna module" is information on the "number of transmission streams that can be transmitted in a case of performing the modulation signal transmission using the antenna module" described as an example in "Embodiments 1, 2, and 4, and the like" by the base station. Note that the "modulation signal transmission method using the antenna module" is not limited to the transmission method described in "Embodiments 1, 2, and 4, and the like", and any transmission method may be used as long as the transmission method uses the antenna module. Further, a transmission method using the antenna port corresponding to the antenna module may be used.

Then, the terminal including terminal #1 of 302_1 obtains this information and then knows "the number of transmission streams that can be transmitted by the base station in a case of performing the modulation signal transmission using the antenna module".

Note that base station capability information 2800 may not include all of "information 2811 on whether the modulation signal transmission (downlink transmission) using the antenna module is supported", "information 2812 on whether the modulation signal reception using the antenna module is supported", "information 2813 on whether the communication using the first frequency (band) using the antenna module is supported", "information 2814 on whether the communication using the second frequency (band) using the antenna module is supported", "information 2815 on the number of transmission signals in a case of using the antenna module", and "information 2816 on the number of transmission streams in a case of using the antenna module". Base station capability information 2800 may include at least one of "information 2811 on whether the modulation signal transmission (downlink transmission) using the antenna module is supported", "information 2812 on whether the modulation signal reception using the antenna module is supported", "information 2813 on whether the communication using the first frequency (band) using the antenna module is supported", "information 2814 on whether the communication using the second frequency (band) using the antenna module is supported", "information 2815 on the number of transmission signals in a case of using the antenna module", or "information 2816 on the number of transmission streams in a case of using the antenna module".

FIG. 28B illustrates an example of the configuration of the base station capability information transmitted by base station #1 of 301_1 (base station including base station #1 of 301_1) different from FIG. 28A.

It is assumed that base station capability information 2800 includes "information 2821 on whether transmission (downlink transmission) by multiple TRPs using the antenna module is supported" and "information 2822 on whether reception using by multiple TRPs using the antenna module is supported".

The "information 2821 on whether transmission (downlink transmission) by multiple TRPs using the antenna module is supported" is information on "whether the base station supports "transmission by multiple TRPs using the antenna module" described as an example in "Embodiments 2 and 4, and the like". Note that the "transmission method by multiple TRPs using the antenna module" is not limited to the transmission method described in "Embodiments 2 and 4, and the like", and any transmission method may be used as long as the transmission method is performed by multiple TRPs using the antenna module. Further, a transmission method by multiple TRPs using the antenna port corresponding to the antenna module may be used.

Then, the terminal including terminal #1 of 302_1 obtains this information and then knows "whether transmission by multiple TRPs using the antenna module is supported" by the base station.

The "information 2822 on whether the reception by multiple TRPs using the antenna module is supported" is information on "whether the base station supports the "reception by multiple TRPs using the antenna module" described as an example in "Embodiments 3 and 4, and the like"". Note that the "reception method by multiple TRPs using the antenna module" is not limited to the reception method described in "Embodiments 3 and 4, and the like", and any reception method may be used as long as the reception method is performed by multiple TRPs using the antenna module. Further, a reception method by multiple TRPs using the antenna port corresponding to the antenna module may be used.

Then, the terminal including terminal #1 of 302_1 obtains this information and then knows "whether reception by multiple TRPs using the antenna module is supported" by the base station.

Note that base station capability information 2800 may not include all of "information 2821 on whether transmission (downlink transmission) by multiple TRPs using the antenna module is supported" and "information 2822 on whether reception by multiple TRPs using the antenna module is supported". Base station capability information 2800 may include at least one of "information 2821 on whether transmission (downlink transmission) by multiple TRPs using the antenna module is supported" or "information 2822 on whether reception by multiple TRPs using the antenna module is supported".

FIG. 28C illustrates an example of the configuration of the base station capability information transmitted by base station #1 of 301_1 (base station including base station #1 of 301_1) different from FIG. 28A and FIG. 28B.

It is assumed that base station capability information 2800 includes "information 2831 on whether transmission (downlink transmission) by multiple TRPs using the SDM method using the antenna module is supported", "information 2832 on whether transmission (downlink transmission) by multiple TRPs using the TDM method using the antenna module is supported", "information 2833 on whether transmission (downlink transmission) by multiple TRPs using the FDM method using the antenna module is supported", "information 2834 on whether reception by multiple TRPs using the SDM method using the antenna module is supported", "information 2835 on whether reception by multiple TRPs using the TDM method using the antenna module is supported", and "information 2836 on whether reception by multiple TRPs using the FDM method using the antenna module is supported".

The "information 2831 on whether the transmission (downlink transmission) using the multiple TRPs using the SDM method using the antenna module is supported" is information on "whether the base station supports the "transmission using the multiple TRPs using the SDM method using the antenna module" described as an example in "Embodiments 2 and 4, and the like"". Note that the "transmission method using the multiple TRPs using the SDM method using the antenna module" is not limited to the transmission method using the multiple TRPs using the SDM method described in "Embodiments 2 and 4, and the like", and any transmission method may be used as long as the transmission method is performed by multiple TRPs using the SDM method using the antenna module. Further, a transmission method using the multiple TRPs using the SDM method using the antenna port corresponding to the antenna module may be used.

Then, the terminal including terminal #1 of 302_1 obtains this information and then knows "whether transmission by multiple TRPs using the SDM method using the antenna module is supported" by the base station.

The "information 2832 on whether the transmission (downlink transmission) using the multiple TRPs using the TDM method using the antenna module is supported" is information on "whether the base station supports the "transmission using the multiple TRPs using the TDM method using the antenna module" described as an example in "Embodiments 2 and 4, and the like"". Note that the "transmission method using the multiple TRPs using the TDM method using the antenna module" is not limited to the transmission method using the multiple TRPs using the TDM method described in "Embodiments 2 and 4, and the like", and any transmission method may be used as long as the transmission method is performed by multiple TRPs using the TDM method using the antenna module. Further, a transmission method using the multiple TRPs using the TDM method using the antenna port corresponding to the antenna module may be used.

Then, the terminal including terminal #1 of 302_1 obtains this information and then knows "whether transmission by multiple TRPs using the TDM method using the antenna module is supported" by the base station.

The "information 2833 on whether the transmission (downlink transmission) using the multiple TRPs using the FDM method using the antenna module is supported" is information on "whether the base station supports the "transmission using the multiple TRPs using the FDM method using the antenna module" described as an example in "Embodiments 2 and 4, and the like"". Note that the "transmission method using the multiple TRPs using the FDM method using the antenna module" is not limited to the transmission method using the multiple TRPs using the FDM method described in "Embodiments 2 and 4, and the like", and any transmission method may be used as long as the transmission method is performed by multiple TRPs using the FDM method using the antenna module. Further, a transmission method using the multiple TRPs using the FDM method using the antenna port corresponding to the antenna module may be used.

Then, the terminal including terminal #1 of 302_1 obtains this information and then knows "whether transmission by multiple TRPs using the FDM method using the antenna module is supported" by the base station.

The "information 2834 on whether reception by multiple TRPs using the SDM method using the antenna module is supported" is information on "whether the base station supports the "reception using the multiple TRPs using the SDM method using the antenna module" described as an example in "Embodiments 3 and 4, and the like"". Note that the "reception method using the multiple TRPs using the SDM method using the antenna module" is not limited to the reception method using the multiple TRPs using the SDM method described in "Embodiments 3 and 4, and the like", and any reception method may be used as long as the reception method is performed by multiple TRPs using the SDM method using the antenna module. Further, a reception method using the multiple TRPs using the SDM method using the antenna port corresponding to the antenna module may be used.

Then, the terminal including terminal #1 of 302_1 obtains this information and then knows "whether reception by multiple TRPs using the SDM method using the antenna module is supported" by the base station.

The "information 2835 on whether reception by multiple TRPs using the TDM method using the antenna module is supported" is information on "whether the base station supports the "reception using the multiple TRPs using the TDM method using the antenna module" described as an example in "Embodiments 3 and 4, and the like"". Note that the "reception method using the multiple TRPs using the TDM method using the antenna module" is not limited to the reception method using the multiple TRPs using the TDM method described in "Embodiments 3 and 4, and the like", and any reception method may be used as long as the reception method is performed by multiple TRPs using the TDM method using the antenna module. Further, a reception method using the multiple TRPs using the TDM method using the antenna port corresponding to the antenna module may be used.

Then, the terminal including terminal #1 of 302_1 obtains this information and then knows "whether reception by multiple TRPs using the TDM method using the antenna module is supported" by the base station.

The "information 2836 on whether reception by multiple TRPs using the FDM method using the antenna module is supported" is information on "whether the base station supports the "reception using the multiple TRPs using the FDM method using the antenna module" described as an example in "Embodiments 3 and 4, and the like"". Note that the "reception method using the multiple TRPs using the FDM method using the antenna module" is not limited to the reception method using the multiple TRPs using the FDM method described in "Embodiments 3 and 4, and the like", and any reception method may be used as long as the reception method is performed by multiple TRPs using the FDM method using the antenna module. Further, a reception method using the multiple TRPs using the FDM method using the antenna port corresponding to the antenna module may be used.

Then, the terminal including terminal #1 of 302_1 obtains this information and then knows "whether reception by multiple TRPs using the FDM method using the antenna module is supported" by the base station.

Note that base station capability information 2800 may not include all of "information 2831 on whether the transmission (downlink transmission) using the multiple TRPs using the SDM method using the antenna module is supported", "information 2832 on whether the transmission (downlink transmission) using the multiple TRPs using the TDM method using the antenna module is supported", "information 2833 on whether the transmission (downlink transmission) using the multiple TRPs using the FDM method using the antenna module is supported", "information 2834 on whether reception by multiple TRPs using the SDM method using the antenna module is supported", "information 2835 on whether reception by multiple TRPs using the TDM method using the antenna module is supported", and "information 2836 on whether reception by multiple TRPs using the FDM method using the antenna module is supported". Base station capability information 2800 may include at least one of "information 2831 on whether the transmission (downlink transmission) using the multiple TRPs using the SDM method using the antenna module is supported", "information 2832 on whether the transmission (downlink transmission) using the multiple TRPs using the TDM method using the antenna module is supported", "information 2833 on whether the transmission (downlink transmission) using the multiple TRPs using the FDM method using the antenna module is supported", "information 2834 on whether reception by multiple TRPs using the SDM method using the antenna module is supported", "information 2835 on whether reception by multiple TRPs using the TDM method using the antenna module is supported", or "information 2836 on whether reception by multiple TRPs using the FDM method using the antenna module is supported".

FIG. 28D illustrates an example of the configuration of the base station capability information transmitted by base station #1 of 301_1 (base station including base station #1 of 301_1) different from FIG. 28A, FIG. 28B, and FIG. 28C.

It is assumed that base station capability information 2800 includes "information 2841 on whether the transmission (downlink transmission) using the first antenna module and the second antenna module is supported", "information 2842 on whether the reception using the first antenna module and the second antenna module is supported", "information 2843 on whether the transmission (downlink transmission) using the multiple TRPs using the first antenna module and the second antenna module is supported", and "information 2844 on whether reception by multiple TRPs using the first antenna module and the second antenna module is supported".

The "information 2841 on whether the transmission (downlink transmission) using the first antenna module and the second antenna module is supported" is information on "whether the base station supports the "transmission using the first antenna module and the second antenna module" described as an example in "Embodiments 1, 2, and 4, and the like"". Note that the "modulation signal transmission method using the first antenna module and the second antenna module" is not limited to the transmission method described in "Embodiments 1, 2, and 4, and the like", and any transmission method may be used as long as the transmission method uses the first antenna module and the second antenna module. Further, a transmission method using the antenna port corresponding to the first antenna module and the second antenna module may be used.

Then, the terminal including terminal #1 of 302_1 obtains this information and then knows "whether the transmission using the first antenna module and the second antenna module is supported" by the base station.

The "information 2842 on whether the reception using the first antenna module and the second antenna module is supported" is information on whether the base station supports the "reception using the first antenna module and the second antenna module" described as an example in "Embodiments 3 and 4, and the like". Note that the "modulation signal reception method using the first antenna module and the second antenna module" is not limited to the reception method described in "Embodiments 3 and 4, and the like", and any reception method may be used as long as the reception method uses the first antenna module and the second antenna module. Further, a reception method using the antenna port corresponding to the first antenna module and the second antenna module may be used.

Then, the terminal including terminal #1 of 302_1 obtains this information and then knows "whether the reception using the first antenna module and the second antenna module is supported" by the base station.

The "information 2843 on whether the transmission (downlink transmission) using the multiple TRPs using the first antenna module and the second antenna module is supported" is information on "whether the base station supports the "transmission using the multiple TRPs using the first antenna module and the second antenna module" described as an example in "Embodiments 2 and 4, and the like"". Note that the "transmission method using the multiple TRPs using the first antenna module and the second antenna module" is not limited to the transmission method using the multiple TRPs described in "Embodiments 2 and 4, and the like", and any transmission method may be used as long as the transmission method is performed by multiple TRPs using the first antenna module and the second antenna module. Further, a transmission method using the multiple TRPs using the antenna port corresponding to the first antenna module and the second antenna module may be used.

Then, the terminal including terminal #1 of 302_1 obtains this information and then knows "whether transmission by multiple TRPs using the first antenna module and the second antenna module is supported" by the base station.

The "information 2844 on whether reception by multiple TRPs using the first antenna module and the second antenna module is supported" is information on "whether the base station supports the "reception using the multiple TRPs using the first antenna module and the second antenna module" described as an example in "Embodiments 3 and 4, and the like"". Note that the "reception method using the multiple TRPs using the first antenna module and the second antenna module" is not limited to the reception method using the multiple TRPs described in "Embodiments 3 and 4, and the like", and any reception method may be used as long as the reception method is performed by multiple TRPs using the first antenna module and the second antenna module. Further, a reception method using the multiple TRPs using the antenna port corresponding to the first antenna module and the second antenna module may be used.

Then, the terminal including terminal #1 of 302_1 obtains this information and then knows "whether reception by multiple TRPs using the first antenna module and the second antenna module is supported" by the base station.

Note that base station capability information 2800 may not include all of "information 2841 on whether the transmission (downlink transmission) using the first antenna module and the second antenna module is supported", "information 2842 on whether the reception using the first antenna module and the second antenna module is supported", "information 2843 on whether the transmission (downlink transmission) using the multiple TRPs using the first antenna module and the second antenna module is supported", and "information 2844 on whether reception by multiple TRPs using the first antenna module and the second antenna module is supported". Base station capability information 2800 may include at least one of "information 2841 on whether the transmission (downlink transmission) using the first antenna module and the second antenna module is supported", "information 2842 on whether the reception using the first antenna module and the second antenna module is supported", "information 2843 on whether the transmission (downlink transmission) using the multiple TRPs using the first antenna module and the second antenna module is supported", or "information 2844 on whether reception by multiple TRPs using the first antenna module and the second antenna module is supported".

FIG. 28E illustrates an example of the configuration of the base station capability information transmitted by base station #1 of 301_1 (base station including base station #1 of 301_1) different from FIG. 28A, FIG. 28B, FIG. 28C, and FIG. 28D.

It is assumed that base station capability information 2800 includes "information 2851 on whether the transmission (downlink transmission) using the multiple TRPs using the SDM method using the first antenna module and the second antenna module is supported", "information 2852 on whether the transmission (downlink transmission) using the multiple TRPs using the TDM method using the first antenna module and the second antenna module is supported", "information 2853 on whether the transmission (downlink transmission) using the multiple TRPs using the FDM method using the first antenna module and the second antenna module is supported", "information 2854 on whether reception by multiple TRPs using the SDM method using the first antenna module and the second antenna module is supported", "information 2855 on whether reception by multiple TRPs using the TDM method using the first antenna module and the second antenna module is supported", and "information 2856 on whether reception by multiple TRPs using the FDM method using the first antenna module and the second antenna module is supported".

The "information 2851 on whether the transmission (downlink transmission) using the multiple TRPs using the SDM method using the first antenna module and the second antenna module is supported" is information on "whether the base station supports the "transmission using the multiple TRPs using the SDM method using the first antenna module and the second antenna module" described as an example in "Embodiments 2 and 4, and the like"". Note that the "transmission method using the multiple TRPs using the SDM method using the first antenna module and the second antenna module" is not limited to the transmission method using the multiple TRPs using the SDM method described in "Embodiments 2 and 4, and the like", and any transmission method may be used as long as the transmission method is performed by multiple TRPs using the SDM method using the first antenna module and the second antenna module. Further, a transmission method using the multiple TRPs using the SDM method using the antenna port corresponding to the first antenna module and the second antenna module may be used.

Then, the terminal including terminal #1 of 302_1 obtains this information and then knows "whether transmission by multiple TRPs using the SDM method using the first antenna module and the second antenna module is supported" by the base station.

The "information 2852 on whether the transmission (downlink transmission) using the multiple TRPs using the TDM method using the first antenna module and the second antenna module is supported" is information on "whether the base station supports the "transmission using the multiple TRPs using the TDM method using the first antenna module and the second antenna module" described as an example in "Embodiments 2 and 4, and the like"". Note that the "transmission method using the multiple TRPs using the TDM method using the first antenna module and the second antenna module" is not limited to the transmission method using the multiple TRPs using the TDM method described in "Embodiments 2 and 4, and the like", and any transmission method may be used as long as the transmission method is performed by multiple TRPs using the TDM method using the first antenna module and the second antenna module. Further, a transmission method using the multiple TRPs using the TDM method using the antenna port corresponding to the first antenna module and the second antenna module may be used.

Then, the terminal including terminal #1 of 302_1 obtains this information and then knows "whether transmission by multiple TRPs using the TDM method using the first antenna module and the second antenna module is supported" by the base station.

The "information 2853 on whether the transmission (downlink transmission) using the multiple TRPs using the FDM method using the first antenna module and the second antenna module is supported" is information on "whether the base station supports the "transmission using the multiple TRPs using the FDM method using the first antenna module and the second antenna module" described as an example in "Embodiments 2 and 4, and the like"". Note that the "transmission method using the multiple TRPs using the FDM method using the first antenna module and the second antenna module" is not limited to the transmission method using the multiple TRPs using the FDM method described in "Embodiments 2 and 4, and the like", and any transmission method may be used as long as the transmission method is performed by multiple TRPs using the FDM method using the first antenna module and the second antenna module. Further, a transmission method using the multiple TRPs using the FDM method using the antenna port corresponding to the first antenna module and the second antenna module may be used.

Then, the terminal including terminal #1 of 302_1 obtains this information and then knows "whether transmission by multiple TRPs using the FDM method using the first antenna module and the second antenna module is supported" by the base station.

The "information 2854 on whether reception by multiple TRPs using the SDM method using the first antenna module and the second antenna module is supported" is information on "whether the base station supports the "reception using the multiple TRPs using the SDM method using the first antenna module and the second antenna module" described as an example in "Embodiments 3 and 4, and the like"". Note that the "reception method using the multiple TRPs using the SDM method using the first antenna module and the second antenna module" is not limited to the reception method using the multiple TRPs using the SDM method described in "Embodiments 3 and 4, and the like", and any reception method may be used as long as the reception method is performed by multiple TRPs using the SDM method using the first antenna module and the second antenna module. Further, a reception method using the multiple TRPs using the SDM method using the antenna port corresponding to the first antenna module and the second antenna module may be used.

Then, the terminal including terminal #1 of 302_1 obtains this information and then knows "whether reception by multiple TRPs using the SDM method using the first antenna module and the second antenna module is supported" by the base station.

The "information 2855 on whether reception by multiple TRPs using the TDM method using the first antenna module and the second antenna module is supported" is information on "whether the base station supports the "reception using the multiple TRPs using the TDM method using the first antenna module and the second antenna module" described as an example in "Embodiments 3 and 4, and the like"". Note that the "reception method using the multiple TRPs using the TDM method using the first antenna module and the second antenna module" is not limited to the reception method using the multiple TRPs using the TDM method described in "Embodiments 3 and 4, and the like", and any reception method may be used as long as the reception method is performed by multiple TRPs using the TDM method using the first antenna module and the second antenna module. Further, a reception method using the multiple TRPs using the TDM method using the antenna port corresponding to the first antenna module and the second antenna module may be used.

Then, the terminal including terminal #1 of 302_1 obtains this information and then knows "whether reception by multiple TRPs using the TDM method using the first antenna module and the second antenna module is supported" by the base station.

The "information 2856 on whether reception by multiple TRPs using the FDM method using the first antenna module and the second antenna module is supported" is information on "whether the base station supports the "reception using the multiple TRPs using the FDM method using the first antenna module and the second antenna module" described as an example in "Embodiments 3 and 4, and the like"". Note that the "reception method using the multiple TRPs using the FDM method using the first antenna module and the second antenna module" is not limited to the reception method using the multiple TRPs using the FDM method described in "Embodiments 3 and 4, and the like", and any reception method may be used as long as the reception method is performed by multiple TRPs using the FDM method using the first antenna module and the second antenna module. Further, a reception method using the multiple TRPs using the FDM method using the antenna port corresponding to the first antenna module and the second antenna module may be used.

Then, the terminal including terminal #1 of 302_1 obtains this information and then knows "whether reception by multiple TRPs using the FDM method using the first antenna module and the second antenna module is supported" by the base station.

Note that base station capability information 2800 may not include all of "information 2851 on whether the transmission (downlink transmission) using the multiple TRPs using the SDM method using the first antenna module and the second antenna module is supported", "information 2852 on whether the transmission (downlink transmission) using the multiple TRPs using the TDM method using the first antenna module and the second antenna module is supported", "information 2853 on whether the transmission (downlink transmission) using the multiple TRPs using the FDM method using the first antenna module and the second antenna module is supported", "information 2854 on whether reception by multiple TRPs using the SDM method using the first antenna module and the second antenna module is supported", "information 2855 on whether reception by multiple TRPs using the TDM method using the first antenna module and the second antenna module is supported", and "information 2856 on whether reception by multiple TRPs using the FDM method using the first antenna module and the second antenna module is supported". Base station capability information 2800 may include at least one of "information 2851 on whether the transmission (downlink transmission) using the multiple TRPs using the SDM method using the first antenna module and the second antenna module is supported", "information 2852 on whether the transmission (downlink transmission) using the multiple TRPs using the TDM method using the first antenna module and the second antenna module is supported", "information 2853 on whether the transmission (downlink transmission) using the multiple TRPs using the FDM method using the first antenna module and the second antenna module is supported", "information 2854 on whether reception by multiple TRPs using the SDM method using the first antenna module and the second antenna module is supported", "information 2855 on whether reception by multiple TRPs using the TDM method using the first antenna module and the second antenna module is supported", or "information 2856 on whether reception by multiple TRPs using the FDM method using the first antenna module and the second antenna module is supported".

As described above, the terminal can know the state of the antenna module of the base station, and thus an effect of being capable of selecting the communication method that has a high transmission efficiency of data and can improve the reception quality of data can be obtained.

In order for terminal #1 of 302_1 (terminal including terminal #1 of 302_1) to notify base station #1 of 301_1 (base station including base station #1 of 301_1) of its capability information (terminal capability information) regarding the methods it can process, terminal #1 of 302_1 will transmit the terminal capability information using control information symbol 2702 in FIG 27.

FIG. 29A illustrates a configuration example of the terminal capability information transmitted by the terminal including terminal #1 of 302_1.

It is assumed that terminal capability information 2900 includes "information 2911 on whether the modulation signal transmission (uplink transmission) using the antenna module is supported", "information 2912 on whether the modulation signal reception using the antenna module is supported", "information 2913 on whether the communication using the first frequency (band) using the antenna module is supported", and "information 2914 on whether the communication using the second frequency (band) using the antenna module is supported".

The "information 2911 on whether the modulation signal transmission (uplink transmission) using the antenna module is supported" is information on "whether the terminal supports the "modulation signal transmission using the antenna module" described as an example in the present specification". Note that the "modulation signal transmission method using the antenna module" is not limited to the transmission method described in the present specification, and any transmission method may be used as long as the transmission method uses the antenna module. Further, a transmission method using the antenna port corresponding to the antenna module may be used.

Then, the base station obtains this information and then knows "whether the modulation signal transmission using the antenna module is supported" by terminal #1 of 302_1.

The "information 2912 on whether the modulation signal reception using the antenna module is supported" is information on whether the terminal supports the "modulation signal reception using the antenna module" described as an example in the present specification. Note that the "modulation signal reception method using the antenna module" is not limited to the reception method described in the present specification, and any reception method may be used as long as the reception method uses the antenna module. Further, a reception method using the antenna port corresponding to the antenna module may be used.

Then, the base station obtains this information and then knows "whether the modulation signal reception using the antenna module is supported" by terminal #1 of 302_1.

The "information 2913 on whether the communication using the first frequency (band) using the antenna module is supported" is information on whether the terminal supports the "modulation signal transmission and/or reception using the antenna module" described as an example in the present specification at the first frequency (band). Note that the "modulation signal transmission and/or reception method using the antenna module" is not limited to the transmission and/or reception method described in the present specification, and any transmission and/or reception method may be used as long as the transmission and/or reception method uses the antenna module. Further, a transmission and/or reception method using the antenna port corresponding to the antenna module may be used. Further, there is a method of setting the first frequency (band) to, for example, FR1, FR2, FR2-1, and FR2-2.

Then, the base station obtains this information and then knows "whether the communication using the first frequency (band) using the antenna module is supported" by terminal #1 of 302_1.

The "information 2914 on whether the communication using the second frequency (band) using the antenna module is supported" is information on whether the terminal supports the "modulation signal transmission and/or reception using the antenna module" described as an example in the present specification at the second frequency (band). Note that the "modulation signal transmission and/or reception method using the antenna module" is not limited to the transmission and/or reception method described in the present specification, and any transmission and/or reception method may be used as long as the transmission and/or reception method uses the antenna module. Further, a transmission and/or reception method using the antenna port corresponding to the antenna module may be used.

Further, there is a method of setting the second frequency (band) to, for example, FR1, FR2, FR2-1, and FR2-2.

Then, the base station obtains this information and then knows "whether the communication using the second frequency (band) using the antenna module is supported" by terminal #1 of 302_1.

Note that terminal capability information 2900 may not include all of "information 2911 on whether the modulation signal transmission (uplink transmission) using the antenna module is supported", "information 2912 on whether the modulation signal reception using the antenna module is supported", "information 2913 on whether the communication using the first frequency (band) using the antenna module is supported", and "information 2914 on whether the communication using the second frequency (band) using the antenna module is supported". Terminal capability information 2900 may include at least one of "information 2911 on whether the modulation signal transmission (uplink transmission) using the antenna module is supported", "information 2912 on whether the modulation signal reception using the antenna module is supported", "information 2913 on whether the communication using the first frequency (band) using the antenna module is supported", or "information 2914 on whether the communication using the second frequency (band) using the antenna module is supported".

FIG. 29B illustrates an example of the configuration of the terminal capability information transmitted by the terminal including terminal #1 of 302_1 different from FIG. 29A.

It is assumed that terminal capability information 2900 includes "information 2921 on whether the transmission (uplink transmission) to the "multiple TRPs using the antenna module" is supported" and "information 2922 on whether reception by multiple TRPs using the antenna module is supported".

The "information 2921 on whether the transmission (uplink transmission) to the "multiple TRPs using the antenna module" is supported" is information on whether the terminal supports the "transmission to the multiple TRPs using the antenna module" described as an example in "Embodiments 3 and 4, and the like". Note that the "transmission method for multiple TRPs using the antenna module" is not limited to the transmission method described in "Embodiments 3 and 4, and the like", and any transmission method may be used as long as the transmission method is the transmission method for multiple TRPs using the antenna module. Further, a transmission method for "multiple TRPs using the antenna port corresponding to the antenna module" may be used.

Then, the base station obtains this information and then knows "whether the transmission for the "multiple TRPs using the antenna module" is supported" by terminal #1 of 302_1.

The "information 2922 on whether reception by multiple TRPs using the antenna module is supported" is information on whether the terminal supports the "reception using the multiple TRPs using the antenna module" described as an example in "Embodiments 1, 2, and 4, and the like". Note that the "reception method using the multiple TRPs using the antenna module" is not limited to the reception method described in "Embodiments 1, 2, and 4, and the like", and any reception method may be used as long as the reception method is the reception method performed by multiple TRPs using the antenna module. Further, a reception method using the multiple TRPs using the antenna port corresponding to the antenna module may be used.

Then, the base station obtains this information and then knows "whether reception by multiple TRPs using the antenna module is supported" by terminal #1 of 302_1.

Note that terminal capability information 2900 may not include all of "information 2921 on whether the transmission (uplink transmission) to the "multiple TRPs using the antenna module" is supported" and "information 2922 on whether reception by multiple TRPs using the antenna module is supported". Terminal capability information 2900 may include at least one of "information 2921 on whether the transmission (uplink transmission) to the "multiple TRPs using the antenna module" is supported" or "information 2922 on whether reception by multiple TRPs using the antenna module is supported".

FIG. 29C illustrates an example of the configuration of the terminal capability information transmitted by the terminal including terminal #1 of 302_1 different from FIG. 29A and FIG. 29B.

It is assumed that terminal capability information 2900 includes "information 2931 on whether the transmission (uplink transmission) corresponding to the "SDM method of the multiple TRPs using the antenna module" is supported", "information 2932 on whether the transmission (uplink transmission) corresponding to the "TDM method of the multiple TRPs using the antenna module" is supported", "information 2933 on whether the transmission (uplink transmission) corresponding to the "FDM method of the multiple TRPs using the antenna module" is supported", "information 2934 on whether the reception using the SDM method of the multiple TRPs using the antenna module is supported", "information 2935 on whether the reception using the TDM method of the multiple TRPs using the antenna module is supported", and "information 2936 on whether the reception using the FDM method of the multiple TRPs using the antenna module is supported".

The "information 2931 on whether the transmission (uplink transmission) corresponding to the "SDM method of the multiple TRPs using the antenna module" is supported" is information on "whether the terminal supports the "transmission corresponding to the "SDM method of the multiple TRPs using the antenna module" described as an example in "Embodiments 3 and 4, and the like"". Note that the "transmission method corresponding to the "SDM method of the multiple TRPs using the antenna module"" is not limited to the "transmission method corresponding to the "SDM method of the multiple TRPs" described in "Embodiments 3 and 4, and the like", and any transmission method may be used as long as the transmission method is the transmission method corresponding to the "SDM method of the multiple TRPs using the antenna module". Further, a transmission method corresponding to the "SDM method of the multiple TRPs using the antenna port corresponding to the antenna module" may be used.

Then, the base station obtains this information and then knows "whether the transmission corresponding to the "SDM method of the multiple TRPs using the antenna module" is supported" by terminal #1 of 302_1.

The "information 2932 on whether the transmission (uplink transmission) corresponding to the "TDM method of the multiple TRPs using the antenna module" is supported" is information on "whether the terminal supports the "transmission corresponding to the "TDM method of the multiple TRPs using the antenna module" described as an example in "Embodiments 3 and 4, and the like"". Note that the "transmission method corresponding to the "TDM method of the multiple TRPs using the antenna module"" is not limited to the "transmission method corresponding to the "TDM method of the multiple TRPs" described in "Embodiments 3 and 4, and the like", and any transmission method may be used as long as the transmission method is the transmission method corresponding to the "TDM method of the multiple TRPs using the antenna module". Further, a transmission method corresponding to the "TDM method of the multiple TRPs using the antenna port corresponding to the antenna module" may be used.

Then, the base station obtains this information and then knows "whether the transmission corresponding to the "TDM method of the multiple TRPs using the antenna module" is supported" by terminal #1 of 302_1.

The "information 2933 on whether the transmission (uplink transmission) corresponding to the "FDM method of the multiple TRPs using the antenna module" is supported" is information on "whether the terminal supports the "transmission corresponding to the "FDM method of the multiple TRPs using the antenna module" described as an example in "Embodiments 3 and 4, and the like"". Note that the "transmission method corresponding to the "FDM method of the multiple TRPs using the antenna module"" is not limited to the "transmission method corresponding to the "FDM method of the multiple TRPs" described in "Embodiments 3 and 4, and the like", and any transmission method may be used as long as the transmission method is the transmission method corresponding to the "FDM method of the multiple TRPs using the antenna module". Further, a transmission method corresponding to the "FDM method of the multiple TRPs using the antenna port corresponding to the antenna module" may be used.

Then, the base station obtains this information and then knows "whether the transmission corresponding to the "FDM method of the multiple TRPs using the antenna module" is supported" by terminal #1 of 302_1.

The "information 2934 on whether the reception using the SDM method of the multiple TRPs using the antenna module is supported" is information on "whether the terminal supports the "reception using the SDM method of the multiple TRPs using the antenna module" described as an example in "Embodiments 1, 2, and 4, and the like"". Note that the "reception method using the SDM method of the multiple TRPs using the antenna module" is not limited to the "reception method using the SDM method of the multiple TRPs" described in "Embodiments 1, 2, and 4, and the like", and any reception method may be used as long as the reception method is the reception method using the SDM method of the multiple TRPs using the antenna module. Further, a reception method using the multiple TRPs using the SDM method using the antenna port corresponding to the antenna module may be used.

Then, the base station obtains this information and then knows "whether the reception using the SDM method of the multiple TRPs using the antenna module is supported" by terminal #1 of 302_1.

The "information 2935 on whether the reception using the TDM method of the multiple TRPs using the antenna module is supported" is information on "whether the terminal supports the "reception using the TDM method of the multiple TRPs using the antenna module" described as an example in "Embodiments 1, 2, and 4, and the like"". Note that the "reception method using the TDM method of the multiple TRPs using the antenna module" is not limited to the "reception method using the TDM method of the multiple TRPs" described in "Embodiments 1, 2, and 4, and the like", and any reception method may be used as long as the reception method is the reception method using the TDM method of the multiple TRPs using the antenna module. Further, a reception method using the multiple TRPs using the TDM method using the antenna port corresponding to the antenna module may be used.

Then, the base station obtains this information and then knows "whether the reception using the TDM method of the multiple TRPs using the antenna module is supported" by terminal #1 of 302_1.

The "information 2936 on whether the reception using the FDM method of the multiple TRPs using the antenna module is supported" is information on "whether the terminal supports the "reception using the FDM method of the multiple TRPs using the antenna module" described as an example in "Embodiments 1, 2, and 4, and the like"". Note that the "reception method using the FDM method of the multiple TRPs using the antenna module" is not limited to the "reception method using the FDM method of the multiple TRPs" described in "Embodiments 1, 2, and 4, and the like", and any reception method may be used as long as the reception method is the reception method using the FDM method of the multiple TRPs using the antenna module. Further, a reception method using the multiple TRPs using the FDM method using the antenna port corresponding to the antenna module may be used.

Then, the base station obtains this information and then knows "whether reception by multiple TRPs using the FDM method using the antenna module is supported" by terminal #1 of 302_1.

Note that terminal capability information 2900 may not include all of "information 2931 on whether the transmission (uplink transmission) corresponding to the "SDM method of the multiple TRPs using the antenna module" is supported", "information 2932 on whether the transmission (uplink transmission) corresponding to the "TDM method of the multiple TRPs using the antenna module" is supported", "information 2933 on whether the transmission (uplink transmission) corresponding to the "FDM method of the multiple TRPs using the antenna module" is supported", "information 2934 on whether the reception using the SDM method of the multiple TRPs using the antenna module is supported", "information 2935 on whether the reception using the TDM method of the multiple TRPs using the antenna module is supported", and "information 2936 on whether the reception using the FDM method of the multiple TRPs using the antenna module" is supported". Terminal capability information 2900 may include at least one of "information 2931 on whether the transmission (uplink transmission) corresponding to the "SDM method of the multiple TRPs using the antenna module" is supported", "information 2932 on whether the transmission (uplink transmission) corresponding to the "TDM method of the multiple TRPs using the antenna module" is supported", "information 2933 on whether the transmission (uplink transmission) corresponding to the "FDM method of the multiple TRPs using the antenna module" is supported", "information 2934 on whether the reception using the SDM method of the multiple TRPs using the antenna module is supported", "information 2935 on whether the reception using the TDM method of the multiple TRPs using the antenna module is supported", or "information 2936 on whether the reception using the FDM method of the multiple TRPs using the antenna module is supported".

FIG. 29D illustrates an example of the configuration of the terminal capability information transmitted by terminal #1 of 302_1 (terminal including terminal #1 of 302_1) different from FIG. 29A, FIG. 29B, and FIG. 29C.

It is assumed that terminal capability information 2900 includes "information 2941 on whether the transmission (uplink transmission) using the first antenna module and the second antenna module is supported", "information 2942 on whether the reception using the first antenna module and the second antenna module is supported", "information 2943 on whether the transmission (uplink transmission) to the "multiple TRPs using the first antenna module and the second antenna module" is supported", and "information 2944 on whether reception by multiple TRPs using the first antenna module and the second antenna module is supported".

The "information 2941 on whether the transmission (uplink transmission) using the first antenna module and the second antenna module is supported" is information on "whether the terminal supports the "transmission using the first antenna module and the second antenna module" described as an example in the present specification". Note that the "modulation signal transmission method using the first antenna module and the second antenna module" is not limited to the transmission method described in the present specification, and any transmission method may be used as long as the transmission method uses the first antenna module and the second antenna module. Further, a transmission method using the antenna port corresponding to the first antenna module and the second antenna module may be used.

Then, the base station obtains this information and then knows "whether the transmission using the first antenna module and the second antenna module is supported" by terminal #1 of 302_1.

The "information 2942 on whether the reception using the first antenna module and the second antenna module is supported" is information on "whether the terminal supports the "reception using the first antenna module and the second antenna module" described as an example in "Embodiments 1, 2, and 4, and the like"". Note that the "modulation signal reception method using the first antenna module and the second antenna module" is not limited to the reception method described in "Embodiments 1, 2, and 4, and the like", and any reception method may be used as long as the reception method uses the first antenna module and the second antenna module. Further, a reception method using the antenna port corresponding to the first antenna module and the second antenna module may be used.

Then, the base station obtains this information and then knows "whether the reception using the first antenna module and the second antenna module is supported" by terminal #1 of 302_1.

The "information 2943 on whether the transmission (uplink transmission) to the "multiple TRPs using the first antenna module and the second antenna module" is supported" is information on "whether the terminal supports the "transmission to the multiple TRPs using the first antenna module and the second antenna module" described as an example in "Embodiments 3 and 4, and the like"". Note that the "transmission method for multiple TRPs using the first antenna module and the second antenna module" is not limited to the transmission method described in "Embodiments 3 and 4, and the like", and any transmission method may be used as long as the transmission method is the transmission method for the multiple TRPs using the first antenna module and the second antenna module. Further, a transmission method for "multiple TRPs using the antenna port corresponding to the first antenna module and the second antenna module" may be used.

Then, the base station obtains this information and then knows "whether the transmission for the "multiple TRPs using the first antenna module and the second antenna module" is supported" by terminal #1 of 302_1.

The "information 2944 on whether reception by multiple TRPs using the first antenna module and the second antenna module is supported" is information on "whether the terminal supports the "reception using the multiple TRPs using the first antenna module and the second antenna module" described as an example in "Embodiments 1, 2, and 4, and the like"". Note that the "reception method using the multiple TRPs using the first antenna module and the second antenna module" is not limited to the reception method described in "Embodiments 1, 2, and 4, and the like", and any reception method may be used as long as the reception method is the reception method performed by multiple TRPs using the first antenna module and the second antenna module. Further, a reception method using the multiple TRPs using the antenna port corresponding to the first antenna module and the second antenna module may be used.

Then, the base station obtains this information and then knows "whether reception by multiple TRPs using the first antenna module and the second antenna module is supported" by terminal #1 of 302_1.

Note that terminal capability information 2900 may not include all of "information 2941 on whether the transmission (uplink transmission) using the first antenna module and the second antenna module is supported", "information 2942 on whether the reception using the first antenna module and the second antenna module is supported", "information 2943 on whether the transmission (uplink transmission) to the "multiple TRPs using the first antenna module and the second antenna module" is supported", and "information 2944 on whether reception by multiple TRPs using the first antenna module and the second antenna module is supported". Terminal capability information 2900 may include at least one of "information 2941 on whether the transmission (uplink transmission) using the first antenna module and the second antenna module is supported", "information 2942 on whether the reception using the first antenna module and the second antenna module is supported", "information 2943 on whether the transmission (uplink transmission) to the "multiple TRPs using the first antenna module and the second antenna module" is supported", or "information 2944 on whether reception by multiple TRPs using the first antenna module and the second antenna module is supported".

FIG. 29E illustrates an example of the configuration of the terminal capability information transmitted by terminal #1 of 302_1 (terminal including terminal #1 of 302_1) different from FIG. 29A, FIG. 29B, FIG. 29C, and FIG. 29D.

It is assumed that terminal capability information 2900 includes "information 2951 on whether the transmission (uplink transmission) corresponding to the "SDM method of the multiple TRPs using the first antenna module and the second antenna module" is supported", "information 2952 on whether the transmission (uplink transmission) corresponding to the "TDM method of the multiple TRPs using the first antenna module and the second antenna module" is supported", "information 2953 on whether the transmission (uplink transmission) corresponding to the "FDM method of the multiple TRPs using the first antenna module and the second antenna module" is supported", "information 2954 on whether the reception using the SDM method of the multiple TRPs using the first antenna module and the second antenna module is supported", "information 2955 on whether the reception using the TDM method of the multiple TRPs using the first antenna module and the second antenna module is supported", and "information 2956 on whether the reception using the FDM method of the multiple TRPs using the first antenna module and the second antenna module is supported".

The "information 2951 on whether the transmission (uplink transmission) corresponding to the "SDM method of the multiple TRPs using the first antenna module and the second antenna module" is supported" is information on "whether the terminal supports the "transmission corresponding to the "SDM method of the multiple TRPs using the first antenna module and the second antenna module" described as an example in "Embodiments 3 and 4, and the like"". Note that the "transmission method corresponding to the "SDM method of the multiple TRPs using the first antenna module and the second antenna module"" is not limited to the "transmission method corresponding to the "SDM method of the multiple TRPs" described in "Embodiments 3 and 4, and the like", and any transmission method may be used as long as the transmission method is the transmission method corresponding to the "SDM method of the multiple TRPs using the first antenna module and the second antenna module". Further, a transmission method corresponding to the "SDM method of the multiple TRPs using the antenna port corresponding to the first antenna module and the second antenna module" may be used.

Then, the base station obtains this information and then knows "whether the transmission corresponding to the "SDM method of the multiple TRPs using the first antenna module and the second antenna module" is supported" by terminal #1 of 302_1.

The "information 2952 on whether the transmission (uplink transmission) corresponding to the "TDM method of the multiple TRPs using the first antenna module and the second antenna module" is supported" is information on "whether the terminal supports the "transmission corresponding to the "TDM method of the multiple TRPs using the first antenna module and the second antenna module" described as an example in "Embodiments 3 and 4, and the like"". Note that the "transmission method corresponding to the "TDM method of the multiple TRPs using the first antenna module and the second antenna module"" is not limited to the "transmission method corresponding to the "TDM method of the multiple TRPs" described in "Embodiments 3 and 4, and the like", and any transmission method may be used as long as the transmission method is the transmission method corresponding to the "TDM method of the multiple TRPs using the first antenna module and the second antenna module". Further, a transmission method corresponding to the "TDM method of the multiple TRPs using the antenna port corresponding to the first antenna module and the second antenna module" may be used.

Then, the base station obtains this information and then knows "whether the transmission corresponding to the "TDM method of the multiple TRPs using the first antenna module and the second antenna module" is supported" by terminal #1 of 302_1.

The "information 2953 on whether the transmission (uplink transmission) corresponding to the "FDM method of the multiple TRPs using the first antenna module and the second antenna module" is supported" is information on "whether the terminal supports the "transmission corresponding to the "FDM method of the multiple TRPs using the first antenna module and the second antenna module" described as an example in "Embodiments 3 and 4, and the like"". Note that the "transmission method corresponding to the "FDM method of the multiple TRPs using the first antenna module and the second antenna module"" is not limited to the "transmission method corresponding to the "FDM method of the multiple TRPs" described in "Embodiments 3 and 4, and the like", and any transmission method may be used as long as the transmission method is the transmission method corresponding to the "FDM method of the multiple TRPs using the first antenna module and the second antenna module". Further, a transmission method corresponding to the "FDM method of the multiple TRPs using the antenna port corresponding to the first antenna module and the second antenna module" may be used.

Then, the base station obtains this information and then knows "whether the transmission corresponding to the "FDM method of the multiple TRPs using the first antenna module and the second antenna module" is supported" by terminal #1 of 302_1.

The "information 2954 on whether the reception using the SDM method of the multiple TRPs using the first antenna module and the second antenna module is supported" is information on "whether the terminal supports the "reception using the SDM method of the multiple TRPs using the first antenna module and the second antenna module" described as an example in "Embodiments 1, 2, and 4, and the like"". Note that the "reception method using the SDM method of the multiple TRPs using the first antenna module and the second antenna module" is not limited to the "reception method using the SDM method of the multiple TRPs" described in "Embodiments 1, 2, and 4, and the like", and any reception method may be used as long as the reception method is the reception method using the SDM method of the multiple TRPs using the first antenna module and the second antenna module. Further, a reception method using the multiple TRPs using the SDM method using the antenna port corresponding to the first antenna module and the second antenna module may be used.

Then, the base station obtains this information and then knows "whether reception by multiple TRPs using the SDM method using the first antenna module and the second antenna module is supported" by terminal #1 of 302_1.

The "information 2955 on whether the reception using the TDM method of the multiple TRPs using the first antenna module and the second antenna module is supported" is information on whether the terminal supports the "reception using the TDM method of the multiple TRPs using the first antenna module and the second antenna module" described as an example in "Embodiments 1, 2, and 4, and the like". Note that the "reception method using the TDM method of the multiple TRPs using the first antenna module and the second antenna module" is not limited to the "reception method using the TDM method of the multiple TRPs" described in "Embodiments 1, 2, and 4, and the like", and any reception method may be used as long as the reception method is the reception method using the TDM method of the multiple TRPs using the first antenna module and the second antenna module. Further, a reception method using the multiple TRPs using the TDM method using the antenna port corresponding to the first antenna module and the second antenna module may be used.

Then, the base station obtains this information and then knows "whether reception by multiple TRPs using the TDM method using the first antenna module and the second antenna module is supported" by terminal #1 of 302_1.

The "information 2956 on whether the reception using the FDM method of the multiple TRPs using the first antenna module and the second antenna module is supported" is information on "whether the terminal supports the "reception using the FDM method of the multiple TRPs using the first antenna module and the second antenna module" described as an example in "Embodiments 1, 2, and 4, and the like"". Note that the "reception method using the FDM method of the multiple TRPs using the first antenna module and the second antenna module" is not limited to the "reception method using the FDM method of the multiple TRPs" described in "Embodiments 1, 2, and 4, and the like", and any reception method may be used as long as the reception method is the reception method using the FDM method of the multiple TRPs using the first antenna module and the second antenna module. Further, a reception method using the multiple TRPs using the FDM method using the antenna port corresponding to the first antenna module and the second antenna module may be used.

Then, the base station obtains this information and then knows "whether reception by multiple TRPs using the FDM method using the first antenna module and the second antenna module is supported" by terminal #1 of 302_1.

Note that terminal capability information 2900 may not include all of "information 2951 on whether the transmission (uplink transmission) corresponding to the "SDM method of the multiple TRPs using the first antenna module and the second antenna module" is supported", "information 2952 on whether the transmission (uplink transmission) corresponding to the "TDM method of the multiple TRPs using the first antenna module and the second antenna module" is supported", "information 2953 on whether the transmission (uplink transmission) corresponding to the "FDM method of the multiple TRPs using the first antenna module and the second antenna module" is supported", "information 2954 on whether the reception using the SDM method of the multiple TRPs using the first antenna module and the second antenna module is supported", "information 2955 on whether the reception using the TDM method of the multiple TRPs using the first antenna module and the second antenna module is supported", and "information 2956 on whether the reception using the FDM method of the multiple TRPs using the first antenna module and the second antenna module is supported". Terminal capability information 2900 may include at least one of "information 2951 on whether the transmission (uplink transmission) corresponding to the "SDM method of the multiple TRPs using the first antenna module and the second antenna module" is supported", "information 2952 on whether the transmission (uplink transmission) corresponding to the "TDM method of the multiple TRPs using the first antenna module and the second antenna module" is supported", "information 2953 on whether the transmission (uplink transmission) corresponding to the "FDM method of the multiple TRPs using the first antenna module and the second antenna module" is supported", "information 2954 on whether the reception using the SDM method of the multiple TRPs using the first antenna module and the second antenna module is supported", "information 2955 on whether the reception using the TDM method of the multiple TRPs using the first antenna module and the second antenna module is supported", or "information 2956 on whether the reception using the FDM method of the multiple TRPs using the first antenna module and the second antenna module is supported".

As described above, the base station can know the state of the antenna module of the terminal, and thus an effect of being capable of selecting the communication method that has a high transmission efficiency of data and can improve the reception quality of data can be obtained.

In the communication system including the base station, the TRP, the terminal, the relay, and the like, the following may be defined.

Rule 5-1-1: A frequency (band) at which the modulation signal can be transmitted using the "antenna module" or the "antenna port corresponding to the antenna module" is defined. For example, at the frequency (band) A, the modulation signal can be transmitted using the "antenna module" or the "antenna port corresponding to the antenna module". Note that whether or not or not the modulation signal using the "antenna module" or the "antenna port corresponding to the antenna module" can be transmitted may be defined for each frequency (band).

Rule 5-1-2: A frequency (band) at which the modulation signal can be transmitted using the "first antenna module and the second antenna module" or the "antenna port corresponding to the first antenna module and the antenna port corresponding to the second antenna module" is defined. For example, at the frequency (band) A, the modulation signal can be transmitted using the "first antenna module and the second antenna module" or the "antenna port corresponding to the first antenna module and the antenna port corresponding to the second antenna module". Note that whether or not the modulation signal using the "antenna module" or the "antenna port corresponding to the antenna module" can be transmitted may be defined for each frequency (band).

Rule 5-2-1: The maximum number of modulation signals that can be transmitted using the "antenna module" or the "antenna port corresponding to the antenna module" is defined. Note that the maximum number of modulation signals that can be transmitted using the "antenna module" or the "antenna port corresponding to the antenna module" may be defined for each frequency (band).

Rule 5-2-2: The maximum number of modulation signals that can be transmitted using the "first antenna module and the second antenna module" or the "antenna port corresponding to the first antenna module and the antenna port corresponding to the second antenna module" is defined. The maximum number of modulation signals that can be transmitted using the "first antenna module and the second antenna module" or the "antenna port corresponding to the first antenna module and the antenna port corresponding to the second antenna module" may be defined for each frequency (band).

Rule 5-3-1: A frequency (band) at which the modulation signal of downlink can be transmitted using the "antenna module" or the "antenna port corresponding to the antenna module" in the multiple TRPs is defined. Note that whether or not the modulation signal of downlink can be transmitted using the "antenna module" or the "antenna port corresponding to the antenna module" in the multiple TRPs may be defined for each frequency (band).

Rule 5-3-2: A frequency (band) at which the modulation signal of downlink can be transmitted using the "first antenna module and the second antenna module" or the "antenna port corresponding to the first antenna module and the antenna port corresponding to the second antenna module" in the multiple TRPs is defined. Note that whether or not the modulation signal of downlink can be transmitted using the "first antenna module and the second antenna module" or the "antenna port corresponding to the first antenna module and the antenna port corresponding to the second antenna module" in the multiple TRPs may be defined for each frequency (band).

Rule 5-4-1: A frequency (band) at which the modulation signal of uplink can be transmitted using the "antenna module" or the "antenna port corresponding to the antenna module" in the multiple TRPs is defined. Note that whether or not the modulation signal of uplink can be transmitted using the "antenna module" or the "antenna port corresponding to the antenna module" in the multiple TRPs may be defined for each frequency (band).

Rule 5-4-2: A frequency (band) at which the modulation signal of uplink can be transmitted using the "first antenna module and the second antenna module" or the "antenna port corresponding to the first antenna module and the antenna port corresponding to the second antenna module" in the multiple TRPs is defined. Note that whether or not the modulation signal of uplink can be transmitted using the "first antenna module and the second antenna module" or the "antenna port corresponding to the first antenna module and the antenna port corresponding to the second antenna module" in the multiple TRPs may be defined for each frequency (band).

Rule 5-5-1: A frequency (band) at which the modulation signal of downlink can be transmitted using the "antenna module" or the "antenna port corresponding to the antenna module" in the multiple TRPs using the SDM method is defined. Note that whether or not the modulation signal of downlink can be transmitted using the "antenna module" or the "antenna port corresponding to the antenna module" in the multiple TRPs using the SDM method may be defined for each frequency (band).

Rule 5-5-2: A frequency (band) at which the modulation signal of downlink can be transmitted using the "first antenna module and the second antenna module" or the "antenna port corresponding to the first antenna module and the antenna port corresponding to the second antenna module" in the multiple TRPs using the SDM method is defined. Note that whether or not the modulation signal of downlink can be transmitted using the "first antenna module and the second antenna module" or the "antenna port corresponding to the first antenna module and the antenna port corresponding to the second antenna module" in the multiple TRPs using the SDM method may be defined for each frequency (band).

Rule 5-6-1: A frequency (band) at which the modulation signal of uplink can be transmitted using the "antenna module" or the "antenna port corresponding to the antenna module" in the multiple TRPs using the SDM method is defined. Note that whether or not the modulation signal of uplink can be transmitted using the "antenna module" or the "antenna port corresponding to the antenna module" in the multiple TRPs using the SDM method may be defined for each frequency (band).

Rule 5-6-2: A frequency (band) at which the modulation signal of uplink can be transmitted using the "first antenna module and the second antenna module" or the "antenna port corresponding to the first antenna module and the antenna port corresponding to the second antenna module" in the multiple TRPs using the SDM method is defined. Note that whether or not the modulation signal of uplink can be transmitted using the "first antenna module and the second antenna module" or the "antenna port corresponding to the first antenna module and the antenna port corresponding to the second antenna module" in the multiple TRPs using the SDM method may be defined for each frequency (band).

Rule 5-7-1: A frequency (band) at which the modulation signal of downlink can be transmitted using the "antenna module" or the "antenna port corresponding to the antenna module" in the multiple TRPs using the TDM method is defined. Note that whether or not the modulation signal of downlink can be transmitted using the "antenna module" or the "antenna port corresponding to the antenna module" in the multiple TRPs using the TDM method may be defined for each frequency (band).

Rule 5-7-2: A frequency (band) at which the modulation signal of downlink can be transmitted using the "first antenna module and the second antenna module" or the "antenna port corresponding to the first antenna module and the antenna port corresponding to the second antenna module" in the multiple TRPs using the TDM method is defined. Note that whether or not the modulation signal of downlink can be transmitted using the "first antenna module and the second antenna module" or the "antenna port corresponding to the first antenna module and the antenna port corresponding to the second antenna module" in the multiple TRPs using the TDM method may be defined for each frequency (band).

Rule 5-8-1: A frequency (band) at which the modulation signal of uplink can be transmitted using the "antenna module" or the "antenna port corresponding to the antenna module" in the multiple TRPs using the TDM method is defined. Note that whether or not the modulation signal of uplink can be transmitted using the "antenna module" or the "antenna port corresponding to the antenna module" in the multiple TRPs using the TDM method may be defined for each frequency (band).

Rule 5-8-2: A frequency (band) at which the modulation signal of uplink can be transmitted using the "first antenna module and the second antenna module" or the "antenna port corresponding to the first antenna module and the antenna port corresponding to the second antenna module" in the multiple TRPs using the TDM method is defined. Note that whether or not the modulation signal of uplink can be transmitted using the "first antenna module and the second antenna module" or the "antenna port corresponding to the first antenna module and the antenna port corresponding to the second antenna module" in the multiple TRPs using the TDM method may be defined for each frequency (band).

Rule 5-9-1: A frequency (band) at which the modulation signal of downlink can be transmitted using the "antenna module" or the "antenna port corresponding to the antenna module" in the multiple TRPs using the FDM method is defined. Note that whether or not the modulation signal of downlink can be transmitted using the "antenna module" or the "antenna port corresponding to the antenna module" in the multiple TRPs using the FDM method may be defined for each frequency (band).

Rule 5-9-2: A frequency (band) at which the modulation signal of downlink can be transmitted using the "first antenna module and the second antenna module" or the "antenna port corresponding to the first antenna module and the antenna port corresponding to the second antenna module" in the multiple TRPs using the FDM method is defined. Note that whether or not the modulation signal of downlink can be transmitted using the "first antenna module and the second antenna module" or the "antenna port corresponding to the first antenna module and the antenna port corresponding to the second antenna module" in the multiple TRPs using the FDM method may be defined for each frequency (band).

Rule 5-10-1: A frequency (band) at which the modulation signal of uplink can be transmitted using the "antenna module" or the "antenna port corresponding to the antenna module" in the multiple TRPs using the FDM method is defined. Note that whether or not the modulation signal of uplink can be transmitted using the "antenna module" or the "antenna port corresponding to the antenna module" in the multiple TRPs using the FDM method may be defined for each frequency (band).

Rule 5-10-2: A frequency (band) at which the modulation signal of uplink can be transmitted using the "first antenna module and the second antenna module" or the "antenna port corresponding to the first antenna module and the antenna port corresponding to the second antenna module" in the multiple TRPs using the FDM method is defined. Note that whether or not the modulation signal of uplink can be transmitted using the "first antenna module and the second antenna module" or the "antenna port corresponding to the first antenna module and the antenna port corresponding to the second antenna module" in the multiple TRPs using the FDM method may be defined for each frequency (band).

Rule 5-11-1: Precoding that can be used in a case of transmitting using the "antenna module" or the "antenna port corresponding to the antenna module" is defined. Note that the precoding that can be used in a case of transmitting using the "antenna module" or the "antenna port corresponding to the antenna module" may be defined for each frequency (band).

Rule 5-11-2: Precoding that can be used in a case of transmitting using the "first antenna module and the second antenna module" or the "antenna port corresponding to the first antenna module and the antenna port corresponding to the second antenna module" is defined. Note that the precoding that can be used in a case of transmitting using the "first antenna module and the second antenna module" or the "antenna port corresponding to the first antenna module and the antenna port corresponding to the second antenna module" may be defined for each frequency (band).

The communication apparatus such as the base station, the base station, the TRP, and the terminal determines the communication method based on the above-described rules and the "base station capability information and the terminal capability information". In the following, an example of the operation in this case will be described.

FIG. 30A illustrates an example of the interaction between the "base station or TRP" and the terminal.

The "base station or TRP" transmits the base station capability information using FIG. 28A, FIG. 28B, FIG. 28C, FIG. 28D, and FIG. 28E as examples to the terminal (3001).

Then, the terminal transmits the terminal capability information using FIG. 29A, FIG. 29B, FIG. 29C, FIG. 29D, and FIG. 29E as examples to the "base station or TRP" (3051). Note that the terminal may transmit the terminal capability information based on the base station capability information obtained from the "base station or TRP".

The "base station or TRP" determines the transmission method in a case of transmitting the modulation signal to be transmitted to the terminal based on its own base station capability, the terminal capability obtained from the terminal capability information, and the above-described rules (e.g., Rule 5-1-1, Rule 5-1-2, Rule 5-2-1, Rule 5-2-2, Rule 5-3-1, Rule 5-3-2, Rule 5-4-1, Rule 5-4-2, Rule 5-5-1, Rule 5-5-2, Rule 5-6-1, Rule 5-6-2, Rule 5-7-1, Rule 5-7-2, Rule 5-8-1, Rule 5-8-2, Rule 5-9-1, Rule 5-9-2, Rule 5-10-1, Rule 5-10-2, Rule 5-11-1, and Rule 5-11-2) (3002).

The "base station or TRP" transmits the control information including the information on the determined transmission method to the terminal (3003).

The terminal obtains the control information (3052). As a result, the terminal can know the transmission method of the modulation signal transmitted by the base station.

The base station transmits the modulation signal including a data symbol (3004). The terminal receives the modulation signal to obtain the data (3053).

Note that the interaction between the "base station or TRP" and the terminal in FIG. 30A is an example, and the transmission order is not limited to the example of FIG. 30A. For example, the terminal may transmit the terminal capability information before the "base station or TRP" transmits the base station capability information.

FIG. 30B illustrates a configuration example of the control information (3003) transmitted by the base station as in FIG. 30A. For example, it is assumed that the control information transmitted by the base station includes "antenna module use information 3081", "antenna port use information 3082", "channel information 3083", and "information on transmission method 3084".

The "antenna module use information 3081" is information for notifying the terminal that is the communication counterpart of whether the "base station or TRP" uses the antenna module. The "antenna module use information 3081" may include information on whether the "base station or TRP" uses the antenna module in a case of transmitting and whether the "base station or TRP" uses the antenna module in a case of receiving. The terminal can know the usage status of the antenna module of the "base station or TRP" by obtaining this information.

The "antenna port use information 3082" is information for notifying the usage status of the antenna port of the "base station or TRP". In particular, here, it is assumed that the "antenna port use information 3082" includes information for notifying the use of the antenna port corresponding to the antenna module. Note that the "antenna port use information 3082" may be a reference signal. The information on the used antenna port may be transmitted by the signal pattern of the reference signal. Then, the terminal can know the usage status of the antenna port by obtaining this information.

The "channel information 3083" is information including the use information of frequency Channel of the signal transmitted by the "base station or TRP" to the terminal that is the communication counterpart. The terminal can know the information on frequency and the time at which the signal destined to the terminal itself is present by obtaining this information.

The "information on transmission method 3084" is information on the transmission method of the signal destined to each terminal. The information on the transmission method includes, for example, information on a modulation scheme, information on the number of transmission signals (the number of modulation signals, the number of layers, and the number of streams), information on whether the multiple TRPs are performed (transmission of the modulation signal of downlink using the multiple TRPs), information on the method (the SDM method, the TDM method, or the FDM method) used in a case of the multiple TRPs, information on whether the repetition is performed, and the like. The terminal can know the status of the transmission method of the signal destined to the terminal itself by obtaining this information.

Note that the control information transmitted by the "base station or TRP" may not include all of "antenna module use information 3081", "antenna port use information 3082", "channel information 3083", and "information on transmission method 3084". Further, the control information transmitted by the "base station or TRP" may include at least one of "antenna module use information 3081", "antenna port use information 3082", "channel information 3083", or "information on transmission method 3084". Further, the control information transmitted by the "base station or TRP" may include information other than "antenna module use information 3081", "antenna port use information 3082", "channel information 3083", and "information on transmission method 3084".

FIG. 30C illustrates another example of the interaction between the "base station or TRP" and the terminal.

The "base station or TRP" transmits the base station capability information using FIG. 28A, FIG. 28B, FIG. 28C, FIG. 28D, and FIG. 28E as examples to the terminal (3001).

Then, the terminal transmits the terminal capability information using FIG. 29A, FIG. 29B, FIG. 29C, FIG. 29D, and FIG. 29E as examples to the "base station or TRP" (3051). Note that the terminal may transmit the terminal capability information based on the base station capability information obtained from the "base station or TRP".

The "base station or TRP" determines the transmission method used by the terminal based on its own base station capability, the terminal capability obtained from the terminal capability information, and the above-described rules (e.g., Rule 5-1-1, Rule 5-1-2, Rule 5-2-1, Rule 5-2-2, Rule 5-3-1, Rule 5-3-2, Rule 5-4-1, Rule 5-4-2, Rule 5-5-1, Rule 5-5-2, Rule 5-6-1, Rule 5-6-2, Rule 5-7-1, Rule 5-7-2, Rule 5-8-1, Rule 5-8-2, Rule 5-9-1, Rule 5-9-2, Rule 5-10-1, Rule 5-10-2, Rule 5-11-1, and Rule 5-11-2) (3011).

Then, the "base station or TRP" transmits the control information including the "information on the transmission method used by the terminal" to the terminal (3012).

The terminal obtains the control information (3061). As a result, the terminal determines the transmission method of the transmission signal (modulation scheme) to be transmitted by the terminal itself, for example, "modulation scheme, number of transmission signals (number of modulation signals, number of layers, and number of streams), whether to perform the multiple TRPs, method (SDM method, TDM method, or FDM method) used in a case of the multiple TRPs, and whether to perform the repetition".

The terminal transmits the modulation signal including a data symbol by using the determined transmission method (3062). The "base station or TRP" receives the modulation signal to obtain the data (3013).

Note that the interaction between the "base station or TRP" and the terminal in FIG. 30C is an example, and the transmission order is not limited to the example of FIG. 30C. For example, the terminal may transmit the terminal capability information before the "base station or TRP" transmits the base station capability information.

FIG. 30D illustrates a configuration example of the "information on the transmission method used by the terminal" (3012) transmitted by the base station as in FIG. 30C. For example, it is assumed that the "information on the transmission method used by the terminal" transmitted by the base station includes "instruction information on antenna module use 3091", "instruction information on antenna port use 3092", "channel information 3093", and "instruction information on transmission method 3094".

The "instruction information on antenna module use 3091" is information for the "base station or TRP" that is the communication counterpart to instruct whether the terminal uses the antenna module to transmit the signal to the "base station or TRP". The "instruction information on antenna module use 3091" may include instruction information on whether the terminal uses the antenna module in a case of transmitting and whether the terminal uses the antenna module in a case of receiving. The terminal determines whether to use the antenna module in a case of transmitting the signal by obtaining this information.

The "instruction information on antenna port use 3092" is information transmitted by the "base station or TRP" for instructing the antenna port used by the terminal. In particular, here, it is assumed that the "instruction information on antenna port use 3092" includes information for instructing the use of the antenna port corresponding to the antenna module. Note that the "instruction information on antenna port use 3092" may be a reference signal. The instruction of the antenna port to be used may be performed by the signal pattern of the reference signal. Then, the terminal can know the instruction on the use of the antenna port by obtaining this information.

The "channel information 3093" is instruction information on frequency Channel used in a case of transmitting the signal by the terminal. The terminal can know the instruction of frequency and the time of the signal in a case of transmitting the signal by itself by obtaining this information.

The "instruction information on transmission method 3094" is information on the instruction of the transmission method in a case of transmitting the signal by each terminal. As the instruction of the transmission method, for example, "modulation scheme, information on the number of transmission signals (number of modulation signals, number of layers, and number of streams), information on whether the multiple TRPs are performed (transmission of the modulation signal of uplink using the multiple TRPs), information on the method (SDM method, TDM method, or FDM method) used in a case of the multiple TRPs, whether the repetition is performed, and the precoding matrix indicator (PMI)" are instructed. The terminal can know the instruction of the transmission method in a case of transmitting the signal by itself by obtaining this information.

Note that the "information on the transmission method used by the terminal" transmitted by the base station may not include all of "instruction information on antenna module use 3091", "instruction information on antenna port use 3092", "channel information 3093", and "instruction information on transmission method 3094". Further, the "information on the transmission method used by the terminal" transmitted by the base station may include at least one of "instruction information on antenna module use 3091", "instruction information on antenna port use 3092", "channel information 3093", and "instruction information on transmission method 3094". Further, the "information on the transmission method used by the terminal" transmitted by the base station may include information other than "instruction information on antenna module use 3091", "instruction information on antenna port use 3092", "channel information 3093", and "instruction information on transmission method 3094".

As described above, the specific transmission method of the "base station or TRP", the specific transmission method of the terminal, the reception method of the "base station or TRP", and the reception method of the terminal are determined by the interaction between the base station capability information transmitted by the "base station or TRP" and the terminal, the interaction between the terminal capability information transmitted by the terminal and the "base station or TRP", and the rules such as "Rule 5-1-1, Rule 5-1-2, Rule 5-2-1, Rule 5-2-2, Rule 5-3-1, Rule 5-3-2, Rule 5-4-1, Rule 5-4-2, Rule 5-5-1, Rule 5-5-2, Rule 5-6-1, Rule 5-6-2, Rule 5-7-1, Rule 5-7-2, Rule 5-8-1, Rule 5-8-2, Rule 5-9-1, Rule 5-9-2, Rule 5-10-1, Rule 5-10-2, Rule 5-11-1, and Rule 5-11-2". As a result, the base station, the TRP, and the terminal can obtain an effect of being capable of selecting a suitable transmission method in terms of data transmission speed and reception quality of data. Further, since the base station, the TRP, and the terminal can select the transmission method using the antenna module, it is easy to obtain the above-described effect.

Note that since the specific configuration of the "base station or TRP", the configuration of the terminal, and the specific method of the multiple TRPs are described in another embodiment, the detailed description thereof will be omitted.

The modulation signal transmitted by the base station, the TRP, and the terminal may use multi-carrier transmission such as an orthogonal frequency division multiplexing (OFDM) transmission method, or may use single-carrier transmission. Note that examples of the single-carrier method include "Discrete Fourier Transform (DFT)-Spread OFDM (Orthogonal Frequency Division Multiplexing)", "Trajectory Constrained DFT-Spread OFDM", "Constrained DFT-Spread OFDM", "OFDM-based Single Carrier (SC)", "SC (single carrier) -FDMA (Frequency Division Multiple Access)", "Guard Interval DFT- Spread OFDM", and a time-domain implementation single-carrier method (e.g., SC-QAM).

Although a description has been given of the present embodiment with the following terms: the "base station capability information, terminal capability information, and information on the transmission method used by the terminal", the terms are not limited to these, and their functions are important.

Further, the terms of pieces of the information included in the base station capability information, and the terms of pieces of the information included in the terminal capability information are not limited to these, and their functions are important.

(Embodiment 6)

A variation of the operation of the base station, the TRP, and the terminal described in Embodiments 1, 2, 3, and 4, and the like will be described.

FIG. 31A illustrates a mapping example of a frame on a time-frequency axis in a case where the communication apparatus such as the base station, the TRP, and the terminal transmits the modulation signal using the antenna module. Note that, in FIG. 31A, the horizontal axis is the time and the vertical axis is the frequency.

As illustrated in FIG. 31A, modulation signal (group) 3101A_1 is present at "time R1, frequency 1", modulation signal (group) 3101A_2 is present at "time R1, frequency 2", modulation signal (group) 3101A_3 is present at "time R1, frequency 3", and modulation signal (group) 3101A_4 is present at "time R1, frequency 4". Note that, in the case of FIG. 31A, an example is illustrated in which frequencies 1, 2, 3, and 4 are continuously present. Further, although it is described as the "modulation signal (group)", a plurality of modulation signals may be present in the "modulation signal (group)". Therefore, the "modulation signal (group)" is configured by one or more modulation signals.

Then, the communication apparatus such as the base station, the TRP, and the terminal transmits the "modulation signal (group) 3101A_1, modulation signal (group) 3101A_2, modulation signal (group) 3101A_3, and modulation signal (group) 3101A_4".

FIG. 31B illustrates a mapping example of a frame on a time-frequency axis in a case where the communication apparatus such as the base station, the TRP, and the terminal transmits the modulation signal using the antenna module, which is different from FIG. 31A. Note that, in FIG. 31B, the horizontal axis is the time and the vertical axis is the frequency, the same reference numerals are assigned to those that operate in the same manner as in FIG. 31A, and a part of the description will be omitted.

In the case of FIG. 31B, an example is illustrated in which frequencies 1, 2, 3, and 4 are partially discontinuously present.

Then, the communication apparatus such as the base station, the TRP, and the terminal transmits the "modulation signal (group) 3101A_1, modulation signal (group) 3101A_2, modulation signal (group) 3101A_3, and modulation signal (group) 3101A_4".

FIG. 32A illustrates a configuration of a communication apparatus for transmitting a modulation signal (group) of the frame of "FIG. 31A or FIG. 31B". Note that, in FIG. 32A, the same reference numerals are assigned to those that operate in the same manner as in FIG. 1A1 and FIG. 25A, and the description thereof will be omitted for the parts that have already been described. Further, the configuration of the communication apparatus of FIG. 32A is obtained by replacing "first antenna module v of 2506A_1_v" with "antenna module v of 3206A_v" in the configuration of the apparatus of FIG. 25A.

The difference between the "antenna module v of 3206A_v" and the "first antenna module v of 2506A_1_v" is that "the "antenna module v of 3206A_v" may be the first antenna module, may be the second antenna module, or may be another antenna module". Since the operation of the other parts has already been described in the description part of FIG. 25A, the description thereof will be omitted.

FIG. 32B illustrates a configuration of a communication apparatus for transmitting a modulation signal (group) of the frame of "FIG. 31A or FIG. 31B". Note that, in FIG. 32B, the same reference numerals are assigned to those that operate in the same manner as in FIG. 1B and FIG. 25B, and the description thereof will be omitted for the parts that have already been described. Further, the configuration of the communication apparatus of FIG. 32B is obtained by replacing "first antenna module v of 2506A_1_v" with "antenna module v of 3206A_v" in the configuration of the apparatus of FIG. 25B.

The difference between the "antenna module v of 3206A_v" and the "first antenna module v of 2506A_1_v" is that "the "antenna module v of 3206A_v" may be the first antenna module, may be the second antenna module, or may be another antenna module". Since the operation of the other parts has already been described in the description part of FIG. 25B, the description thereof will be omitted.

For simplicity of description, in the communication apparatus of FIG. 32A or FIG. 32B, when four antenna modules are present, it is assumed that the communication apparatus includes "antenna module 1 of 3206A_1", "antenna module 2 of 3206A_2", "antenna module 3 of 3206A_3", and "antenna module 4 of 3206A_4". In the following, an operation example in this case will be described.

As illustrated in FIG. 31A and FIG. 31B, in a case where frequencies 1, 2, 3, and 4 are present, the antenna module used to transmit the modulation signal (group) present at each frequency is set.

Example 6-1:

The communication apparatus of FIG. 32A or FIG. 32B uses "antenna module 1 of 3206A_1" and "antenna module 2 of 3206A_2" to transmit the modulation signal (group) 3101A_1 present at frequency 1. Note that, in this case, the number of modulation signals (number of transmission signals) constituting the "modulation signal (group) 3101A_1 present at frequency 1" may be set in the "antenna module 1 of 3206A_1". Further, the number of modulation signals (number of transmission signals) constituting the "modulation signal (group) 3101A_1 present at frequency 1" may be set in the "antenna module 2 of 3206A_2".

The communication apparatus of FIG. 32A or FIG. 32B uses "antenna module 2 of 3206A_2" and "antenna module 3 of 3206A_3" to transmit the modulation signal (group) 3101A_2 present at frequency 2. Note that, in this case, the number of modulation signals (number of transmission signals) constituting the "modulation signal (group) 3101A_2 present at frequency 2" may be set in the "antenna module 2 of 3206A_2". Further, the number of modulation signals (number of transmission signals) constituting the "modulation signal (group) 3101A_2 present at frequency 2" may be set in the "antenna module 3 of 3206A_3".

The communication apparatus of FIG. 32A or FIG. 32B uses "antenna module 3 of 3206A_3" and "antenna module 4 of 3206A_4" to transmit the modulation signal (group) 3101A_3 present at frequency 3. Note that, in this case, the number of modulation signals (number of transmission signals) constituting the "modulation signal (group) 3101A_3 present at frequency 3" may be set in the "antenna module 3 of 3206A_3". Further, the number of modulation signals (number of transmission signals) constituting the "modulation signal (group) 3101A_3 present at frequency 3" may be set in the "antenna module 4 of 3206A_4".

The communication apparatus of FIG. 32A or FIG. 32B uses "antenna module 4 of 3206A_4" and "antenna module 1 of 3206A_1" to transmit the modulation signal (group) 3101A_4 present at frequency 4. Note that, in this case, the number of modulation signals (number of transmission signals) constituting the "modulation signal (group) 3101A_4 present at frequency 4" may be set in the "antenna module 4 of 3206A_4". Further, the number of modulation signals (number of transmission signals) constituting the "modulation signal (group) 3101A_4 present at frequency 4" may be set in the "antenna module 1 of 3206A_1".

As in Example 6-1, setting the antenna module used to transmit the modulation signal (group) present at each frequency makes it possible to obtain an effect of improving the reception quality of data in the modulation signal (group) present at each frequency.

Note that Example 6-1 is an example, and the setting of the antenna module used to transmit the modulation signal (group) present at each frequency is not limited to the above example. Further, although the example of the case where there are four antenna modules has been described, the same can be implemented even in a case where there are one or more or two or more antenna modules.

Example 6-2:

The communication apparatus of FIG. 32A or FIG. 32B uses "antenna module 1 of 3206A_1, antenna module 2 of 3206A_2, antenna module 3 of 3206A_3, and antenna module 4 of 3206A_4" to transmit "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4".

Then, the communication apparatus of FIG. 32A or FIG. 32B sets "precoding for transmitting the modulation signal (group) 3101A_1 present at frequency 1", "precoding for transmitting the modulation signal (group) 3101A_2 present at frequency 2", "precoding for transmitting the modulation signal (group) 3101A_3 present at frequency 3", and "precoding for transmitting the modulation signal (group) 3101A_4 present at frequency 4" in a case of transmitting the modulation signal (group) using the "antenna module 1 of 3206A_1". In this case, the number of modulation signals (number of transmission signals) constituting the "modulation signal (group) 3101A_1 present at frequency 1", the number of modulation signals (number of transmission signals) constituting the "modulation signal (group) 3101A_2 present at frequency 2", the number of modulation signals (number of transmission signals) constituting the "modulation signal (group) 3101A_3 present at frequency 3", and the number of modulation signals (number of transmission signals) constituting the "modulation signal (group) 3101A_4 present at frequency 4" may be set.

The communication apparatus of FIG. 32A or FIG. 32B sets "precoding for transmitting the modulation signal (group) 3101A_1 present at frequency 1", "precoding for transmitting the modulation signal (group) 3101A_2 present at frequency 2", "precoding for transmitting the modulation signal (group) 3101A_3 present at frequency 3", and "precoding for transmitting the modulation signal (group) 3101A_4 present at frequency 4" in a case of transmitting the modulation signal (group) using the "antenna module 2 of 3206A_2". In this case, the number of modulation signals (number of transmission signals) constituting the "modulation signal (group) 3101A_1 present at frequency 1", the number of modulation signals (number of transmission signals) constituting the "modulation signal (group) 3101A_2 present at frequency 2", the number of modulation signals (number of transmission signals) constituting the "modulation signal (group) 3101A_3 present at frequency 3", and the number of modulation signals (number of transmission signals) constituting the "modulation signal (group) 3101A_4 present at frequency 4" may be set.

The communication apparatus of FIG. 32A or FIG. 32B sets "precoding for transmitting the modulation signal (group) 3101A_1 present at frequency 1", "precoding for transmitting the modulation signal (group) 3101A_2 present at frequency 2", "precoding for transmitting the modulation signal (group) 3101A_3 present at frequency 3", and "precoding for transmitting the modulation signal (group) 3101A_4 present at frequency 4" in a case of transmitting the modulation signal (group) using the "antenna module 3 of 3206A_3". In this case, the number of modulation signals (number of transmission signals) constituting the "modulation signal (group) 3101A_1 present at frequency 1", the number of modulation signals (number of transmission signals) constituting the "modulation signal (group) 3101A_2 present at frequency 2", the number of modulation signals (number of transmission signals) constituting the "modulation signal (group) 3101A_3 present at frequency 3", and the number of modulation signals (number of transmission signals) constituting the "modulation signal (group) 3101A_4 present at frequency 4" may be set.

The communication apparatus of FIG. 32A or FIG. 32B sets "precoding for transmitting the modulation signal (group) 3101A_1 present at frequency 1", "precoding for transmitting the modulation signal (group) 3101A_2 present at frequency 2", "precoding for transmitting the modulation signal (group) 3101A_3 present at frequency 3", and "precoding for transmitting the modulation signal (group) 3101A_4 present at frequency 4" in a case of transmitting the modulation signal (group) using the "antenna module 4 of 3206A_4". In this case, the number of modulation signals (number of transmission signals) constituting the "modulation signal (group) 3101A_1 present at frequency 1", the number of modulation signals (number of transmission signals) constituting the "modulation signal (group) 3101A_2 present at frequency 2", the number of modulation signals (number of transmission signals) constituting the "modulation signal (group) 3101A_3 present at frequency 3", and the number of modulation signals (number of transmission signals) constituting the "modulation signal (group) 3101A_4 present at frequency 4" may be set.

As in Example 6-2, setting the precoding used in the modulation signal (group) present at each frequency in the antenna module makes it possible to obtain an effect of improving the reception quality of data in the modulation signal (group).

Note that although the example of the case where there are four antenna modules has been described, the same can be implemented even in a case where there are one or more or two or more antenna modules.

Example 6-3:

The communication apparatus of FIG. 32A or FIG. 32B uses "antenna module 1 of 3206A_1" and "antenna module 2 of 3206A_2" to transmit the modulation signal (group) 3101A_1 present at frequency 1. Then, the precoding used for transmission using the "antenna module 1 of 3206A_1" is set, and the precoding used for transmission using the "antenna module 2 of 3206A_2" is set. Note that, in this case, the number of modulation signals (number of transmission signals) constituting the "modulation signal (group) 3101A_1 present at frequency 1" may be set in the "antenna module 1 of 3206A_1". Further, the number of modulation signals (number of transmission signals) constituting the "modulation signal (group) 3101A_1 present at frequency 1" may be set in the "antenna module 2 of 3206A_2".

The communication apparatus of FIG. 32A or FIG. 32B uses "antenna module 2 of 3206A_2" and "antenna module 3 of 3206A_3" to transmit the modulation signal (group) 3101A_2 present at frequency 2. Then, the precoding used for transmission using the "antenna module 2 of 3206A_2" is set, and the precoding used for transmission using the "antenna module 3 of 3206A_3" is set. Note that, in this case, the number of modulation signals (number of transmission signals) constituting the "modulation signal (group) 3101A_2 present at frequency 2" may be set in the "antenna module 2 of 3206A_2". Further, the number of modulation signals (number of transmission signals) constituting the "modulation signal (group) 3101A_2 present at frequency 2" may be set in the "antenna module 3 of 3206A_3".

The communication apparatus of FIG. 32A or FIG. 32B uses "antenna module 3 of 3206A_3" and "antenna module 4 of 3206A_4" to transmit the modulation signal (group) 3101A_3 present at frequency 3. Then, the precoding used for transmission using the "antenna module 3 of 3206A_3" is set, and the precoding used for transmission using the "antenna module 4 of 3206A_4" is set. Note that, in this case, the number of modulation signals (number of transmission signals) constituting the "modulation signal (group) 3101A_3 present at frequency 3" may be set in the "antenna module 3 of 3206A_3". Further, the number of modulation signals (number of transmission signals) constituting the "modulation signal (group) 3101A_3 present at frequency 3" may be set in the "antenna module 4 of 3206A_4".

The communication apparatus of FIG. 32A or FIG. 32B uses "antenna module 4 of 3206A_4" and "antenna module 1 of 3206A_1" to transmit the modulation signal (group) 3101A_4 present at frequency 4. Then, the precoding used for transmission using the "antenna module 4 of 3206A_4" is set, and the precoding used for transmission using the "antenna module 1 of 3206A_1" is set. Note that, in this case, the number of modulation signals (number of transmission signals) constituting the "modulation signal (group) 3101A_4 present at frequency 4" may be set in the "antenna module 4 of 3206A_4". Further, the number of modulation signals (number of transmission signals) constituting the "modulation signal (group) 3101A_4 present at frequency 4" may be set in the "antenna module 1 of 3206A_1".

As in Example 6-3, setting the antenna module used to transmit the modulation signal (group) present at each frequency and setting the precoding used to transmit in each antenna module make it possible to obtain an effect of improving the reception quality of data in the modulation signal (group) present at each frequency.

Note that Example 6-3 is an example, and the setting of the antenna module used to transmit the modulation signal (group) present at each frequency is not limited to the above example. Further, although the example of the case where there are four antenna modules has been described, the same can be implemented even in a case where there are one or more or two or more antenna modules.

Another example will be described.

FIG. 26A illustrates a configuration of a communication apparatus for transmitting a modulation signal (group) of the frame of "FIG. 31A or FIG. 31B". Note that, since FIG. 26A has already been described, a part of the description will be omitted.

The "antenna port v for the antenna module of 2606A_1_v" in FIG. 26A corresponds to the "antenna module v of 3206A_v" in FIG. 32A. Note that the relationship between the antenna port and the antenna module has been described in another embodiment, so that the description thereof will be omitted.

FIG. 26B illustrates a configuration of a communication apparatus for transmitting a modulation signal (group) of the frame of "FIG. 31A or FIG. 31B". Note that, since FIG. 26B has already been described, a part of the description will be omitted.

The "antenna port v for the antenna module of 2606A_1_v" in FIG. 26B corresponds to the "antenna module v of 3206A_v" in FIG. 32B. Note that the relationship between the antenna port and the antenna module has been described in another embodiment, so that the description thereof will be omitted.

For simplicity of description, in the communication apparatus of FIG. 26A or FIG. 26B, when four antenna ports v for antenna module of 2606A_1_v are present, it is assumed that the communication apparatus includes "antenna port 1 for the antenna module of 2606A_1_1", "antenna port 2 for the antenna module of 2606A_1_2", "antenna port 3 for the antenna module of 2606A_1_3", and "antenna port 4 for the antenna module of 2606A_1_4". In the following, an operation example in this case will be described.

As illustrated in FIG. 31A and FIG. 31B, in a case where frequencies 1, 2, 3, and 4 are present, the antenna port used to transmit the modulation signal (group) present at each frequency is set.

Example 6-4:

The communication apparatus of FIG. 26A or FIG. 26B uses "antenna port 1 for the antenna module of 2606A_1_1" and "antenna port 2 for the antenna module of 2606A_1_2" to transmit the modulation signal (group) 3101A_1 present at frequency 1. Note that, in this case, the number of modulation signals (number of transmission signals) constituting the "modulation signal (group) 3101A_1 present at frequency 1" may be set in the "antenna port 1 for the antenna module of 2606A_1_1". Further, the number of modulation signals (number of transmission signals) constituting the "modulation signal (group) 3101A_1 present at frequency 1" may be set in the "antenna port 2 for the antenna module of 2606A_1_2".

The communication apparatus of FIG. 26A or FIG. 26B uses "antenna port 2 for the antenna module of 2606A_1_2" and "antenna port 3 for the antenna module of 2606A_1_3" to transmit modulation signal (group) 3101A_2 present at frequency 2. Note that, in this case, the number of modulation signals (number of transmission signals) constituting the "modulation signal (group) 3101A_2 present at frequency 2" may be set in the "antenna port 2 for antenna module of 2606A_1_2". Further, the number of modulation signals (number of transmission signals) constituting the "modulation signal (group) 3101A_2 present at frequency 2" may be set in the "antenna port 3 for the antenna module of 2606A_1_3".

The communication apparatus of FIG. 26A or FIG. 26B uses "antenna port 3 for the antenna module of 2606A_1_3" and "antenna port 4 for the antenna module of 2606A_1_4" to transmit the modulation signal (group) 3101A_3 present at frequency 3. Note that, in this case, the number of modulation signals (number of transmission signals) constituting the "modulation signal (group) 3101A_3 present at frequency 3" may be set in the "antenna port 3 for the antenna module of 2606A_1_3". Further, the number of modulation signals (number of transmission signals) constituting the "modulation signal (group) 3101A_3 present at frequency 3" may be set in the "antenna port 4 for the antenna module of 2606A_1_4".

The communication apparatus of FIG. 26A or FIG. 26B uses "antenna port 4 for the antenna module of 2606A_1_4" and "antenna port 1 for the antenna module of 2606A_1_1" to transmit the modulation signal (group) 3101A_4 present at frequency 4. Note that, in this case, the number of modulation signals (number of transmission signals) constituting the "modulation signal (group) 3101A_4 present at frequency 4" may be set in the "antenna port 4 for the antenna module of 2606A_1_4". Further, the number of modulation signals (number of transmission signals) constituting the "modulation signal (group) 3101A_4 present at frequency 4" may be set in the "antenna port 1 for antenna module of 2606A_1_1".

As in Example 6-4, setting the antenna port corresponding to the antenna module used to transmit the modulation signal (group) present at each frequency makes it possible to obtain an effect of improving the reception quality of data in the modulation signal (group) present at each frequency.

Note that Example 6-4 is an example, and the setting of the antenna port corresponding to the antenna module used to transmit the modulation signal (group) present at each frequency is not limited to the above example. Further, although the example of the case where there are four antenna ports corresponding to the antenna module has been described, the same can be implemented even in a case where there are one or more or two or more antenna ports corresponding to the antenna module.

Example 6-5:

The communication apparatus of FIG. 26A or FIG. 26B uses "antenna port 1 for the antenna module of 2606A_1_1, antenna port 2 for the antenna module of 2606A_1_2, antenna port 3 for the antenna module of 2606A_1_3, and antenna port 4 for the antenna module of 2606A_1_4" to transmit "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4".

Then, the communication apparatus of FIG. 26A or FIG. 26B sets "precoding for transmitting the modulation signal (group) 3101A_1 present at frequency 1", "precoding for transmitting the modulation signal (group) 3101A_2 present at frequency 2", "precoding for transmitting the modulation signal (group) 3101A_3 present at frequency 3", and "precoding for transmitting the modulation signal (group) 3101A_4 present at frequency 4" in a case of transmitting the modulation signal (group) using the "antenna port 1 for the antenna module of 2606A_1_1". In this case, the number of modulation signals (number of transmission signals) constituting the "modulation signal (group) 3101A_1 present at frequency 1", the number of modulation signals (number of transmission signals) constituting the "modulation signal (group) 3101A_2 present at frequency 2", the number of modulation signals (number of transmission signals) constituting the "modulation signal (group) 3101A_3 present at frequency 3", and the number of modulation signals (number of transmission signals) constituting the "modulation signal (group) 3101A_4 present at frequency 4" may be set.

The communication apparatus of FIG. 26A or FIG. 26B sets "precoding for transmitting the modulation signal (group) 3101A_1 present at frequency 1", "precoding for transmitting the modulation signal (group) 3101A_2 present at frequency 2", "precoding for transmitting the modulation signal (group) 3101A_3 present at frequency 3", and "precoding for transmitting the modulation signal (group) 3101A_4 present at frequency 4" in a case of transmitting the modulation signal (group) using the "antenna port 2 for the antenna module of 2606A_1_2". In this case, the number of modulation signals (number of transmission signals) constituting the "modulation signal (group) 3101A_1 present at frequency 1", the number of modulation signals (number of transmission signals) constituting the "modulation signal (group) 3101A_2 present at frequency 2", the number of modulation signals (number of transmission signals) constituting the "modulation signal (group) 3101A_3 present at frequency 3", and the number of modulation signals (number of transmission signals) constituting the "modulation signal (group) 3101A_4 present at frequency 4" may be set.

The communication apparatus of FIG. 26A or FIG. 26B sets "precoding for transmitting the modulation signal (group) 3101A_1 present at frequency 1", "precoding for transmitting the modulation signal (group) 3101A_2 present at frequency 2", "precoding for transmitting the modulation signal (group) 3101A_3 present at frequency 3", and "precoding for transmitting the modulation signal (group) 3101A_4 present at frequency 4" in a case of transmitting the modulation signal (group) using the "antenna port 3 for the antenna module of 2606A_1_3". In this case, the number of modulation signals (number of transmission signals) constituting the "modulation signal (group) 3101A_1 present at frequency 1", the number of modulation signals (number of transmission signals) constituting the "modulation signal (group) 3101A_2 present at frequency 2", the number of modulation signals (number of transmission signals) constituting the "modulation signal (group) 3101A_3 present at frequency 3", and the number of modulation signals (number of transmission signals) constituting the "modulation signal (group) 3101A_4 present at frequency 4" may be set.

The communication apparatus of FIG. 26A or FIG. 26B sets "precoding for transmitting the modulation signal (group) 3101A_1 present at frequency 1", "precoding for transmitting the modulation signal (group) 3101A_2 present at frequency 2", "precoding for transmitting the modulation signal (group) 3101A_3 present at frequency 3", and "precoding for transmitting the modulation signal (group) 3101A_4 present at frequency 4" in a case of transmitting the modulation signal (group) using the "antenna port 4 for the antenna module of 2606A_1_4". In this case, the number of modulation signals (number of transmission signals) constituting the "modulation signal (group) 3101A_1 present at frequency 1", the number of modulation signals (number of transmission signals) constituting the "modulation signal (group) 3101A_2 present at frequency 2", the number of modulation signals (number of transmission signals) constituting the "modulation signal (group) 3101A_3 present at frequency 3", and the number of modulation signals (number of transmission signals) constituting the "modulation signal (group) 3101A_4 present at frequency 4" may be set.

As in Example 6-5, setting the precoding used in the modulation signal (group) present at each frequency in the antenna port corresponding to the antenna module makes it possible to obtain an effect of improving the reception quality of data in the modulation signal (group).

Note that although the example of the case where there are four antenna ports corresponding to the antenna module has been described, the same can be implemented even in a case where there are one or more or two or more antenna ports corresponding to the antenna module.

Example 6-6:

The communication apparatus of FIG. 26A or FIG. 26B uses "antenna port 1 for the antenna module of 2606A_1_1" and "antenna port 2 for the antenna module of 2606A_1_2" to transmit the modulation signal (group) 3101A_1 present at frequency 1. Then, the precoding used for transmission using the "antenna port 1 for the antenna module of 2606A_1_1" is set, and the precoding used for transmission using the "antenna port 2 for the antenna module of 2606A_1_2" is set. Note that, in this case, the number of modulation signals (number of transmission signals) constituting the "modulation signal (group) 3101A_1 present at frequency 1" may be set in the "antenna port 1 for the antenna module of 2606A_1_1". Further, the number of modulation signals (number of transmission signals) constituting the "modulation signal (group) 3101A_1 present at frequency 1" may be set in the "antenna port 2 for the antenna module of 2606A_1_2".

The communication apparatus of FIG. 26A or FIG. 26B uses "antenna port 2 for the antenna module of 2606A_1_2" and "antenna port 3 for the antenna module of 2606A_1_3" to transmit the modulation signal (group) 3101A_2 present at frequency 2. Then, the precoding used for transmission using the "antenna port 2 for the antenna module of 2606A_1_2" is set, and the precoding used for transmission using the "antenna port 3 for the antenna module of 2606A_1_3" is set. Note that, in this case, the number of modulation signals (number of transmission signals) constituting the "modulation signal (group) 3101A_2 present at frequency 2" may be set in the "antenna port 2 for the antenna module of 2606A_1_2". Further, the number of modulation signals (number of transmission signals) constituting the "modulation signal (group) 3101A_2 present at frequency 2" may be set in the "antenna port 3 for the antenna module of 2606A_1_3".

The communication apparatus of FIG. 26A or FIG. 26B uses "antenna port 3 for the antenna module of 2606A_1_3" and "antenna port 4 for the antenna module of 2606A_1_4" to transmit the modulation signal (group) 3101A_3 present at frequency 3. Then, the precoding used for transmission using the "antenna port 3 for the antenna module of 2606A_1_3" is set, and the precoding used for transmission using the "antenna port 4 for the antenna module of 2606A_1_4" is set. Note that, in this case, the number of modulation signals (number of transmission signals) constituting the "modulation signal (group) 3101A_3 present at frequency 3" may be set in the "antenna port 3 for the antenna module of 2606A_1_3". Further, the number of modulation signals (number of transmission signals) constituting the "modulation signal (group) 3101A_3 present at frequency 3" may be set in the "antenna port 4 for the antenna module of 2606A_1_4".

The communication apparatus of FIG. 26A or FIG. 26B uses "antenna port 4 for the antenna module of 2606A_1_4" and "antenna port 1 for the antenna module of 2606A_1_1" to transmit the modulation signal (group) 3101A_4 present at frequency 4. Then, the precoding used for transmission using the "antenna port 4 for the antenna module of 2606A_1_4" is set, and the precoding used for transmission using the "antenna port 1 for the antenna module of 2606A_1_1" is set. Note that, in this case, the number of modulation signals (number of transmission signals) constituting the "modulation signal (group) 3101A_4 present at frequency 4" may be set in the "antenna port 4 for the antenna module of 2606A_1_4". Further, the number of modulation signals (number of transmission signals) constituting the "modulation signal (group) 3101A_4 present at frequency 4" may be set in the "antenna port 1 for the antenna module of 2606A_1_1".

As in Example 6-6, setting the antenna port corresponding to the antenna module used to transmit the modulation signal (group) present at each frequency and setting the precoding used to transmit in each antenna port make it possible to obtain an effect of improving the reception quality of data in the modulation signal (group) present at each frequency.

Note that Example 6-6 is an example, and the setting of the antenna port corresponding to the antenna module used to transmit the modulation signal (group) present at each frequency is not limited to the above example. Further, although the example of the case where there are four antenna ports corresponding to the antenna module has been described, the same can be implemented even in a case where there are one or more or two or more antenna ports corresponding to the antenna module.

Another example will be described.

FIG. 25A illustrates a configuration of a communication apparatus for transmitting a modulation signal (group) of the frame of "FIG. 31A or FIG. 31B". Note that, since FIG. 25A has already been described, a part of the description will be omitted.

As described above, the first antenna module v of 2506A_1_v may operate as the first antenna module or may operate as the second antenna module.

FIG. 25B illustrates a configuration of a communication apparatus for transmitting a modulation signal (group) of the frame of "FIG. 31A or FIG. 31B". Note that, since FIG. 25B has already been described, a part of the description will be omitted.

As described above, the first antenna module v of 2506A_1_v may operate as the first antenna module or may operate as the second antenna module.

185 **EP 4 779 883 A1** 186

For simplicity of description, in the communication apparatus of FIG. 25A or FIG. 25B, when four first antenna modules are present, it is assumed that the communication apparatus includes "first antenna module 1 of 2506A_1_1", "first antenna module 2 of 2506A_1_2", "first antenna module 3 of 2506A_1_3", and "first antenna module 4 of 2506A_1_4". In the following, an operation example in this case will be described.

As illustrated in FIG. 31A and FIG. 31B, an example of the setting of the antenna module used to transmit the modulation signal (group) present at each frequency in a case where frequencies 1, 2, 3, and 4 are present will be described.

Example 6-7:

The communication apparatus of FIG. 25A or FIG. 25B determines to "operate the "first antenna module 1 of 2506A_1_1" as the first antenna module", "operate the "first antenna module 2 of 2506A_1_2" as the first antenna module", "operate the "first antenna module 3 of 2506A_1_3" as the second antenna module", and "operate the "first antenna module 4 of 2506A_1_4" as the second antenna module" in order to transmit the modulation signal (group).

Then, the communication apparatus of FIG. 25A or FIG. 25B transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" using the "first antenna module 1 of 2506A_1_1". Note that, in this case, the number of modulation signals (number of transmission signals) constituting the modulation signal (group) may be set.

The communication apparatus of FIG. 25A or FIG. 25B transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" using the "first antenna module 2 of 2506A_1_2". Note that, in this case, the number of modulation signals (number of transmission signals) constituting the modulation signal (group) may be set.

The communication apparatus of FIG. 25A or FIG. 25B transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" using the "first antenna module 3 of 2506A_1_3". Note that, in this case, the number of modulation signals (number of transmission signals) constituting the modulation signal (group) may be set.

The communication apparatus of FIG. 25A or FIG. 25B transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" using the "first antenna module 4 of 2506A_1_4". Note that, in this case, the number of modulation signals (number of transmission signals) constituting the modulation signal (group) may be set.

Therefore, the "first antenna module v of 2506A_1_v" used to transmit the modulation signal (group) is set for each frequency, and in this case, "whether to operate as the first antenna module or to operate as the second antenna module" is set for each "first antenna module v of 2506A_1_v".

The descriptions of the following are the same as those described in another embodiment: the "condition related to the precoding, condition related to the number of transmission signals, usage condition related to the antenna, and the like" of the "first antenna module v of 2506A_1_v" that operates as the first antenna module and the "condition related to the precoding, condition related to the number of transmission signals, usage condition related to the antenna, and the like" of the "first antenna module v of 2506A_1_v" that operates as the second antenna module.

As in Example 6-7, determining "whether to operate as the first antenna module or to operate as the second antenna module" for each antenna module and determining the modulation signal (group) to be transmitted for each antenna module makes it possible to obtain an effect of improving the reception quality of data.

Note that Example 6-7 is an example, and the examples of the "first antenna module v of 2506A_1_v" that operates as the first antenna module and the "first antenna module v of 2506A_1_v" that operates as the second antenna module are not limited to the above examples. Further, the "first antenna module v of 2506A_1_v" that does not transmit the modulation signal (group) may be present. Further, although the example of the case where there are four antenna modules has been described, the same can be implemented even in a case where there are one or more or two or more antenna modules.

Another example will be described.

FIG. 26A illustrates a configuration of a communication apparatus for transmitting a modulation signal (group) of the frame of "FIG. 31A or FIG. 31B". Note that, since FIG. 26A has already been described, a part of the description will be omitted.

As described above, antenna port v for the antenna module of 2606A_1_v may operate as the first antenna module or may operate as the second antenna module.

FIG. 26B illustrates a configuration of a communication apparatus for transmitting a modulation signal (group) of the frame of "FIG. 31A or FIG. 31B". Note that, since FIG. 26B has already been described, a part of the description will be omitted.

As described above, antenna port v for the antenna module of 2606A_1_v may operate as the first antenna module or may operate as the second antenna module.

For simplicity of description, in the communication apparatus of FIG. 26A or FIG. 26B, when four antenna ports v for the antenna module of 2606A_1_v are present, it is assumed that the communication apparatus includes "antenna port 1 for the antenna module of 2606A_1_1 ", "antenna port 2 for the antenna module of 2606A_1_2", "antenna port 3 for the antenna module of 2606A_1_3", and "antenna port 4 for the antenna module of 2606A_1_4". In the following, an operation example in this case will be described.

As illustrated in FIG. 31A and FIG. 31B, an example of the setting of the antenna port for the antenna module used to transmit the modulation signal (group) present at each frequency in a case where frequencies 1, 2, 3, and 4 are present will be described.

Example 6-8:

The communication apparatus of FIG. 26A or FIG. 26B determines to "operate the "antenna port 1 for the antenna module of 2606A_1_1" as the first antenna module", "operate the "antenna port 2 for the antenna module of 2606A_1_2" as the first antenna module", "operate the "antenna port 3 for the antenna module of 2606A_1_3" as the second antenna module", and "operate the "antenna port 4 for the antenna module of 2606A_1_4" as the second antenna module" in order to transmit the modulation signal (group).

Then, the communication apparatus of FIG. 26A or FIG. 26B transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" using the "antenna port 1 for the antenna module of 2606A_1_1". Note that, in this case, the number of modulation signals (number of transmission signals) constituting the modulation signal (group) may be set. Further, the precoding used in a case of transmitting the modulation signal (group) may be set.

The communication apparatus of FIG. 26A or FIG. 26B transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" using the "antenna port 2 for the antenna module of 2606A_1_2". Note that, in this case, the number of modulation signals (number of transmission signals) constituting the modulation signal (group) may be set. Further, the precoding used in a case of transmitting the modulation signal (group) may be set.

The communication apparatus of FIG. 26A or FIG. 26B transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" using the "antenna port 3 for the antenna module of 2606A_1_3". Note that, in this case, the number of modulation signals (number of transmission signals) constituting the modulation signal (group) may be set. Further, the precoding used in a case of transmitting the modulation signal (group) may be set.

The communication apparatus of FIG. 26A or FIG. 26B transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" using the "antenna port 4 for the antenna module of 2606A_1_4". Note that, in this case, the number of modulation signals (number of transmission signals) constituting the modulation signal (group) may be set. Further, the precoding used in a case of transmitting the modulation signal (group) may be set.

Therefore, the "antenna port v for the antenna module of 2606A_1_v" used to transmit the modulation signal (group) is set for each frequency, and in this case, "whether to operate as the first antenna module or to operate as the second antenna module" is set for each "antenna port v for the antenna module of 2606A_1_v".

The descriptions of the following are the same as those described in another embodiment: the "condition related to the precoding, condition related to the number of transmission signals, usage condition related to the antenna, and the like" of the "antenna port v for the antenna module of 2606A_1_v" that operates as the first antenna module and the "condition related to the precoding, condition related to the number of transmission signals, usage condition related to the antenna, and the like" of the "antenna port v for the antenna module of 2606A_1_v" that operates as the second antenna module.

As in Example 6-8, determining "whether to operate as the first antenna module or to operate as the second antenna module" for each antenna port and determining the modulation signal (group) to be transmitted for each antenna port makes it possible to obtain an effect of improving the reception quality of data.

Note that Example 6-8 is an example, and the examples of the "antenna port v for the antenna module of 2606A_1_v" that operates as the first antenna module and the "antenna port v for the antenna module of 2606A_1_v" that operates as the second antenna module are not limited to the above examples. Further, the "antenna port v for the antenna module of 2606A_1_v" that does not transmit the modulation signal (group) may be present. Further, although the example of the case where there are four antenna ports corresponding to the antenna module has been described, the same can be implemented even in a case where there are one or more or two or more antenna ports corresponding to the antenna module.

Another example will be described.

FIG. 1A1 illustrates a configuration of a communication apparatus for transmitting a modulation signal (group) of the frame of "FIG. 31A or FIG. 31B". Note that, since FIG. 1A1 has already been described, a part of the description will be omitted.

As described above, first antenna module v of 106A_1_v operates as the first antenna module, and second antenna module #w of 106A_2_w operates as the second antenna module.

FIG. 1B illustrates a configuration of a communication apparatus for transmitting a modulation signal (group) of the frame of "FIG. 31A or FIG. 31B". Note that, since FIG. 1B has already been described, a part of the description will be omitted.

As described above, the first antenna module v of 106A_1_v operates as the first antenna module, and second antenna module #w of 106A_2_w operates as the second antenna module.

For simplicity of description, in the communication apparatus of FIG. 1A1 or FIG. 1B, when two first antenna modules and two second antenna modules are present, it is assumed that the communication apparatus includes "first antenna module 1 of 106A_1_1", "first antenna module 2 of 106A_1_2", "second antenna module #1 of 106A_2_1", and "second antenna module #2 of 106A_2_2". In the following, an operation example in this case will be described.

As illustrated in FIG. 31A and FIG. 31B, an example of the setting of the antenna module used to transmit the modulation signal (group) present at each frequency in a case where frequencies 1, 2, 3, and 4 are present will be described.

Example 6-9:

The communication apparatus of FIG. 1A1 or FIG. 1B transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" using the "first antenna module 1 of 106A_1_1". Note that, in this case, the number of modulation signals (number of transmission signals) constituting the modulation signal (group) may be set.

The communication apparatus of FIG. 1A1 or FIG. 1B transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" using the "first antenna module 2 of 106A_1_2". Note that, in this case, the number of modulation signals (number of transmission signals) constituting the modulation signal (group) may be set.

The communication apparatus of FIG. 1A1 or FIG. 1B transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" using the "second antenna module #1 of 106A_2_1". Note that, in this case, the number of modulation signals (number of transmission signals) constituting the modulation signal (group) may be set.

The communication apparatus of FIG. 1A1 or FIG. 1B transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" using the "second antenna module #2 of 106A_2_2". Note that, in this case, the number of modulation signals (number of transmission signals) constituting the modulation signal (group) may be set.

Therefore, the "first antenna module v of 106A_1_v" and the "second antenna module #w of 106A_2_w" used to transmit the modulation signal (group) are set for each frequency.

The descriptions of the following are the same as those described in another embodiment: the "condition related to the precoding, condition related to the number of transmission signals, usage condition related to the antenna, and the like" of the "first antenna module v of 106A_1_v" that operates as the first antenna module and the "condition related to the precoding, condition related to the number of transmission signals, usage condition related to the antenna, and the like" of the "second antenna module #w of 106A_2_w" that operates as the second antenna module.

As in Example 6-9, determining the modulation signal (group) to be transmitted for each antenna module makes it possible to obtain an effect of improving the reception quality of data.

Note that Example 6-9 is an example, and the examples of the "first antenna module v of 106A_1_v" that operates as the first antenna module and the "second antenna module #w of 106A_2_w" that operates as the second antenna module are not limited to the above examples. Further, the "first antenna module v of 106A_1_v" and the "second antenna module #w of 106A_2_w" that do not transmit the modulation signal (group) may be present. Further, although the example of the case where there are two "first antenna modules v of 106A_1_v" and two "second antenna modules #w of 106A_2_w" has been described, the same can be implemented even in a case where there are one or more "first antenna modules v of 106A_1_v" and one or more "second antenna modules #w of 106A_2_w".

As described in Embodiment 1 and the like, the same can be implemented even in a case of the communication apparatus including the antenna port corresponding to the "first antenna module v of 106A_1_v" and including the antenna port corresponding to the "second antenna module #w of 106A_2_w".

Another example will be described.

FIG. 33A illustrates a configuration of a system including a TRP for transmitting a modulation signal (group) of the frame of "FIG. 31A or FIG. 31B". Note that, in FIG. 33A, the same reference numerals are assigned to those that operate in the same manner as in FIG. 6A1, and the description thereof will be omitted for the parts that have already been described.

The difference between FIG. 33A and FIG. 6A1 is that "TRP #1 of 3301_1, TRP #2 of 3301_2, ..., TRP #L of 3301_L" are present in FIG. 33A, whereas "TRP #1_k of 601_k, TRP #2_i of 602_i" are present in FIG. 6A1. Note that L is an integer of 1 or greater or an integer of 2 or greater.

Then, the "TRP #1 of 3301_1, TRP#2 of 3301_2, ..., TRP #L of 3301_L" include the antenna module or the antenna port corresponding to the antenna module. Note that, since the example of the configuration of the TRP has already been described, the description thereof will be omitted.

As described using FIG. 6A1, the "TRP #1 of 3301_1, TRP #2 of 3301_2, ..., TRP #L of 3301_L" of FIG. 33A transmits the transmission signal (group) including all of the "modulation signal ♭u of 103A_u" or a part of the "modulation signal ♭u of 103A_u" using the antenna module or the antenna port corresponding to the antenna module.

FIG. 33B illustrates a configuration of a system including TRPs for transmitting a modulation signal (group) of the frame of "FIG. 31A or FIG. 31B". Note that, in FIG. 33B, the same reference numerals are assigned to those that operate in the same manner as in FIG. 6A2, and the description thereof will be omitted for the parts that have already been described.

The difference between FIG. 33B and FIG. 6A2 is that "TRP #1 of 3301_1, TRP #2 of 3301_2, ..., TRP #L of 3301_L" are present in FIG. 33B, whereas "TRP #1_k of 601_k, TRP #2_i of 602_i" are present in FIG. 6A2. Note that L is an integer of 1 or greater or an integer of 2 or greater.

Then, the "TRP #1 of 3301_1, TRP #2 of 3301_2, ..., TRP #L of 3301_L" include the antenna module or the antenna port corresponding to the antenna module. Note that, since the example of the configuration of the TRP has already been described, the description thereof will be omitted.

As described using FIG. 6A2, the "TRP #1 of 3301_1, TRP #2 of 3301_2, ..., TRP #L of 3301_L" of FIG. 33B transmits the transmission signal (group) including all of the "modulation signal ♭u of 103A_u" or a part of the "modulation signal ♭u of 103A_u" using the antenna module or the antenna port corresponding to the antenna module.

Note that the apparatus that generates the "modulation signal ♭u of 103A_u" is the same as that described using FIG. 6A2, and the part included in each TRP is also the same as that described using FIG. 6A2.

FIG. 33C illustrates a configuration of a system including TRPs for transmitting a modulation signal (group) of the frame of "FIG. 31A or FIG. 31B". Note that, in FIG. 33C, the same reference numerals are assigned to those that operate in the same manner as in FIG. 6A3, and the description thereof will be omitted for the parts that have already been described.

The difference between FIG. 33C and FIG. 6A3 is that "TRP #1 of 3301_1, TRP #2 of 3301_2, ..., TRP #L of 3301_L" are present in FIG. 6A3, whereas "TRP #1_k of 601_k, TRP #2_i of 602_i" are present in FIG. 6A2. Note that L is an integer of 1 or greater or an integer of 2 or greater.

Then, the "TRP #1 of 3301_1, TRP #2 of 3301_2, ..., TRP #L of 3301_L" include the antenna module or the antenna port corresponding to the antenna module. Note that, since the example of the configuration of the TRP has already been described, the description thereof will be omitted.

As described using FIG. 6A3, the "TRP #1 of 3301_1, TRP #2 of 3301_2, ..., TRP #L of 3301_L" of FIG. 33C transmits the transmission signal (group) including all of the "modulation signal ♭u of 103A_u" or a part of the "modulation signal ♭u of 103A_u" using the antenna module or the antenna port corresponding to the antenna module.

Note that the apparatus that generates the "modulation signal ♭u of 103A_u" is the same as that described using FIG. 6A3, and the part included in each TRP and apparatus 603 is also the same as that described using FIG. 6A3.

For simplicity of description, in FIG. 33A, FIG. 32B, and FIG. 33C, when four TRPs are present, it is assumed that "TRP #1 of 3301_1", "TRP #2 of 3301_2", "TRP #3 of 3301_3", and "TRP #4 of 3301_4" are present in the system. In the following, an operation example in this case will be described.

As illustrated in FIG. 31A and FIG. 31B, in a case where frequencies 1, 2, 3, and 4 are present, the TRP used to transmit the modulation signal (group) present at each frequency is set.

Example 6-10:

The "TRP #1 of 3301_1" and the "TRP #2 of 3301_2" in FIG. 33A, FIG. 32B, and FIG. 33C transmit the modulation signal (group) 3101A_1 present at frequency 1. Note that, in this case, the number of modulation signals (number of transmission signals) constituting the "modulation signal (group) 3101A_1 present at frequency 1" may be set in the "TRP #1 of 3301_1". Further, the number of modulation signals (number of transmission signals) constituting the "modulation signal (group) 3101A_1 present at frequency 1" may be set in the "TRP #2 of 3301_2".

The "TRP #2 of 3301_2" and the "TRP #3 of 3301_3" in FIG. 33A, FIG. 32B, and FIG. 33C transmit the modulation signal (group) 3101A_2 present at frequency 2. Note that, in this case, the number of modulation signals (number of transmission signals) constituting the "modulation signal (group) 3101A_2 present at frequency 2" may be set in the "TRP #2 of 3301_2". Further, the number of modulation signals (number of transmission signals) constituting the "modulation signal (group) 3101A_2 present at frequency 2" may be set in the "TRP #3 of 3301_3".

The "TRP #3 of 3301_3" and the "TRP #4 of 3301_4" in FIG. 33A, FIG. 32B, and FIG. 33C transmit the modulation signal (group) 3101A_3 present at frequency 3. Note that, in this case, the number of modulation signals (number of transmission signals) constituting the "modulation signal (group) 3101A_3 present at frequency 3" may be set in the "TRP #3 of 3301_3". Further, the number of modulation signals (number of transmission signals) constituting the "modulation signal (group) 3101A_3 present at frequency 3" may be set in the "TRP #4 of 3301_4".

The "TRP #4 of 3301_4" and the "TRP #1 of 3301_1" in FIG. 33A, FIG. 32B, and FIG. 33C transmit the modulation signal (group) 3101A_4 present at frequency 4. Note that, in this case, the number of modulation signals (number of transmission signals) constituting the "modulation signal (group) 3101A_4 present at frequency 4" may be set in the "TRP #4 of 3301_4". Further, the number of modulation signals (number of transmission signals) constituting the "modulation signal (group) 3101A_4 present at frequency 4" may be set in the "TRP #1 of 3301_1".

As in Example 6-10, setting the TRP used to transmit the modulation signal (group) present at each frequency makes it possible to obtain an effect of improving the reception quality of data in the modulation signal (group) present at each frequency.

Note that Example 6-10 is an example, and the setting of the TRP used to transmit the modulation signal (group) present at each frequency is not limited to the above example. Further, although the example of the case where there are four TRPs has been described, the same can be implemented even in a case where there are one or more or two or more TRPs.

Example 6-11:

The "TRP #1 of 3301_1", "TRP #2 of 3301_2", "TRP #3 of 3301_3", and "TRP #4 of 3301_4" in FIG. 33A, FIG. 32B, and FIG. 33C transmit "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4".

Then, the "TRP #1 of 3301_1" in FIG. 33A, FIG. 32B, and FIG. 33C sets "precoding for transmitting the modulation signal (group) 3101A_1 present at frequency 1", "precoding for transmitting the modulation signal (group) 3101A_2 present at frequency 2", "precoding for transmitting the modulation signal (group) 3101A_3 present at frequency 3", and "precoding for transmitting the modulation signal (group) 3101A_4 present at frequency 4" in a case of transmitting the modulation signal (group). In this case, the number of modulation signals (number of transmission signals) constituting the "modulation signal (group) 3101A_1 present at frequency 1", the number of modulation signals (number of transmission signals) constituting the "modulation signal (group) 3101A_2 present at frequency 2", the number of modulation signals (number of transmission signals) constituting the "modulation signal (group) 3101A_3 present at frequency 3", and the number of modulation signals (number of transmission signals) constituting the "modulation signal (group) 3101A_4 present at frequency 4" may be set.

The "TRP #2 of 3301_2" in FIG. 33A, FIG. 32B, and FIG. 33C sets "precoding for transmitting the modulation signal (group) 3101A_1 present at frequency 1", "precoding for transmitting the modulation signal (group) 3101A_2 present at frequency 2", "precoding for transmitting the modulation signal (group) 3101A_3 present at frequency 3", and "precoding for transmitting the modulation signal (group) 3101A_4 present at frequency 4" in a case of transmitting the modulation signal (group). In this case, the number of modulation signals (number of transmission signals) constituting the "modulation signal (group) 3101A_1 present at frequency 1", the number of modulation signals (number of transmission signals) constituting the "modulation signal (group) 3101A_2 present at frequency 2", the number of modulation signals (number of transmission signals) constituting the "modulation signal (group) 3101A_3 present at frequency 3", and the number of modulation signals (number of transmission signals) constituting the "modulation signal (group) 3101A_4 present at frequency 4" may be set.

The "TRP #3 of 3301_3" in FIG. 33A, FIG. 32B, and FIG. 33C sets "precoding for transmitting the modulation signal (group) 3101A_1 present at frequency 1", "precoding for transmitting the modulation signal (group) 3101A_2 present at frequency 2", "precoding for transmitting the modulation signal (group) 3101A_3 present at frequency 3", and "precoding for transmitting the modulation signal (group) 3101A_4 present at frequency 4" in a case of transmitting the modulation signal (group). In this case, the number of modulation signals (number of transmission signals) constituting the "modulation signal (group) 3101A_1 present at frequency 1", the number of modulation signals (number of transmission signals) constituting the "modulation signal (group) 3101A_2 present at frequency 2", the number of modulation signals (number of transmission signals) constituting the "modulation signal (group) 3101A_3 present at frequency 3", and the number of modulation signals (number of transmission signals) constituting the "modulation signal (group) 3101A_4 present at frequency 4" may be set.

The "TRP #4 of 3301_4" in FIG. 33A, FIG. 32B, and FIG. 33C sets "precoding for transmitting the modulation signal (group) 3101A_1 present at frequency 1", "precoding for transmitting the modulation signal (group) 3101A_2 present at frequency 2", "precoding for transmitting the modulation signal (group) 3101A_3 present at frequency 3", and "precoding for transmitting the modulation signal (group) 3101A_4 present at frequency 4" in a case of transmitting the modulation signal (group). In this case, the number of modulation signals (number of transmission signals) constituting the "modulation signal (group) 3101A_1 present at frequency 1", the number of modulation signals (number of transmission signals) constituting the "modulation signal (group) 3101A_2 present at frequency 2", the number of modulation signals (number of transmission signals) constituting the "modulation signal (group) 3101A_3 present at frequency 3", and the number of modulation signals (number of transmission signals) constituting the "modulation signal (group) 3101A_4 present at frequency 4" may be set.

As in Example 6-11, setting the precoding used in the modulation signal (group) present at each frequency in the TRP makes it possible to obtain an effect of improving the reception quality of data in the modulation signal (group).

Note that although the example of the case where there are four TRPs has been described, the same can be implemented even in a case where there are one or more or two or more TRPs.

Example 6-12:

The "TRP #1 of 3301_1" and the "TRP #2 of 3301_2" in FIG. 33A, FIG. 32B, and FIG. 33C transmit the modulation signal (group) 3101A_1 present at frequency 1. In this case, the "TRP #1 of 3301_1" sets the precoding used for transmission for the "modulation signal (group) 3101A_1 present at frequency 1", and the "TRP #2 of 3301_2" sets the precoding used for transmission for the "modulation signal (group) 3101A_1 present at frequency 1". Note that, in this case, the number of modulation signals (number of transmission signals) constituting the "modulation signal (group) 3101A_1 present at frequency 1" may be set in the "TRP #1 of 3301_1". Further, the number of modulation signals (number of transmission signals) constituting the "modulation signal (group) 3101A_1 present at frequency 1" may be set in the "TRP #2 of 3301_2".

The "TRP #2 of 3301_2" and the "TRP #3 of 3301_3" in FIG. 33A, FIG. 32B, and FIG. 33C transmit the modulation signal (group) 3101A_2 present at frequency 2. In this case, the "TRP #2 of 3301_2" sets the precoding used for transmission for the "modulation signal (group) 3101A_2 present at frequency 2", and the "TRP #3 of 3301_3" sets the precoding used for transmission for the "modulation signal (group) 3101A_2 present at frequency 2". Note that, in this case, the number of modulation signals (number of transmission signals) constituting the "modulation signal (group) 3101A_2 present at frequency 2" may be set in the "TRP #2 of 3301_2". Further, the number of modulation signals (number of transmission signals) constituting the "modulation signal (group) 3101A_2 present at frequency 2" may be set in the "TRP #3 of 3301_3".

The "TRP #3 of 3301_3" and the "TRP #4 of 3301_4" in FIG. 33A, FIG. 32B, and FIG. 33C transmit the modulation signal (group) 3101A_3 present at frequency 3. In this case, the "TRP #3 of 3301_3" sets the precoding used for transmission for the "modulation signal (group) 3101A_3 present at frequency 3", and the "TRP #4 of 3301_4" sets the precoding used for transmission for the "modulation signal (group) 3101A_3 present at frequency 3". Note that, in this case, the number of modulation signals (number of transmission signals) constituting the "modulation signal (group) 3101A_3 present at frequency 3" may be set in the "TRP #3 of 3301_3". Further, the number of modulation signals (number of transmission signals) constituting the "modulation signal (group) 3101A_3 present at frequency 3" may be set in the "TRP #4 of 3301_4".

The "TRP #4 of 3301_4" and the "TRP #1 of 3301_1" in FIG. 33A, FIG. 32B, and FIG. 33C transmit the modulation signal (group) 3101A_4 present at frequency 4. In this case, the "TRP #4 of 3301_4" sets the precoding used for transmission for the "modulation signal (group) 3101A_4 present at frequency 4", and the "TRP #1 of 3301_1" sets the precoding used for transmission for the "modulation signal (group) 3101A_4 present at frequency 4". Note that, in this case, the number of modulation signals (number of transmission signals) constituting the "modulation signal (group) 3101A_4 present at frequency 4" may be set in the "TRP #4 of 3301_4". Further, the number of modulation signals (number of transmission signals) constituting the "modulation signal (group) 3101A_4 present at frequency 4" may be set in the "TRP #1 of 3301_1".

As in Example 6-12, setting the TRP used to transmit the modulation signal (group) present at each frequency and setting the precoding used to transmit in each TRP makes it possible to obtain an effect of improving the reception quality of data in the modulation signal (group) present at each frequency.

Note that Example 6-12 is an example, and the setting of the TRP used to transmit the modulation signal (group) present at each frequency is not limited to the above example. Further, although the example of the case where there are four TRPs has been described, the same can be implemented even in a case where there are one or more or two or more TRPs.

Another example will be described.

FIG. 6A1 illustrates a configuration of a system including TRPs for transmitting a modulation signal (group) of the frame of "FIG. 31A or FIG. 31B". Note that, since FIG. 6A1 has already been described, the description thereof will be omitted. As described in Embodiment 2, TRP #1_1 of 601_1 transmits the transmission signal group using the first antenna module. Further, TRP #1_1 of 601_1 may transmit the transmission signal group by using the second antenna module. TRP #2_i of 602_i transmits the transmission signal group using the second antenna module.

FIG. 6A2 illustrates a configuration of a system including TRPs for transmitting a modulation signal (group) of the frame of "FIG. 31A or FIG. 31B". Note that, since FIG. 6A2 has already been described, the description thereof will be omitted. As described in Embodiment 2, TRP #1_1 of 601_1 transmits the transmission signal group using the first antenna module. Further, TRP #1_1 of 601_1 may transmit the transmission signal group by using the second antenna module. TRP #2_i of 602_i transmits the transmission signal group using the second antenna module.

FIG. 6A3 illustrates a configuration of a system including TRPs for transmitting a modulation signal (group) of the frame of "FIG. 31A or FIG. 31B". Note that, since FIG. 6A3 has already been described, the description thereof will be omitted. As described in Embodiment 2, TRP #1_1 of 601_1 transmits the transmission signal group using the first antenna module. Further, TRP #1_1 of 601_1 may transmit the transmission signal group by using the second antenna module. TRP #2_i of 602_i transmits the transmission signal group using the second antenna module.

For simplicity of description, in FIG. 6A1, FIG. 6A2, and FIG. 6A3, when four TRPs are present, it is assumed that "TRP #1_1 of 601_1 ", "TRP #2_1 of 602_1 ", "TRP #2_2 of 602_2", and "TRP #2_3 of 602_3" are present in the system. In the following, an operation example in this case will be described.

As illustrated in FIG. 31A and FIG. 31B, an example of the setting of the TRP used to transmit the modulation signal (group) present at each frequency in a case where frequencies 1, 2, 3, and 4 are present will be described.

Example 6-13:

The "TRP #1_1 of 601_1" in FIG. 6A1, FIG. 6A2, and FIG. 6A3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

The "TRP #2_1 of 602_1" in FIG. 6A1, FIG. 6A2, and FIG. 6A3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

The "TRP #2_2 of 602_2" in FIG. 6A1, FIG. 6A2, and FIG. 6A3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

The "TRP #2_3 of 602_3" in FIG. 6A1, FIG. 6A2, and FIG. 6A3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

Therefore, the TRP used to transmit the modulation signal (group) is set for each frequency.

The descriptions of the following are the same as those described in another embodiment: the "condition related to the precoding, condition related to the number of transmission signals, usage condition related to the antenna, and the like" of the TRP that operates the first antenna module and the "condition related to the precoding, condition related to the number of transmission signals, usage condition related to the antenna, and the like" of the TRP that operates the second antenna module.

As in Example 6-13, determining the modulation signal (group) to be transmitted for each TRP makes it possible to obtain an effect of improving the reception quality of data.

Note that the TRP that does not transmit the modulation signal (group) may be present. Further, although the example of the case where there are three TRP #2_i of 602_i has been described, the same can be implemented even in a case where there are one or more TRP #2_i of 602_i.

As described in Embodiment 1 and the like, the TRP may include the antenna port corresponding to the "first antenna module v of 106A_1_v", and the TRP may include the antenna port corresponding to the "second antenna module #w of 106A_2_w". The same can be implemented in this case as well.

Another example will be described.

FIG. 6B1 illustrates a configuration of a system including TRPs for transmitting a modulation signal (group) of the frame of "FIG. 31A or FIG. 31B". Note that, since FIG. 6B1 has already been described, the description thereof will be omitted. As described in Embodiment 2, TRP #1_k of 601_k transmits the transmission signal group using the first antenna module. Further, TRP #1_k of 601_k may transmit the transmission signal group by using the second antenna module. TRP #2_i of 602_i transmits the transmission signal group using the second antenna module.

FIG. 6B2 illustrates a configuration of a system including TRPs for transmitting a modulation signal (group) of the frame of "FIG. 31A or FIG. 31B". Note that, since FIG. 6B2 has already been described, the description thereof will be omitted. As described in Embodiment 2, TRP #1_k of 601_k transmits the transmission signal group using the first antenna module. Further, TRP #1_k of 601_k may transmit the transmission signal group by using the second antenna module. TRP #2_i of 602_i transmits the transmission signal group using the second antenna module.

FIG. 6B3 illustrates a configuration of a system including TRPs for transmitting a modulation signal (group) of the frame of "FIG. 31A or FIG. 31B". Note that, since FIG. 6B3 has already been described, the description thereof will be omitted. As described in Embodiment 2, TRP #1_k of 601_k transmits the transmission signal group using the first antenna module. Further, TRP #1_k of 601_k may transmit the transmission signal group by using the second antenna module. TRP #2_i of 602_i transmits the transmission signal group using the second antenna module.

For simplicity of description, in FIG. 6B1, FIG. 6B2, and FIG. 6B3, when four TRPs are present, it is assumed that, for example, "TRP #1_1 of 601_1", "TRP #1_2 of 601_2", "TRP #2_1 of 602_1 ", and "TRP #2_2 of 602_2" are present in the system. In the following, an operation example in this case will be described.

As illustrated in FIG. 31A and FIG. 31B, an example of the setting of the TRP used to transmit the modulation signal (group) present at each frequency in a case where frequencies 1, 2, 3, and 4 are present will be described.

Example 6-14:

The "TRP #1_1 of 601_1" in FIG. 6B1, FIG. 6B2, and FIG. 6B3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

The "TRP #1_2 of 601_2" in FIG. 6B1, FIG. 6B2, and FIG. 6B3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

The "TRP #2_1 of 602_1" in FIG. 6B1, FIG. 6B2, and FIG. 6B3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

The "TRP #2_2 of 602_2" in FIG. 6B1, FIG. 6B2, and FIG. 6B3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

Therefore, the TRP used to transmit the modulation signal (group) is set for each frequency.

The descriptions of the following are the same as those described in another embodiment: the "condition related to the precoding, condition related to the number of transmission signals, usage condition related to the antenna, and the like" of the TRP that operates the first antenna module and the "condition related to the precoding, condition related to the number of transmission signals, usage condition related to the antenna, and the like" of the TRP that operates the second antenna module.

As in Example 6-14, determining the modulation signal (group) to be transmitted for each TRP makes it possible to obtain an effect of improving the reception quality of data.

Note that the TRP that does not transmit the modulation signal (group) may be present. Further, although the example of the case where there are two TRP #1_k of 601_k and two TRP #2_i of 602_i has been described, the same can be implemented even in a case where there are one or more TRP #1_k of 601_k and one or more TRP #2_i of 602_i.

As described in Embodiment 1 and the like, the TRP may include the antenna port corresponding to the "first antenna module v of 106A_1_v", and the TRP may include the antenna port corresponding to the "second antenna module #w of 106A_2_w". The same can be implemented in this case as well.

Another example will be described.

FIG. 31A illustrates a mapping example of a frame on a time-frequency axis in a case where a communication apparatus such as a base station, a TRP, and a terminal transmits a modulation signal using an antenna module. Note that, since the details have already been described, the description thereof will be omitted.

FIG. 31B illustrates a mapping example of a frame on a time-frequency axis in a case a the communication apparatus such as a base station, a TRP, and a terminal transmits a modulation signal using an antenna module, which is different from FIG. 31A. Note that, since the details have already been described, the description thereof will be omitted.

FIG. 34A illustrates a mapping example of a frame on a time-frequency axis in a case where a communication apparatus such as a base station, a TRP, and a terminal transmits a modulation signal using an antenna module. Note that, in FIG. 34A, the horizontal axis is the time and the vertical axis is the frequency.

As illustrated in FIG. 34A, a modulation signal (group) 3401A is present at "time R2, frequency A", a modulation signal (group) 3401B is present at "time R2, frequency B", a modulation signal (group) 3401C is present at "time R2, frequency C", and a modulation signal (group) 3101D is present at "time R2, frequency D". Note that, in the case of FIG. 34A, an example is illustrated in which frequency A, frequency B, frequency C, and frequency D are continuously present. Further, although it is described as the "modulation signal (group)", a plurality of modulation signals may be present in the "modulation signal (group)". Therefore, the "modulation signal (group)" is configured by one or more modulation signals.

Then, the communication apparatus such as the base station, the TRP, and the terminal transmits the "modulation signal (group) 3401A, modulation signal (group) 3401B, modulation signal (group) 3401C, and modulation signal (group) 3401D".

FIG. 34B illustrates a mapping example of a frame on a time-frequency axis in a case where a communication apparatus such as a base station, a TRP, and a terminal transmits a modulation signal using an antenna module, which is different from FIG. 34A. Note that, in FIG. 34B, the horizontal axis is the time and the vertical axis is the frequency, the same reference numerals are assigned to those that operate in the same manner as in FIG. 34A, and a part of the description will be omitted.

In the case of FIG. 34B, an example is illustrated in which frequency A, frequency B, frequency C, and frequency D are partially discontinuously present.

Then, the communication apparatus such as the base station, the TRP, and the terminal transmits the "modulation signal (group) 3401A, modulation signal (group) 3401B, modulation signal (group) 3401C, and modulation signal (group) 3401D".

In "FIG. 31A and FIG. 31B" and "FIG. 34A and FIG. 34B", the following conditions are satisfied for the time and the frequency.

In "FIG. 31A and FIG. 31B" and "FIG. 34A and FIG. 34B", time R1 and time R2 may be the same time or different times.

Further, in "FIG. 31A and FIG. 31B" and "FIG. 34A and FIG. 34B", frequency 1 and frequency A may be the same frequency or different frequencies.

In "FIG. 31A and FIG. 31B" and "FIG. 34A and FIG. 34B", frequency 2 and frequency B may be the same frequency or different frequencies.

In "FIG. 31A and FIG. 31B" and "FIG. 34A and FIG. 34B", frequency 3 and frequency C may be the same frequency or different frequencies.

In "FIG. 31A and FIG. 31B" and "FIG. 34A and FIG. 34B", frequency 4 and frequency D may be the same frequency or different frequencies.

FIG. 13A1 illustrates a configuration of a system including a TRP for transmitting a "modulation signal (group) of the frame of FIG. 31A or FIG. 31B" and a "modulation signal (group) of the frame of FIG. 34A or FIG. 34B". Note that, since FIG. 13A1 has already been described, the description thereof will be omitted.

As described in Embodiment 2, TRP_1#1_1 of 1311_1 transmits the transmission signal group using the first antenna module. Further, TRP_1#1_1 of 1311_1 may transmit the transmission signal group by using the second antenna module. TRP_1#2_i of 1312_i transmits the transmission signal group by using the second antenna module. In this case, TRP_1#1_1 of 1311_1 and TRP_i of 1312_i of FIG. 13A1 transmit a modulation signal (group) of the frames of FIG. 31A and FIG. 31B.

Further, as described in Embodiment 2, TRP_2#1_1 of 1321_1 transmits the transmission signal group using the first antenna module. Further, TRP_2#1_1 of 1321_1 may transmit the transmission signal group by using the second antenna module. TRP_2#2_i of 1322_i transmits the transmission signal group by using the second antenna module. In this case, TRP_2#1_1 of 1321_1 and TRP_2#2_i of 1322_i of FIG. 13A1 transmit a modulation signal (group) of the frames of FIG. 34A and FIG. 34B.

Then, time R1 in "FIG. 31A and FIG. 31B" and time R2 in "FIG. 34A and FIG. 34B" satisfy the above conditions.

Frequency 1 in "FIG. 31A and FIG. 31B" and frequency A in "FIG. 34A and FIG. 34B" satisfy the above conditions.

Frequency 2 in "FIG. 31A and FIG. 31B" and frequency B in "FIG. 34A and FIG. 34B" satisfy the above conditions.

Frequency 3 in "FIG. 31A and FIG. 31B" and frequency C in "FIG. 34A and FIG. 34B" satisfy the above conditions.

Frequency 4 in "FIG. 31A and FIG. 31B" and frequency D in "FIG. 34A and FIG. 34B" satisfy the above conditions.

As a result, it is made possible to implement the SDM method, the TDM method, and the FDM method (downlink multiple TRP) using the "first TRP set modulation signal (group)" and the "second TRP set modulation signal (group)".

FIG. 13A2 illustrates a configuration of a system including TRPs for transmitting a "modulation signal (group) of the frame of FIG. 31A or FIG. 31B" and a "modulation signal (group) of the frame of FIG. 34A or FIG. 34B". Note that, since FIG. 13A2 has already been described, the description thereof will be omitted.

As described in Embodiment 2, TRP_1#1_1 of 1311_1 transmits the transmission signal group using the first antenna module. Further, TRP_1#1_1 of 1311_1 may transmit the transmission signal group by using the second antenna module. TRP_1#2_i of 1312_i transmits the transmission signal group by using the second antenna module. In this case, TRP_1#1_1 of 1311_1 and TRP_i of 1312_i of FIG. 13A2 transmit a modulation signal (group) of the frames of FIG. 31A and FIG. 31B.

Further, as described in Embodiment 2, TRP_2#1_1 of 1321_1 transmits the transmission signal group using the first antenna module. Further, TRP_2#1_1 of 1321_1 may transmit the transmission signal group by using the second antenna module. TRP_2#2_i of 1322_i transmits the transmission signal group by using the second antenna module. In this case, TRP_2#1_1 of 1321_1 and TRP_2#2_i of 1322_i of FIG. 13A2 transmit a modulation signal (group) of the frames of FIG. 34A and FIG. 34B.

Then, time R1 in "FIG. 31A and FIG. 31B" and time R2 in "FIG. 34A and FIG. 34B" satisfy the above conditions.

Frequency 1 in "FIG. 31A and FIG. 31B" and frequency A in "FIG. 34A and FIG. 34B" satisfy the above conditions.

Frequency 2 in "FIG. 31A and FIG. 31B" and frequency B in "FIG. 34A and FIG. 34B" satisfy the above conditions.

Frequency 3 in "FIG. 31A and FIG. 31B" and frequency C in "FIG. 34A and FIG. 34B" satisfy the above conditions.

Frequency 4 in "FIG. 31A and FIG. 31B" and frequency D in "FIG. 34A and FIG. 34B" satisfy the above conditions.

As a result, it is made possible to implement the SDM method, the TDM method, and the FDM method (downlink multiple TRP) using the "first TRP set modulation signal (group)" and the "second TRP set modulation signal (group)".

FIG. 13A3 illustrates a configuration of a system including a TRP for transmitting a "modulation signal (group) of the frame of FIG. 31A or FIG. 31B" and a "modulation signal (group) of the frame of FIG. 34A or FIG. 34B". Note that, since FIG. 13A3 has already been described, the description thereof will be omitted.

As described in Embodiment 2, TRP_1#1_1 of 1311_1 transmits the transmission signal group using the first antenna module. Further, TRP_1#1_1 of 1311_1 may transmit the transmission signal group by using the second antenna module. TRP_1#2_i of 1312_i transmits the transmission signal group by using the second antenna module. In this case, TRP_1#1_1 of 1311_1 and TRP_i of 1312_i of FIG. 13A3 transmit a modulation signal (group) of the frames of FIG. 31A and FIG. 31B.

Further, as described in Embodiment 2, TRP_2#1_1 of 1321_1 transmits the transmission signal group using the first antenna module. Further, TRP_2#1_1 of 1321_1 may transmit the transmission signal group by using the second antenna module. TRP_2#2_i of 1322_i transmits the transmission signal group by using the second antenna module. In this case, TRP_2#1_1 of 1321_1 and TRP_2#2_i of 1322_i of FIG. 13A3 transmit a modulation signal (group) of the frames of FIG. 34A and FIG. 34B.

Then, time R1 in "FIG. 31A and FIG. 31B" and time R2 in "FIG. 34A and FIG. 34B" satisfy the above conditions.

Frequency 1 in "FIG. 31A and FIG. 31B" and frequency A in "FIG. 34A and FIG. 34B" satisfy the above conditions.

Frequency 2 in "FIG. 31A and FIG. 31B" and frequency B in "FIG. 34A and FIG. 34B" satisfy the above conditions.

Frequency 3 in "FIG. 31A and FIG. 31B" and frequency C in "FIG. 34A and FIG. 34B" satisfy the above conditions.

Frequency 4 in "FIG. 31A and FIG. 31B" and frequency D in "FIG. 34A and FIG. 34B" satisfy the above conditions.

As a result, it is made possible to implement the SDM method, the TDM method, and the FDM method (downlink multiple TRP) using the "first TRP set modulation signal (group)" and the "second TRP set modulation signal (group)".

For simplicity of description, in FIG. 13A1, FIG. 13A2, and FIG. 13A3, when four TRPs in the first TRP set and four TRPs in the second TRP set are present, it is assumed that "TRP_1#1_1 of 1311_1", "TRP_1#2_1 of 1312_1", "TRP_1#2_2 of 1312_2", and "TRP_1#2_3 of 1312_3" and "TRP_2#1_1 of 1321_1", "TRP_2#2_1 of 1322_1", "TRP_2#2_2 of 1322_2", and "TRP_2#2_3 of 1322_3" are present in the system. In the following, an operation example in this case will be described.

An example of the setting of the TRP used to transmit the modulation signal (group) present at each frequency in a case where frequencies 1, 2, 3, and 4 are present as in FIG. 31A and FIG. 31B and frequency A, frequency B, frequency C, and frequency D are present as in FIG. 34A and FIG. 34B will be described.

Example 6-15:

The "TRP_1#1_1 of 1311_1" of FIG. 13A1, FIG. 13A2, and FIG. 13A3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

The "TRP_1#2_1 of 1312_1" of FIG. 13A1, FIG. 13A2, and FIG. 13A3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

The "TRP_1#2_2 of 1312_2" of FIG. 13A1, FIG. 13A2, and FIG. 13A3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

The "TRP_1#2_3 of 1312_3" of FIG. 13A1, FIG. 13A2, and FIG. 13A3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

The "TRP_2#1_1 of 1321_1" of FIG. 13A1, FIG. 13A2, and FIG. 13A3 transmits one or more of "modulation signal (group) 3401A present at frequency A, modulation signal (group) 3401B present at frequency B, modulation signal (group) 3401C present at frequency C, and modulation signal (group) 3401D present at frequency D". Note that, in this case, the number of modulation signals (number of transmission signals) constituting the modulation signal (group) may be set.

The "TRP_2#2_1 of 1322_1" of FIG. 13A1, FIG. 13A2, and FIG. 13A3 transmits one or more of "modulation signal (group) 3401 A present at frequency A, modulation signal (group) 3401B present at frequency B, modulation signal (group) 3401C present at frequency C, and modulation signal (group) 3401D present at frequency D". Note that, in this case, the number of modulation signals (number of transmission signals) constituting the modulation signal (group) may be set.

The "TRP_2#2_2 of 1322_2" of FIG. 13A1, FIG. 13A2, and FIG. 13A3 transmits one or more of "modulation signal (group) 3401A present at frequency A, modulation signal (group) 3401B present at frequency B, modulation signal (group) 3401C present at frequency C, and modulation signal (group) 3401D present at frequency D". Note that, in this case, the number of modulation signals (number of transmission signals) constituting the modulation signal (group) may be set.

The "TRP_2#2_3 of 1322_3" of FIG. 13A1, FIG. 13A2, and FIG. 13A3 transmits one or more of "modulation signal (group) 3401A present at frequency A, modulation signal (group) 3401B present at frequency B, modulation signal (group) 3401C present at frequency C, and modulation signal (group) 3401D present at frequency D". Note that, in this case, the number of modulation signals (number of transmission signals) constituting the modulation signal (group) may be set.

Therefore, the TRP used to transmit the modulation signal (group) is set for each frequency.

The descriptions of the following are the same as those described in another embodiment: the "condition related to the precoding, condition related to the number of transmission signals, usage condition related to the antenna, and the like" of the TRP that operates the first antenna module and the "condition related to the precoding, condition related to the number of transmission signals, usage condition related to the antenna, and the like" of the TRP that operates the second antenna module.

As in Example 6-15, determining the modulation signal (group) to be transmitted for each TRP makes it possible to obtain an effect of improving the reception quality of data. Further, since the multiple TRPs can be realized, an effect of improving the transmission quality of data and increasing the data transmission speed can be obtained.

Note that the TRP that does not transmit the modulation signal (group) may be present. Further, although the example of the case where there are three TRP_1#2_i of 1312_i has been described, the same can be implemented even in a case where there are one or more TRP_1#2_i of 1312_i. Further, although the example of the case where there are three TRP_2#2_i of 1322_i has been described, the same can be implemented even in a case where there are one or more TRP_2#2_i of 1322_i.

As described in Embodiment 1 and the like, the TRP may include the antenna port corresponding to the "first antenna module v of 106A_1_v", and the TRP may include the antenna port corresponding to the "second antenna module #w of 106A_2_w". The same can be implemented in this case as well.

Another example will be described.

FIG. 31A illustrates a mapping example of a frame on a time-frequency axis in a case where a communication apparatus such as a base station, a TRP, and a terminal transmits a modulation signal using an antenna module. Note that, since the details have already been described, the description thereof will be omitted.

FIG. 31B illustrates a mapping example of a frame on a time-frequency axis in a case where a communication apparatus such as a base station, a TRP, and a terminal transmits a modulation signal using an antenna module, which is different from FIG. 31A. Note that, since the details have already been described, the description thereof will be omitted.

FIG. 34A illustrates a mapping example of a frame on a time-frequency axis in a case where a communication apparatus such as a base station, a TRP, and a terminal transmits a modulation signal using an antenna module. Note that, since the details have already been described, the description thereof will be omitted.

FIG. 34B illustrates a mapping example of a frame on a time-frequency axis in a case where a communication apparatus such as a base station, a TRP, and a terminal transmits a modulation signal using an antenna module, which is different from FIG. 34A. Note that, since the details have already been described, the description thereof will be omitted.

In "FIG. 31A and FIG. 31B" and "FIG. 34A and FIG. 34B", the following conditions are satisfied for the time and the frequency.

In "FIG. 31A and FIG. 31B" and "FIG. 34A and FIG. 34B", time R1 and time R2 may be the same time or different times.

Further, in "FIG. 31A and FIG. 31B" and "FIG. 34A and FIG. 34B", frequency 1 and frequency A may be the same frequency or different frequencies.

In "FIG. 31A and FIG. 31B" and "FIG. 34A and FIG. 34B", frequency 2 and frequency B may be the same frequency or different frequencies.

In "FIG. 31A and FIG. 31B" and "FIG. 34A and FIG. 34B", frequency 3 and frequency C may be the same frequency or different frequencies.

In "FIG. 31A and FIG. 31B" and "FIG. 34A and FIG. 34B", frequency 4 and frequency D may be the same frequency or different frequencies.

FIG. 13F1 illustrates a configuration of a system including TRPs for transmitting a "modulation signal (group) of the frame of FIG. 31A or FIG. 31B" and a "modulation signal (group) of the frame of FIG. 34A or FIG. 34B". Note that, since FIG. 13F1 has already been described, the description thereof will be omitted.

As described in Embodiment 2, TRP_1#1_k of 1311_k transmits the transmission signal group using the first antenna module. Further, TRP_1#1_k of 1311_k may transmit the transmission signal group by using the second antenna module. TRP_1#2_i of 1312_i transmits the transmission signal group by using the second antenna module. In this case, TRP_1#1_k of 1311_k and TRP_i of 1312_i of FIG. 13A1 transmit a modulation signal (group) of the frames of FIG. 31A and FIG. 31B.

Further, as described in Embodiment 2, TRP_2#1_k of 1321_k transmits the transmission signal group using the first antenna module. Further, TRP_2#1_k of 1321_k may transmit the transmission signal group by using the second antenna module. TRP_2#2_i of 1322_i transmits the transmission signal group by using the second antenna module. In this case, TRP_2#1_k of 1321_k and TRP_2#2_i of 1322_i of FIG. 13F1 transmit a modulation signal (group) of the frames of FIG. 34A and FIG. 34B.

Then, time R1 in "FIG. 31A and FIG. 31B" and time R2 in "FIG. 34A and FIG. 34B" satisfy the above conditions.

Frequency 1 in "FIG. 31A and FIG. 31B" and frequency A in "FIG. 34A and FIG. 34B" satisfy the above conditions.

Frequency 2 in "FIG. 31A and FIG. 31B" and frequency B in "FIG. 34A and FIG. 34B" satisfy the above conditions.

Frequency 3 in "FIG. 31A and FIG. 31B" and frequency C in "FIG. 34A and FIG. 34B" satisfy the above conditions.

Frequency 4 in "FIG. 31A and FIG. 31B" and frequency D in "FIG. 34A and FIG. 34B" satisfy the above conditions.

As a result, it is made possible to implement the SDM method, the TDM method, and the FDM method (downlink multiple TRP) using the "third TRP set modulation signal (group)" and the "fourth TRP set modulation signal (group)".

FIG. 13F2 illustrates a configuration of a system including TRPs for transmitting a "modulation signal (group) of the frame of FIG. 31A or FIG. 31B" and a "modulation signal (group) of the frame of FIG. 34A or FIG. 34B". Note that, since FIG. 13F2 has already been described, the description thereof will be omitted.

As described in Embodiment 2, TRP_1#1_k of 1311_k transmits the transmission signal group using the first antenna module. Further, TRP_1#1_k of 1311_k may transmit the transmission signal group by using the second antenna module. TRP_1#2_i of 1312_i transmits the transmission signal group by using the second antenna module. In this case, TRP_1#1_k of 1311_k and TRP_i of 1312_i of FIG. 13A1 transmit a modulation signal (group) of the frames of FIG. 31A and FIG. 31B.

Further, as described in Embodiment 2, TRP_2#1_k of 1321_k transmits the transmission signal group using the first antenna module. Further, TRP_2#1_k of 1321_k may transmit the transmission signal group by using the second antenna module. TRP_2#2_i of 1322_i transmits the transmission signal group by using the second antenna module. In this case, TRP_2#1_k of 1321_k and TRP_2#2_i of 1322_i of FIG. 13F1 transmit a modulation signal (group) of the frames of FIG. 34A and FIG. 34B.

Then, time R1 in "FIG. 31A and FIG. 31B" and time R2 in "FIG. 34A and FIG. 34B" satisfy the above conditions.

Frequency 1 in "FIG. 31A and FIG. 31B" and frequency A in "FIG. 34A and FIG. 34B" satisfy the above conditions.

Frequency 2 in "FIG. 31A and FIG. 31B" and frequency B in "FIG. 34A and FIG. 34B" satisfy the above conditions.

Frequency 3 in "FIG. 31A and FIG. 31B" and frequency C in "FIG. 34A and FIG. 34B" satisfy the above conditions.

Frequency 4 in "FIG. 31A and FIG. 31B" and frequency D in "FIG. 34A and FIG. 34B" satisfy the above conditions.

As a result, it is made possible to implement the SDM method, the TDM method, and the FDM method (downlink multiple TRP) using the "third TRP set modulation signal (group)" and the "fourth TRP set modulation signal (group)".

FIG. 13F3 illustrates a configuration of a system including TRPs for transmitting a "modulation signal (group) of the frame of FIG. 31A or FIG. 31B" and a "modulation signal (group) of the frame of FIG. 34A or FIG. 34B". Note that, since FIG. 3F3 has already been described, the description thereof will be omitted.

As described in Embodiment 2, TRP_1#1_k of 1311_k transmits the transmission signal group using the first antenna module. Further, TRP_1#1_k of 1311_k may transmit the transmission signal group by using the second antenna module. TRP_1#2_i of 1312_i transmits the transmission signal group by using the second antenna module. In this case, TRP_1#1_k of 1311_k and TRP_i of 1312_i of FIG. 13A1 transmit a modulation signal (group) of the frames of FIG. 31A and FIG. 31B.

Further, as described in Embodiment 2, TRP_2#1_k of 1321_k transmits the transmission signal group using the first antenna module. Further, TRP_2#1_k of 1321_k may transmit the transmission signal group by using the second antenna module. TRP_2#2_i of 1322_i transmits the transmission signal group by using the second antenna module. In this case, TRP_2#1_k of 1321_k and TRP_2#2_i of 1322_i of FIG. 13F1 transmit a modulation signal (group) of the frames of FIG. 34A and FIG. 34B.

Then, time R1 in "FIG. 31A and FIG. 31B" and time R2 in "FIG. 34A and FIG. 34B" satisfy the above conditions.

Frequency 1 in "FIG. 31A and FIG. 31B" and frequency A in "FIG. 34A and FIG. 34B" satisfy the above conditions.

Frequency 2 in "FIG. 31A and FIG. 31B" and frequency B in "FIG. 34A and FIG. 34B" satisfy the above conditions.

Frequency 3 in "FIG. 31A and FIG. 31B" and frequency C in "FIG. 34A and FIG. 34B" satisfy the above conditions.

Frequency 4 in "FIG. 31A and FIG. 31B" and frequency D in "FIG. 34A and FIG. 34B" satisfy the above conditions.

As a result, it is made possible to implement the SDM method, the TDM method, and the FDM method (downlink multiple TRP) using the "third TRP set modulation signal (group)" and the "fourth TRP set modulation signal (group)".

For simplicity of description, in FIG. 13F1, FIG. 13F2, and FIG. 13F3, when four TRPs in the third TRP set and four TRPs in the fourth TRP set are present, it is assumed that "TRP_1 #1_1 of 1311_1", "TRP_1#1_2 of 1311_2", "TRP_1#2_1 of 1312_1", and "TRP_1#2_2 of 1312_2" and "TRP_2#1_1 of 1321_1", "TRP_2#1_2 of 1321_2", "TRP_2#2_1 of 1322_1", and "TRP_2#2_2 of 1322_2" are present in the system. In the following, an operation example in this case will be described.

An example of the setting of the TRP used to transmit the modulation signal (group) present at each frequency in a case where frequencies 1, 2, 3, and 4 are present as in FIG. 31A and FIG. 31B and frequency A, frequency B, frequency C, and frequency D are present as in FIG. 34A and FIG. 34B will be described.

Example 6-16:

The "TRP_1#1_1 of 1311_1" of FIG. 3F1, FIG. 13F2, and FIG. 13F3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

The "TRP_1#1_2 of 1311_2" of FIG. 13F1, FIG. 13F2, and FIG. 13F3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

The "TRP_1#2_1 of 1312_1" of FIG. 13F1, FIG. 13F2, and FIG. 13F3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

The "TRP_1#2_2 of 1312_2" of FIG. 13F1, FIG. 13F2, and FIG. 13F3 transmits one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4". Note that, in this case, the number of modulation signals (number of transmission signals) constituting the modulation signal (group) may be set.

The "TRP_2#1_1 of 1321_1" of FIG. 13F1, FIG. 13F2, and FIG. 13F3 transmits one or more of "modulation signal (group) 3401A present at frequency A, modulation signal (group) 3401B present at frequency B, modulation signal (group) 3401C present at frequency C, and modulation signal (group) 3401D present at frequency D". Note that, in this case, the number of modulation signals (number of transmission signals) constituting the modulation signal (group) may be set.

The "TRP_2#1_2 of 1321_2" of FIG. 13F1, FIG. 13F2, and FIG. 13F3 transmits one or more of "modulation signal (group) 3401A present at frequency A, modulation signal (group) 3401B present at frequency B, modulation signal (group) 3401C present at frequency C, and modulation signal (group) 3401D present at frequency D". Note that, in this case, the number of modulation signals (number of transmission signals) constituting the modulation signal (group) may be set.

The "TRP_2#2_1 of 1322_1" of FIG. 13F1, FIG. 13F2, and FIG. 13F3 transmits one or more of "modulation signal (group) 3401 A present at frequency A, modulation signal (group) 3401B present at frequency B, modulation signal (group) 3401C present at frequency C, and modulation signal (group) 3401D present at frequency D". Note that, in this case, the number of modulation signals (number of transmission signals) constituting the modulation signal (group) may be set.

The "TRP_2#2_2 of 1322_2" of FIG. 13F1, FIG. 13F2, and FIG. 13F3 transmits one or more of "modulation signal (group) 3401 A present at frequency A, modulation signal (group) 3401B present at frequency B, modulation signal (group) 3401C present at frequency C, and modulation signal (group) 3401D present at frequency D". Note that, in this case, the number of modulation signals (number of transmission signals) constituting the modulation signal (group) may be set.

Therefore, the TRP used to transmit the modulation signal (group) is set for each frequency.

The descriptions of the following are the same as those described in another embodiment: the "condition related to the precoding, condition related to the number of transmission signals, usage condition related to the antenna, and the like" of the TRP that operates the first antenna module and the "condition related to the precoding, condition related to the number of transmission signals, usage condition related to the antenna, and the like" of the TRP that operates the second antenna module.

As in Example 6-16, by determining the modulation signal (group) to be transmitted for each TRP, an effect of improving the reception quality of data can be obtained. Further, since the multiple TRPs can be realized, an effect of improving the transmission quality of data and increasing the data transmission speed can be obtained.

Note that the TRP that does not transmit the modulation signal (group) may be present. Further, although the example of the case where there are two TRP_1#1_k of 1311_k and two TRP_1#2_i of 1312_i has been described, the same can be implemented even in a case where there are one or more or two or more TRP_1#1_k of 1311_k and one or more TRP_1#2_i of 1312_i.

Further, although the example of the case where there are two TRP_2#1_k of 1321_k and two TRP_2#2_i of 1322_i has been described, the same can be implemented even in a case where there are one or more or two or more TRP_2#1_k of 1321_k and one or more TRP_2#2_i of 1322_i.

As described in Embodiment 1 and the like, the TRP may include the antenna port corresponding to the "first antenna module v of 106A_1_v", and the TRP may include the antenna port corresponding to the "second antenna module #w of 106A_2_w". The same can be implemented in this case as well.

Another example will be described.

FIG. 31A illustrates a mapping example of a frame on a time-frequency axis in a case where a communication apparatus such as a base station, a TRP, and a terminal transmits a modulation signal using an antenna module. Note that, since the details have already been described, the description thereof will be omitted.

FIG. 31B illustrates a mapping example of a frame on a time-frequency axis in a case where a communication apparatus such as a base station, a TRP, and a terminal transmits a modulation signal using an antenna module, which is different from FIG. 31A. Note that, since the details have already been described, the description thereof will be omitted.

FIG. 34A illustrates a mapping example of a frame on a time-frequency axis in a case where a communication apparatus such as a base station, a TRP, and a terminal transmits a modulation signal using an antenna module. Note that, since the details have already been described, the description thereof will be omitted.

FIG. 34B illustrates a mapping example of a frame on a time-frequency axis in a case where a communication apparatus such as a base station, a TRP, and a terminal transmits a modulation signal using an antenna module, which is different from FIG. 34A. Note that, since the details have already been described, the description thereof will be omitted.

In "FIG. 31A and FIG. 31B" and "FIG. 34A and FIG. 34B", the following conditions are satisfied for the time and the frequency.

In "FIG. 31A and FIG. 31B" and "FIG. 34A and FIG. 34B", time R1 and time R2 may be the same time or different times.

Further, in "FIG. 31A and FIG. 31B" and "FIG. 34A and FIG. 34B", frequency 1 and frequency A may be the same frequency or different frequencies.

In "FIG. 31A and FIG. 31B" and "FIG. 34A and FIG. 34B", frequency 2 and frequency B may be the same frequency or different frequencies.

In "FIG. 31A and FIG. 31B" and "FIG. 34A and FIG. 34B", frequency 3 and frequency C may be the same frequency or different frequencies.

In "FIG. 31A and FIG. 31B" and "FIG. 34A and FIG. 34B", frequency 4 and frequency D may be the same frequency or different frequencies.

FIG. 14C illustrates a configuration of a system including a TRP for transmitting a "modulation signal (group) of the frame of FIG. 31A or FIG. 31B" and a "modulation signal (group) of the frame of FIG. 34A or FIG. 34B". Note that, since FIG. 14C has already been described, the description thereof will be omitted.

As described in Embodiment 3, terminal #1 of 1390_1 transmits the first "modulation signal" set destined to the first TRP set and the second "modulation signal" set destined to the second TRP set.

In this case, terminal #1 of 1390_1 transmits a modulation signal (group) of the frames of FIG. 31A and FIG. 31B, that is, the first "modulation signal" set destined to the first TRP set to the first TRP set.

Further, in this case, terminal #1 of 1390_1 transmits a modulation signal (group) of the frames of FIG. 34A and FIG. 34B, that is, the first "modulation signal" set destined to the second TRP set to the second TRP set.

As in Embodiment 3, for example, the first TRP set receives the first "modulation signal" set destined to the first TRP set using the "first antenna module or the antenna port corresponding to the first antenna module" and the "second antenna module or the antenna port corresponding to the second antenna module".

Further, for example, the second TRP set receives the second "modulation signal" set destined to the second TRP set using the "first antenna module or the antenna port corresponding to the first antenna module" and the "second antenna module or the antenna port corresponding to the second antenna module".

Then, time R1 in "FIG. 31A and FIG. 31B" and time R2 in "FIG. 34A and FIG. 34B" satisfy the above conditions.

Frequency 1 in "FIG. 31A and FIG. 31B" and frequency A in "FIG. 34A and FIG. 34B" satisfy the above conditions.

Frequency 2 in "FIG. 31A and FIG. 31B" and frequency B in "FIG. 34A and FIG. 34B" satisfy the above conditions.

Frequency 3 in "FIG. 31A and FIG. 31B" and frequency C in "FIG. 34A and FIG. 34B" satisfy the above conditions.

Frequency 4 in "FIG. 31A and FIG. 31B" and frequency D in "FIG. 34A and FIG. 34B" satisfy the above conditions.

As a result, it is made possible to implement the SDM method, the TDM method, and the FDM method (uplink multiple TRP) using the "first "modulation signal" set destined to the first TRP set" and the "first "modulation signal" set destined to the second TRP set".

FIG. 16 illustrates a configuration of a system including TRPs for transmitting a "modulation signal (group) of the frame of FIG. 31A or FIG. 31B" and a "modulation signal (group) of the frame of FIG. 34A or FIG. 34B". Note that, since FIG. 16 has already been described, the description thereof will be omitted.

As described in Embodiment 3, terminal #1 of 1390_1 transmits the first "modulation signal" set destined to the first TRP set and the second "modulation signal" set destined to the second TRP set.

In this case, terminal #1 of 1390_1 transmits a modulation signal (group) of the frames of FIG. 31A and FIG. 31B, that is, the first "modulation signal" set destined to the first TRP set to the first TRP set.

Further, in this case, terminal #1 of 1390_1 transmits the modulation signal (group) of the frame of FIG. 34A and FIG. 34B, that is, the first "modulation signal" set destined to the second TRP set to the second TRP set.

As in Embodiment 3, for example, the first TRP set receives the first "modulation signal" set destined to the first TRP set using the "first antenna module or the antenna port corresponding to the first antenna module" and the "second antenna module or the antenna port corresponding to the second antenna module".

Further, for example, the second TRP set receives the second "modulation signal" set destined to the second TRP set using the "first antenna module or the antenna port corresponding to the first antenna module" and the "second antenna module or the antenna port corresponding to the second antenna module".

Then, time R1 in "FIG. 31A and FIG. 31B" and time R2 in "FIG. 34A and FIG. 34B" satisfy the above conditions.

Frequency 1 in "FIG. 31A and FIG. 31B" and frequency A in "FIG. 34A and FIG. 34B" satisfy the above conditions.

Frequency 2 in "FIG. 31A and FIG. 31B" and frequency B in "FIG. 34A and FIG. 34B" satisfy the above conditions.

Frequency 3 in "FIG. 31A and FIG. 31B" and frequency C in "FIG. 34A and FIG. 34B" satisfy the above conditions.

Frequency 4 in "FIG. 31A and FIG. 31B" and frequency D in "FIG. 34A and FIG. 34B" satisfy the above conditions.

As a result, it is made possible to implement the SDM method, the TDM method, and the FDM method (uplink multiple TRP) using the "first "modulation signal" set destined to the first TRP set" and the "second "modulation signal" set destined to the second TRP set".

For simplicity of description, in FIG. 14C1 and FIG. 16, when four TRPs in the first TRP set and four TRPs in the second TRP set are present, it is assumed that "TRP_1#1_1 of 1311_1", "TRP_1#2_1 of 1312_1", "TRP_1#2_2 of 1312_2", and "TRP_1#2_3 of 1312_3" and "TRP_2#1_1 of 1321_1", "TRP_2#2_1 of 1322_1", "TRP_2#2_2 of 1322_2", and "TRP_2#2_3 of 1322_3" are present in the system. In the following, an operation example in this case will be described.

An example of the setting of the terminal and the TRP in a case where the terminal transmits the modulation signal (group) present at each frequency in a case where frequencies 1, 2, 3, and 4 are present as in FIG. 31A and FIG. 31B and frequency A, frequency B, frequency C, and frequency D are present as in FIG. 34A and FIG. 34B will be described.

Example 6-17:

The terminal #1 of 1390_1 of FIG. 14C1 and FIG. 16 transmits a modulation signal (group) of the frames of FIG. 31A and FIG. 31B, that is, the first "modulation signal" set destined to the first TRP set to the first TRP set. Note that, in this case, the number of modulation signals (number of transmission signals) constituting the modulation signal (group) may be set. Further, terminal #1 of 1390_1 may transmit the first "modulation signal" set destined to the first TRP set using the "first antenna module or the antenna port corresponding to the first antenna module" and the "second antenna module or the antenna port corresponding to the second antenna module".

Further, in this case, terminal #1 of 1390_1 transmits a modulation signal (group) of the frames of FIG. 34A and FIG. 34B, that is, the second "modulation signal" set destined to the second TRP set to the second TRP set. Note that, in this case, the number of modulation signals (number of transmission signals) constituting the modulation signal (group) may be set. Further, terminal #1 of 1390_1 may transmit the second "modulation signal" set destined to the second TRP set using the "first antenna module or the antenna port corresponding to the first antenna module" and the "second antenna module or the antenna port corresponding to the second antenna module."

The "TRP_1#1_1 of 1311_1" of FIG. 14C1 and FIG. 16 receives one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" and demodulates the received signal. Note that TRP_1#1_1 of 1311_1 operates any of the "first antenna module or the antenna port corresponding to the first antenna module" and the "second antenna module or the antenna port corresponding to the second antenna module" to receive and demodulate the signal.

The "TRP_1#2_1 of 1312_1" of FIG. 14C1 and FIG. 16 receives one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" and demodulates the received signal. Note that TRP_1#2_1 of 1312_1 operates any of the "first antenna module or the antenna port corresponding to the first antenna module" and the "second antenna module or the antenna port corresponding to the second antenna module" to receive and demodulate the signal.

The "TRP_1#2_2 of 1312_2" of FIG. 14C1 and FIG. 16 receives one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" and demodulates the received signal. Note that TRP_1#2_2 of 1312_2 operates any of the "first antenna module or the antenna port corresponding to the first antenna module" and the "second antenna module or the antenna port corresponding to the second antenna module" to receive and demodulate the signal.

The "TRP_1#2_3 of 1312_3" of FIG. 14C1 and FIG. 16 receives one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" and demodulates the received signal. Note that TRP_1#2_3 of 1312_3 operates any of the "first antenna module or the antenna port corresponding to the first antenna module" and the "second antenna module or the antenna port corresponding to the second antenna module" to receive and demodulate the signal.

The "TRP_2#1_1 of 1321_1" of FIG. 14C1 and FIG. 16 receives one or more of "modulation signal (group) 3401A present at frequency A, modulation signal (group) 3401B present at frequency B, modulation signal (group) 3401C present at frequency C, and modulation signal (group) 3401D present at frequency D" and demodulates the received signal. Note that TRP_2#1_1 of 1321_1 operates any of the "first antenna module or the antenna port corresponding to the first antenna module" and the "second antenna module or the antenna port corresponding to the second antenna module" to receive and demodulate the signal.

The "TRP_2#2_1 of 1322_1" of FIG. 14C1 and FIG. 16 receives one or more of "modulation signal (group) 3401A present at frequency A, modulation signal (group) 3401B present at frequency B, modulation signal (group) 3401C present at frequency C, and modulation signal (group) 3401D present at frequency D" and demodulates the received signal. Note that TRP_2#2_1 of 1322_1 operates any of the "first antenna module or the antenna port corresponding to the first antenna module" and the "second antenna module or the antenna port corresponding to the second antenna module" to receive and demodulate the signal.

The "TRP_2#2_2 of 1322_2" of FIG. 14C1 and FIG. 16 receives one or more of "modulation signal (group) 3401A present at frequency A, modulation signal (group) 3401B present at frequency B, modulation signal (group) 3401C present at frequency C, and modulation signal (group) 3401D present at frequency D" and demodulates the received signal. Note that TRP_2#2_2 of 1322_2 operates any of the "first antenna module or the antenna port corresponding to the first antenna module" and the "second antenna module or the antenna port corresponding to the second antenna module" to receive and demodulate the signal.

The "TRP_2#2_3 of 1322_3" of FIG. 14C1 and FIG. 16 receives one or more of "modulation signal (group) 3401A present at frequency A, modulation signal (group) 3401B present at frequency B, modulation signal (group) 3401C present at frequency C, and modulation signal (group) 3401D present at frequency D" and demodulates the received signal. Note that TRP_2#2_3 of 1322_3 operates any of the "first antenna module or the antenna port corresponding to the first antenna module" and the "second antenna module or the antenna port corresponding to the second antenna module" to receive and demodulate the signal.

Therefore, the TRP used to receive the modulation signal (group) is set for each frequency.

The descriptions of the following are the same as those described in another embodiment: the "condition related to the precoding, condition related to the number of transmission signals, usage condition related to the antenna, and the like" of the terminal that operates the first antenna module and the "condition related to the precoding, condition related to the number of transmission signals, usage condition related to the antenna, and the like" of the terminal that operates the second antenna module. Further, the condition in a case of the reception operation of the TRP is as described in another embodiment.

As in Example 6-17, determining the modulation signal (group) to be received for each TRP makes it possible to obtain an effect of improving the reception quality of data. Further, since the multiple TRPs can be realized, an effect of improving the transmission quality of data and increasing the data transmission speed can be obtained.

Note that the TRP that does not receive the modulation signal (group) may be present. Further, although the example of the case where there are three TRP_1#2_i of 1312_i has been described, the same can be implemented even in a case where there are one or more TRP_1#2_i of 1312_i. Further, although the example of the case where there are three TRP_2#2_i of 1322_i has been described, the same can be implemented even in a case where there are one or more TRP_2#2_i of 1322_i.

As described in Embodiment 1 and the like, the TRP and the terminal may include the antenna port corresponding to the "first antenna module v of 106A_1_v", and the TRP and the terminal may include the antenna port corresponding to the "second antenna module #w of 106A_2_w". The same can be implemented in this case as well.

Another example will be described.

FIG. 31A illustrates a mapping example of a frame on a time-frequency axis in a case where a communication apparatus such as a base station, a TRP, and a terminal transmits a modulation signal using an antenna module. Note that, since the details have already been described, the description thereof will be omitted.

FIG. 31B illustrates a mapping example of a frame on a time-frequency axis in a case where a communication apparatus such as a base station, a TRP, and a terminal transmits a modulation signal using an antenna module, which is different from FIG. 31A. Note that, since the details have already been described, the description thereof will be omitted.

FIG. 34A illustrates a mapping example of a frame on a time-frequency axis in a case where a communication apparatus such as a base station, a TRP, and a terminal transmits a modulation signal using an antenna module. Note that, since the details have already been described, the description thereof will be omitted.

FIG. 34B illustrates a mapping example of a frame on a time-frequency axis in a case where a communication apparatus such as a base station, a TRP, and a terminal transmits a modulation signal using an antenna module, which is different from FIG. 34A. Note that, since the details have already been described, the description thereof will be omitted.

In "FIG. 31A and FIG. 31B" and "FIG. 34A and FIG. 34B", the following conditions are satisfied for the time and the frequency.

In "FIG. 31A and FIG. 31B" and "FIG. 34A and FIG. 34B", time R1 and time R2 may be the same time or different times.

Further, in "FIG. 31A and FIG. 31B" and "FIG. 34A and FIG. 34B", frequency 1 and frequency A may be the same frequency or different frequencies.

In "FIG. 31A and FIG. 31B" and "FIG. 34A and FIG. 34B", frequency 2 and frequency B may be the same frequency or different frequencies.

In "FIG. 31A and FIG. 31B" and "FIG. 34A and FIG. 34B", frequency 3 and frequency C may be the same frequency or different frequencies.

In "FIG. 31A and FIG. 31B" and "FIG. 34A and FIG. 34B", frequency 4 and frequency D may be the same frequency or different frequencies.

FIG. 19 illustrates a configuration of a system including a TRP for transmitting a "modulation signal (group)" of the frame of FIG. 31A or FIG. 31B" and a "modulation signal (group)" of the frame of FIG. 34A or FIG. 34B". Note that, since FIG. 19 has already been described, the description thereof will be omitted.

As described in Embodiment 3, terminal #1 of 1390_1 transmits the third "modulation signal" set destined to the third TRP set and the fourth "modulation signal" set destined to the fourth TRP set.

In this case, terminal #1 of 1390_1 transmits a modulation signal (group) of the frames of FIG. 31A and FIG. 31B, that is, the third "modulation signal" set destined to the third TRP set to the third TRP set.

Further, in this case, terminal #1 of 1390_1 transmits a modulation signal (group) of the frames of FIG. 34A and FIG. 34B, that is, the fourth "modulation signal" set destined to the fourth TRP set to the fourth TRP set.

As in Embodiment 3, for example, the third TRP set receives the third "modulation signal" set destined to the third TRP set using the "first antenna module or the antenna port corresponding to the first antenna module" and the "second antenna module or the antenna port corresponding to the second antenna module".

Further, for example, the fourth TRP set receives the fourth "modulation signal" set destined to the fourth TRP set using the "first antenna module or the antenna port corresponding to the first antenna module" and the "second antenna module or the antenna port corresponding to the second antenna module".

Then, time R1 in "FIG. 31A and FIG. 31B" and time R2 in "FIG. 34A and FIG. 34B" satisfy the above conditions.

Frequency 1 in "FIG. 31A and FIG. 31B" and frequency A in "FIG. 34A and FIG. 34B" satisfy the above conditions.

Frequency 2 in "FIG. 31A and FIG. 31B" and frequency B in "FIG. 34A and FIG. 34B" satisfy the above conditions.

Frequency 3 in "FIG. 31A and FIG. 31B" and frequency C in "FIG. 34A and FIG. 34B" satisfy the above conditions.

Frequency 4 in "FIG. 31A and FIG. 31B" and frequency D in "FIG. 34A and FIG. 34B" satisfy the above conditions.

As a result, it is made possible to implement the SDM method, the TDM method, and the FDM method (uplink multiple TRP) using the "third "modulation signal" set destined to the third TRP set" and the "fourth "modulation signal" set destined to the fourth TRP set".

FIG. 21 illustrates a configuration of a system including TRPs for transmitting a "modulation signal (group) of the frame of FIG. 31A or FIG. 31B" and a "modulation signal (group) of the frame of FIG. 34A or FIG. 34B". Note that, since FIG. 21 has already been described, the description thereof will be omitted.

As described in Embodiment 3, terminal #1 of 1390_1 transmits the third "modulation signal" set destined to the third TRP set and the fourth "modulation signal" set destined to the fourth TRP set.

In this case, terminal #1 of 1390_1 transmits a modulation signal (group) of the frames of FIG. 31A and FIG. 31B, that is, the third "modulation signal" set destined to the third TRP set to the third TRP set.

Further, in this case, terminal #1 of 1390_1 transmits a modulation signal (group) of the frames of FIG. 34A and FIG. 34B, that is, the fourth "modulation signal" set destined to the fourth TRP set to the fourth TRP set.

As in Embodiment 3, for example, the third TRP set receives the third "modulation signal" set destined to the third TRP set using the "first antenna module or the antenna port corresponding to the first antenna module" and the "second antenna module or the antenna port corresponding to the second antenna module".

Further, for example, the fourth TRP set receives the fourth "modulation signal" set destined to the fourth TRP set using the "first antenna module or the antenna port corresponding to the first antenna module" and the "second antenna module or the antenna port corresponding to the second antenna module".

Then, time R1 in "FIG. 31A and FIG. 31B" and time R2 in "FIG. 34A and FIG. 34B" satisfy the above conditions.

Frequency 1 in "FIG. 31A and FIG. 31B" and frequency A in "FIG. 34A and FIG. 34B" satisfy the above conditions.

Frequency 2 in "FIG. 31A and FIG. 31B" and frequency B in "FIG. 34A and FIG. 34B" satisfy the above conditions.

Frequency 3 in "FIG. 31A and FIG. 31B" and frequency C in "FIG. 34A and FIG. 34B" satisfy the above conditions.

Frequency 4 in "FIG. 31A and FIG. 31B" and frequency D in "FIG. 34A and FIG. 34B" satisfy the above conditions.

As a result, it is made possible to implement the SDM method, the TDM method, and the FDM method (uplink multiple TRP) using the "third "modulation signal" set destined to the third TRP set" and the "fourth "modulation signal" set destined to the fourth TRP set".

For simplicity of description, in FIG. 19 and FIG. 21, when four TRPs in the third TRP set and four TRPs in the fourth TRP set are present, it is assumed that "TRP_1#1_1 of 1311_1", "TRP_1#1_2 of 1311_2", "TRP_1#2_1 of 1312_1", and "TRP_1#2_2 of 1312_2" and "TRP_2#1_1 of 1321_1", "TRP_2#1_2 of 1321_2", "TRP_2#2_1 of 1322_1", and "TRP_2#2_2 of 1322_2" are present in the system. In the following, an operation example in this case will be described.

An example of the setting of the terminal and the TRP in a case where the terminal transmits the modulation signal (group) present at each frequency in a case where frequencies 1, 2, 3, and 4 are present as in FIG. 31A and FIG. 31B and frequency A, frequency B, frequency C, and frequency D are present as in FIG. 34A and FIG. 34B will be described.

Example 6-18:

The terminal #1 of 1390_1 of FIG. 19 and FIG. 21 transmits a modulation signal (group) of the frames of FIG. 31A and FIG. 31B, that is, the third "modulation signal" set destined to the third TRP set to the third TRP set. Note that, in this case, the number of modulation signals (number of transmission signals) constituting the modulation signal (group) may be set. Further, terminal #1 of 1390_1 may transmit the third "modulation signal" set destined to the third TRP set using the "first antenna module or the antenna port corresponding to the first antenna module" and the "second antenna module or the antenna port corresponding to the second antenna module".

Further, in this case, terminal #1 of 1390_1 transmits a modulation signal (group) of the frames of FIG. 34A and FIG. 34B, that is, the fourth "modulation signal" set destined to the fourth TRP set to the fourth TRP set. Note that, in this case, the number of modulation signals (number of transmission signals) constituting the modulation signal (group) may be set. Further, terminal #1 of 1390_1 may transmit the fourth "modulation signal" set destined to the fourth TRP set using the "first antenna module or the antenna port corresponding to the first antenna module" and the "second antenna module or the antenna port corresponding to the second antenna module".

The "TRP_1#1_1 of 1311_1" of FIG. 19 and FIG. 21 receives one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" and demodulates the received signal. Note that TRP_1#1_1 of 1311_1 operates any of the "first antenna module or the antenna port corresponding to the first antenna module" and the "second antenna module or the antenna port corresponding to the second antenna module" to receive and demodulate the signal.

The "TRP_1#1_2 of 1311_2" of FIG. 19 and FIG. 21 receives one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" and demodulates the received signal. Note that TRP_1#1_2 of 1311_2 operates any of the "first antenna module or the antenna port corresponding to the first antenna module" and the "second antenna module or the antenna port corresponding to the second antenna module" to receive and demodulate the signal.

The "TRP_1#2_1 of 1312_1" of FIG. 19 and FIG. 21 receives one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" and demodulates the received signal. Note that TRP_1#2_1 of 1312_1 operates any of the "first antenna module or the antenna port corresponding to the first antenna module" and the "second antenna module or the antenna port corresponding to the second antenna module" to receive and demodulate the signal.

The "TRP_1#2_2 of 1312_2" of FIG. 19 and FIG. 21 receives one or more of "modulation signal (group) 3101A_1 present at frequency 1, modulation signal (group) 3101A_2 present at frequency 2, modulation signal (group) 3101A_3 present at frequency 3, and modulation signal (group) 3101A_4 present at frequency 4" and demodulates the received signal. Note that TRP_1#2_2 of 1312_2 operates any of the "first antenna module or the antenna port corresponding to the first antenna module" and the "second antenna module or the antenna port corresponding to the second antenna module" to receive and demodulate the signal.

The "TRP_2#1_1 of 1321_1" of FIG. 19 and FIG. 21 receives one or more of "modulation signal (group) 3401A present at frequency A, modulation signal (group) 3401B present at frequency B, modulation signal (group) 3401C present at frequency C, and modulation signal (group) 3401D present at frequency D" and demodulates the received signal. Note that TRP_2#1_1 of 1321_1 operates any of the "first antenna module or the antenna port corresponding to the first antenna module" and the "second antenna module or the antenna port corresponding to the second antenna module" to receive and demodulate the signal.

The "TRP_2#1_2 of 1321_2" of FIG. 19 and FIG. 21 receives one or more of "modulation signal (group) 3401A present at frequency A, modulation signal (group) 3401B present at frequency B, modulation signal (group) 3401C present at frequency C, and modulation signal (group) 3401D present at frequency D" and demodulates the received signal. Note that TRP_2#1_2 of 1321_2 operates any of the "first antenna module or the antenna port corresponding to the first antenna module"

and the "second antenna module or the antenna port corresponding to the second antenna module" to receive and demodulate the signal.

The "TRP_2#2_1 of 1322_1" of FIG. 19 and FIG. 21 receives one or more of "modulation signal (group) 3401A present at frequency A, modulation signal (group) 3401B present at frequency B, modulation signal (group) 3401C present at frequency C, and modulation signal (group) 3401D present at frequency D" and demodulates the received signal. Note that TRP_2#2_1 of 1322_1 operates any of the "first antenna module or the antenna port corresponding to the first antenna module" and the "second antenna module or the antenna port corresponding to the second antenna module" to receive and demodulate the signal.

The "TRP_2#2_2 of 1322_2" of FIG. 19 and FIG. 21 receives one or more of "modulation signal (group) 3401A present at frequency A, modulation signal (group) 3401B present at frequency B, modulation signal (group) 3401C present at frequency C, and modulation signal (group) 3401D present at frequency D" and demodulates the received signal. Note that TRP_2#2_2 of 1322_2 operates any of the "first antenna module or the antenna port corresponding to the first antenna module" and the "second antenna module or the antenna port corresponding to the second antenna module" to receive and demodulate the signal.

Therefore, the TRP used to receive the modulation signal (group) is destined to each frequency.

The descriptions of the following are the same as those described in another embodiment: the "condition related to the precoding, condition related to the number of transmission signals, usage condition related to the antenna, and the like" of the terminal that operates the first antenna module and the "condition related to the precoding, condition related to the number of transmission signals, usage condition related to the antenna, and the like" of the terminal that operates the second antenna module. Further, the condition in a case of the reception operation of the TRP is as described in another embodiment.

As in Example 6-18, determining the modulation signal (group) to be received for each TRP makes it possible to obtain an effect of improving the reception quality of data. Further, since the multiple TRPs can be realized, an effect of improving the transmission quality of data and increasing the data transmission speed can be obtained.

Note that the TRP that does not receive the modulation signal (group) may be present. Further, although the example of the case where there are two TRP_1#1_k of 1311_k and two TRP_1#2_i of 1312_i has been described, the same can be implemented even in a case where there are one or more or two or more TRP_1#1_k of 1311_k and one or more TRP_1#2_i of 1312_i.

Further, although the example of the case where there are two TRP_2#1_k of 1321_k and two TRP_2#2_i of 1322_i has been described, the same can be implemented even in a case where there are one or more or two or more TRP_2#1_k of 1321_k and one or more TRP_2#2_i of 1322_i.

As described in Embodiment 1 and the like, the TRP and the terminal may include the antenna port corresponding to the "first antenna module v of 106A_1_v", and the TRP and the terminal may include the antenna port corresponding to the "second antenna module #w of 106A_2_w". The same can be implemented in this case as well.

The configuration method of the apparatus such as the base station, the TRP, and the terminal described in the present embodiment, and the communication method (e.g., the configuration of the antenna module, the number of the antenna modules, the configuration of the antenna port, the number of the antenna ports, the precoding method, the frame configuration, the number of the transmission signals, the number of the received signals, and the like) to be performed are considered as examples described in the present specification, but are not limited to these examples.

The terminal may use the transmission method using the antenna module described in the present embodiment, or the terminal may have the configuration of the apparatus described in the present embodiment.

(Supplementary Note 1)

It is needless to say that the embodiments described in the present specification may be implemented while combined with each other or combined with other contents.

In a case where "A and/or B" is described, it may be "A and B" or "A or B". The notation of " ... section" "...unit" and/or "a term with a suffix of -er or -or" in the above-described embodiment may be replaced with another notation such as " ... circuitry", " ... device", " ... unit", or " ... module".

Further, the embodiments and other contents are examples. For example, even though the "modulation scheme, error correction coding scheme (error correction code, code length, coding rate, and the like for use), control information, and the like" are illustrated as the examples, it is made possible to implement the embodiments with a similar configuration even when a "modulation scheme, error correction coding scheme (error correction code, code length, coding rate, and the like for use), control information, and the like" different from those in the examples are applied.

Regarding the modulation scheme, the embodiments and other contents described in the present specification can be implemented also by using modulation schemes other than the modulation schemes described in the present specification. For example, amplitude phase shift keying (APSK) (e.g., 16APSK, 64APSK, 128APSK, 256APSK, 1024APSK, 4096APSK), pulse amplitude modulation (PAM) (e.g., 4PAM, 8PAM, 16PAM, 64PAM, 128PAM, 256PAM, 1024PAM, 4096PAM), phase shift keying (PSK) (e.g., BPSK, QPSK, 8PSK, 16PSK, 64PSK, 128PSK, 256PSK, 1024PSK, 4096PSK), quadrature amplitude modulation (QAM) (e.g., 4QAM, 8QAM, 16QAM, 64QAM, 128QAM, 256QAM, 1024QAM, 4096QAM), or the like may be applied, or uniform mapping and non-uniform mapping may be applied for each of the modulation schemes. The number of signal points in in-phase (I)-quadrature (phase) (Q) is not limited to those in the examples above, and may be an integer equal to or greater than 3.

Further, a method for disposing 2, 4, 8, 16, 64, 128, 256, 1024, and the like signal points (however, the number of signal points is not limited to these examples) on the I-Q plane (modulation scheme having 2, 4, 8, 16, 64, 128, 256, 1024, and the like signal points) is not limited to the signal point disposition method for the modulation scheme illustrated in the present specification. Therefore, a function of outputting an in-phase component and a quadrature component based on a plurality of bits is a function of the mapping section, and then, matrix operation (pre-coding or the like) for performing MIMO transmission and phase change on the baseband signal are one of the effective functions of the present disclosure.

In the present specification, when "∀" and "∃" are present, "∀" represents a universal quantifier, and "∃" represents an existential quantifier.

In the present specification, when a complex plane is present, for example, a unit of phase such as an argument is "radian".

The use of the complex plane allows representation of complex numbers in polar form as a representation of the complex numbers using polar coordinates. Letting a point (a, b) on the complex plane correspond to a complex number z = a + jb (where both of "a" and "b" are real numbers and "j" is an imaginary unit), when this point is expressed as [r, θ] with the polar coordinates, a = r × cosθ and b = r × sinθ, and the following Equation hold true:

$$r = \sqrt{a^2 + b^2} \qquad \text{... (Equation 1).}$$

The character "r" is the absolute value of z (r = |z|) and θ is the argument. Then, z = a + jb is expressed as r × e$^{j\theta}$.

In the present specification, a configuration in which a reception apparatus of a "terminal, base station, access point, gateway, TRP (transmission (Tx)/reception (Rx) point) (transmitter (TX)/receiver (RX) point)" and an antenna are separate may be adopted. For example, the reception apparatus includes an interface for inputting, through a cable, a signal received by the antenna or a signal received by the antenna and subjected to frequency conversion, and the reception apparatus performs subsequent processing. Further, the data and information obtained by the reception apparatus are then converted into a video and sound, and displayed on a display (monitor), or output from a speaker in the case of sound. Further, the data and information obtained by the reception apparatus may be subjected to signal processing relevant to the video and sound (such signal processing does not have to be performed), and output from an RCA terminal (a video terminal and a sound terminal), universal serial bus (USB), high-definition multimedia interface (HDMI) (registered trademark), digital terminal, or the like provided in the reception apparatus.

In the present specification, it is considered that the transmission apparatus and/or the transmitter is provided in, for example, a broadcasting station, a base station, an access point (AP), a terminal, a mobile phone, a smartphone, a tablet, a laptop computer, a server, a computer, a personal computer, a television, a home electric appliance, an apparatus in a factory, a communication apparatus/broadcasting device such as an Internet of Things (IoT) device, a gNB (g Node B), an eNB (e Node B), a relay, a node, a vehicle (e.g., an electric vehicle), a bicycle (e.g., an electric bicycle, an electrically assisted bicycle), a motorcycle (e.g., an electric motorcycle), a ship, a satellite, an aircraft, a drone, a device capable of moving, a robot, or a TRP. Further, the terminal may be referred to as a user equipment (UE).

In the present specification, it is considered that the reception apparatus and/or the receiver is provided in a radio, a terminal, a personal computer, a mobile phone, a communication apparatus such as an access point, a base station, a smartphone, a tablet, a laptop computer, a server, a computer, a personal computer, a television, a home electric appliance, an apparatus in a factory, a communication apparatus/broadcasting device such as an IoT device, a gNB, an eNB, a relay, a node, a vehicle (e.g., an electric vehicle), a bicycle (e.g., an electric bicycle, an electrically assisted bicycle), a motorcycle, a ship, a satellite, an aircraft, a drone, a device capable of moving, a robot, a TRP, and the like. Further, the terminal may be referred to as user equipment (UE).

Further, it is also considered that the transmission apparatus and the reception apparatus in the present disclosure are apparatuses having a communication function, and the apparatuses are in a form in which any interface can be connected to an apparatus for executing an application such as a television, a radio, a personal computer, and a mobile phone.

Further, it is considered that the communication apparatus and the transmission/reception apparatus provided in the present specification are provided in, for example, a broadcasting station, a base station, an access point, a terminal, a mobile phone, a smartphone, a tablet, a laptop computer, a server, a computer, a personal computer, a television, a home electric appliance, an apparatus in a factory, a communication apparatus/broadcasting device such as an IoT device, a gNB, an eNB, a relay, a node, a vehicle (e.g., an electric vehicle), a bicycle (e.g., an electric bicycle, an electrically assisted bicycle), a motorcycle (e.g., an electric motorcycle), a ship, a satellite, an aircraft, a drone, a device capable of moving, a robot, or a TRP. Further, the terminal may be referred to as a user equipment (UE).

In the present embodiment, symbols other than the data symbol, for example, a reference signal (a preamble, a unique word, a postamble, a reference symbol, a pilot symbol, a pilot signal, or the like), a symbol for control information, a sector sweep, or the like may be disposed in the frame in any manner. Here, the reference signal and the symbol for control information and sector sweep are used as names, but any naming may be used, and the function itself is important. Note that the symbol including the control information may include information on a terminal as a destination (ID capable of identifying the terminal), a transmission method of the modulation signal, information on a modulation scheme, information on an error correction coding method (code length, encoding rate, and the like), information on a modulation and coding scheme (MCS), and the like.

It is considered that the reference signal exemplified by "demodulation reference signal (DMRS), phase tracking reference signal (PTRS), sounding reference signal (SRS), and the like" is, for example, a known symbol modulated by PSK modulation in a transceiver (or the receiver may know the symbol transmitted by the transmitter by obtaining synchronization), a non-zero power signal, a zero power signal, a known signal in the transceiver, and the like, and the receiver performs "frequency synchronization", "time synchronization", (channel estimation of) each modulation signal (estimation of channel state information (CSI))", "signal detection", "reception state estimation", "transmission state estimation", "phase tracking with phase noise or the like", and "estimation of a situation such as a channel for performing transmission beamforming and/or reception beamforming".

Further, the symbol for control information is a symbol for transmitting information (e.g., a modulation scheme, an error correction coding method, and a coding rate of the error correction coding method used for communication, setting information in an upper layer, a modulation and coding scheme (MCS), a frame configuration, channel information, information on a frequency band used, information on the number of channels used, and the like) that needs to be transmitted to a communication counterpart in order to implement communication other than data (such as an application).

It may be necessary to notify the "transmission apparatus and/or reception apparatus" of a transmission method (MIMO, Single-Input Single-Output (SISO), Multiple-Input Single-Output (MISO), Single-Input Multiple-Output (SIMO), space-time block code, interleaving method, MCS, and the like), a modulation scheme, and an error correction coding method. Depending on the embodiment, this description may be omitted.

In the present specification, terms such as "precoding" and "pre-coding weight" may be used, but the name itself may be any name, and in the present disclosure, the signal processing itself is important.

In any of the transmission antenna of the transmission apparatus or the reception antenna of the reception apparatus, one antenna described in the drawings may be configured by one "antenna, antenna element" or a plurality of "antennas, antenna elements".

Further, in the description of the embodiment and the like, the transmission antenna and the reception antenna may be separately described, but a configuration of a "transmission/reception antenna" in which the transmission antenna and the reception antenna are shared may be adopted.

Then, the transmission antenna, the reception antenna, and the transmission/reception antenna may be referred to as, for example, an antenna port and an antenna module. The names of the transmission antenna, reception antenna, and the transmission/reception antenna are not limited to this, and a method for constituting the transmission antenna of one or more or a plurality of antennas, antenna elements is considered. Further, a method for constituting the reception antenna of one or more or a plurality of antennas, antenna elements is considered. Then, a method for constituting the transmission/reception antenna of one or more or a plurality of antennas, antenna elements is considered. Further, the apparatus may be configured for each transmission antenna, reception antenna, or transmission/reception antenna may be configured for each apparatus may be configured for each transmission/reception antenna. That is, it may be considered as Multiple TRP (TX (transmitter)/RX (receiver) point) (TRP (Tx (transmission)/Rx (reception) point)).

The antenna port may be a logical antenna (antenna group) composed of one or more physical antennas. That is, the antenna port does not necessarily refer to one physical antenna, but may refer to an array antenna or the like composed of a plurality of antennas. For example, the number of physical antennas composing the antenna port is not specified, but the number of physical antennas may be specified as the minimum unit in which a terminal station is capable of transmitting a reference signal. Further, the antenna port may also be specified as a unit or a minimum unit for multiplication by a precoding vector or a weight of a precoding matrix.

Although the embodiment has been described using the term "antenna module", the antenna module may be referred to by another term (e.g., an antenna, an antenna group, an antenna unit, an antenna array, and the like. However, these examples are not limited thereto, and the same applies to the case where the examples are implemented.

There are a plurality of methods of generating a modulation signal by a single-carrier scheme in the present specification, and the present embodiments can be implemented by using any of the schemes. For example, examples of the single-carrier scheme include "Discrete Fourier Transform (DFT)-Spread Orthogonal Frequency Division Multiplexing (OFDM)" (DFT-S OFDM), "Trajectory Constrained DFT-Spread OFDM," "Constrained DFT-Spread OFDM" (Constrained DFT-S OFDM), "OFDM based Single Carrier (SC)," "Single Carrier (SC)-Frequency Division Multiple Access (FDMA)," "Guard Interval DFT-Spread OFDM," a time-domain implementation single carrier scheme (e.g., Single Carrier (SC)-QAM), and the like. It has been described that the waveform of the modulation signal transmitted by the communication apparatus in the present specification may be any of the single-carrier system or the multi-carrier system such as OFDM. In a case where the multi-carrier system such as OFDM is used, the symbol is present on frequency Axis in the frame.

In the present specification, the embodiments have been described using OFDM as an example of multi-carrier schemes, but the embodiments in the present specification can be similarly implemented using another multi-carrier scheme.

By way of example, multi-carrier transmission may be implemented by assigning a "single-carrier scheme using a single frequency band" and assigning a "single-carrier scheme using one or more frequency bands" to frequency Band described in the present specification.

As another example, multi-carrier transmission may be implemented by assigning one or more carriers or two or more carriers to frequency Band described in the present specification. Note that the multi-carrier transmission scheme is not limited to the above examples.

In the present specification, the part in which the configuration and the operation of the base station are described may be considered as "configuration and operation of terminal, the AP, and the relay". Similarly, the part in which the configuration and the operation of terminal are described may be considered as "configuration and operation of the base station, the AP, and the relay".

In the present specification, a server may provide an application related to processing relevant to the reception apparatus and the receiver, and the terminal may implement the functions of the reception apparatus described in the present specification by installing this application. Note that the application may be provided to the terminal by connection of a communication apparatus including the transmission apparatus described in the present specification to the server via a network, or the application may be provided to the terminal by connection of a communication apparatus having another transmission function to the server via the network.

Likewise, in the present specification, a server may provide an application related to processing relevant to the transmission apparatus and the transmitter, and the communication apparatus may implement the functions of the transmission apparatus described in the present specification by installing this application. Note that a method can be envisaged in which this communication apparatus is provided with the application by connection of another communication apparatus to the server via the network.

Note that the present disclosure is not limited to the embodiments and can be implemented with various modifications. For example, the embodiments are performed by a communication apparatus in the description, but the present invention is not limited to this and the communication methods can be realized by software.

Further, a program for performing the above communication methods may be stored in read only memory (ROM) in advance, for example, and the program may be executed by a central processor unit (CPU).

Further, a program for performing the communication method may be stored in a computer-readable storage medium, and the program stored in the storage medium may be recorded in a random access memory (RAM) of the computer so that the computer operates according to the program.

Each configuration in each of the embodiments described above can be typically realized by a large scale integration (LSI), which is an integrated circuit. The LSI may be individually formed as chips, or one chip may be formed so as to include a part or all of the configurations in each embodiment. The LSI here may be referred to as an integrated circuit (IC), a system LSI, a super LSI, or an ultra LSI depending on a difference in the degree of integration. Further, the technique of implementing an integrated circuit is not limited to the LSI and may be realized by using a dedicated circuit or a general-purpose processor. A field programmable gate array (FPGA) that can be programmed after the manufacture of the LSI or a reconfigurable processor in which the connections and the settings of circuit cells disposed inside the LSI can be reconfigured may be used.

Note that at least one of the FPGA and the CPU may be configured to download all or some of software required for implementing the communication methods described in the present disclosure by radio communication or wired communication. Further, at least one of the FPGA and the CPU may be configured to download all or some of software for updating by radio communication or wired communication. Then, the downloaded software may be stored in storage, and at least one of the FPGA and the CPU may be operated based on the stored software to execute the digital signal processing described in the present disclosure.

The device including at least one of the FPGA and the CPU may be connected to a communication modem by radio or wire, and the communication methods described in the present disclosure may be implemented by the device and the communication modem.

For example, the communication apparatus such as the base station, the AP, and the terminal described in the present specification may include at least one of an FPGA or a CPU, and the communication apparatus may include an interface for obtaining software for operating at least one of the FPGA or the CPU from the outside. Further, the communication apparatus may include storage for storing the externally-obtained software, and the FPGA and/or the CPU may be operated based on the stored software to implement the signal processing described in the present disclosure.

If future integrated circuit technology replaces LSIs as a result of the advancement of semiconductor technology or other derivative technology, the functional blocks could be integrated using the future integrated circuit technology. Biotechnology can also be applied.

The present disclosure can be widely applied to a radio system that transmits different modulation signals from a plurality of antennas. Further, it can be applied to a case where MIMO transmission is performed in a wired communication system having a plurality of transmission locations (e.g., a power line communication (PLC) system, an optical communication system, or a digital subscriber line (DSL) system).

The "data", the "data symbol", the "data frame", the "control information", and the "control information symbol" may be, for example, a physical downlink shared channel (PDSCH) or a physical uplink shared channel (PUSCH.

In the present application, the base station and the terminal have been described as forming the transmission beam, but all the transmission beams may not have the same polarization. For example, in a case where the base station and terminal can generate the transmission beam #1, the transmission beam #2, the transmission beam #3, ..., the transmission beam #1 may be set to the first polarization, the transmission beam #2 may be set to the second polarization different from the first polarization and so forth.

Further, the base station and the terminal have been described as forming the reception beam, but all the reception beams may not have the same polarization. For example, in a case where the base station and terminal can generate reception beam #1, reception beam #2, reception beam #3, ..., the reception beam #1 may be set to the first polarization, reception beam #2 may be set to the second polarization different from the first polarization and so forth.

In the present application, the base station and the terminal have been described as forming the transmission beam, but the polarization of the transmission beam may be changed over time. For example, the first polarization may be used for the transmission beam #1, and the polarization may be changed to the second polarization different from the first polarization in the middle.

Further, the base station and the terminal have been described as forming the reception beam, but the polarization of the reception beam may be changed over time. For example, the first polarization may be used for the reception beam #1, and the polarization may be changed to the second polarization different from the first polarization in the middle.

In one embodiment of the present disclosure, the unit of time Resource is not limited to one or a combination of a slot and a symbol, and may be, for example, a time resource unit such as a frame, a super frame, a subframe, a slot, a time slot, a subslot, a mini-slot, or a symbol, an orthogonal frequency division multiplexing (OFDM) symbol, or a single carrier-frequency division multiplexing access (SC-FDMA) symbol, or may be another time resource unit.

Note that, in the present specification, the part describing the configuration and the operation of the base station may be considered as the configuration and the operation of the terminal, the AP, and the relay. Similarly, the part describing the configuration and the operation of the terminal may be considered as the configuration and the operation of the base station, the AP, and the relay.

In one embodiment of the present disclosure, the base station may be a transmission reception point (TRP), a cluster head, an access point, a remote radio head (RRH), an eNodeB (eNB), a gNodeB (gNB), a base station (BS), a base transceiver station (BTS), a parent machine, a gateway, or the like. Further, in the sidelink communication, the terminal may take on the role of the base station. Further, a relay apparatus that relays the communication between the upper node and the terminal may be used instead of the base station. Further, it may be a roadside device.

The embodiment of the present disclosure may be applied to, for example, any of an uplink, a downlink, or a sidelink. For example, one embodiment of the present disclosure may be applied to a physical uplink shared channel (PUSCH), a physical uplink control channel (PUCCH), a physical random access channel (PRACH), a physical downlink shared channel (PDSCH), a physical downlink control channel (PDCCH), a physical broadcast channel (PBCH), a physical sidelink shared channel (PSSCH), a physical sidelink control channel (PSCCH), or a physical sidelink broadcast channel (PSBCH) of uplink, the downlink, or the sidelink.

The communication apparatus is not limited to a portable or movable apparatus, and may include any type of apparatus, device, or system that is not portable or is fixed, for example, a smart home device (home electric appliance, lighting equipment, smart meter or measuring equipment, control panel, or the like), a vending machine, or any "things" that can be present on other Internet of Things (IoT) networks.

In a case where the communication apparatus is an IoT device, for example, at least one of the following features may be included:

· circuit for backscatter communication is included
· transmission bandwidth to the IoT reader is equal to or less than a threshold value (e.g., several subcarriers)
· reception bandwidth from the IoT reader is equal to or less than a threshold value (e.g., 12 resource blocks)
· transmittable and receivable data size (or transport block size) is equal to or less than a threshold value (e.g., 1000 bits)
· achievable communication speed is equal to or less than a threshold value (e.g., several kbps)
· power capacity of energy storage (battery or capacitor) is equal to or less than a threshold value, or does not have energy storage
· power consumption is equal to or less than a threshold value (e.g., 1 micro W or several hundred micro W)
· circuit for WPT reception is included
· modulation or demodulation using a specific modulation scheme (e.g., on-off keying, frequency shift keying, or phase shift keying) is performed
· encoding or decoding using a specific line coding method (e.g., Manchester, FM0, Miller, or phase interval encoding) is performed or encoding or decoding using line coding is not performed, and
· encoding or decoding using a specific forward error correction method (e.g., convolutional coding or repetition coding) is performed or encoding or decoding using forward error correction is not performed.

The communication includes data communication via a cellular system, a wireless LAN system, a communication satellite system, and the like, and data communication via a combination of these systems.

Further, the communication apparatus also includes a device such as a controller or a sensor that is connected or coupled to a communication device that executes the communication function of the communication apparatus described in the present disclosure. For example, a controller or a sensor that generates a control signal or a data signal used by a communication apparatus that executes the communication function of the communication apparatus is included.

The operation described in the present specification can be performed using any frequency, and for example, an ultra wide band (UWB) system may be used.

The disclosure contents of the specification, drawings, and summary of the Japanese patent application filed on September 15, 2023, Japanese Patent Application No. 2023-150203, are incorporated in the present application by reference.

Industrial Applicability

The present disclosure can be widely applied to a radio system that transmits a modulation signal from one or more antennas, and is suitable for application to, for example, a communication system using a single carrier or a communication system using a multi-carrier transmission method such as OFDM. Further, it can be applied to a wired communication system (e.g., a power line communication (PLC) system, an optical communication system, an optical power transmission system, or a digital subscriber line (DSL) system).

Reference Signs List

101A, 101a, 201, 1401A Transmission data
102A, 102a, 1402A Transmission processor
103A, 1403A Modulation signal
104A Precoder
105A, 1405A Signal group after precoding
106A_1, 2506A First antenna module
106A_2 Second antenna module
111A, 1411A Radio processor
112A, 1412A Transmission signal group
130B Signal generator
131A, 156C_1, 1431AAntenna
131B_1, 131B_2 Signal group
132A, 1432A Received signal
132B_1 First precoder
132B_2 Second precoder
133A, 1433A Reception processor
133B, 1433B Signal group after precoding
134A, 224, 1434A, 1531A Reception data
135A, 1435A Reception status information
151C Input signal
152C, 2590C Distributor
153C, 1540, 1612, 1622, 2112, 2122 Signal
154C Multiplier
155C Signal after coefficient multiplication
190A, 1490A Control information
191A, 1491A, 1541A Controller
192A, 150C, 290, 1383, 1492A, 1542A Control signal
202 Transmitter
203 Transmission signal group
204, 221, 1406A Antenna group
223 Receiver
222, 1512A, 1522A Received signal group
301 Base station
302 Terminal
501A, 501C First selector
502A, 502C Second selector
590A, 590C, 590E, 590G antenna port
511A, 531E, 1431B signal group
521C, 541G signal
530E, 530G selector
601, 602, 1311, 1312, 1321, 1322 TRP
603, 1303, 1451, 1951 apparatus
1380_1 first TRP set transmission processor
1381_1 first TRP set transmission data
1382_1 first TRP set modulation signal (group)
1380_2 second TRP set transmission processor
1381_2 second TRP set transmission data
1382_2 second TRP set modulation signal (group)
1511A, 1521A antenna module group
1513A, 1523A, 1530A signal processor
1514A, 1524A received signal group after signal processing
1611, 1621, 2111, 2121, 1952_3 data

2591C distribution signal (group)
2592 antenna
2606A antenna port for antenna module

## Claims

1. A radio communication system, comprising:

   a first radio communication apparatus; and
   a second radio communication apparatus, wherein,
   the first radio communication apparatus includes:

   a first antenna part, which, in operation, performs a first operation that transmits A transmission signals ("A" being an integer of 2 or greater) generated from an N layer or N layers ("N" being an integer of 1 or greater) generated from data; and
   a first controller, which, in operation, controls an operation of the first antenna part, and

   the second radio communication apparatus includes:

   a second antenna part, which, in operation, performs a second operation that transmits a B transmission signal or B transmission signals ("B" being an integer of 1 or greater and less than "A") generated from the N layer or N layers including the data or a part of the data, or from an M layer or M layers ("M" being an integer of 1 or greater and "N" or less) being a part of the N layer or N layers; and
   a second controller, which, in operation, controls an operation of the second antenna part.

2. The radio communication system according to claim 1, wherein, 4 is set for A and 2 is set for B.

3. The radio communication system according to claim 1, wherein, N is equal to 2.

4. The radio communication system according to claim 1, wherein the first radio communication apparatus includes a third antenna part, which in operation, performs the second operation.

5. The radio communication system according to claim 1, wherein,

   the first radio communication apparatus includes a plurality of the first antenna parts, and

the first controller determines that at least one of the plurality of first antenna parts performs the first operation.

6. The radio communication system according to claim 5, wherein, the first controller determines that at least one of the plurality of first antenna parts performs the second operation.

7. The radio communication system according to claim 6, wherein, the second operation is performed by a part of the at least one of the plurality of first antenna parts that performs the first operation.

8. The radio communication system according to claim 1, wherein,

the first antenna part includes a plurality of antenna ports, and
the controller determines, from among the plurality of antenna ports, an antenna port that performs the first operation, and determines, from among the plurality of antenna ports, an antenna port that performs the second operation.

9. The radio communication system according to claim 1, wherein,

the first antenna part includes a plurality of antenna ports,
the plurality of antenna ports are distinguished into a first group and a second group, and
the first controller determines, from the first group, an antenna port that performs the first operation, and determines, from the second group, an antenna port that performs the second operation.

10. A radio communication apparatus, comprising:

a first antenna part, which, in operation, performs a first operation that transmits A transmission signals ("A" being an integer of 2 or greater) generated from an N layer or N layers ("N" being an integer of 1 or greater) generated from data; and
a second antenna part, which, in operation, performs a second operation that transmits a B transmission signal or B transmission signals ("B" being an integer of 1 or greater and less than "A") generated from the N layer or N layers including the data or a part of the data, or from an M layer or M layers ("M" being an integer of 1 or greater and "N "or less) being a part of the N layer or N layers; and
a controller, which, in operation, controls an operation of the first antenna part and an operation of the second antenna part.

11. A communication method, comprising:

controlling a first antenna part by a first radio communication apparatus that includes the first antenna part and performing, by the first radio communication apparatus, a first operation that transmits A transmission signals ("A" being an integer of 2 or greater) generated from an N layer or N layers ("N" being an integer of 1 or greater) generated from data; and
controlling a second antenna part by a second radio communication apparatus that includes the second antenna part and performing, by the second radio communication apparatus, a second operation that transmits a B transmission signal or B transmission signals ("B" being an integer of 1 or greater and less than "A") generated from the N layer or N layers including the data or a part of the data, or from an M layer or M layers ("M" being an integer of 1 or greater and "N "or less) being a part of the N layer or N layers.

FIG. 1A1

101a

102a

TRANSMISSION PROCESSOR

103A_1

103A_2

⋮

103A_K

192A

FIG. 1A2

FIG. 1B

122

EP 4 779 883 A1

FIG. 1C1

156C_1

155C_1

154C_1

MULTIPLIER

153C_1

150C

FIG. 1C2

FIG. 2

EP 4 779 883 A1

302_1

TERMINAL #1

302_2

TERMINAL #2

302_3

TERMINAL #3

COMMUNICATION

COMMUNICATION

COMMUNICATION

301_1

BASE STATION #1

FIG. 3

FIG. 4

FIG. 5A

128

EP 4 779 883 A1

TRANSMISSION SIGNAL GROUP 1 OF 1 of 112A_1_1 $\longrightarrow$ TRANSMISSION USING ANTENNA PORT 30

TRANSMISSION SIGNAL GROUP 2 OF 1 of 112A_1_2 $\longrightarrow$ TRANSMISSION USING ANTENNA PORT 4

---

TRANSMISSION SIGNAL GROUP 1 OF 1 of 112A_2_1 $\longrightarrow$ TRANSMISSION USING ANTENNA PORT 62

TRANSMISSION SIGNAL GROUP 2 OF 1 of 112A_2_2 $\longrightarrow$ TRANSMISSION USING ANTENNA PORT 53

TRANSMISSION SIGNAL GROUP 3 OF 1 of 112A_2_3 $\longrightarrow$ TRANSMISSION USING ANTENNA PORT 47

TRANSMISSION SIGNAL GROUP 4 OF 1 of 112A_2_4 $\longrightarrow$ TRANSMISSION USING ANTENNA PORT 59

FIG. 5B1

TRANSMISSION SIGNAL GROUP 1 OF 1 of 112A_1_1 $\longrightarrow$ TRANSMISSION USING ANTENNA PORT 29

TRANSMISSION SIGNAL GROUP 1 OF 1 of 112A_2_1 $\longrightarrow$ TRANSMISSION USING ANTENNA PORT 47

TRANSMISSION SIGNAL GROUP 2 OF 1 of 112A_2_2 $\longrightarrow$ TRANSMISSION USING ANTENNA PORT 61

FIG. 5B2

EP 4 779 883 A1

TRANSMISSION SIGNAL GROUP 1 OF 1 of 112A_1_1 $\longrightarrow$ TRANSMISSION USING ANTENNA PORT 7

TRANSMISSION SIGNAL GROUP 2 OF 1 of 112A_1_2 $\longrightarrow$ TRANSMISSION USING ANTENNA PORT 9

TRANSMISSION SIGNAL GROUP 1 OF 1 of 112A_2_1 $\longrightarrow$ TRANSMISSION USING ANTENNA PORT 60

FIG. 5B3

FIG. 5C

EP 4 779 883 A1

TRANSMISSION SIGNAL GROUP 1 OF 1 of 112A_1_1 ⟶ TRANSMISSION USING ANTENNA PORT 30

⟶ TRANSMISSION USING ANTENNA PORT 31

⟶ TRANSMISSION USING ANTENNA PORT 32

⟶ TRANSMISSION USING ANTENNA PORT 33

TRANSMISSION SIGNAL GROUP 2 OF 1 of 112A_1_2 ⟶ TRANSMISSION USING ANTENNA PORT 40

⟶ TRANSMISSION USING ANTENNA PORT 3

⟶ TRANSMISSION USING ANTENNA PORT 60

⟶ TRANSMISSION USING ANTENNA PORT 157

TRANSMISSION SIGNAL GROUP 1 OF 1 of 112A_2_1 ⟶ TRANSMISSION USING ANTENNA PORT 256

⟶ TRANSMISSION USING ANTENNA PORT 500

TRANSMISSION SIGNAL GROUP 2 OF 1 of 112A_2_2 ⟶ TRANSMISSION USING ANTENNA PORT 298

⟶ TRANSMISSION USING ANTENNA PORT 312

FIG. 5D1

TRANSMISSION SIGNAL GROUP 1 OF 1 of 112A_1_1 $\longrightarrow$ TRANSMISSION USING ANTENNA PORT 5

$\longrightarrow$ TRANSMISSION USING ANTENNA PORT 7

$\longrightarrow$ TRANSMISSION USING ANTENNA PORT 10

$\longrightarrow$ TRANSMISSION USING ANTENNA PORT 14

$\longrightarrow$ TRANSMISSION USING ANTENNA PORT 20

$\longrightarrow$ TRANSMISSION USING ANTENNA PORT 25

$\longrightarrow$ TRANSMISSION USING ANTENNA PORT 41

$\longrightarrow$ TRANSMISSION USING ANTENNA PORT 87

TRANSMISSION SIGNAL GROUP 2 OF 1 of 112A_1_2 $\longrightarrow$ TRANSMISSION USING ANTENNA PORT 128

$\longrightarrow$ TRANSMISSION USING ANTENNA PORT 140

$\longrightarrow$ TRANSMISSION USING ANTENNA PORT 179

$\longrightarrow$ TRANSMISSION USING ANTENNA PORT 216

TRANSMISSION SIGNAL GROUP 1 OF 1 of 112A_2_1 $\longrightarrow$ TRANSMISSION USING ANTENNA PORT 258

$\longrightarrow$ TRANSMISSION USING ANTENNA PORT 302

TRANSMISSION SIGNAL GROUP 2 OF 1 of 112A_2_2 $\longrightarrow$ TRANSMISSION USING ANTENNA PORT 457

FIG. 5D2

TRANSMISSION SIGNAL GROUP 1 OF 1 of 112A_1_1 ⟶ TRANSMISSION USING ANTENNA PORT 30

⟶ TRANSMISSION USING ANTENNA PORT 68

⟶ TRANSMISSION USING ANTENNA PORT 111

⟶ TRANSMISSION USING ANTENNA PORT 239

TRANSMISSION SIGNAL GROUP 1 OF 1 of 112A_2_1 ⟶ TRANSMISSION USING ANTENNA PORT 278

⟶ TRANSMISSION USING ANTENNA PORT 279

TRANSMISSION SIGNAL GROUP 2 OF 1 of 112A_2_2 ⟶ TRANSMISSION USING ANTENNA PORT 356

⟶ TRANSMISSION USING ANTENNA PORT 497

FIG. 5D3

TRANSMISSION SIGNAL GROUP 1 OF 1 of 112A_1_1 $\longrightarrow$ TRANSMISSION USING ANTENNA PORT 2

$\longrightarrow$ TRANSMISSION USING ANTENNA PORT 3

$\longrightarrow$ TRANSMISSION USING ANTENNA PORT 4

$\longrightarrow$ TRANSMISSION USING ANTENNA PORT 5

TRANSMISSION SIGNAL GROUP 2 OF 1 of 112A_1_2 $\longrightarrow$ TRANSMISSION USING ANTENNA PORT 123

$\longrightarrow$ TRANSMISSION USING ANTENNA PORT 124

$\longrightarrow$ TRANSMISSION USING ANTENNA PORT 125

$\longrightarrow$ TRANSMISSION USING ANTENNA PORT 126

TRANSMISSION SIGNAL GROUP 1 OF 1 of 112A_2_1 $\longrightarrow$ TRANSMISSION USING ANTENNA PORT 478

$\longrightarrow$ TRANSMISSION USING ANTENNA PORT 501

FIG. 5D4

FIG. 5E

EP 4 779 883 A1

TRANSMISSION SIGNAL GROUP 1 OF 1 of 112A_1_1 ⟶ TRANSMISSION USING ANTENNA PORT 63

TRANSMISSION SIGNAL GROUP 2 OF 1 of 112A_1_2 ⟶ TRANSMISSION USING ANTENNA PORT 4

TRANSMISSION SIGNAL GROUP 1 OF 1 of 112A_2_1 ⟶ TRANSMISSION USING ANTENNA PORT 3

TRANSMISSION SIGNAL GROUP 2 OF 1 of 112A_2_2 ⟶ TRANSMISSION USING ANTENNA PORT 53

TRANSMISSION SIGNAL GROUP 3 OF 1 of 112A_2_3 ⟶ TRANSMISSION USING ANTENNA PORT 23

TRANSMISSION SIGNAL GROUP 4 OF 1 of 112A_2_4 ⟶ TRANSMISSION USING ANTENNA PORT 59

FIG. 5F1

TRANSMISSION SIGNAL GROUP 1 OF 1 of 112A_1_1 $\longrightarrow$ TRANSMISSION USING ANTENNA PORT 46

TRANSMISSION SIGNAL GROUP 1 OF 1 of 112A_2_1 $\longrightarrow$ TRANSMISSION USING ANTENNA PORT 0

TRANSMISSION SIGNAL GROUP 2 OF 1 of 112A_2_2 $\longrightarrow$ TRANSMISSION USING ANTENNA PORT 61

FIG. 5F2

EP 4 779 883 A1

TRANSMISSION SIGNAL GROUP 1 OF 1 of 112A_1_1 $\longrightarrow$ TRANSMISSION USING ANTENNA PORT 37

TRANSMISSION SIGNAL GROUP 2 OF 1 of 112A_1_2 $\longrightarrow$ TRANSMISSION USING ANTENNA PORT 9

TRANSMISSION SIGNAL GROUP 1 OF 1 of 112A_2_1 $\longrightarrow$ TRANSMISSION USING ANTENNA PORT 60

FIG. 5F3

FIG. 5G

TRANSMISSION SIGNAL GROUP 1 OF 1 of 112A_1_1 ⟶ TRANSMISSION USING ANTENNA PORT 30

⟶ TRANSMISSION USING ANTENNA PORT 510

⟶ TRANSMISSION USING ANTENNA PORT 259

⟶ TRANSMISSION USING ANTENNA PORT 9

TRANSMISSION SIGNAL GROUP 2 OF 1 of 112A_1_2 ⟶ TRANSMISSION USING ANTENNA PORT 92

⟶ TRANSMISSION USING ANTENNA PORT 360

⟶ TRANSMISSION USING ANTENNA PORT 503

⟶ TRANSMISSION USING ANTENNA PORT 157

TRANSMISSION SIGNAL GROUP 1 OF 1 of 112A_2_1 ⟶ TRANSMISSION USING ANTENNA PORT 4

⟶ TRANSMISSION USING ANTENNA PORT 500

TRANSMISSION SIGNAL GROUP 2 OF 1 of 112A_2_2 ⟶ TRANSMISSION USING ANTENNA PORT 16

⟶ TRANSMISSION USING ANTENNA PORT 312

FIG. 5H1

TRANSMISSION SIGNAL GROUP 1 OF 1 of 112A_1_1 → TRANSMISSION USING ANTENNA PORT 5

→ TRANSMISSION USING ANTENNA PORT 301

→ TRANSMISSION USING ANTENNA PORT 409

→ TRANSMISSION USING ANTENNA PORT 14

→ TRANSMISSION USING ANTENNA PORT 20

→ TRANSMISSION USING ANTENNA PORT 367

→ TRANSMISSION USING ANTENNA PORT 41

→ TRANSMISSION USING ANTENNA PORT 87

TRANSMISSION SIGNAL GROUP 2 OF 1 of 112A_1_2 → TRANSMISSION USING ANTENNA PORT 128

→ TRANSMISSION USING ANTENNA PORT 140

→ TRANSMISSION USING ANTENNA PORT 494

→ TRANSMISSION USING ANTENNA PORT 216

TRANSMISSION SIGNAL GROUP 1 OF 1 of 112A_2_1 → TRANSMISSION USING ANTENNA PORT 258

→ TRANSMISSION USING ANTENNA PORT 302

TRANSMISSION SIGNAL GROUP 2 OF 1 of 112A_2_2 → TRANSMISSION USING ANTENNA PORT 39

FIG. 5H2

TRANSMISSION SIGNAL GROUP 1 OF 1 of 112A_1_1 $\longrightarrow$ TRANSMISSION USING ANTENNA PORT 30

$\longrightarrow$ TRANSMISSION USING ANTENNA PORT 68

$\longrightarrow$ TRANSMISSION USING ANTENNA PORT 470

$\longrightarrow$ TRANSMISSION USING ANTENNA PORT 239

TRANSMISSION SIGNAL GROUP 1 OF 1 of 112A_2_1 $\longrightarrow$ TRANSMISSION USING ANTENNA PORT 278

$\longrightarrow$ TRANSMISSION USING ANTENNA PORT 1

TRANSMISSION SIGNAL GROUP 2 OF 1 of 112A_2_2 $\longrightarrow$ TRANSMISSION USING ANTENNA PORT 356

$\longrightarrow$ TRANSMISSION USING ANTENNA PORT 497

FIG. 5H3

TRANSMISSION SIGNAL GROUP 1 OF 1 of 112A_1_1 ⟶ TRANSMISSION USING ANTENNA PORT 2

⟶ TRANSMISSION USING ANTENNA PORT 3

⟶ TRANSMISSION USING ANTENNA PORT 298

⟶ TRANSMISSION USING ANTENNA PORT 5

TRANSMISSION SIGNAL GROUP 2 OF 1 of 112A_1_2 ⟶ TRANSMISSION USING ANTENNA PORT 25

⟶ TRANSMISSION USING ANTENNA PORT 9

⟶ TRANSMISSION USING ANTENNA PORT 125

⟶ TRANSMISSION USING ANTENNA PORT 473

TRANSMISSION SIGNAL GROUP 1 OF 1 of 112A_2_1 ⟶ TRANSMISSION USING ANTENNA PORT 22

⟶ TRANSMISSION USING ANTENNA PORT 23

FIG. 5H4

EP 4 779 883 A1

601_1

TRP
#1__1

610_1

TERMINAL
#1

602_1

TRP
#2__1

602_Y

TRP
#2__Y

FIG. 6A1

601_1

TRP
#1__1

610_1

TERMINAL
#1

602_1

TRP
#2__1

602_Y

TRP
#2__Y

FIG. 6A2

FIG. 6A3

FIG. 6B1

FIG. 6B2

610_1

TERMINAL #1

601_1

TRP #1_1

601_X

TRP #1_X

602_1

TRP #2_1

602_Y

TRP #2_Y

FIG. 6B3

FIG. 7A

FIG. 7B

EP 4 779 883 A1

FIG. 8A

FIG. 8B

FIG. 9A

FIG. 9B

FIG. 10A

FIG. 10B

FIG. 11A

EP 4 779 883 A1

FIG. 11B

EP 4 779 883 A1

FIG. 12A

FIG. 12B

163

EP 4 779 883 A1

FIG. 13A1

EP 4 779 883 A1

FIG. 13A2

TRP_1 #1_1 · 1311_1

TRP_1 #2_1 · 1312_1

TRP_1 #2_Y1 · 1312_Y1

FIRST "MODULATION SIGNAL" SET

FIRST TRP SET

TERMINAL #1 · 1390_1

SECOND "MODULATION SIGNAL" SET

TRP_2 #1_1 · 1321_1

TRP_2 #2_1 · 1322_1

TRP_2 #2_Y2 · 1322_Y2

SECOND TRP SET

EP 4 779 883 A1

FIG. 13A3

First "modulation signal" set, Second "modulation signal" set

FIRST TRP SET, SECOND TRP SET

TRP_1 #1_1 (1311_1), TRP_1 #2_1 (1312_1), TRP_1 #2_Y1 (1312_Y1)

TRP_2 #1_1 (1321_1), TRP_2 #2_1 (1322_1), TRP_2 #2_Y2 (1322_Y2)

TERMINAL #1 (1390_1)

APPARATUS (1303)

EP 4 779 883 A1

EP 4 779 883 A1

FIG. 13B

EP 4 779 883 A1

FREQUENCY

FREQUENCY CC1

FIRST TRP SET MODULATION SIGNAL (GROUP) 1382_1
AND/OR
SECOND TRP SET MODULATION SIGNAL (GROUP) 1382_2

TIME

TIME C1

FIG. 13C1

FREQUENCY

FREQUENCY CC1

┌─────────────────────────────────────────────────────┐
│                                                     │
│         FIRST TRP SET MODULATION SIGNAL (GROUP) 1382_1 │
│                       AND/OR                        │
│       SECOND TRP SET MODULATION SIGNAL (GROUP) 1382_2 │
│                                                     │
└─────────────────────────────────────────────────────┘

TIME

TIME C1

FIG. 13C2

EP 4 779 883 A1

FREQUENCY

FREQUENCY CC1

FIRST TRP SET MODULATION SIGNAL (GROUP) 1382_1
AND/OR
SECOND TRP SET MODULATION SIGNAL (GROUP) 1382_2

TIME

TIME C1

FIG. 13C3

EP 4 779 883 A1

FREQUENCY

FREQUENCY CC1

FIRST TRP SET MODULATION SIGNAL (GROUP) 1382_1
AND/OR
SECOND TRP SET MODULATION SIGNAL (GROUP) 1382_2

TIME

TIME C1

FIG. 13C4

EP 4 779 883 A1

FREQUENCY

FREQUENCY DD1

FIRST TRP SET
MODULATION SIGNAL (GROUP) 1382_1

SECOND TRP SET
MODULATION SIGNAL (GROUP) 1382_2

TIME

TIME D1

TIME D2

FIG. 13D1

FIG. 13D2

FREQUENCY

FREQUENCY EE2

SECOND TRP SET MODULATION SIGNAL (GROUP) 1382_2

FREQUENCY EE1

FIRST TRP SET MODULATION SIGNAL (GROUP) 1382_1

TIME

TIME E1

FIG. 13E1

FIG. 13E2

FREQUENCY

FREQUENCY EE2

FREQUENCY EE1

SECOND TRP SET MODULATION SIGNAL (GROUP) 1382_2

FIRST TRP SET MODULATION SIGNAL (GROUP) 1382_1

TIME

TIME E1

EP 4 779 883 A1

EP 4 779 883 A1

FREQUENCY

FREQUENCY EE2

SECOND TRP SET
MODULATION SIGNAL (GROUP) 1382_2

FREQUENCY EE1

FIRST TRP SET
MODULATION SIGNAL (GROUP) 1382_1

TIME

TIME E1

TIME E2

FIG. 13E3

FIG. 13F1

EP 4 779 883 A1

FIG. 13F2

THIRD TRP SET

FOURTH TRP SET

THIRD "MODULATION SIGNAL" SET

FOURTH "MODULATION SIGNAL" SET

EP 4 779 883 A1

FIG. 13F3

FREQUENCY

FREQUENCY GG1

┌─────────────────────────────────────────────┐
│                                             │
│   THIRD TRP SET MODULATION SIGNAL (GROUP) 1382_1   │
│                    AND/OR                    │
│   FOURTH TRP SET MODULATION SIGNAL (GROUP) 1382_2  │
│                                             │
└─────────────────────────────────────────────┘

TIME

TIME G1

FIG. 13G1

FREQUENCY

FREQUENCY GG1

THIRD TRP SET MODULATION SIGNAL (GROUP) 1382_1
AND/OR
FOURTH TRP SET MODULATION SIGNAL (GROUP) 1382_2

TIME

TIME G1

FIG. 13G2

EP 4 779 883 A1

FREQUENCY

FREQUENCY GG1

THIRD TRP SET MODULATION SIGNAL (GROUP) 1382_1
AND/OR
FOURTH TRP SET MODULATION SIGNAL (GROUP) 1382_2

TIME

TIME G1

FIG. 13G3

EP 4 779 883 A1

FREQUENCY

FREQUENCY GG1

THIRD TRP SET MODULATION SIGNAL (GROUP) 1382_1
AND/OR
FOURTH TRP SET MODULATION SIGNAL (GROUP) 1382_2

TIME

TIME G1

FIG. 13G4

THIRD TRP SET
MODULATION SIGNAL (GROUP) 1382_1

FOURTH TRP SET
MODULATION SIGNAL (GROUP) 1382_2

FREQUENCY

FREQUENCY HH1

TIME

TIME H1

TIME H2

FIG. 13H1

FREQUENCY

FREQUENCY HH1

THIRD TRP SET
MODULATION SIGNAL (GROUP) 1382_1

FOURTH TRP SET
MODULATION SIGNAL (GROUP) 1382_2

TIME

TIME H1

TIME H2

FIG. 13H2

EP 4 779 883 A1

FREQUENCY

FREQUENCY II_2

FOURTH TRP SET MODULATION SIGNAL (GROUP) 1382_2

FREQUENCY II_1

THIRD TRP SET MODULATION SIGNAL (GROUP) 1382_1

TIME

TIME I_1

FIG. 13I1

EP 4 779 883 A1

FREQUENCY

FREQUENCY II_2

FOURTH TRP SET MODULATION SIGNAL (GROUP) 1382_2

FREQUENCY II_1

THIRD TRP SET MODULATION SIGNAL (GROUP) 1382_1

TIME

TIME I_1

FIG. 13I2

FREQUENCY

FREQUENCY II_2

FREQUENCY II_1

FOURTH TRP SET
MODULATION SIGNAL (GROUP) 1382_2

THIRD TRP SET
MODULATION SIGNAL (GROUP) 1382_1

TIME

TIME I_1

TIME I_2

FIG. 13I3

FIG. 14A1

EP 4 779 883 A1

FIG. 14A2

TRANSMISSION PROCESSOR

1402a

1401a

1492A

1403A_1

1403A_2

1403A_P

FIRST "MODULATION SIGNAL" SET DESTINED TO FIRST TRP SET

SECOND "MODULATION SIGNAL" SET DESTINED TO SECOND TRP SET

....

....

FIG. 14A3

FIG. 14A4

FIG. 14B

EP 4 779 883 A1

FIG. 14C

FIG. 15A1

FIG. 15A2

FIG. 16

FIG. 17A1

EP 4 779 883 A1

FIG. 17A2

FIRST "MODULATION SIGNAL" SET DESTINED TO FIRST TRP SET
AND/OR
SECOND "MODULATION SIGNAL" SET DESTINED TO SECOND TRP SET

TIME

TIME AX1

FREQUENCY

FREQUENCY AXX1

FIG. 18A1

FIG. 18A2

FIG. 18A3

EP 4 779 883 A1

FREQUENCY

FREQUENCY AXX1

FIRST "MODULATION SIGNAL" SET DESTINED TO FIRST TRP SET
AND/OR
SECOND "MODULATION SIGNAL" SET DESTINED TO SECOND TRP SET

TIME

TIME AX1

FIG. 18A4

FIG. 18B1

FIG. 18B2

FREQUENCY

FREQUENCY
CXX2

FREQUENCY
CXX1

SECOND "MODULATION SIGNAL" SET DESTINED TO SECOND TRP SET

FIRST "MODULATION SIGNAL" SET DESTINED TO FIRST TRP SET

TIME

TIME CX1

FIG. 18C1

EP 4 779 883 A1

FIG. 18C2

EP 4 779 883 A1

FIG. 18C3

FIG. 19

FIG. 20A1

FIG. 20A2

FIG. 21

FIG. 22A1

FIG. 22A2

EP 4 779 883 A1

EP 4 779 883 A1

FREQUENCY

FREQUENCY AXX1

THIRD "MODULATION SIGNAL" SET DESTINED TO THIRD TRP SET
AND/OR
FOURTH "MODULATION SIGNAL" SET DESTINED TO FOURTH TRP SET

TIME

TIME AX1

FIG. 23A1

FIG. 23A2

EP 4 779 883 A1

EP 4 779 883 A1

FREQUENCY

FREQUENCY AXX1

THIRD "MODULATION SIGNAL" SET DESTINED TO THIRD TRP SET
AND/OR
FOURTH "MODULATION SIGNAL" SET DESTINED TO FOURTH TRP SET

TIME

TIME AX1

FIG. 23A3

FREQUENCY

FREQUENCY AXX1

THIRD "MODULATION SIGNAL" SET DESTINED TO THIRD TRP SET
AND/OR
FOURTH "MODULATION SIGNAL" SET DESTINED TO FOURTH TRP SET

TIME

TIME AX1

FIG. 23A4

EP 4 779 883 A1

FREQUENCY

FREQUENCY
BXX1

THIRD "MODULATION SIGNAL" SET
DESTINED TO THIRD TRP SET

FOURTH "MODULATION SIGNAL" SET
DESTINED TO FOURTH TRP SET

TIME

TIME BX1

TIME BX2

FIG. 23B1

FIG. 23B2

FREQUENCY

FREQUENCY
CXX2

FOURTH "MODULATION SIGNAL" SET DESTINED TO FOURTH TRP SET

FREQUENCY
CXX1

THIRD "MODULATION SIGNAL" SET DESTINED TO THIRD TRP SET

TIME

TIME CX1

FIG. 23C1

FIG. 23C2

FIG. 23C3

EP 4 779 883 A1

FIRST_1 ANTENNA MODULE

FIRST_2 ANTENNA MODULE

FIRST_U ANTENNA MODULE

2400A_1

2400A_2

2400A_U

. . . . . . . . . . . . . .

224

FIG. 24A

FIRST_k ANTENNA MODULE

2400A_k

2401B_k_1

SECOND_k_1 ANTENNA MODULE

2400A_k

2401B_k_Xk

SECOND_k_Xk ANTENNA MODULE

2400A_k

FIG. 24B

FIG. 25A

FIG. 25B

EP 4 779 883 A1

FIG. 25C

FIG. 26A

229

EP 4 779 883 A1

FIG. 26B

EP 4 779 883 A1

FIG. 27

EP 4 779 883 A1

EP 4 779 883 A1

2800

```
                    ┌─────────────────────┐
                    │BASE STATION CAPABILITY│
                    │     INFORMATION      │
                    └─────────────────────┘
```

| INFORMATION ON WHETHER MODULATION SIGNAL TRANSMISSION USING ANTENNA MODULE IS SUPPORTED | INFORMATION ON WHETHER MODULATION SIGNAL RECEPTION USING ANTENNA MODULE IS SUPPORTED | INFORMATION ON WHETHER COMMUNICATION USING FIRST FREQUENCY (BAND) USING ANTENNA MODULE IS SUPPORTED | INFORMATION ON WHETHER COMMUNICATION USING SECOND FREQUENCY (BAND) USING ANTENNA MODULE IS SUPPORTED | INFORMATION ON NUMBER OF TRANSMISSION SIGNALS IN A CASE OF USING ANTENNA MODULE | INFORMATION ON NUMBER OF TRANSMISSION STREAMS IN A CASE OF USING ANTENNA MODULE |
|---|---|---|---|---|---|
| 2811 | 2812 | 2813 | 2814 | 2815 | 2816 |

· · · ·

FIG. 28A

EP 4 779 883 A1

```
                          ┌──────────────────┐
                          │   BASE STATION   │  2800
                          │   CAPABILITY     │
                          │   INFORMATION    │
                          └──────────────────┘
```

| INFORMATION ON WHETHER TRANSMISSION BY MULTIPLE TRPs USING ANTENNA MODULE IS SUPPORTED | INFORMATION ON WHETHER RECEPTION BY MULTIPLE TRPs USING ANTENNA MODULE IS SUPPORTED |
|---|---|

2821                    2822

· · · ·

FIG. 28B

FIG. 28C

EP 4 779 883 A1

2800

BASE STATION
CAPABILITY
INFORMATION

| INFORMATION ON WHETHER TRANSMISSION USING FIRST ANTENNA MODULE AND SECOND ANTENNA MODULE IS SUPPORTED | INFORMATION ON WHETHER RECEPTION USING FIRST ANTENNA MODULE AND SECOND ANTENNA MODULE IS SUPPORTED | INFORMATION ON WHETHER TRANSMISSION BY MULTIPLE TRPs USING FIRST ANTENNA MODULE AND SECOND ANTENNA MODULE IS SUPPORTED | INFORMATION ON WHETHER RECEPTION BY MULTIPLE TRPs USING FIRST ANTENNA MODULE AND SECOND ANTENNA MODULE IS SUPPORTED |
|---|---|---|---|
| 2841 | 2842 | 2843 | 2844 |

. . . .

FIG. 28D

236

EP 4 779 883 A1

2800

BASE STATION
CAPABILITY
INFORMATION

| INFORMATION ON WHETHER TRANSMISSION BY MULTIPLE TRPs USING SDM METHOD USING FIRST ANTENNA MODULE AND SECOND ANTENNA MODULE IS SUPPORTED | INFORMATION ON WHETHER TRANSMISSION BY MULTIPLE TRPs USING TDM METHOD USING FIRST ANTENNA MODULE AND SECOND ANTENNA MODULE IS SUPPORTED | INFORMATION ON WHETHER TRANSMISSION BY MULTIPLE TRPs USING FDM METHOD USING FIRST ANTENNA MODULE AND SECOND ANTENNA MODULE IS SUPPORTED | INFORMATION ON WHETHER RECEPTION BY MULTIPLE TRPs USING SDM METHOD USING FIRST ANTENNA MODULE AND SECOND ANTENNA MODULE IS SUPPORTED | INFORMATION ON WHETHER RECEPTION BY MULTIPLE TRPs USING TDM METHOD USING FIRST ANTENNA MODULE AND SECOND ANTENNA MODULE IS SUPPORTED | INFORMATION ON WHETHER RECEPTION BY MULTIPLE TRPs USING FDM METHOD USING FIRST ANTENNA MODULE AND SECOND ANTENNA MODULE IS SUPPORTED |
|---|---|---|---|---|---|
| 2851 | 2852 | 2853 | 2854 | 2855 | 2856 |

• • • •

FIG. 28E

FIG. 29A

EP 4 779 883 A1

2900

```
┌─────────────────────┐
│ TERMINAL CAPABILITY │
│     INFORMATION     │
└─────────────────────┘
```

┌──────────────────┬──────────────────┐
│ INFORMATION ON   │ INFORMATION ON   │
│ WHETHER          │ WHETHER RECEPTION│
│ TRANSMISSION FOR │ BY MULTIPLE TRPs │      . . . .
│ "MULTIPLE TRPs USING│ USING ANTENNA  │
│ ANTENNA MODULE" IS│ MODULE IS       │
│ SUPPORTED        │ SUPPORTED        │
└──────────────────┴──────────────────┘

2921                 2922

FIG. 29B

EP 4 779 883 A1

TERMINAL CAPABILITY INFORMATION — 2900

| INFORMATION ON WHETHER TRANSMISSION CORRESPONDING TO "SDM METHOD OF MULTIPLE TRPs USING ANTENNA MODULE" IS SUPPORTED | INFORMATION ON WHETHER TRANSMISSION CORRESPONDING TO "TDM METHOD OF MULTIPLE TRPs USING ANTENNA MODULE" IS SUPPORTED | INFORMATION ON WHETHER TRANSMISSION CORRESPONDING TO "FDM METHOD OF MULTIPLE TRPs USING ANTENNA MODULE" IS SUPPORTED | INFORMATION ON WHETHER RECEPTION USING SDM METHOD OF MULTIPLE TRPs USING ANTENNA MODULE IS SUPPORTED | INFORMATION ON WHETHER RECEPTION USING TDM METHOD OF MULTIPLE TRPs USING ANTENNA MODULE IS SUPPORTED | INFORMATION ON WHETHER RECEPTION USING FDM METHOD OF MULTIPLE TRPs USING ANTENNA MODULE IS SUPPORTED |
|---|---|---|---|---|---|
| 2931 | 2932 | 2933 | 2934 | 2935 | 2936 |

. . . .

FIG. 29C

EP 4 779 883 A1

2900

TERMINAL CAPABILITY
INFORMATION

| INFORMATION ON WHETHER TRANSMISSION USING FIRST ANTENNA MODULE AND SECOND ANTENNA MODULE IS SUPPORTED | INFORMATION ON WHETHER RECEPTION USING FIRST ANTENNA MODULE AND SECOND ANTENNA MODULE IS SUPPORTED | INFORMATION ON WHETHER TRANSMISSION FOR " multiple TRPs USING FIRST ANTENNA MODULE AND SECOND ANTENNA MODULE" IS SUPPORTED | INFORMATION ON WHETHER RECEPTION BY multiple TRPs USING FIRST ANTENNA MODULE AND SECOND ANTENNA MODULE IS SUPPORTED | . . . . |
|---|---|---|---|---|

2941         2942         2943         2944

FIG. 29D

2900

TERMINAL CAPABILITY INFORMATION

| INFORMATION ON WHETHER TRANSMISSION CORRESPONDING TO "SDM METHOD OF MULTIPLE TRPs USING FIRST ANTENNA MODULE AND SECOND ANTENNA MODULE" IS SUPPORTED | INFORMATION ON WHETHER TRANSMISSION CORRESPONDING TO "TDM METHOD OF MULTIPLE TRPs USING FIRST ANTENNA MODULE AND SECOND ANTENNA MODULE" IS SUPPORTED | INFORMATION ON WHETHER TRANSMISSION CORRESPONDING TO "FDM METHOD OF MULTIPLE TRPs USING FIRST ANTENNA MODULE AND SECOND ANTENNA MODULE" IS SUPPORTED | INFORMATION ON WHETHER RECEPTION USING SDM METHOD OF MULTIPLE TRPs USING FIRST ANTENNA MODULE AND SECOND ANTENNA MODULE IS SUPPORTED | INFORMATION ON WHETHER RECEPTION USING TDM METHOD OF MULTIPLE TRPs USING FIRST ANTENNA MODULE AND SECOND ANTENNA MODULE IS SUPPORTED | INFORMATION ON WHETHER RECEPTION USING FDM METHOD OF MULTIPLE TRPs USING FIRST ANTENNA MODULE AND SECOND ANTENNA MODULE IS SUPPORTED |
|---|---|---|---|---|---|
| 2951 | 2952 | 2953 | 2954 | 2955 | 2956 |

FIG. 29E

241

FIG. 30A

| 3081 | 3082 | 3083 | 3084 |
|---|---|---|---|
| ANTENNA MODULE USE INFORMATION | ANTENNA PORT USE INFORMATION | CHANNEL INFORMATION | INFORMATION ON TRANSMISSION METHOD |

FIG. 30B

FIG. 30C

| 3091 | 3092 | 3093 | 3094 |
|---|---|---|---|
| INSTRUCTION INFORMATION ON ANTENNA MODULE USE | INSTRUCTION INFORMATION ON ANTENNA PORT USE | CHANNEL INFORMATION | INSTRUCTION INFORMATION ON TRANSMISSION METHOD |

FIG. 30D

FIG. 31A

FREQUENCY

FREQUENCY 4 | MODULATION SIGNAL (GROUP)  3101A_4

FREQUENCY 3 | MODULATION SIGNAL (GROUP)  3101A_3

FREQUENCY 2 | MODULATION SIGNAL (GROUP)  3101A_2

FREQUENCY 1 | MODULATION SIGNAL (GROUP)  3101A_1

TIME

TIME R1

FIG. 31B

EP 4 779 883 A1

FIG. 32A

FIG. 32B

FIG. 33A

FIG. 33B

FIG. 33C

FREQUENCY

FREQUENCY D — MODULATION SIGNAL (GROUP) 3401D

FREQUENCY C — MODULATION SIGNAL (GROUP) 3401C

FREQUENCY B — MODULATION SIGNAL (GROUP) 3401B

FREQUENCY A — MODULATION SIGNAL (GROUP) 3401A

TIME

TIME R2

FIG. 34A

FIG. 34B

EP 4 779 883 A1

FIG. 35

## INTERNATIONAL SEARCH REPORT

| International application No. |
| --- |
| **PCT/JP2024/032208** |

| A. | CLASSIFICATION OF SUBJECT MATTER |
| --- | --- |

*H04B 7/0413*(2017.01)i; *H04W 16/28*(2009.01)i
FI:   H04B7/0413; H04W16/28 130

According to International Patent Classification (IPC) or to both national classification and IPC

| B. | FIELDS SEARCHED |
| --- | --- |

Minimum documentation searched (classification system followed by classification symbols)

H04B7/02-H04B7/12; H04W16/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023/002609 A1 (NTT DOCOMO, INC.) 26 January 2023 (2023-01-26) paragraphs [0072]-[0084], [0116]-[0216], [0321]-[0334], fig. 3A-3C, 4A-4C, 5-10 | 1-3, 5, 10-11 |
| Y | | 4, 6-7 |
| A | | 8-9 |
| Y | JP 2015-037231 A (NTT DOCOMO, INC.) 23 February 2015 (2015-02-23) paragraphs [0033]-[0034], fig. 5 | 4, 6-7 |
| A | | 8-9 |

| ☐ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 November 2024** | **26 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/032208**

| Patent document cited in search report | | | Publication date (day/month/year) | Patent family member(s) | | | Publication date (day/month/year) |
|---|---|---|---|---|---|---|---|
| WO | 2023/002609 | A1 | 26 January 2023 | EP | 4376521 | A1 | |
| | | | | paragraphs [0072]-[0081], [0113]-[0213], [0318]-[0331], fig. 3A-3C, 4A-4C, 5-10 | | | |
| | | | | CN | 118251947 | A | |
| JP | 2015-037231 | A | 23 February 2015 | US | 2016/0183209 | A1 | |
| | | | | paragraphs [0056]-[0057], fig. 5 | | | |
| | | | | WO | 2015/022823 | A1 | |
| | | | | CN | 105453453 | A | |

Form PCT/ISA/210 (patent family annex) (July 2022)

257

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023150203 A

**Non-patent literature cited in the description**

- MIMO Evolution toward 6G: Modular massive MIMO in low-frequency bands. *IEEE Communications Magazine*, November 2021, 52-58